# EUROPEAN PATENT APPLICATION

(11) **EP 4 459 826 A1**
(43) Date of publication of application: **06.11.2024**
(21) Application number: 22914407.6
(22) Date of filing: 20.12.2022
(51) Int. Cl.: H02J 7/00

(54) **SYSTEM, POWER SUPPLY SYSTEM, AND ELECTRIC TOOL SYSTEM**

(30) Priority: 29.12.2021 CN 202111639363; 29.12.2021 CN 202111639369; 29.12.2021 CN 202111639387; 29.12.2021 CN 202111642222; 29.12.2021 CN 202111642233; 29.12.2021 CN 202111642235; 29.12.2021 CN 202111642258; 29.12.2021 CN 202111642259
(71) Applicant: Globe (Jiangsu) Co., Ltd., Changzhou, Jiangsu 213023 (CN)
(72) Inventor: LU, Chuntao, Hangzhou, Jiangsu 213023 (CN); YAN, An, Hangzhou, Jiangsu 213023 (CN); HUO, Xiaohui, Hangzhou, Jiangsu 213023 (CN)
(74) Representative: Bergenstråhle & Partners AB
(86) International application number: PCT/CN2022/140397
(87) International publication number: WO 2023/125153

(57) **Abstract**

A system includes a housing, a terminal part, an input end, an output end and a switching device. The terminal part is arranged on the housing and is matched with a battery pack. The input end is electrically connected with the terminal part. The output end is configured to output energy to an outside. The switching device includes a first switching structure and a second switching structure arranged in the housing and electrically connected with the output end. The first/second switching structure may be switched between a first state and a second state to output a first voltage or a second voltage.

## Description

### CROSS REFERENCE TO RELATED APPLICATION

The present application is a continuation Application of PCT application No. PCT/CN2022/140397 filed on December 20, 2022, which claims the benefit of CN202111639363.6 filed on December 29, 2021, CN202111639369.3 filed on December 29, 2021, CN202111639387.1 filed on December 29, 2021, CN202111642222.Xfiled on December 29, 2021, CN202111642233.8 filed on December 29, 2021, CN202111642235.7 filed on December 29, 2021, CN202111642258.8 filed on December 29, 2021 and CN202111642259.2 filed on December 29, 2021. All the above are hereby incorporated by reference for all purposes.

### TECHNICAL FIELD

The disclosure relates to a field of power supply for power tools, and in particular to a system, a power supply system and a power tool system.

### BACKGROUND

Most of the electrical devices or equipment such as garden tools, power tools, and home appliances need to be provided with independent power supplies. However, for the conventional battery groups, the internal circuit connection relationship is fixed, which means that a series or parallel circuit connection between the battery packs is fixed, so the power supply can only provide one output voltage. As a result, when it is necessary to replace the series or parallel connection between battery packs, the power supply needs to be reconfigured, which is time-consuming, labor-intensive, and causes great inconvenience to the user.

### SUMMARY

The disclosure provides a system, a power supply system and a power tool to improve a problem of only having one output voltage due to a unique connection circuit between conventional battery packs.

The disclosure provides a system, and the system includes a housing, a terminal part, an input end, an output end and a switching device. The terminal part is arranged on the housing and is matched with a battery pack. The input end is electrically connected with the terminal part, and the output end is used to output energy to an outside. The switching device includes a first switching structure and a second switching structure. The first switching structure is arranged in the housing, switchable between a first state and a second state, and electrically connected with the output end. The second switching structure is arranged in the housing, switchable between the first state and the second state, and electrically connected with the output end. When the first switching structure is in the second state, the second switching structure is in the first state, and the output end is configured to output a first voltage. When the second switching structure is in the second state, the first switching structure is in the first state, and the output end is configured to output a second voltage.

The disclosure provides a power supply system, and the power supply system includes the housing, a battery pack, the input end, the output end and the switching device. The terminal part is arranged on the housing. The battery pack is mounted in the housing and is electrically connected with the terminal part. The input end is electrically connected with the terminal part, and the output end is used to output energy to the outside. The switching device includes a first switching structure and a second switching structure. The first switching structure is arranged in the housing, switchable between the first state and the second state, and electrically connected with the output end. The second switching structure is arranged in the housing, switchable between the first state and the second state, and electrically connected with the output end. When the first switching structure is in the second state, the second switching structure is in the first state, and the output end is configured to output a first voltage. When the second switching structure is in the second state, the first switching structure is in the first state, and the output end is configured to output a second voltage.

The disclosure provides a power tool system, and the power tool system includes the housing, the battery pack, the input end, the output end, the switching device, an adapter, a first power tool and a second power tool. The terminal part is arranged on the housing. The battery pack is mounted in the housing and is electrically connected with the terminal part. The input end is electrically connected with the terminal part, and the output end is used to output energy to the outside. The switching device includes the first switching structure and the second switching structure. The first switching structure is arranged in the housing, switchable between the first state and the second state, and electrically connected with the output end. The second switching structure is arranged in the housing, switchable between the first state and the second state, and electrically connected with the output end. When the first switching structure is in the second state, the second switching structure is in the first state, and the output end is configured to output a first voltage. When the second switching structure is in the second state, the first switching structure is in the first state, and the output end is configured to output a second voltage. The adapter is provided with an adaptation interface and electrically connected with the output end. The first power tool is provided with a first tool interface, and electrically connected with the adapter when the first tool interface is coupled with the adaptation interface. The second power tool is provided with a second tool interface, and electrically connected with the adapter when the second tool interface is coupled with the adaptation interface. A working voltage of the first power tool is different from a working voltage of the second power tool.

The disclosure further provides the power supply system, and the power supply system includes the housing, the battery pack and the adapter. A plurality of battery pack cavities is arranged in the housing, and the battery pack is mounted in the battery pack cavity. The adapter includes an adapter input end, the adaptation interface and the switching device. The adapter input end is electrically connected with the battery pack through a power cable. The adaptation interface is configured to cooperate with a tool interface of the power tool. The switching device includes a first switching structure and a second switching structure. The first switching structure is switchable between the first state and the second state and electrically connected with the adapter input end, and the second switching structure is switchable between the first state and the second state and electrically connected with the adapter input end. When the first power tool is connected with the adapter, the adaptation interface cooperates with the first tool interface of the first power tool, when the first switching structure is in the second state, the second switching structure is in the first state, and the adapter outputs the first voltage to the first power tool. When the second power tool is connected with the adapter, the adaptation interface cooperates with the second tool interface of the second power tool, when the second switching structure is in the second state, the first switching structure is in the first state, and the adapter outputs a second voltage to the second power tool.

The disclosure provides a power tool system, and the power tool system includes the housing, the battery pack, the input end, the output end the first power tool and the second power tool. A plurality of battery pack cavities is arranged in the housing, and the battery pack is mounted in the battery pack cavity. The adapter is electrically connected with the battery pack. The first tool interface is set on the first power tool, and the second tool interface is set on the second power tool. The adapter includes the adapter input end, the adaptation interface and the switching device. The adapter input end is electrically connected with the battery pack through a power cable. The adaptation interface is configured to cooperate with a tool interface of the power tool. The switching device includes a first switching structure and a second switching structure. The first switching structure is switchable between the first state and the second state, and electrically connected with the adapter input end. The second switching structure is switchable between the first state and the second state, and electrically connected with the adapter input end. When the first power tool is connected with the adapter, the adaptation interface cooperates with the first tool interface of the first power tool, when the first switching structure is in the second state, the second switching structure is in the first state, and the adapter outputs the first voltage to the first power tool. When the second power tool is connected with the adapter, the adaptation interface cooperates with the second tool interface of the second power tool, when the second switching structure is in the second state, the first switching structure is in the first state, and the adapter outputs a second voltage to the second power tool.

The housing of the system of the disclosure is used for mounting the battery pack, and the terminal block is used for an electrical connection with the battery pack. When a state configuration of the switching structure is different, the output voltage that can be configured at the output end is also different, so that the output end can be configured with two kinds of output voltages. The system has advantages of simple structure, easy implementation, easy operation, and small space occupation. At the same time, the system can provide two different output voltages to the outside after being put into the battery pack, and meet the tools of two different working voltages, which increases an applicable scope of the power supply system and effectively solves a problem that the conventional power supply can only output one voltage.

### BRIEF DESCRIPTION OF THE DRAWINGS

In order to explain technical solutions of embodiments of the disclosure more clearly, the following will briefly introduce drawings used in a description of the embodiments or the conventional art. Obviously, the drawings in the following description are only some embodiments of the disclosure. For those of ordinary skill in the art, other drawings may be obtained based on these drawings without creative work.
FIG. 1 is a first assembling view of an overall structure of a system according to at least one embodiment of the disclosure.
FIG. 2 is a first structural exploded view of the system according to at least one embodiment of the disclosure.
FIG. 3 is a front view of the system according to at least one embodiment of the disclosure.
FIG. 4 is a top view of the system according to at least one embodiment of the disclosure.
FIG. 5 is a schematic structural view of a terminal part according to at least one embodiment of the disclosure.
FIG. 6 is a schematic structural view of a single-voltage battery pack according to at least one embodiment of the disclosure.
FIG. 7 is a schematic structural view of a double-voltage battery pack according to at least one embodiment of the disclosure.
FIG. 8 is a schematic structural view of a first terminal block according to at least one embodiment of the disclosure.
FIG. 9 is a schematic structural view of a third terminal block according to at least one embodiment of the disclosure.
FIG. 10 is an assembling view of a switching device and a mounting base according to at least one embodiment of the disclosure.
FIG. 11 is a top view of the switching device and the mounting base according to at least one embodiment of the disclosure.
FIG. 12 is an exploded view of the switching device and the mounting base according to at least one embodiment of the disclosure.
FIG. 13 is an exploded view of the switching device according to at least one embodiment of the disclosure.
FIG. 14 is a first schematic view of a connection circuit according to at least one embodiment of the disclosure.
FIG. 15 is a first circuit principle view when the battery pack is two single-voltage battery packs according to at least one embodiment of the disclosure.
FIG. 16 is a circuit principle view of FIG. 15 when outputting a first voltage.
FIG. 17 is a circuit principle view of FIG. 15 when outputting a second voltage.
FIG. 18 is a first circuit principle view when the battery pack is one double-voltage battery pack according to at least one embodiment of the disclosure.
FIG. 19 is a circuit principle view of FIG. 18 when outputting a first voltage.
FIG. 20 is a circuit principle view of FIG. 18 when outputting a second voltage.
FIG. 21 is a first circuit principle view when the battery pack is one single-voltage battery pack and one double-voltage battery pack according to at least one embodiment of the disclosure.
FIG. 22 is a circuit principle view of FIG. 21 when outputting a first voltage.
FIG. 23 is a circuit principle view of FIG. 21 when outputting a second voltage.
FIG**.** 24 is a first circuit principle view when the battery pack is two single-voltage battery packs and one double-voltage battery pack according to at least one embodiment of the disclosure.
FIG. 25 is a circuit principle view of FIG. 24 when outputting a first voltage.
FIG. 26 is a circuit principle view of FIG. 24 when outputting a second voltage.
FIG. 27 is a first schematic structural view of a plugging wire base according to at least one embodiment of the disclosure.
FIG. 28 is a schematic clamping view of the plugging wire base and a housing according to at least one embodiment of the disclosure.
FIG. 29 is a schematic view of a strap and a first power tool according to at least one embodiment of the disclosure.
FIG. 30 is a schematic view of the strap and a second power tool according to at least one embodiment of the disclosure.
FIG. 31 is an overall assembling view of a power tool system according to at least one embodiment of the disclosure.
FIG. 32 is a structural exploded view of the system in FIG. 31.
FIG. 33 is a schematic view of an output end of the system in FIG. 31.
FIG. 34 is an assembling view of a first switching structure and a second switching structure according to at least one embodiment of the disclosure.
FIG. 35 is a schematic structural view of a blocking component according to at least one embodiment of the disclosure.
FIG. 36 is an assembling view of the first switching structure and a first mounting base according to at least one embodiment of the disclosure.
FIG. 37 is an exploded view of the first switching structure and the first mounting base according to at least one embodiment of the disclosure.
FIG. 38 is an assembling view of the second switching structure and a second mounting base according to at least one embodiment of the disclosure.
FIG. 39 is an exploded view of the second switching structure and the second mounting base according to at least one embodiment of the disclosure.
FIG. 40 is an exploded view of the first switching structure according to at least one embodiment of the disclosure.
FIG. 41 is an exploded view of the second switching structure according to at least one embodiment of the disclosure.
FIG. 42 is a second schematic view of the connection circuit according to at least one embodiment of the disclosure.
FIG. 43 is a second circuit principle view when the battery pack is two single-voltage battery packs according to at least one embodiment of the disclosure.
FIG. 44 is a circuit principle view of FIG. 43 when outputting a first voltage.
FIG. 45 is a circuit principle view of FIG. 43 when outputting a second voltage.
FIG. 46 is a second circuit principle view when the battery pack is one double-voltage battery pack according to at least one embodiment of the.
FIG. 47 is a circuit principle view of FIG. 46 when outputting a first voltage.
FIG. 48 is a circuit principle view of FIG. 46 when outputting a second voltage.
FIG. 49 is a second circuit principle view when the battery pack is one single-voltage battery pack and one double-voltage battery pack according to at least one embodiment of the.
FIG. 50 is a circuit principle view of FIG. 49 when outputting a first voltage.
FIG. 51 is a circuit principle view of FIG. 49 when outputting a second voltage.
FIG. 52 is a second circuit principle view when the battery pack is two single-voltage battery packs and one double-voltage battery pack according to at least one embodiment of the.
FIG. 53 is a circuit principle view of FIG. 52 when outputting a first voltage.
FIG. 54 is a circuit principle view of FIG. 52 when outputting a second voltage.
FIG. 55 is a second schematic structural view of the plugging wire base according to at least one embodiment of the disclosure.
FIG. 56 is a second assembling view of the overall structure of the system according to at least one embodiment of the disclosure.
FIG. 57 is a second structural exploded view of the system according to at least one embodiment of the disclosure.
FIG. 58 is a first schematic view of the output end of the system according to at least one embodiment of the disclosure.
FIG. 59 is a schematic view of a battery pack cavity of the system according to at least one embodiment of the disclosure.
FIG. 60 is an assembling view of a fourth terminal block and a fifth terminal block according to at least one embodiment of the disclosure.
FIG. 61 is a top view of a switching structure and the mounting base according to at least one embodiment of the disclosure.
FIG. 62 is a second schematic view of the connection circuit according to at least one embodiment of the disclosure.
FIG. 63 is a second circuit principle view when the battery pack is one double-voltage battery pack according to at least one embodiment of the.
FIG. 64 is a circuit principle view of FIG. 63 when outputting a first voltage.
FIG. 65 is a circuit principle view of FIG. 63 when outputting a second voltage.
FIG. 66 is a second circuit principle view when the battery pack is one single-voltage battery pack and one double-voltage battery pack according to at least one embodiment of the.
FIG. 67 is a circuit principle view of FIG. 66 when outputting a first voltage.
FIG. 68 is a circuit principle view of FIG. 66 when outputting a second voltage.
FIG. 69 is a third circuit principle view when the battery pack is one double-voltage battery pack according to at least one embodiment of the.
FIG. 70 is a circuit principle view of FIG. 69 when outputting a first voltage.
FIG. 71 is a circuit principle view of FIG. 69 when outputting a second voltage.
FIG. 72 is a third circuit principle view when the battery pack is two single-voltage battery packs according to at least one embodiment of the disclosure.
FIG. 73 is a circuit principle view of FIG. 72 when outputting a first voltage.
FIG. 74 is a circuit principle view of FIG. 72 when outputting a second voltage.
FIG. 75 is a third assembling view of the overall structure of the system according to at least one embodiment of the disclosure.
FIG. 76 is a third structural exploded view of the system according to at least one embodiment of the disclosure.
FIG. 77 is a second schematic view of the output end of the system according to at least one embodiment of the disclosure.
FIG. 78 is a second assembling view of the fourth terminal block and the fifth terminal block according to at least one embodiment of the disclosure.
FIG. 79 is a circuit principle view according to at least one embodiment of the disclosure.
FIG. 80 is a fourth circuit principle view when the battery pack is one double-voltage battery pack according to at least one embodiment of the.
FIG. 81 is a circuit principle view of FIG. 80 when outputting a first voltage.
FIG. 82 is a circuit principle view of FIG. 80 when outputting a second voltage.
FIG. 83 is a fourth circuit principle view when the battery pack is one single-voltage battery pack and one double-voltage battery pack according to at least one embodiment of the.
FIG. 84 is a circuit principle view of FIG. 83 when outputting a first voltage.
FIG. 85 is a circuit principle view of FIG. 83 when outputting a second voltage.
FIG. 86 is a fourth circuit principle view when the battery pack is one double-voltage battery pack according to at least one embodiment of the.
FIG. 87 is a circuit principle view of FIG. 86 when outputting a first voltage.
FIG. 88 is a circuit principle view of FIG. 86 when outputting a second voltage.
FIG. 89 is a fourth circuit principle view when the battery pack is two single-voltage battery packs according to at least one embodiment of the disclosure.
FIG. 90 is a circuit principle view of FIG. 89 when outputting a first voltage.
FIG. 91 is a circuit principle view of FIG. 89 when outputting a second voltage.
FIG. 92 is a first schematic structural view of a power supply system according to at least one embodiment of the disclosure.
FIG. 93 is an exploded view of the battery pack of the power supply system from another angel according to at least one embodiment of the disclosure.
FIG. 94 is a schematic structural view of the battery pack of the power supply system after removing a bottom wall according to at least one embodiment of the disclosure.
FIG. 95 is a schematic connection view of a battery pack assembly and the terminal block of the power supply system according to at least one embodiment of the disclosure.
FIG. 96 is a schematic structural view of a connecting wiring terminal of the battery pack of the power supply system of the disclosure.
FIG. 97 is a schematic structural view of an adapter of the power supply system according to at least one embodiment of the disclosure. (Note: The adapter looks similar to the single-voltage battery pack.)
FIG. 98 is a bottom view of FIG. 97.
FIG. 99 is a first exploded view of the adapter of the power supply system according to at least one embodiment of the disclosure.
FIG. 100 is a top view of the first switching structure of the power supply system according to at least one embodiment of the disclosure.
FIG. 101 is a schematic structural view of the second switching structure of the power supply system according to at least one embodiment of the disclosure.
FIG. 102 is a schematic matching view of the first switching structure and the adapter of the power supply system according to at least one embodiment of the disclosure.
FIG. 103 is a schematic matching view of the second switching structure and the adapter of the power supply system according to at least one embodiment of the disclosure.
FIG. 104 is a first schematic structural view of a power cable of the power supply system according to at least one embodiment of the disclosure.
FIG. 105 is a schematic structural view of a power tool system mounted with a first power tool according to at least one embodiment of the disclosure.
FIG. 106 is a schematic structural view of the power tool system mounted with a second power tool according to at least one embodiment of the disclosure.
FIG. 107 is a schematic matching view of the adapter and a first tool plug of the first power tool of the power tool system according to at least one embodiment of the disclosure.
FIG. 108 is a schematic structural view of the adapter and a second tool plug of the second power tool of the power tool system according to at least one embodiment of the disclosure.
FIG. 109 is a schematic structural view of a backpack assembly of the power supply system according to at least one embodiment of the disclosure.
FIG. 110 is a schematic structural view of FIG. 107 from another angle.
FIG. 111 is a schematic structural view of the adapter of the power supply system according to at least one embodiment of the disclosure.
FIG. 112 is a schematic top view of the adapter of the power supply system according to at least one embodiment of the disclosure.
FIG. 113 is a first exploded view of the adapter of the power supply system according to at least one embodiment of the disclosure.
FIG. 114 is a top view of the switching device of the power supply system according to at least one embodiment of the disclosure.
FIG. 115 is a schematic view of the switching device of the power supply system when located at a first position according to at least one embodiment of the disclosure.
FIG. 116 is a schematic view of the switching device of the power supply system when located at a second position according to at least one embodiment of the disclosure.
FIG. 117 is a first schematic structural view of the housing of the power supply system after removing the bottom wall according to at least one embodiment of the disclosure.
FIG. 118 is a first bottom view of the housing of the power supply system after removing the bottom wall according to at least one embodiment of the disclosure.
FIG. 119 is a first schematic structural view of a power cable of the power supply system according to at least one embodiment of the disclosure.
FIG. 120 is a schematic matching view of the adapter and the first tool plug of the power tool system according to at least one embodiment of the disclosure.
FIG. 121 is a schematic matching view of the adapter and the second tool plug of the power tool system according to at least one embodiment of the disclosure.
FIG. 122 is a first schematic structural view of a power supply system according to at least one embodiment of the disclosure.
FIG. 123 is a schematic assembly view of the battery pack assembly and the housing of the power supply system according to at least one embodiment of the disclosure.
FIG. 124 is a first schematic structural view of the housing of the power supply system after removing the bottom wall according to at least one embodiment of the disclosure.
FIG. 125 is a first bottom view of the housing of the power supply system after removing the bottom wall according to at least one embodiment of the disclosure.

### PART NUMBER DESCRIPTION

100-system, 110-housing, 111-first battery pack cavity, 112-second battery pack cavity, 113-third battery pack cavity, 114-upper housing, 115-lower housing, 116-third limiting component, 120-terminal part, 1210-first terminal block, 1211-first terminal, 1212-second terminal, 1220-second terminal block, 1230-third terminal block, 1231-third terminal, 1232-fourth terminal, 108-connecting wiring terminal, 109-mounting hole, 1250-fourth terminal block, 1260-fifth terminal block, 1480-blocking component, 130-input end, 131-first input end, 132-second input end, 140-output end, 1404-first output end, 1405-second output end, 150-switching device, 151-first switching structure, 152-second switching structure, 1510-first wiring terminal, 1520-second wiring terminal, 153-supporting body, 154-sliding bar, 155-reset component, 1516-conversion structure, 15161-first toggling part, 15162-second toggling part, 1531-first supporting body, 1541-first sliding bar, 1551-first reset component, 1532-second supporting body, 1541-second sliding bar, 1552-second reset component, 160-first circuit board, 170-conducting wire, 1701-first conducting wire, 1702-second conducting wire, 180-mounting base, 1801-first mounting base, 1802-second mounting base, 181-sliding groove, 1811-first sliding groove, 1812-second sliding groove, 199-backpack assembly, 190-strap, 192-hip belt, 200-battery pack, 210-single-voltage battery pack, 211-single-voltage battery pack terminal, 220-double-voltage battery pack, 221-double-voltage battery pack terminal, 300-power cable, 301-first connecting port, 302-second connecting port, 310-plugging wire base, 3110-plug-in part, 3120-pulling part, 3121-pushing block, 3122-pressing component, 3123-limiting component, 3124-first identification area, 3125-second identification area, 400-adapter, 401-first cover body, 4011-first groove, 4012-first sliding rail, 4013-sliding movement groove, 4014-limiting structure, 40141-first limiting groove, 40142-second limiting groove, 40143-limiting blocking plate, 402-second cover body, 4021-second groove, 4022-second sliding rail, 403-fixing bracket, 404-second circuit board, 405-third output end, 406-third circuit board, 407-fourth output end, 408-first button, 4081-first buckle, 409-first button spring, 410-second button, 4101-second buckle, 411-second button spring, 500-first power tool, 501-first tool plug, 600-second power tool, 601-second tool plug.

### DETAILED DESCRIPTION

The following describes the implementation of the disclosure through specific embodiments, and those skilled in the art can easily understand other advantages and effects of the disclosure from the content disclosed in this specification. The disclosure may also be implemented or applied through other different specific embodiments. Various details in this specification may also be modified or changed based on different viewpoints and applications without departing from the disclosure. It should be noted that, the following embodiments and the features in the embodiments can be combined with each other without conflict. It should further be understood that the terms used in the examples of the disclosure are used to describe specific embodiments, instead of limiting the protection scope of the disclosure. The test methods that do not indicate specific conditions in the following examples are usually in accordance with conventional conditions, or conditions recommended by each manufacturer.

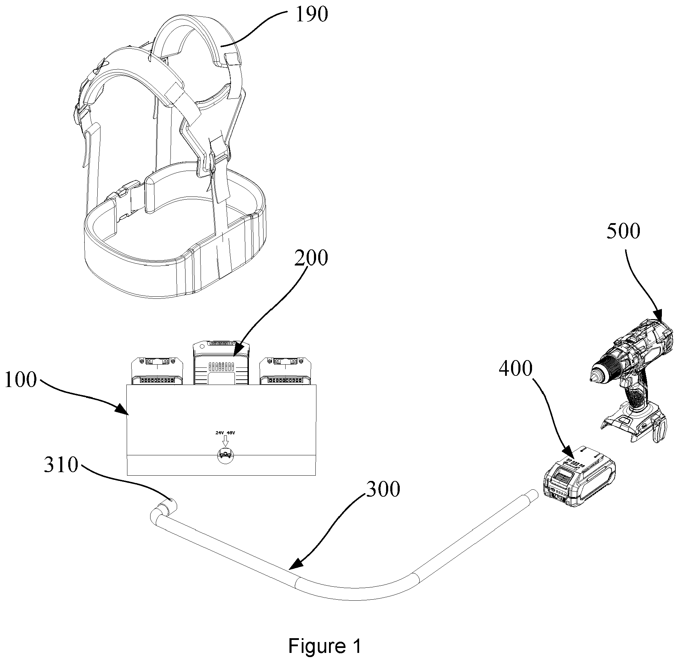

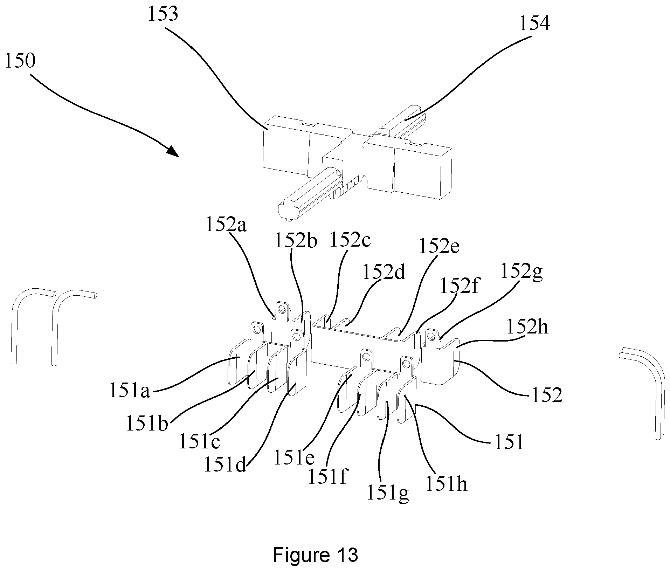

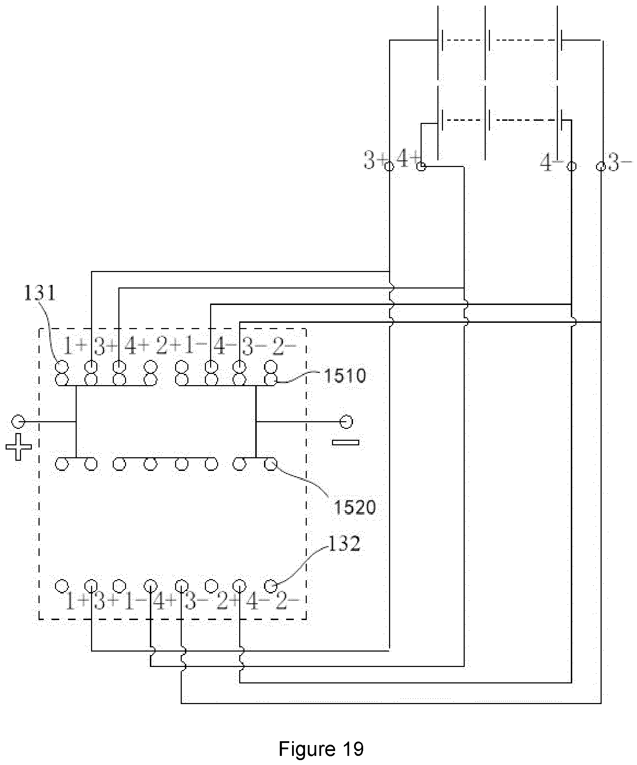

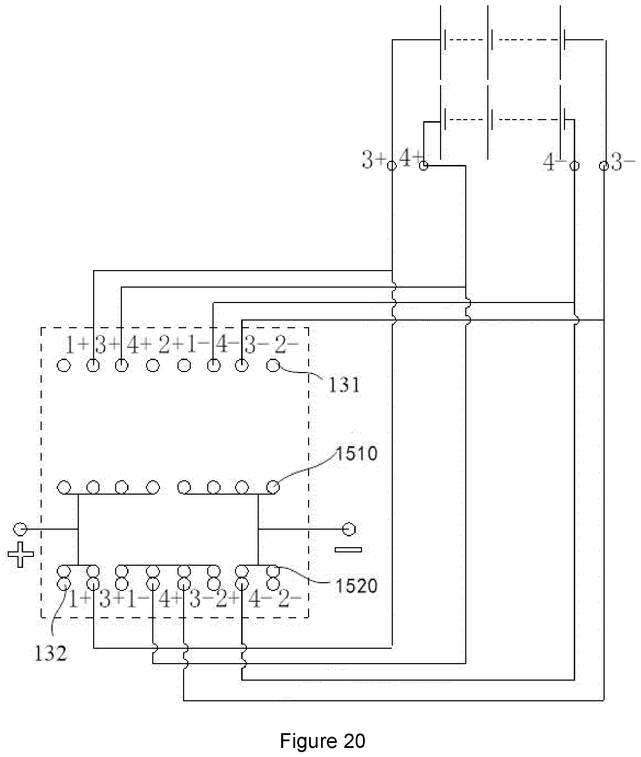

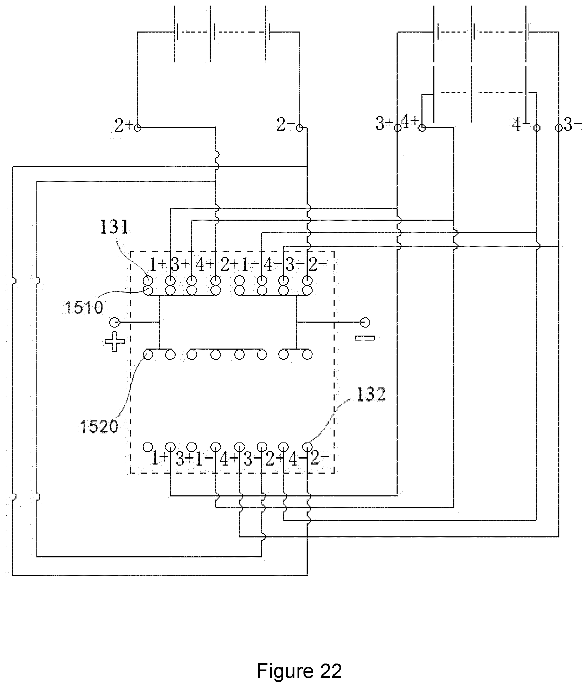

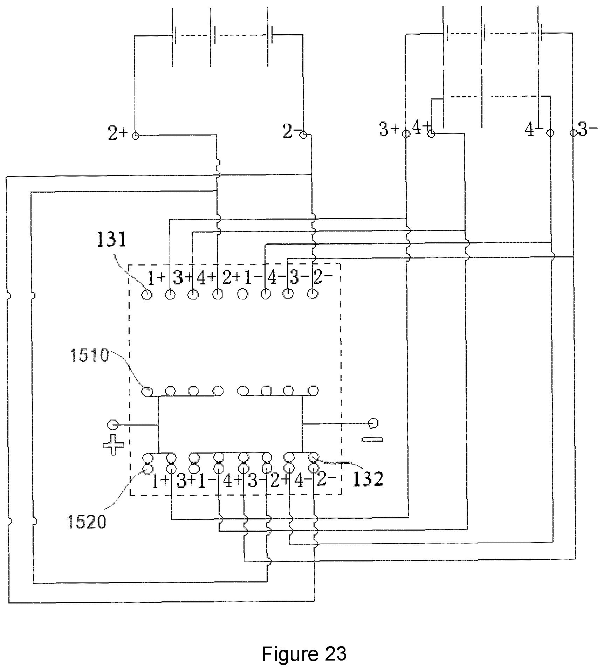

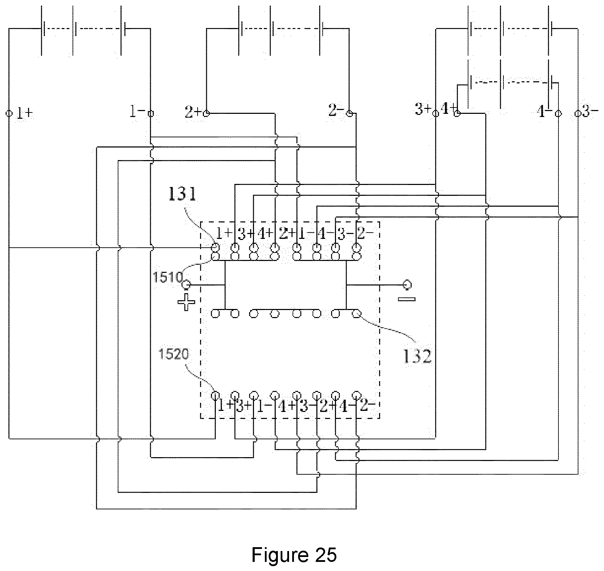

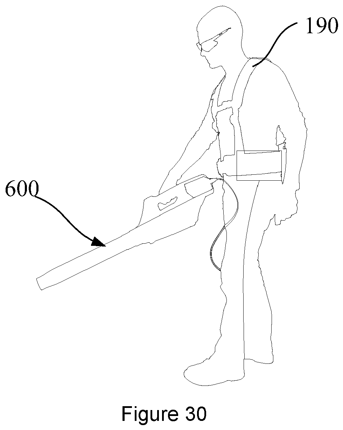

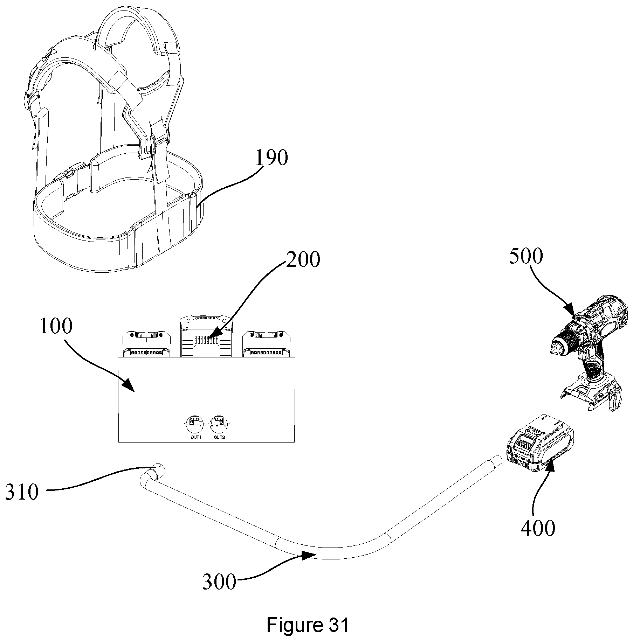

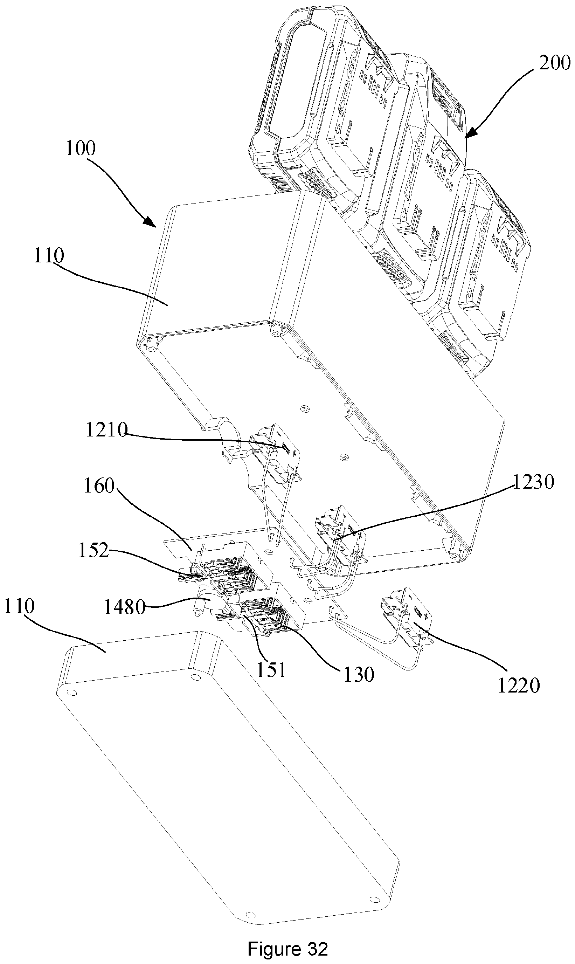

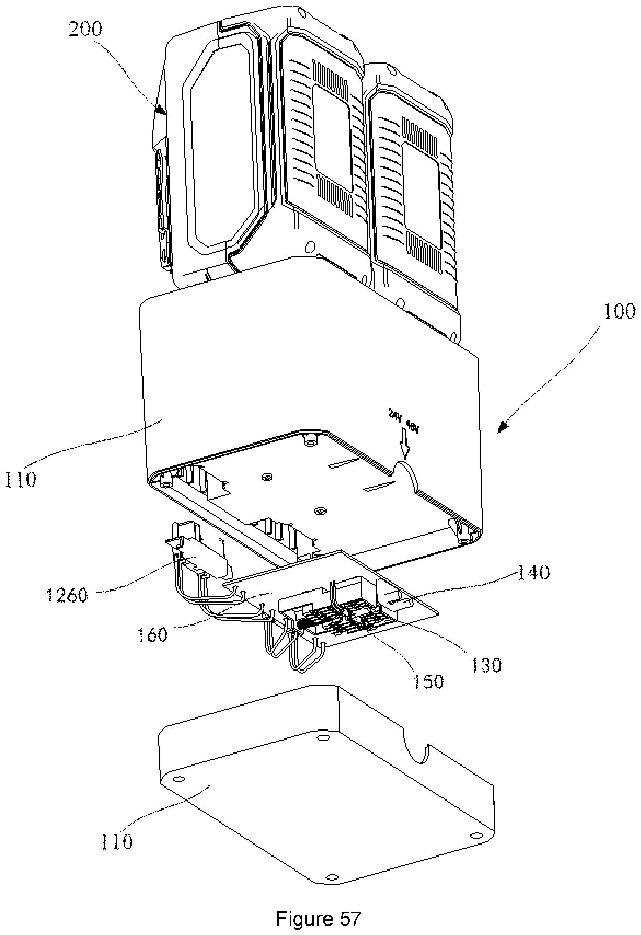

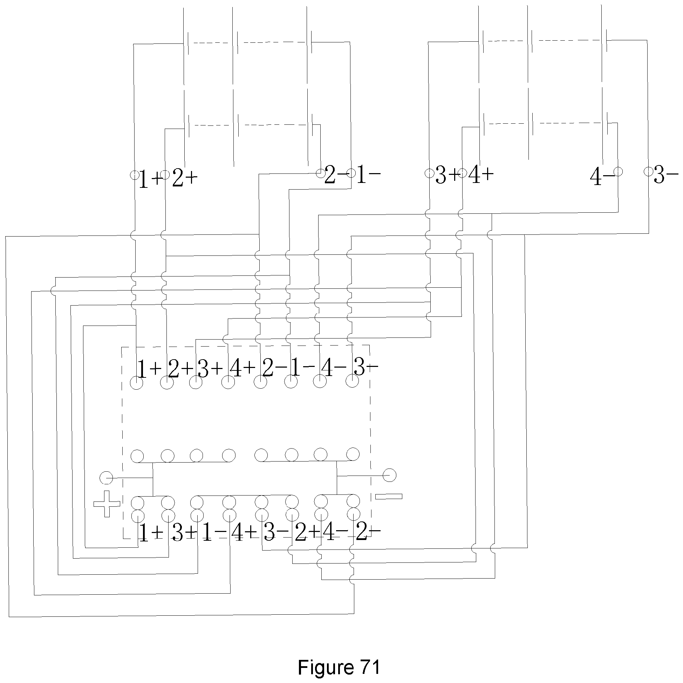

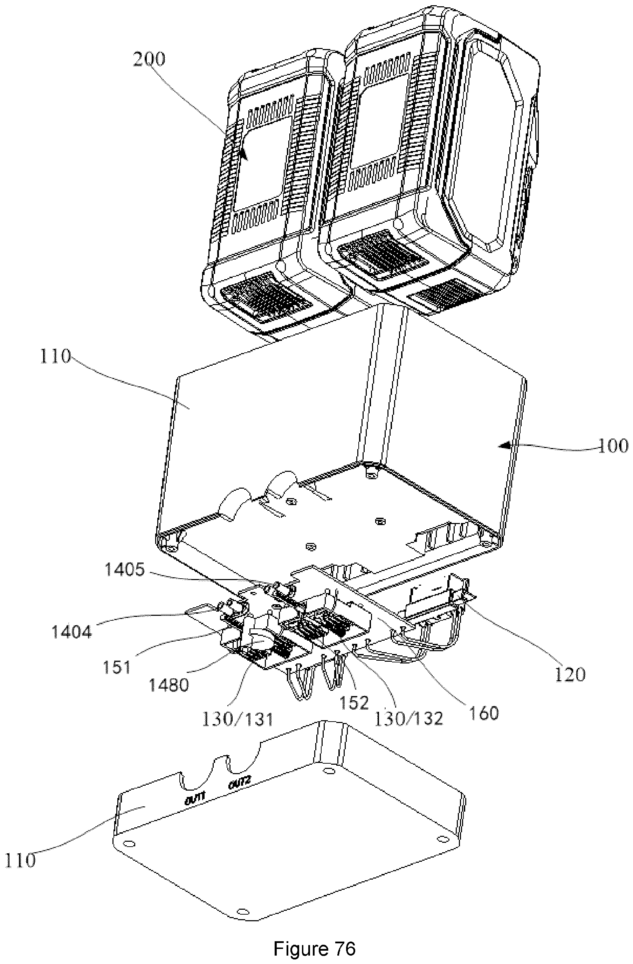

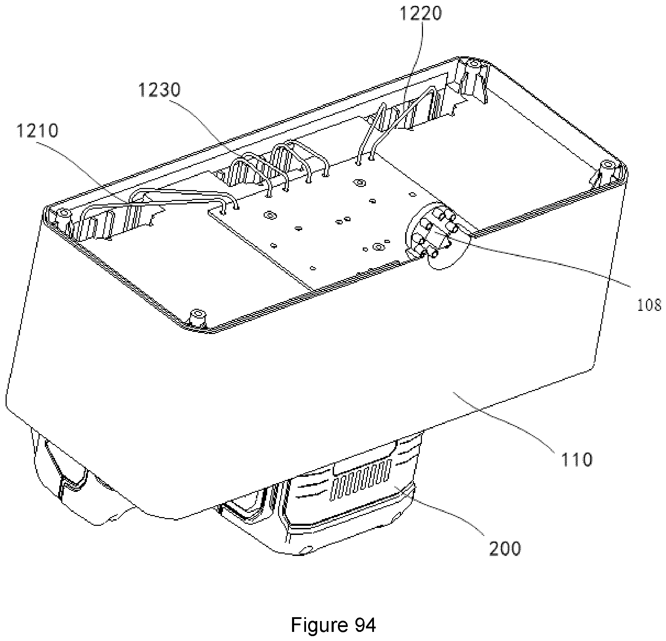

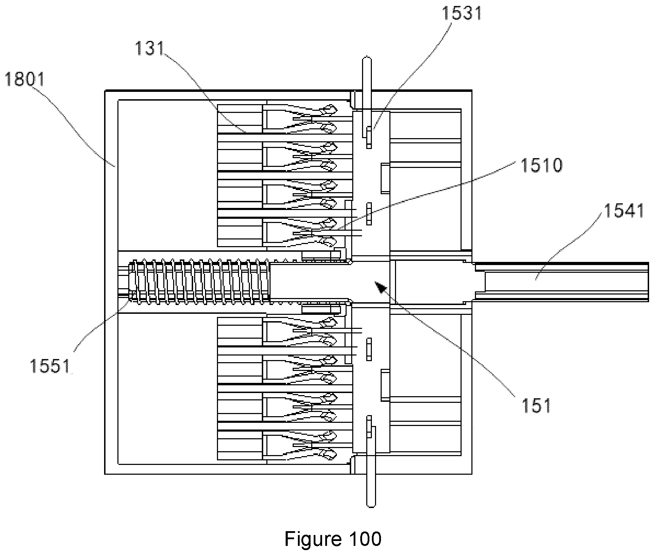

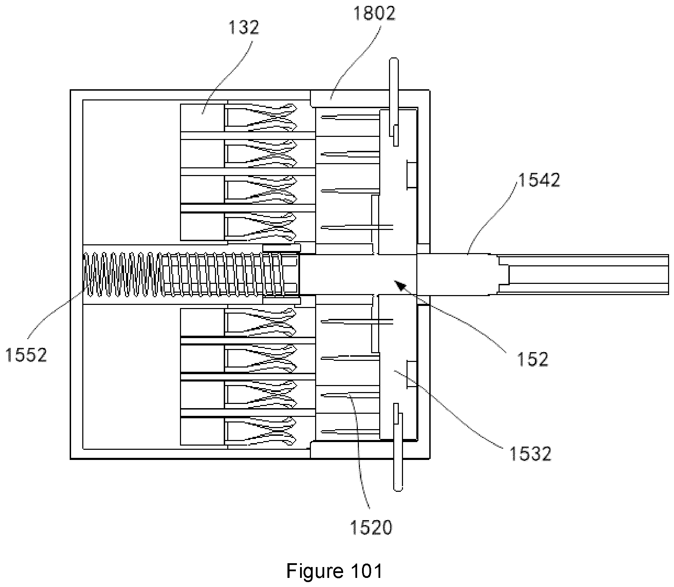

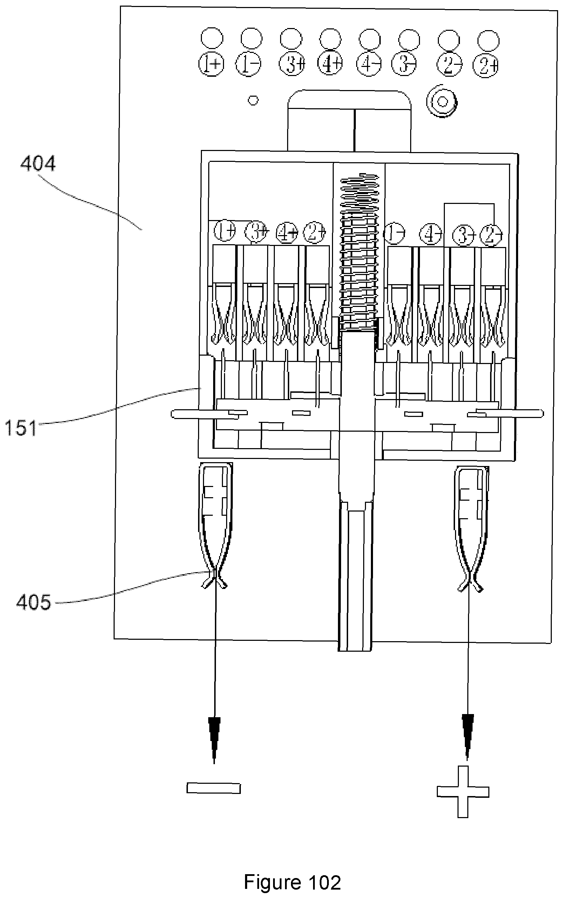

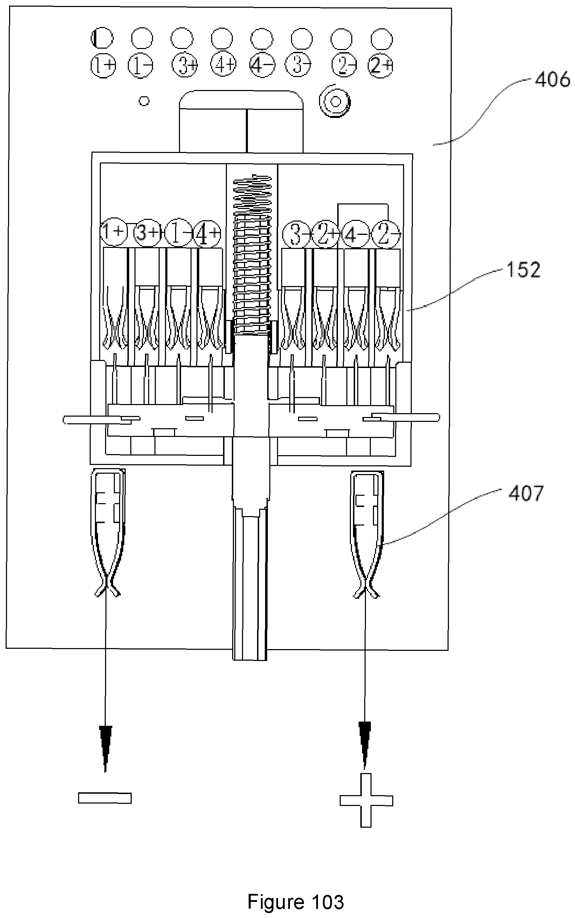

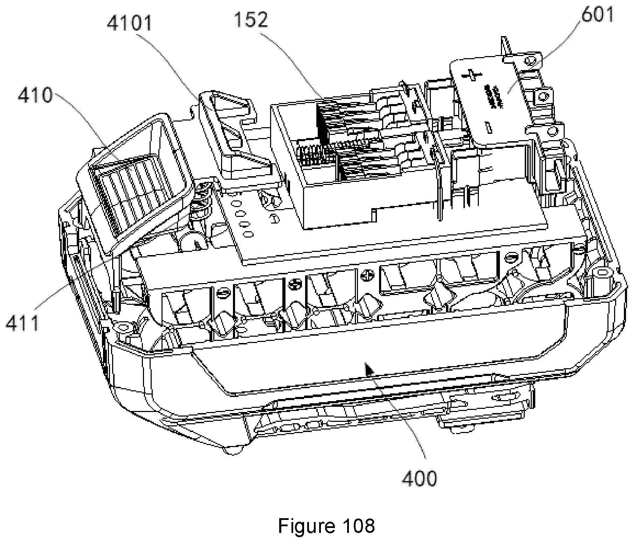

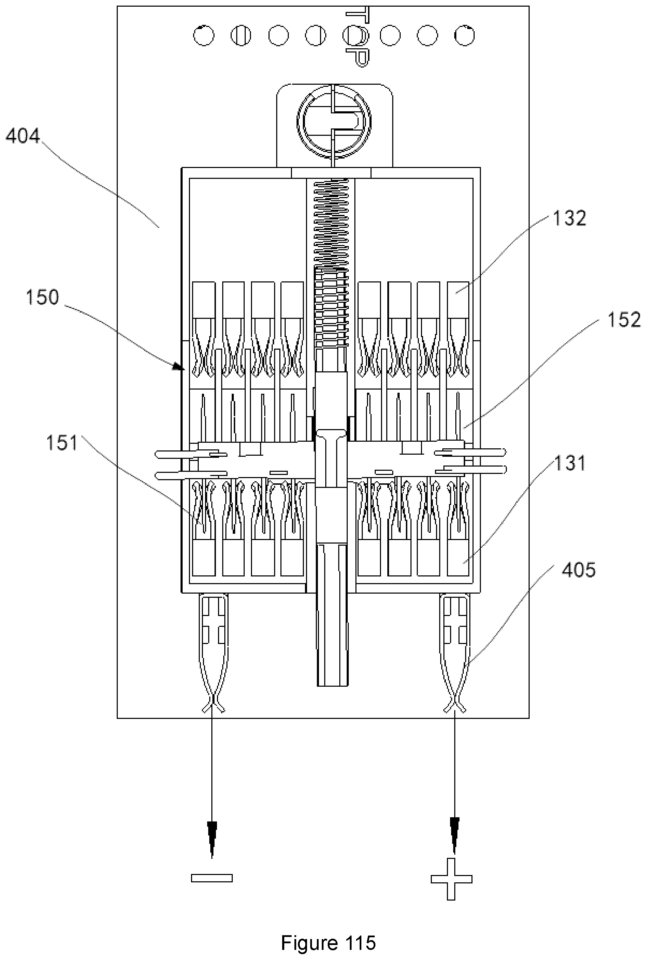

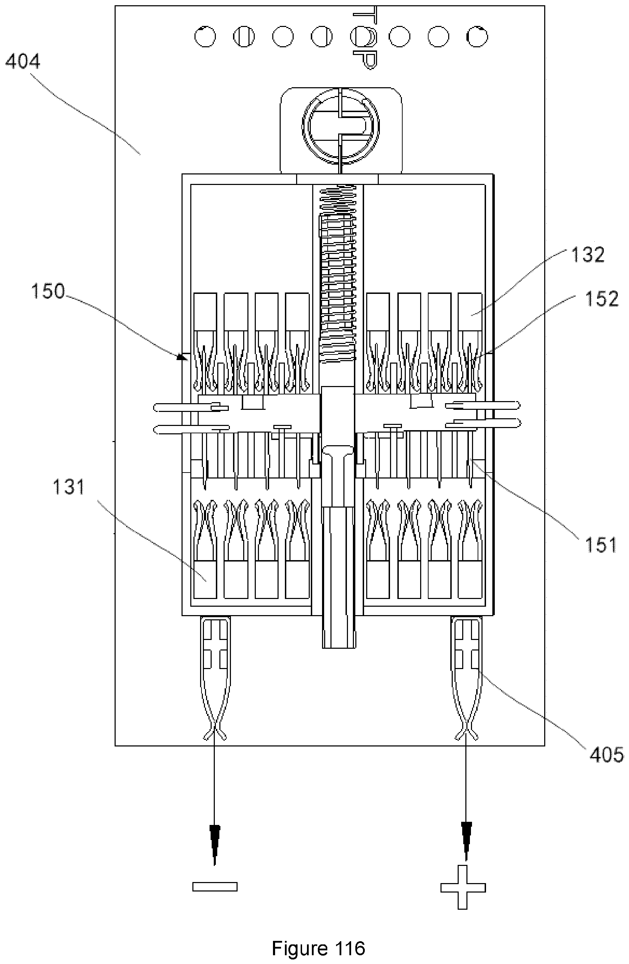

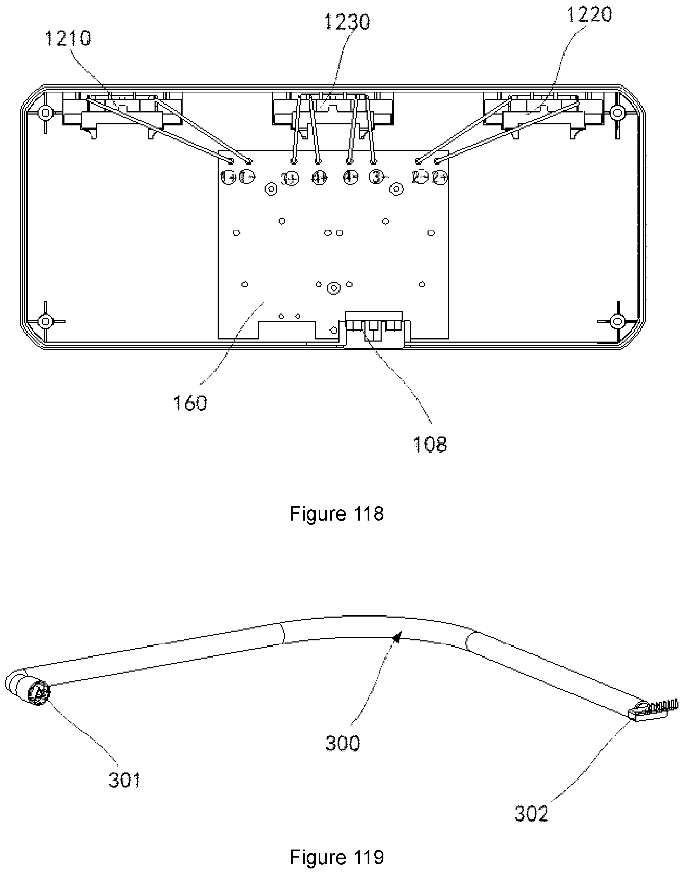

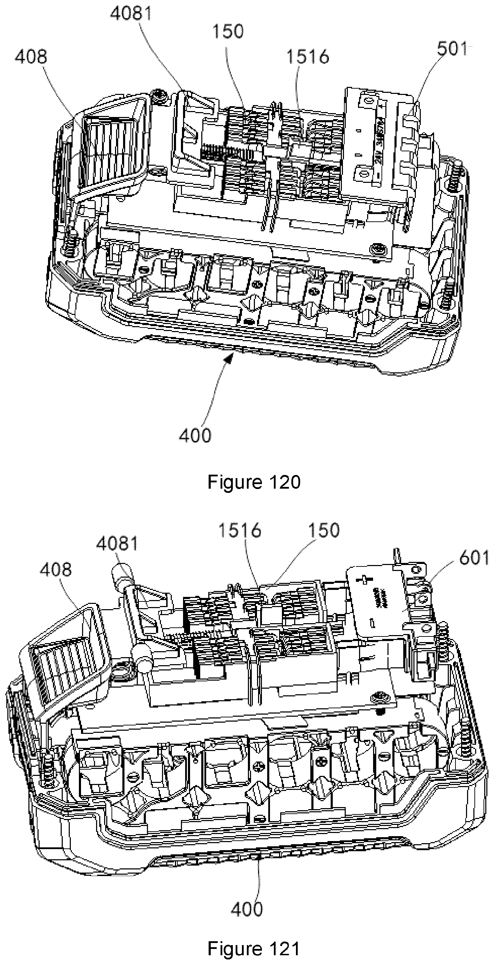

Please refer to FIG. 1 through FIG. 125. It should be noted that structures, proportions, sizes, etc. shown in drawings attached to this specification are only used to match content disclosed in the specification and are for understanding and reading of people familiar with this technology. They are not used to limit an implementation of the disclosure. Therefore, it has no technical substantive significance. Any modification of structure, change of proportional or adjustment of size shall still fall within a scope of this disclosure without affecting an effect that the disclosure can produce and the purpose that can be achieved. It should be noted that terms "upper", "lower", "left", "right", "middle" and "a/an" quoted in this specification are only for a convenience of description, and are not used to limit a scope of the disclosure. Changes or adjustments in their relative relationships shall also be regarded to be within the scope of the disclosure when there is no substantial change in the technical content.

Please refer to FIG. 1 through FIG. 3. The disclosure provides a system 100. The system 100 includes a housing 110, a terminal part 120, an input end 130, an output end 140 and a switching device 150. Wherein, the terminal part 120 is arranged on the housing 110, and is matched with a battery pack. The input end 130 is electrically connected with the terminal part 120. The switching device 150 is arranged in the housing 110, and is electrically connected with the output end 140. The output 140 is used to output energy to an outside. The switching device 150 includes a first switching structure 151 and a second switching structure 152. The first switching structure 151 and the second switching structure 152 may be switched between a first state and a second state, which means that when the battery pack 200 is mounted in the housing 100, the output end 140 outputs a first voltage. When the switching device 150 is located at a first position, which means that when the first switching structure 151 is in the second state, the second switching structure 152 is in the first state, and the output end 140 is configured to output the first voltage. When the switching device 150 is located at a second position, which means that when the second switching structure 152 is in the second state, the first switching structure 151 is in the first state, and the output end 140 is configured to output a second voltage, which means that when the battery pack 200 is mounted in the housing 110, the output end 140 outputs the second voltage. The first voltage is different from the second voltage. The system 100 may further include a strap 190, and the housing 110 is detachably mounted on the strap 190. A user carries the system 100 through carrying the strap. The system 100 further includes three battery pack cavities arranged in the housing, each battery pack cavity is provided with a terminal block, and each terminal block is connected with the input end.

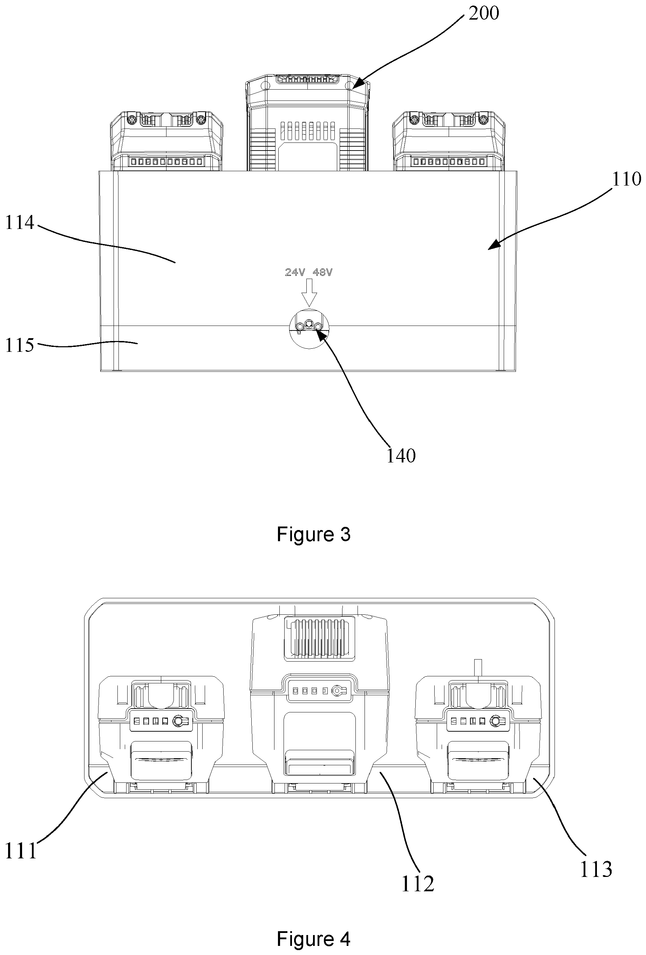

Please refer to FIG. 4 through FIG. 5. In an embodiment of the disclosure, a first battery pack cavity 111, a second battery pack cavity 112 and a third battery pack cavity 113 are arranged on the housing 110. The terminal part 120 includes a first terminal block 1210, a second terminal block 1220 and a third terminal block 1230. The first terminal block 1210 is arranged in the first battery pack cavity 111. The second terminal block 1220 is arranged in the second battery pack cavity 112. The third terminal block 1230 is arranged in the third battery pack cavity 113. The input end 130 is respectively electrically connected with the first terminal block 1210, the second terminal block 1220 and the third terminal block 1230.

Please refer to FIG. 4, FIG. 6 through FIG. 7. In an embodiment of the disclosure, the first battery pack cavity 111 is used for mounting a single-voltage battery pack 210, the second battery pack cavity 112 is used for mounting the single-voltage battery pack 210, and the third battery pack cavity 113 is used for mounting a double-voltage battery pack 220. Wherein, the single-voltage battery pack 210 is a battery pack that can only output one voltage externally, and the single-voltage battery pack 210 is provided with a single-voltage battery pack terminal 211. The single-voltage battery pack terminal 211 includes: one positive terminal and one negative terminal. The double-voltage battery pack 220 is a battery pack that can output two voltages externally, and the double-voltage battery pack 220 is provided with a double-voltage battery pack terminal 221. The double-voltage battery pack terminal 221 includes two positive terminals and two negative terminals.

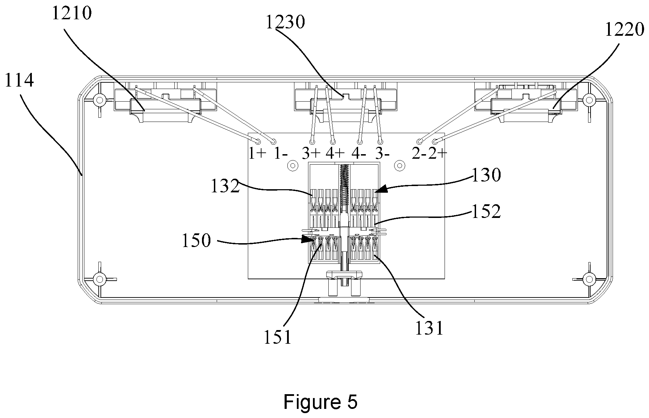

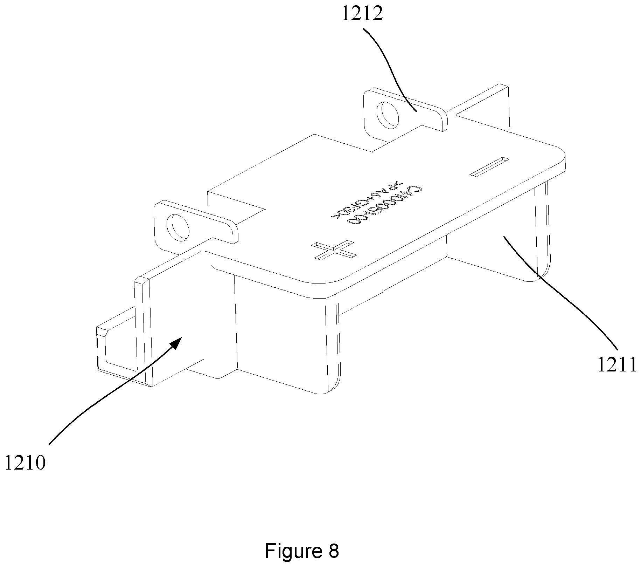

Please refer to FIG. 8 through FIG. 9. In an embodiment of the disclosure, the first terminal block 1210 is matched with the single-voltage battery pack terminal 211, the second terminal block 1220 is matched with the single-voltage battery pack terminal 211, and the third terminal block 1230 is matched with the double-voltage battery pack terminal 221. Please refer to FIG. 5 through FIG. 6. A structure of the first terminal block 1210 is consistent with a structure of the second terminal block 1220. Two first terminals 1211 and two second terminals 1212 are arranged on the first terminal block 1210. The first terminal 1211 is electrically connected with the second terminal 1212, the first terminal 1211 is matched with the single-voltage battery pack terminal 211, and the second terminal 1212 is electrically connected with the input end 130. The third terminal block 1230 is provided with four third terminals 1231 and four fourth terminals 1232. The third terminal 1231 is electrically connected with the fourth terminal 1232, the third terminal 1231 is matched with the double-voltage battery pack terminal, and the fourth terminal 1232 is electrically connected with the input end 130.

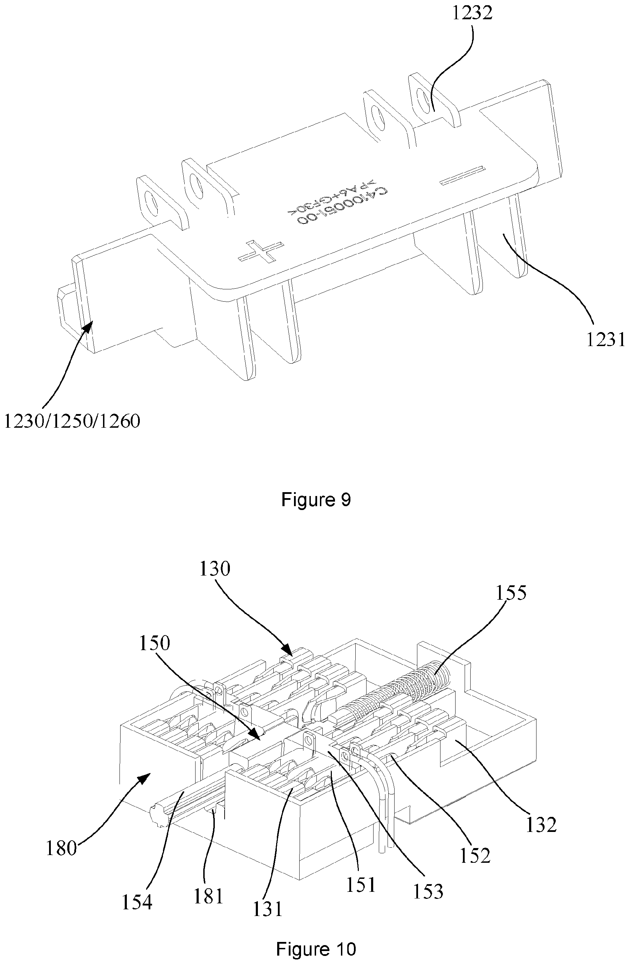

Please refer to FIG. 10 through FIG. 11. In an embodiment of the disclosure, the input end 130 includes a first input end 131 and a second input end 132. The switching device 150 includes a first switching structure 151 and a second switching structure 152. When the switching device 150 is in a first position, the first switching structure 151 is electrically connected with the first input end 131, the second switching structure 152 is disconnected from the second input end 132, and the output end 140 is configured to output the first voltage. When the switching device 150 is in a second position, the second switching structure 152 is electrically connected with the second input end 132, and the first switching structure 151 is disconnected from the first input end 131, and the output end 140 is configured to output the second voltage.

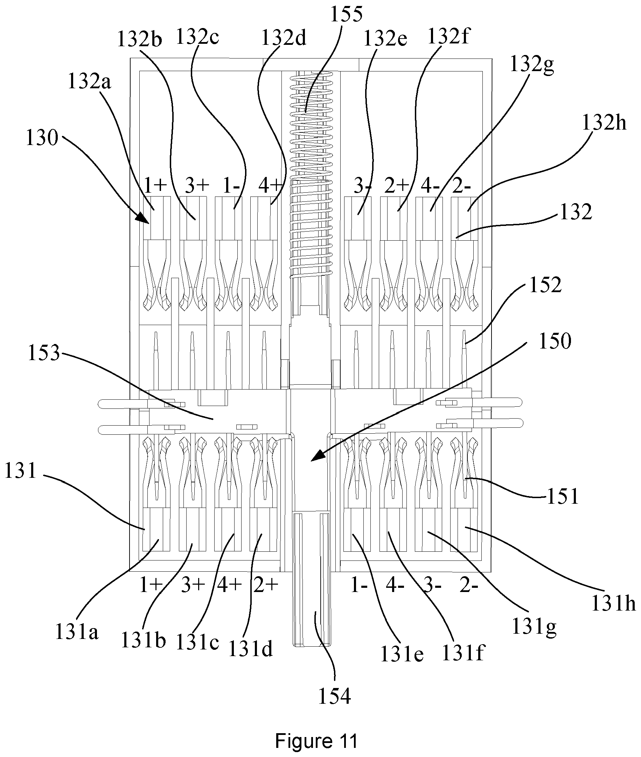

Please refer to FIG. 11 through FIG. 13, FIG. 36 through FIG. 41, and FIG. 114. The first switching structure 151 includes a plurality of first wiring terminals 1510, and a number of first wiring terminals 1510 is consistent with a number of the wiring terminals of the first input end 131. The second switching structure 152 includes a plurality of second wiring terminals 1520, and a number of second wiring terminals 1520 is consistent with a number of the wiring terminals of the second input end 132.

The number of wiring terminals of the first end terminal 131 is a sum of a number of the second terminals 1212 and a number of the fourth terminals 1232. The number of wiring terminals of the second end terminal 132 is a sum of a number of the second terminals 1212 and a number of the fourth terminals 1232. For example, the first terminal block 1210 is provided with two second terminals 1212, the second terminal block 1220 is provided with two second terminals 1212, and the third terminal block 1230 is provided with four fourth terminals 1232, so the number of wiring terminals of the first input end 131 is eight, and the number of wiring terminals of the second input end 131 is eight. Therefore, the first switching structure 151 includes eight first wiring terminals 1510, and the second switching structure 151 includes eight second switching terminals 1520.

Please refer to FIG. 5 and FIG. 11. In an embodiment of the disclosure, the two second terminals 1212 of the first terminal block 1210 are respectively marked as: 1+, 1-, the two second terminals 1212 of the second terminal block 1220 are respectively marked: 2+, 2-, and the four fourth terminals 1232 of the third terminal block 1230 are marked as: 3+, 4+, 4-, 3-. The eight terminals of the first input end 131 are respectively marked as 131a, 131b, 131c, 131d, 131e, 131f, 131g, 131h. Wherein, the terminal 131a, the terminal 131b, the terminal 131c, the terminal 131d are correspondingly electrically connected with the terminal 1+, the terminal 2+, the terminal 3+, and the terminal 4+ one by one. A specific corresponding relationship in this one-to-one correspondence is not limited. For example, in an embodiment of the disclosure, the terminal 131a is electrically connected with the terminal 1+, the terminal 131b is electrically connected with the terminal 3+, the terminal 131c is electrically connected with the terminal 4+, and the terminal 131d is electrically connected with the terminal 2+. The terminal 131e, the terminal 131f, the terminal 131g, the terminal 131h are correspondingly electrically connected with the terminal 1-, the terminal 2-, the terminal 3-, and the terminal 4- one by one. A specific corresponding relationship in this one-to-one correspondence is not limited. For example, in an embodiment of the disclosure, the terminal 131e is electrically connected with the terminal 1-, the terminal 131f is electrically connected with the terminal 4-, the terminal 131g is electrically connected with the terminal 3-, and the terminal 131h is electrically connected with the terminal 2-.

Please refer to FIG. 11. The eight terminals of the second input end 132 are respectively marked as 132a, 132b, 132c, 132d, 132e, 132f, 132g, 132h. The terminal 132a, the terminal 132b, the terminal 132c, the terminal 132d, the terminal 132e, the terminal 132f, the terminal 132g, the terminal 132h are correspondingly electrically connected with the terminal 1+, the terminal 3+, the terminal 1-, the terminal 4+, terminal 3-, the terminal 2+, the terminal 4- and the terminal 2- one by one. A corresponding relationship in this one-to-one correspondence may be any implementable solution that can achieve technical effects of the disclosure and realize the disclosure. In an embodiment of the disclosure, the terminal 132a is electrically connected with the terminal 1+, the terminal 132b is electrically connected with the terminal 3+, the terminal 132c is electrically connected with the terminal 1-, the terminal 132d is electrically connected with the terminal 4+, the terminal 132e is electrically connected with the terminal 3-, the terminal 132f is electrically connected with the terminal 2+, the terminal 132g is electrically connected with the terminal 4-, and the terminal 132h is electrically connected with the terminal 2-.

Please refer to FIG. 11 through FIG. 13, FIG. 37, FIG. 40, FIG. 42 and FIG. 61. The eight first wiring terminals 1510 of the first switching structure 151 are respectively marked as the terminals 1510a, 1510b, 1510c, 1510d, 1510e, 1510f, 1510g, 1510h. Wherein, the terminal 1510a is electrically connected with the terminal 131a, the terminal 1510b is electrically connected with the terminal 131b, the terminal 1510c is electrically connected with the terminal 131c, the terminal 1510d is electrically connected with the terminal 131d, the terminal 1510e is electrically connected with the terminal 131e, the terminal 1510f is electrically connected with the terminal 131f, the terminal 1510g is electrically connected with the terminal 131g, and the terminal 1510h is electrically connected with the terminal 131h. The eight first wiring terminals 1510 of the first switching structure 151 may be electrically connected as needed. An electrical connection mode of the eight first wiring terminals 1510 may be any kind of embodiment that can realize the disclosure and achieve an effect of the disclosure. In an embodiment of the disclosure, the terminals 1510a, 1510b, 1510c, and 1510d are electrically connected with each other and are electrically connected with the positive terminal of output end 140. Terminals 1510e, 1510f, 1510g, and 1510h are electrically connected with each other and are electrically connected with the negative terminal of output end 140.

Please refer to FIG. 11 through FIG. 13, FIG. 39, FIG. 41 and FIG. 42. The eight second wiring terminals 1520 of the second switching structure 152 are respectively marked as the terminals 1520a, 1520b, 1520c, 1520d, 1520e, 1520f, 1520g, 1520h. Wherein, terminal 1520a is electrically connected with the terminal 132a, the terminal 1520b is electrically connected with the terminal 132b, the terminal 1520c is electrically connected with the terminal 132c, the terminal 1520d is electrically connected with the terminal 132d, the terminal 1520e is electrically connected with the terminal 132e, the terminal 1520f is electrically connected with the terminal 132f, the terminal 1520g is electrically connected with the terminal 132g, and the terminal 1520h is electrically connected with the terminal 132h. The eight second wiring terminals 1520 of the second switching structure 152 may electrically be electrically connected as needed. An electrical connection mode of the eight second wiring terminals 1520 may be any kind of embodiment that can realize the disclosure and achieve an effect of the disclosure. The terminal 1520a is electrically connected with terminal 1510b and is electrically connected with a positive terminal of the output end. The terminals 1510c, 1520d, 1520e and 1520f are electrically connected with each other. The terminal 1520g is electrically connected with terminal 1520h and is electrically connected with a negative terminal of the output end.

In order to facilitate processing, the terminals 1510a, 1510b, 1510c, and 1510d in the first switching structure 151 may be integrally formed structure made of a conductor. The terminals 1510e, 1510f, 1510g, and 1510h in the first switching structure 151 may be integrally formed structure and made of the conductor. The terminal 1520a and the terminal 1520b of the second switching structure 152 may be in an integrally formed structure. The terminal 1520c, the terminal1520d, the terminal1520e, and the terminal1520f are in an integrally formed structure, and the terminal1520g and the terminal 1520h may be in an integrally formed structure. The above-mentioned integrated structures are all made of the conductors.

It should be noted that, the markings of the terminals in the above embodiment are only for a convenience of description, and is not used for limitation.

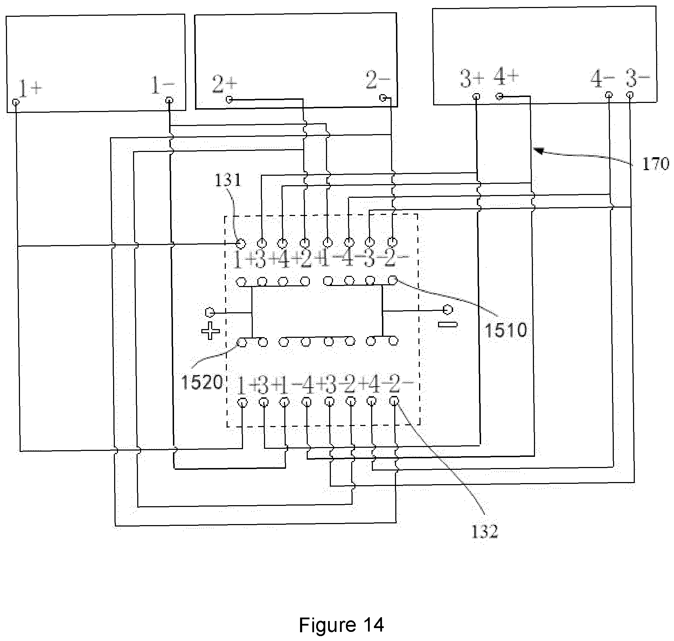

Please refer to FIG. 5 and FIG. 14. In an embodiment of the disclosure, the first terminal block 1210 is electrically connected with the first input end 131 and the second input end 132 through a conducting wire. The second terminal block 1220 is electrically connected with the first input end 131 and the second input end 132 through a conducting wire. The third terminal block 1230 is electrically connected with the first input end 131 and the second input end 132 through a conducting wire.

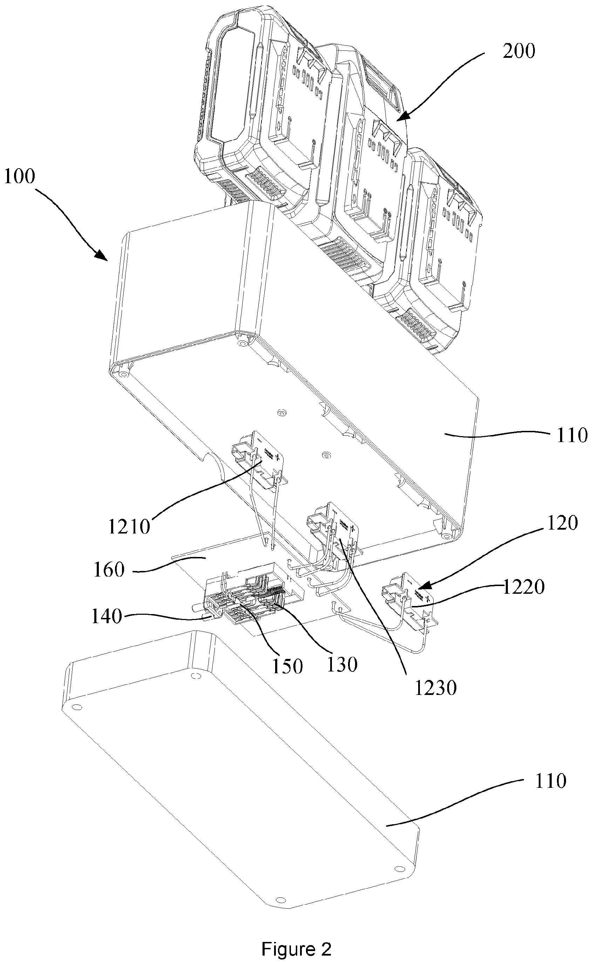

Please refer to FIG. 2 through FIG. 4. The housing 110 includes an upper housing 114 and a lower housing 115. The lower housing 115 is mounted at a bottom of the upper housing 114. The first battery pack cavity 111, the second battery pack cavity 112 and the third battery pack cavity 113 are arranged inside the upper housing 114. The conducting wire 170 may be integrated on a first circuit board (Printed Circuit Board) 160, and the first circuit board 160 is fixed inside the lower housing 115 and is located outside the upper housing 114.

In an embodiment of the disclosure, the first wiring terminal 1510 of the first switching structure 151 matches a wiring terminal of the first input end 131, and the second wiring terminal 1520 of the second switching structure 152 matches a wiring terminal of the second input end 132. The wiring terminals of the first/second switching structure and the first/second input end may be either a terminal or a contact point. Types of the wiring terminals of the first input end 131 and the second input end 132 are not limited, and they may be consistent or inconsistent. Types of the first/second wiring terminals 1510/1520 of the first switching structure 151 and the second switching structure 152 are also not limited, and the two may be consistent or inconsistent.

To simplify a production process, in an embodiment of the disclosure, the types of the wiring terminals of the first input end 131 and the second input end 132 are the same. For example, the wiring terminals of the first input end 131 and the second input end 132 are female terminals, and the first/second wiring terminals 1510/1520 of the first switching structure 151 and the second switching structure 152 are male terminals. Or the wiring terminals of the first input end 131 and the second input end 132 are male terminals, and the first/second wiring terminal 1510/1520 of the first switching structure 151 and the second switching structure 152 are female terminals. Or the wiring terminal of the first input end 131 and a connecting wiring terminal of the second input end 132 are a first contact point, and the first wiring terminal 1510 of the first switching structure 151 and the second wiring terminal 1520 of the second switching structure 152 are a second contact point. The first contact point is matched with the second contact point.

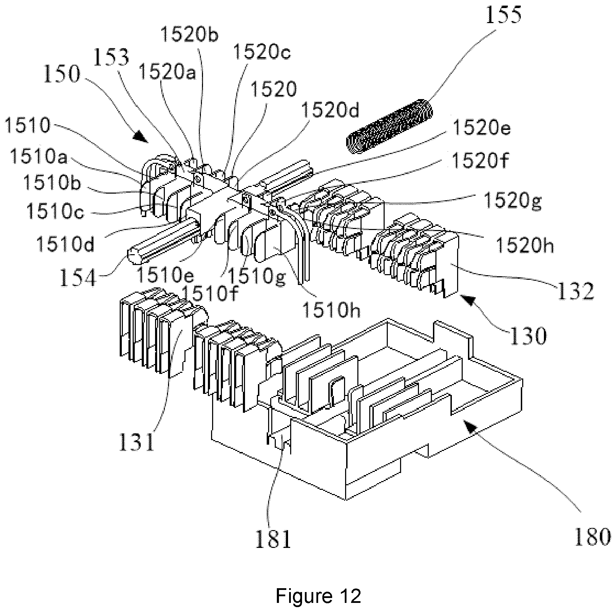

Please refer to FIG. 10 and FIG. 12. In an embodiment of the disclosure, the system further includes a mounting base 180 and the switching device 150 arranged in the mounting base 180. The switching device 150 includes a supporting body 153 and a sliding bar 154. A sliding groove 181 is arranged on the mounting base 180, the sliding bar 154 is arranged in the sliding groove 181, and the sliding bar 154 can slide in the sliding groove 181. The supporting body 153 is fixedly connected with the sliding bar 154. In this embodiment, the first switching structure 151 and the second switching structure 152 are in an integrated switching structure. The system 100 includes one mounting base 180 for mounting the integrated switching structure. The switching device includes one supporting body 153 and one sliding bar 154. The first switching structure 151 is arranged at a first side of the supporting body 153, and the second switching structure 152 is arranged at a second side of the supporting body 153. The mounting base 180 is fixed in the lower housing 116 or on the first circuit board 160.

Please refer to FIG. 10 through FIG. 12. In an embodiment of the disclosure, the switching device 150 further includes a reset component 155. The reset component 155 is arranged on the sliding bar 154 and located in the sliding groove 181. The reset component 155 may be a spring, and the spring is sleeved on a periphery of the sliding bar, and is located on a side of the supporting body away from the output end.

In an embodiment of the disclosure, an initial position of the switching device 150 is a first position. When in use, the sliding bar 154 is pushed so that the supporting body 153 drives the first switching structure 151 and the second switching structure 152 to move, the second switching structure 152 contacts the second input end 132, and the output end is configured to output the second voltage. When a pulling force on the sliding bar 154 disappears, the spring relies on a reset elastic force to reset the switching device 150 to the first position, and the first switching structure 151 contacts the first input end 131, so that the output end is configured to output the first voltage.

Please refer to FIG. 2. The disclosure further provides a power supply system. The power supply system includes the system 100 in any one of the above embodiments and the battery pack 200 mounted in the system. For example, the power supply system includes the housing 110, the terminal part 120, the battery pack 200, the input end 130, the output end 140 and the switching device 150. Wherein, the terminal part 120 is arranged on the housing 110. The battery pack 200 is mounted in the housing 100 and is electrically connected with the terminal part 120. The input end 130 is electrically connected with the terminal part 120. The output end 140 is used to output power to the outside. The switching device 150 is arranged in the housing 110 and is electrically connected with the output end 140. The output end 140 is used to output power to the outside. The switching device 150 includes the first switching structure 151 and the second switching structure 152. The first switching structure 151 and the second switching structure 152 may be switched between the first state and the second state, which means that when the battery pack 200 is mounted in the housing 100, the output end 140 outputs the first voltage. When the switching device 150 is located at the first position, which means that when the first switching structure 151 is in the second state, the second switching structure 152 is in the first state, and the output end 140 is configured to output the first voltage. When the switching device 150 is located at the second position, which means that when the second switching structure 152 is in the second state, the first switching structure 151 is in the first state, and the output end 140 is configured to output the second voltage, which means that when the battery pack 200 is mounted in the housing 110, the output end 140 outputs the second voltage. The first voltage is different from the second voltage.

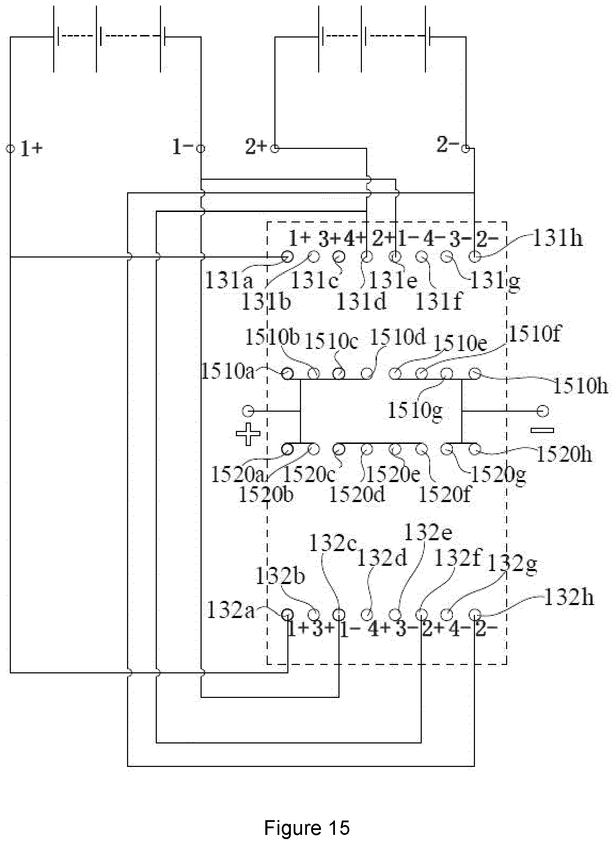

Please refer to FIG.3, FIG. 6, FIG. 7 and FIG. 15 through FIG. 17. In an embodiment of the disclosure, the battery pack 200 includes two single-voltage battery packs 210. The positive terminal and negative terminal of the single-voltage battery pack terminals 211 of the two single-voltage battery packs 210 are connected with the terminal 1+, the terminal 2+, the terminal 1-, and the terminal 2- one by one. Wherein, FIG. 15 is a circuit principle view after the two single-voltage battery packs are inserted.

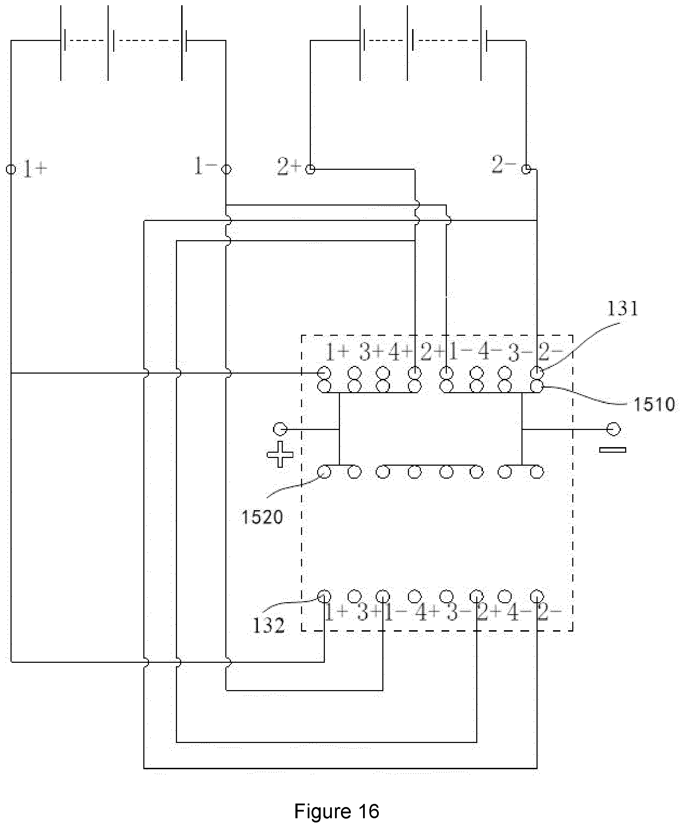

Please refer to FIG. 16. When the switching device 150 is in the first position, the first switching structure 151 is electrically connected with the first input end 131. At this time, the terminal 1510a is electrically connected with the terminal 1+ through the terminal 131a, and the terminal 1510d is electrically connected with the terminal 2+ through the terminal 131d. The terminal 1510e is electrically connected with the terminal 1- through the terminal 131e, and the terminal 1510h is connected with the terminal 2-through the terminal 131h. At the same time, the terminal 1510a and the terminal 1510d are electrically connected with the positive terminal of the output end respectively, and the terminal 1510e and the terminal 1510h are electrically connected with the negative terminal of the output end respectively. Therefore, the two single-voltage battery packs are connected in parallel, and the output end outputs the first voltage, which means a parallel voltage.

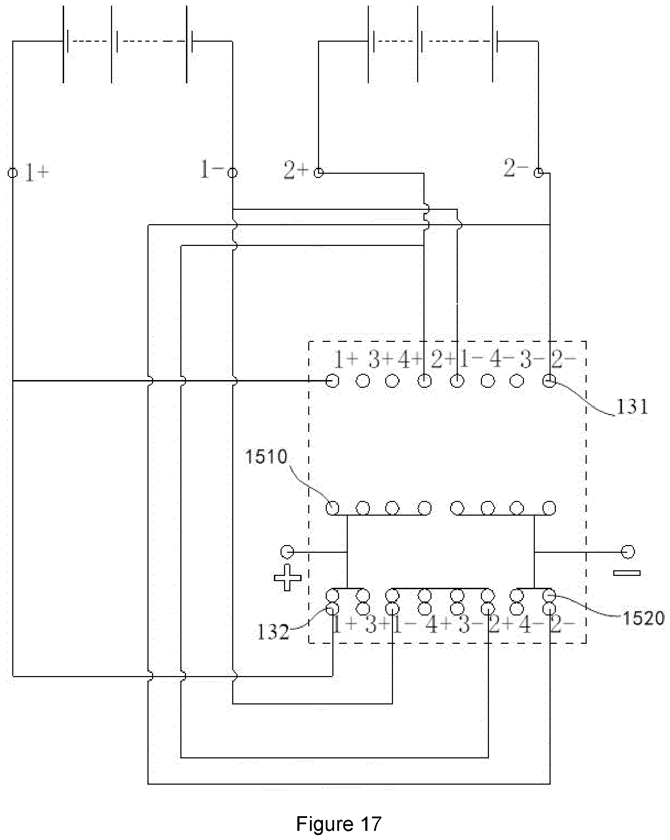

Please refer to FIG. 17. When the switching device 150 is in the second position, the second switching structure 152 is electrically connected with the second input end 132. At this time, the terminal 1520a is electrically connected with the terminal 1+ through the terminal 132a, and the terminal 1520c is electrically connected with the terminal 1- through the terminal 132c. The terminal 1520f is electrically connected with the terminal 2+ through the terminal 132f, and the terminal 1520h is electrically connected with the terminal 2- through the terminal 132h. At the same time, the terminal 1520c is electrically connected with 1520f. The terminal 1510a is electrically connected with the positive terminal of the output end, and the terminal 1520h is electrically connected with the negative terminal of the output end. Therefore, the two single-voltage battery packs are connected in series, and the output end outputs the second voltage, which means a series voltage.

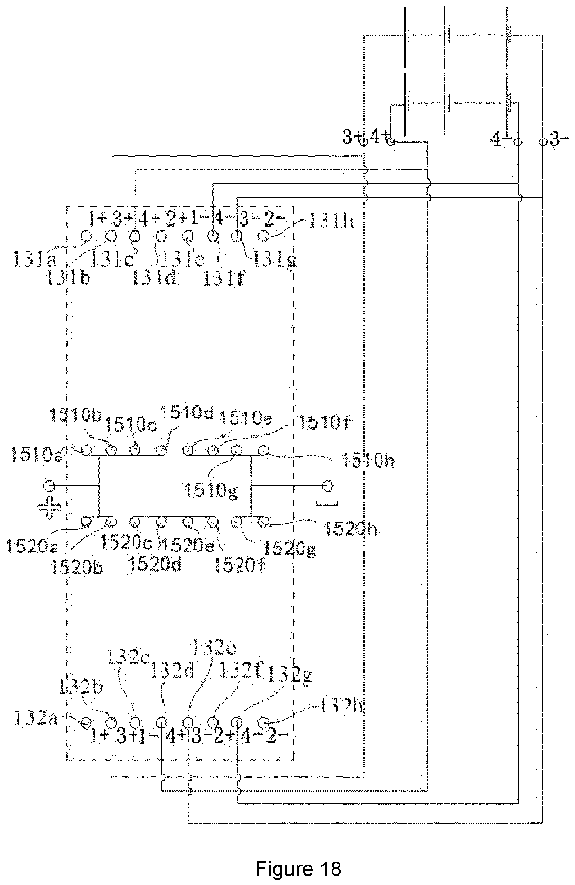

Please refer to FIG.3, FIG. 6, FIG. 7 and FIG. 18 through FIG. 20. In an embodiment of the disclosure, the battery pack 200 includes one double-voltage battery pack 220. The two positive terminals and the two negative terminals of the double-voltage battery pack terminals 211 are connected with the terminal 3+, the terminal 4+, the terminal 3-, and the terminal 4- one by one. Wherein, FIG. 18 is a circuit principle view after the double-voltage battery pack is inserted.

Please refer to FIG. 11 through FIG. 13 and FIG. 19. When the switching device 150 is in the first position, the first switching structure 151 is electrically connected with the first input end 131. At this time, the terminal 1510b is electrically connected with the terminal 3+ through the terminal 131b, and the terminal 1510c is electrically connected with the terminal 4+ through the terminal 131c. The terminal 1510g is electrically connected with the terminal 3- through the terminal 131g, and the terminal 1510f is electrically connected with the terminal 4- through the terminal 131f. At the same time, the terminal 1510b and the terminal 1510c are electrically connected with the positive terminal of the output end respectively, and the terminal 1510g and the terminal 1510f are electrically connected with the negative terminal of the output end respectively. Therefore, two battery units in the double-voltage battery packs are connected in parallel, and the output end outputs the first voltage, which means the parallel voltage.

Please refer to FIG. 11 through FIG. 13 and FIG. 20. When the switching device 150 is in the second position, the second switching structure 152 is electrically connected with the second input end 132. At this time, the terminal 1520b is electrically connected with the terminal 3+ through the terminal 132b, and the terminal 1520e is electrically connected with the terminal 3- through the terminal 132e. The terminal 1520d is electrically connected with the terminal 4+ through the terminal 132d, and the terminal 1520g is electrically connected with the terminal 4- through the terminal 132g. At the same time, the terminal 1520b is electrically connected with the positive terminal of the output end, and the terminal 1520e and the terminal 1520d are electrically connected with each other. The terminal 1520g is electrically connected with the negative terminal of the output end. Therefore, the two battery units in the double-voltage battery pack are connected in series, and the output end outputs the second voltage, which means the series voltage.

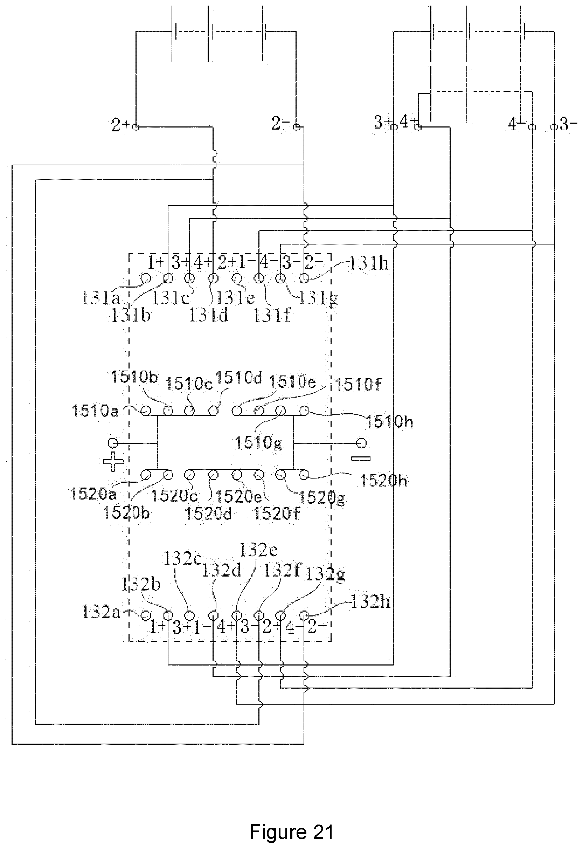

Please refer to FIG.3, FIG. 5 through FIG. 7 and FIG. 21 through FIG. 23. In an embodiment of the disclosure, the battery pack 200 includes one single-voltage battery pack 210 and one double-voltage battery pack 220. The single-voltage battery pack 210 is mounted on the first terminal block 1210 or on the second terminal block 1220. The double-voltage battery pack 220 is mounted on the third terminal block 1230. Take the single-voltage battery pack 210 mounted in the second terminal block 1220 as an example, the positive terminal of the single-voltage battery pack terminal 211 is connected with the terminal 2+. The negative terminal of the single-voltage battery pack terminal 211 is connected with the terminal 2-. The two positive terminals and the two negative terminals of the double-voltage battery pack terminal 221 are connected with the terminal 3+, the terminal 4+, the terminal 3-, and the terminal 4- one by one. Wherein, FIG. 21 is a circuit principle view after one single-voltage battery pack and one double-voltage battery pack are inserted.

Please refer to FIG. 11 through FIG. 13 and FIG. 22. When the switching device 150 is in the first position, the first switching structure 151 is electrically connected with the first input end 131, and at this moment, the first switching structure 151 is electrically connected with the first input end 131. At this time, the terminal 1510b is electrically connected with the terminal 3+ through the terminal 131b, and the terminal 1510c is electrically connected with the terminal 4+ through the terminal 131c. The terminal 1510d is electrically connected with the terminal 2+ through the terminal 131d, and the terminal 1510g is electrically connected with the terminal 3- through the terminal 131g. The terminal 1510f is electrically connected with the terminal 4- through the terminal 131f, and the terminal 1510h is electrically connected with the terminal 2- through the terminal 131h. At the same time, the terminal 1510b, the terminal 1510c and the terminal 1510d are electrically connected with the positive terminal of the output end respectively, and the terminal 1510f, the terminal 1510g and the terminal 1510h are electrically connected with the negative terminal of the output end respectively. Therefore, the single-voltage battery pack and the two battery units in the double-voltage battery packs are connected in parallel, and the output end outputs the first voltage, which means the parallel voltage.

Please refer to FIG. 11 through FIG. 13 and FIG. 23. When the switching device 150 is in the second position, the second switching structure 152 is electrically connected with the second input end 132. At this time, the terminal 1520b is electrically connected with the terminal 3+ through the terminal 132b, and the terminal 1520e is electrically connected with the terminal 3- through the terminal 132e. The terminal 1520d is electrically connected with the terminal 4+ through the terminal 132d, and the terminal 1520g is electrically connected with the terminal 4- through the terminal 132g. The terminal 1520f is electrically connected with the terminal 2+ through the terminal 132f, and the terminal 1520h is electrically connected with the terminal 2- through the terminal 132h. At the same time, the terminal 1520b is electrically connected with the positive terminal of the output end, and the terminal 1520e, terminal 1520d and the terminal 1520f are electrically connected with each other. The terminal 1520g and the terminal 1520h are electrically connected with the negative terminal of the output end respectively. Therefore, one of the two battery units (the battery unit electrically connected with the terminal 4+ and terminal 4-) in the double-voltage battery pack is connected in parallel with the single-voltage battery pack and then connected in series with the other battery unit, and the output end outputs the second voltage, which means the series voltage.

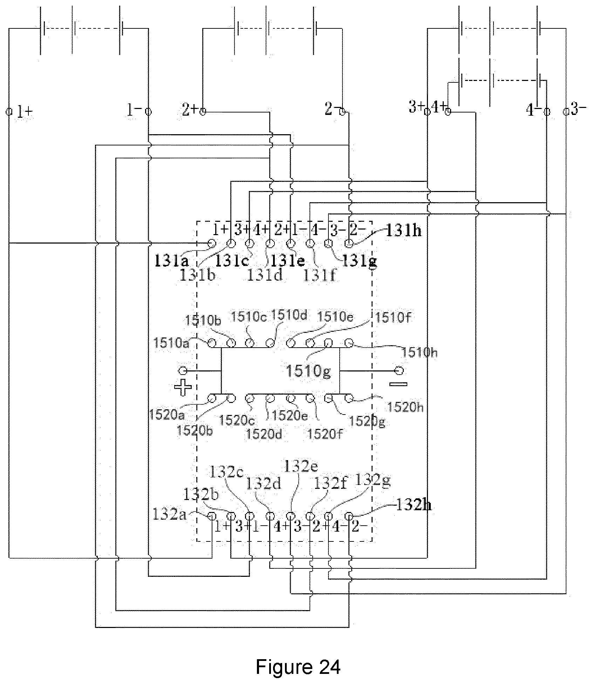

Please refer to FIG.3, FIG. 6 through FIG. 7 and FIG. 24 through FIG. 26. In an embodiment of the disclosure, the battery pack 200 includes two single-voltage battery packs 210 and one double-voltage battery pack 220. Wherein, the two single-voltage battery packs 210 are a first single-voltage battery pack and a second single-voltage battery pack respectively. The two battery units in the double-voltage battery pack 220 are a first battery unit and a second battery unit respectively. A positive terminal and a negative terminal of the single-voltage battery pack terminal of the first single-voltage battery pack are electrically connected with the terminal 1+ and the terminal 1- one by one. A positive terminal and a negative terminal of the single-voltage battery pack terminal of the second single-voltage battery pack are electrically connected with the terminal 2+ and the terminal 2- one by one. The positive terminals and negative terminals of the double-voltage battery pack terminal are electrically connected with the terminal 3+, the terminal 4+, the terminal 3- and the terminal 4- one by one. For example, the positive terminal and the negative terminal of the first battery unit are correspondingly connected with the terminal 3+ and the terminal 3-. The positive terminal and the negative terminal of the second battery unit are correspondingly connected with the terminal 4+ and the terminal 4-. Wherein, FIG. 24 is a circuit principle view after the two single-voltage battery packs and one double-voltage battery pack are inserted.

Please refer to FIG. 11 through FIG. 13 and FIG. 25. When the switching device 150 is in the first position, the first switching structure 151 is electrically connected with the first input end 131. At this time, the terminal 1510a is electrically connected with the terminal 1+ through the terminal 131a, and the terminal 1510b is electrically connected with the terminal 3+ through the terminal 131b. The terminal 1510c is electrically connected with the terminal 4+ through the terminal 131c, and the terminal 1510d is electrically connected with the terminal 2+ through the terminal 131d. The terminal 1510e is electrically connected with the terminal 1- through the terminal 131e, and the terminal 1510f is electrically connected with the terminal 4- through the terminal 131f. The terminal 1510g is electrically connected with the terminal 3- through the terminal 131g, and the terminal 1510h is electrically connected with the terminal 2- through the terminal 131h. At the same time, the terminal 1510a, the terminal 1510b, the terminal 1510c and the terminal 1510d are electrically connected with the positive terminal of the output end respectively, and the terminal 1510e, the terminal 1510f, the terminal 1510g and the terminal 1510h are electrically connected with the negative terminal of the output end respectively. Therefore, the first single-voltage battery pack, the second single-voltage battery pack, the first battery unit and the second battery unit are connected in parallel, and the output end outputs the first voltage, which means the parallel voltage.

Please refer to FIG. 11 through FIG. 13 and FIG. 26. When the switching device 150 is in the second position, the second switching structure 152 is electrically connected with the second input end 132. At this time, the terminal 1520a is electrically connected with the terminal 1+ through the terminal 132a, and the terminal 1520c is electrically connected with the terminal 1- through the terminal 132c. The terminal 1520f is electrically connected with the terminal 2+ through the terminal 132f, and the terminal 1520h is electrically connected with the terminal 2- through the terminal 132h. The terminal 1520b is electrically connected with the terminal 3+ through the terminal 132b, and the terminal 1520e is electrically connected with the terminal 3- through the terminal 132e. The terminal 1520d is electrically connected with the terminal 4+ through the terminal 132d, and the terminal 1520g is electrically connected with the terminal 4-through the terminal 132g. At the same time, the terminal 1520a and the terminal 1520b are electrically connected with the positive terminal of the output end respectively, and the terminal 1520c, the terminal 1520d, the terminal 1520e and the terminal 1520f are electrically connected with each other. The terminal 1520g and the terminal 1520h are electrically connected with the negative terminal of the output end respectively. Therefore, the first single-voltage battery pack is connected in parallel with the first battery unit and is named as a first parallel circuit. The second single-voltage battery pack is connected in parallel with the second battery unit and is named as a second parallel circuit. The first parallel circuit is connected in series with the second parallel circuit, and the output end outputs the second voltage, which means the series voltage.

Please refer to FIG. 1 and FIG. 2. The disclosure further provides the power supply system, which is obtained by mounting an adapter on a basis of the power supply system in any of the above embodiments. For example, the power supply system includes the housing 110, the terminal part 120, the battery pack 200, the input end 130, the output end 140, the switching device 150 and an adapter 400. Wherein, the terminal part 120 is arranged on the housing 110. The battery pack 200 is mounted in the housing 100 and is electrically connected with the terminal part 120. The input end 130 is electrically connected with the terminal part 120. The output end is used to output power to the outside. The switching device 150 is arranged in the housing 110 and is electrically connected with the output end 140. The switching device 150 includes the first switching structure 151 and the second switching structure 152. The first switching structure 151 and the second switching structure 152 may be switched between the first state and the second state, which means that when the battery pack 200 is mounted in the housing 100, the output end 140 outputs the first voltage. When the switching device 150 is located at the first position, which means that when the first switching structure 151 is in the second state, the second switching structure 152 is in the first state, and the output end 140 is configured to output the first voltage. When the switching device 150 is located at the second position, which means that when the second switching structure 152 is in the second state, the first switching structure 151 is in the first state, and the output end 140 is configured to output the second voltage, which means that when the battery pack 200 is mounted in the housing 110, the output end 140 outputs the second voltage. The first voltage is different from the second voltage. The adapter 400 is electrically connected with the output end 140, the adapter 400 is provided with an adaptation interface, and the adaptation interface is configured to be electrically connected with a power tool.

Please refer to FIG. 2. In an embodiment of the disclosure, the power supply system further includes a power cable 300. The power cable 300 is configured to electrically connect the adapter 400 with the output end. The power cable 300 may be a separate wire independent of the adapter 400 or a wire arranged on the adapter 400.

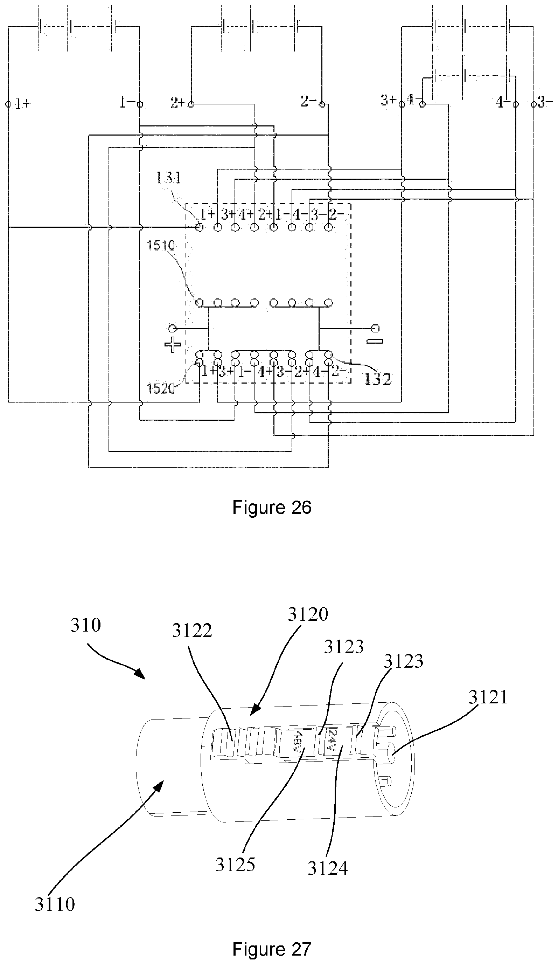

Please refer to FIG. 27. In an embodiment of the disclosure, the power supply system further includes a plugging wire base 310. The plugging wire base 310 is configured to be connected with the output end 140. The plugging wire base 310 is provided with a plug-in part 3110 and a pulling part 3120. The plug-in part 3110 is configured to electrically connect the output end 140 with the adapter 400. A wiring terminal matched with the output end 140 is arranged in the plug-in part 3110, the pulling part 3120 is sleeved on the plug-in part 3110. The pulling part 3120 is provided with a pushing block 3121 that changes a position of the switching device 150. The pulling part 3120 is provided with a pressing component 3122 and a limiting component 3123, and the limiting component 3123 is arranged on the pressing component 3122.

Please refer to FIG. 27. In an embodiment of the disclosure, the pulling part 3120 may slide on the plug-in part 3110, and the limiting part 3123 includes a first limiting component and a second limiting component, and the first limiting component and the second limiting component are arranged on a surface of the pressing component 3122 in parallel.

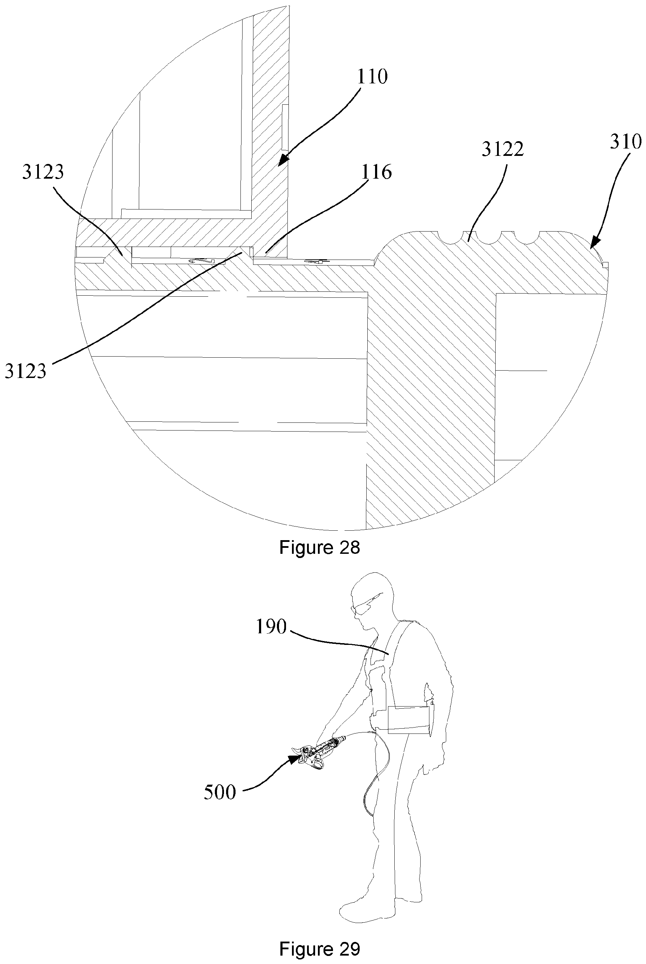

Please refer to FIG. 27 and FIG. 28. An initial position of the switching device 150 is the first position. The pressing component 3122 is pressed, a wiring terminal in the plug-in part 3110 is aligned with the wiring terminal of the output end 140 according to positive and negative electrode positions, and then the plug-in part 3110 and the pulling part 3120 are pushed, so that the wiring terminal in the plug-in part 3110 is electrically connected with the wiring terminal of the output end 140, the first limiting component passes through the third limiting component 116 to loosen the pressing component 3122, and the first limiting component 3123 is clamped with the third limiting component 116 arranged on the housing 110. In this way, the switching device 150 is firmly fixed in the first position, and the output end 140 can stably output the first voltage.

When the second voltage needs to be connected, the pressing component 3122 is pressed. Further, the pulling part 3120 is pushed, so that the pushing block 3121 pushes the sliding bar 154 to slide. When the switching device 150 moves to the second position, the pressing component 3122 is released, so that the second limiting component is clamped with the third limiting component 116, thereby firmly fixing the switching device 150 in the second position, and the output end 140 can stably output the second voltage.

When the output voltage of the output end 140 needs to be switched from the second voltage to the first voltage, the pressing component 3122 is pressed, the pulling part 3120 is moved outward, and the sliding bar 154 moves outward under a restoring force of the spring, so that the switching device 150 moves from the second position to the first position, and the output terminal outputs the first voltage.

When the plugging wire base 310 needs to be unplugged, the pressing component 3123 is pressed to enable the first limiting component or the second limiting component to detach from the third limiting component 116, so that the plugging wire base 310 may be pulled out smoothly.

Please refer to FIG. 27. In an embodiment of the disclosure, the pressing component 3123 is further provided with a first identification area 3124 and a second identification area 3125. And when the first identification area 3124 is adjacent to the output end 140, the output end 140 outputs the first voltage, and when the second identification area 3125 is adjacent to the output end 140, the output end 140 outputs the second voltage. The first identification area 3124 is used for identifying the first voltage. For example, a voltage value of the first voltage is identified in the first identification area 3124, and the second identification area 3125 is used for identifying the second voltage. For example, a voltage value of the second voltage is identified in the second identification area 3125.

Please refer to FIG. 27 and FIG. 28. In an embodiment of the disclosure, the pressing component 3122 is an elastic piece. The first limiting component or the second limiting component is a limiting protrusion, and the third limiting component is a limiting block. The limiting protrusion is matched with the limiting block.

Please refer to FIG. 1. In an embodiment of the disclosure, the plugging wire base 310 is a part of the power cable 300, and the plugging wire base 310 is located at an end part of the power cable 300. The conducting wire inside the power cable 300 is electrically connected with the wiring terminal in the plug-in part 3110, and the plug-in part 3110 may be integrated with an end of the power cable 300.

Please refer to FIG. 1, FIG. 2, FIG. 29 and FIG. 30. The disclosure further provides a power tool system, which is obtained by arranging a first power tool 500 and a second power tool 600 to the power supply system in any of the above embodiments. For example, the power tool system includes the housing 110, the terminal part 120, the battery pack 200, the input end 130, the output end 140, the switching device 150, the adapter 400, the first power tool 500 and the second power tool 600. Wherein, the terminal part 120 is arranged on the housing 110. The battery pack 200 is mounted in the housing 100 and is electrically connected with the terminal part 120. And the battery pack can output two voltages to the outside. The input end 130 is electrically connected with the terminal part 120. The switching device 150 is arranged in the housing 110, and is electrically connected with the output end 140. The switching device 150 may be located in the first position and the second position. When the switching device 150 is in the first position, the output end 140 may be configured to output the first output voltage, which means that after the battery pack 200 is mounted in the housing 110, the output terminal 140 outputs the first voltage. When the switching device 150 is located in the second position, the output end 140 may be configured to output the second voltage, which means that after the battery pack 200 is mounted in the housing 110, the output end outputs the second voltage. The first voltage is different from the second voltage. The adapter 400 is provided with the adaptation interface, and the adapter 400 is configured to be electrically connected with the output end140. The first power tool 500 is provided with a first tool interface, and the adapter 400 is electrically connected with the first power tool 500 when the first tool interface is coupled with the adaptation interface. The second power tool 600 is provided with a second tool interface, and when the second tool interface is coupled with the adaptation interface, the adapter 400 is electrically connected with the second power tool 600. A working voltage of the first power tool 500 is different from a working voltage of the second power tool 600.

In an embodiment of the disclosure, the working voltage of the first power tool 500 is the first voltage, and the working voltage of the second power tool 600 is the second voltage.

The housing 110 of the system of the disclosure is used for mounting the battery pack, and the terminal part 120 is used for an electrical connection with the battery pack 200. When positions of the switching structure are different, the output voltage that can be configured at the output end 140 is also different, so that the output end 140 can be configured with two kinds of output voltages. The system has advantages of simple structure, easy implementation, and easy operation. At the same time, the system can provide two different output voltages to the outside after being put into the battery pack, and meet the tools of two different working voltages, which increases an applicable scope of the power supply system and effectively solves a problem that the conventional power supply can only output one voltage.

Please refer to FIG. 4, FIG. 31 through FIG. 34. In an embodiment, the first switching structure 151 and the second switching structure 152 are a separating switching structure. In this embodiment, the system 100 includes the housing 110, the first battery pack cavity 111, the second battery pack cavity 112, the third battery pack cavity 113, the input end 130, the first output end 1404, the second output end 1405, the first switching structure 151 and the second switching structure 152. Wherein, the first battery pack cavity 111 is arranged in the housing 110, and the first terminal block 1210 is arranged on the first battery pack cavity 111. The second battery pack cavity 112 is arranged in the housing 110, and the second terminal block 1220 is arranged on the second battery pack cavity 112. The third battery pack cavity 113 is arranged in the housing 110, and the third terminal block 1230 is arranged on the third battery pack cavity 113. The first terminal block 1210, the second terminal block 1220 and the third terminal block 1230 are matched with the corresponding battery packs 200 for mounting the battery packs 200 and enable the battery packs 200 to discharge to the outside. The input end 130 is electrically connected with the first terminal block 1210, the second terminal block 1220 and the third terminal block 1230 respectively. The first output end 1404 and the second output end 1405 are arranged on the housing 110, and the first output end 1404 is used for providing energy to the outside. The second output end 1405 is used for providing energy to the outside. The first switching structure 151 is arranged in the housing 110, may be switched between the first state and the second state, and is electrically connected with the first output end 1404. The second switching structure 152 is arranged in the housing 110, may be switched between the first state and the second state, and is electrically connected with the second output end 1405. In an initial state, the first switching structure 151 and the second switching structure 152 are both in the first state, and the system is in a shutdown state at this moment, and cannot provide a voltage to the outside. When the first switching structure 151 is in the second state, the second switching structure 152 is in the first state, and the first output end 1404 is configured to output the first voltage, which means that after the battery pack 200 is mounted, the first output end 1404 outputs the first voltage. When the second switching structure 152 is in the second state, the first switching structure 151 is in the first state, and the second output end 1405 is configured to output the second voltage, which means that after the battery pack 200 is mounted, the second output end 1405 outputs the second voltage. The system 100 may further include the strap 190, and the housing 110 is detachably mounted on the strap 190. The user carries the system 100 through carrying the strap 190.

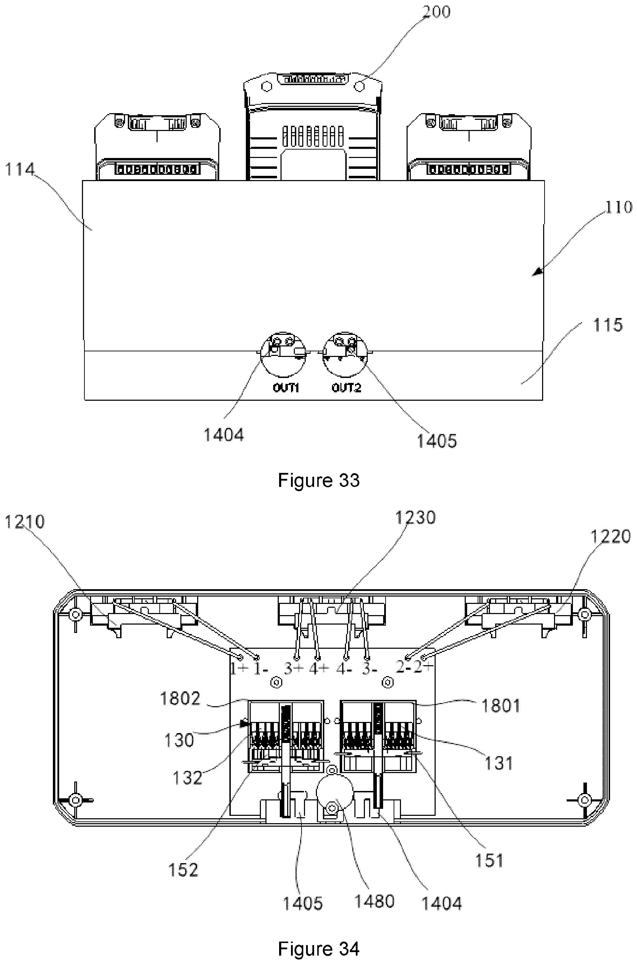

Please refer to FIG. 34. In an embodiment of the disclosure, the input end 130 includes the first input end 131 and the second input end 132. The first input end 131 is electrically connected with the first terminal block 1210, the second terminal block 1220 and the third terminal block 1230 respectively. The second input end 132 is electrically connected with the first terminal block 1210, the second terminal block 1220 and the third terminal block 1230 respectively. When the first switching structure 151 is in the second state, the first switching structure 151 is electrically connected with the first input end 131, the second switching structure 152 is disconnected from the second input end 132, and the first output end 1404 is configured to output the first voltage. When the second switching structure 152 is in the second state, the second switching structure 152 is electrically connected with the second input end 132, and the first switching structure 151 is disconnected from the first input end 131, and the second output end 1405 is configured to output the second voltage.

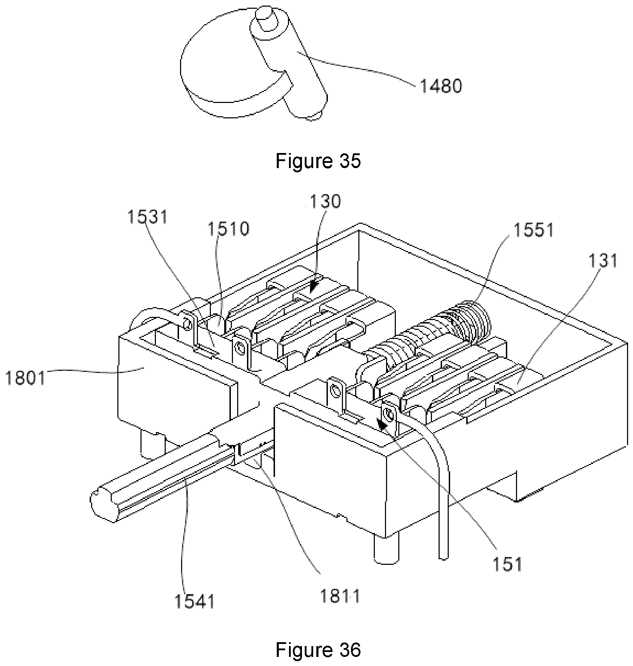

Please refer to FIG. 34 and FIG. 35. In an embodiment of the disclosure, the system further includes a blocking component 1480. The blocking component 1480 is movably mounted between the first output end 1404 and the second output end 1405 and is located inside the housing 110. When using the first output end 1404, the blocking component 1480 blocks the second output end 1405. When using the second output end 1405, the blocking component 1480 blocks the first output end 1404.

In an embodiment of the disclosure, the blocking component 1480 is a camshaft, and the camshaft is rotatably mounted between the first output end 1404 and the second output end 1405.

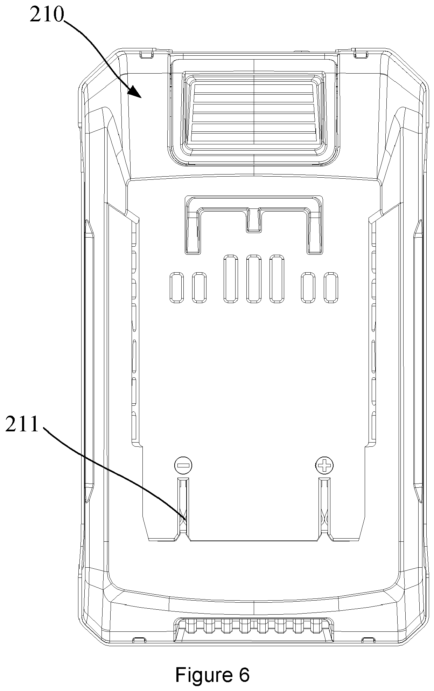

Please refer to FIG. 6 through FIG. 9. In an embodiment of the disclosure, the first battery pack cavity 111 is matched with the single-voltage battery pack 210 for mounting the single-voltage battery pack 210. The second battery pack cavity 112 is matched with the single-voltage battery pack 210 for mounting the single-voltage battery pack 210. The third battery pack cavity 113 is matched with the double-voltage battery pack 220 for mounting the double-voltage battery pack 220. The single-voltage battery pack 210 provides one voltage externally, is provided with the single-voltage battery pack terminal 211, and the single-voltage battery pack terminal 211 includes the positive terminal and the negative terminal. The double-voltage battery pack 220 provides two voltages externally, is provided with the double-voltage battery pack terminal 221, and the double-voltage battery pack terminal includes two positive terminals and two negative terminals. The terminal block 1210 is matched with the single-voltage battery pack terminal 211, the second terminal block 1220 is matched with the single-voltage battery pack terminal 211, and the third terminal block 1230 is matched with the double-voltage battery pack terminal 221.

Please refer to FIG. 34, FIG. 6, FIG. 8 and FIG. 9. In an embodiment of the disclosure, the structure of the first terminal block 1210 is consistent with the structure of the second terminal block 1220. Two first terminals 1211 and two second terminals 1212 are arranged on the first terminal block 1210. The first terminal 1211 is electrically connected with the second terminal 1212, wherein, the first terminal 1211 is matched with the single-voltage battery pack terminal 211, and the second terminal 1212 is electrically connected with the input end 130. The third terminal block 1230 is provided with four third terminals 1231 and four fourth terminals 1232. The third terminal 1231 is electrically connected with the fourth terminal 1232, the third terminal 1231 is matched with the double-voltage battery pack terminal 221, and the fourth terminal 1232 is electrically connected with the input end 130.

Please refer to FIG. 36 through FIG. 39. In an embodiment, the first switching structure 151 and the second switching structure 152 are a separating switching structure, and they are respectively arranged in a first mounting base 1801 and a second mounting base 1802. The first switching structure 151 includes a first supporting body 1531 and a first sliding bar 1541. The first mounting base 1801 is provided with a first sliding groove 1811. The first sliding bar 1541 is arranged in the first sliding groove 1811. The first supporting body 1531 is fixedly connected with the first sliding bar 1541. The first supporting body 1531 is provided with the first wiring terminal 1510. The second switching structure 152 includes a second supporting body 1532 and a second sliding bar 1542. The second mounting base 1802 is provided with a second sliding groove 1812. The second sliding bar 1542 is arranged in the second sliding groove 1812. The second supporting body 1532 is fixedly connected with the second sliding bar 1542. The second supporting body 1532 is provided with a second wiring terminal 1520.

In an embodiment of the disclosure, the first terminal block 1210 is electrically connected with the first input end 131 and the second input end 132 through the conducting wire 170. The second terminal block 1220 is electrically connected with the first input end 131 and the second input end 132 through the conducting wire 170. The third terminal block 1230 is electrically connected with the first input end 131 and the second input end 132 through the conducting wire 170.

Please refer to FIG. 34. In an embodiment of the disclosure, the two second terminals 1212 of the first terminal block 1210 are respectively marked as: 1+, 1-, the two second terminals 1212 of the second terminal block 1220 are respectively marked: 2+, 2-, and the four fourth terminals 1232 of the third terminal block 1230 are marked as: 3+, 3-, 4+, 4-.

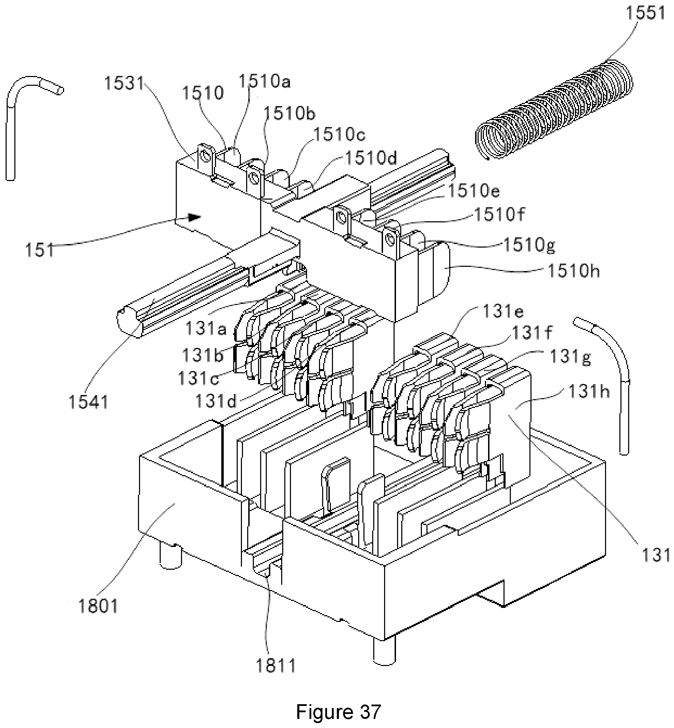

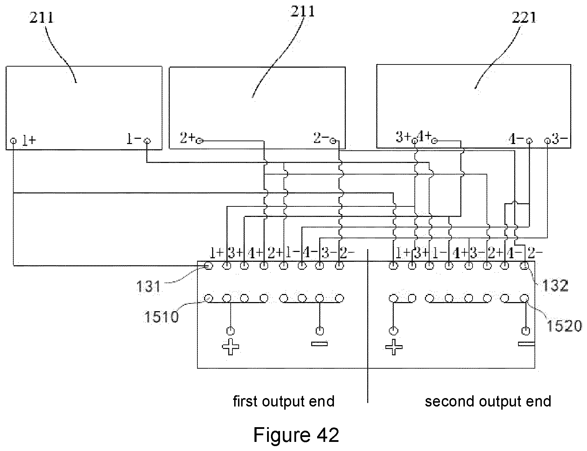

Please refer to FIG. 37 and FIG. 42. The eight terminals of the first input end 131 are respectively marked as 131a, 131b, 131c, 131d, 131e, 131f, 131g, 131h. Wherein, the terminal 131a, the terminal 131b, the terminal 131c, the terminal 131d are correspondingly electrically connected with the terminal 1+, the terminal 2+, the terminal 3+, and the terminal 4+ one by one. The specific corresponding relationship in this one-to-one correspondence is not limited. For example, in an embodiment of the disclosure, the terminal 131a is electrically connected with the terminal 1+, the terminal 131b is electrically connected with the terminal 3+, the terminal 131c is electrically connected with the terminal 4+, and the terminal 131d is electrically connected with the terminal 2+. The terminal 131e, the terminal 131f, the terminal 131g, the terminal 131h are correspondingly electrically connected with the terminal 1-, the terminal 2-, the terminal 3-, and the terminal 4- one by one. A specific corresponding relationship in this one-to-one correspondence is not limited. For example, in an embodiment of the disclosure, the terminal 131e is electrically connected with the terminal 1-, the terminal 131f is electrically connected with the terminal 4-, the terminal 131g is electrically connected with the terminal 3-, and the terminal 131h is electrically connected with the terminal 2-.

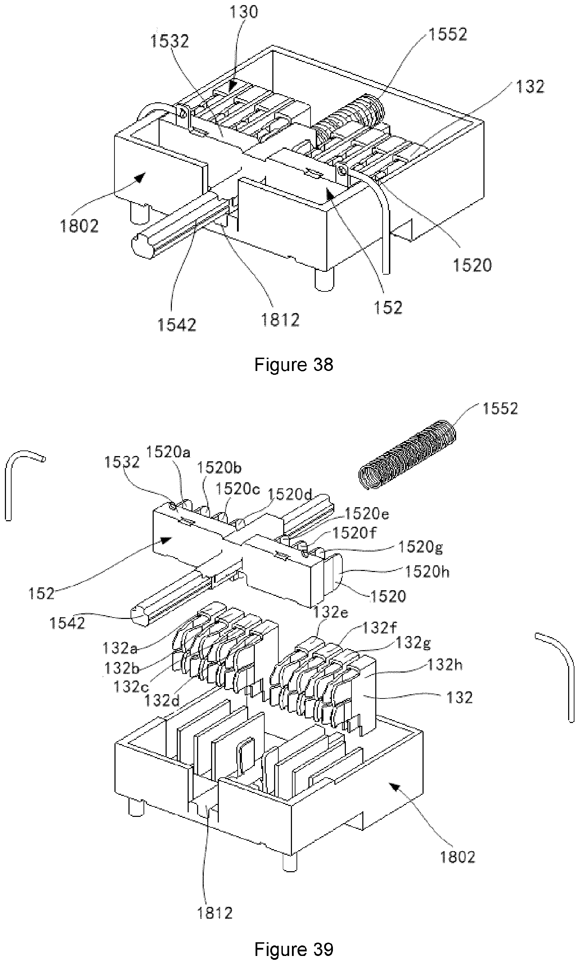

Please refer to FIG. 39 and FIG. 42. The eight terminals of the second input end 132 are respectively marked as 132a, 132b, 132c, 132d, 132e, 132f, 132g, 132h. The terminal 132a, the terminal 132b, the terminal 132c, the terminal 132d, the terminal 132e, the terminal 132f, the terminal 132g, the terminal 132h are correspondingly electrically connected with the terminal 1+, the terminal 3+, the terminal 1-, the terminal 4+, terminal 3-, the terminal 2+, the terminal 4- and the terminal 2- one by one. A corresponding relationship in this one-to-one correspondence may be any implementable solution that can achieve technical effects of the disclosure and realize the disclosure. In an embodiment of the disclosure, the terminal 132a is electrically connected with the terminal 1+, the terminal 132b is electrically connected with the terminal 3+, the terminal 132c is electrically connected with the terminal 1-, the terminal 132d is electrically connected with the terminal 4+, the terminal 132e is electrically connected with the terminal 3-, the terminal 132f is electrically connected with the terminal 2+, the terminal 132g is electrically connected with the terminal 4-, and the terminal 132h is electrically connected with the terminal 2-.

Please refer to FIG. 37, FIG. 40, and FIG. 42. The eight first wiring terminals 1510 are respectively marked as the terminals 1510a, 1510b, 1510c, 1510d, 1510e, 1510f, 1510g, 1510h. Wherein, the terminal 1510a is electrically connected with the terminal 131a, the terminal 1510b is electrically connected with the terminal 131b, the terminal 1510c is electrically connected with the terminal 131c, the terminal 1510d is electrically connected with the terminal 131d, the terminal 1510e is electrically connected with the terminal 131e, the terminal 1510f is electrically connected with the terminal 131f, the terminal 1510g is electrically connected with the terminal 131g, and the terminal 1510h is electrically connected with the terminal 131h. The eight first wiring terminals 1510 may be electrically connected as needed. The electrical connection mode of the eight first wiring terminals 1510 may be any kind of embodiment that can realize the disclosure and achieve the effect of the disclosure. In an embodiment of the disclosure, the terminals 1510a, 1510b, 1510c, and 1510d are electrically connected with each other and are electrically connected with the positive terminal of the first output end 1404. The terminals 1510e, 1510f, 1510g, and 1510h are electrically connected with each other and are electrically connected with the negative terminal of first output end 1404. In order to facilitate processing, the terminals 1510a, 1510b, 1510c, and 1510d in the first wiring terminal 1510 may be integrally formed structure and made of the conductor. The terminals 1510e, 1510f, 1510g, and 1510h in the first wiring terminal 1510 may be integrally formed structure made of the conductor.

Please refer to FIG. 39, FIG. 41, and FIG. 42. The eight second wiring terminals 1520 are respectively marked as the terminals 1520a, 1520b, 1520c, 1520d, 1520e, 1520f, 1520g, 1520h. Wherein, the terminal 1520a is electrically connected with the terminal 132a, the terminal 1520b is electrically connected with the terminal 132b, the terminal 1520c is electrically connected with the terminal 132c, the terminal 1520d is electrically connected with the terminal 132d, the terminal 1520e is electrically connected with the terminal 132e, the terminal 1520f is electrically connected with the terminal 132f, the terminal 1520g is electrically connected with the terminal 132g, and the terminal 1520h is electrically connected with the terminal 132h. The eight second wiring terminals 1520 may be electrically connected as needed. The electrical connection mode of the eight second wiring terminals 1520 may be any kind of embodiment that can realize the disclosure and achieve the effect of the disclosure. The terminal 1520a is electrically connected with terminal 1520b and is electrically connected with a positive terminal of the second output end 1405. The terminals 1520c, 1520d, 1520e and 1520f are electrically connected with each other. The terminal 1520g is electrically connected with terminal 1520h and is electrically connected with a negative terminal of the second output end 1405.

It should be noted that, the markings of the terminals in the above embodiment are only for the convenience of description, and is not used for limitation.

Please refer to FIG. 33. The housing 110 includes the upper housing 114 and the lower housing 115. The lower housing 115 is mounted at a bottom of the upper housing 114. The first battery pack cavity 111, the second battery pack cavity 112 and the third battery pack cavity 112 are arranged inside the upper housing 114. The conducting wire 170 may be integrated on the first circuit board (Printed Circuit Board) 160, and the first circuit board 160 is fixed inside the lower housing 115 and is located outside the upper housing 114.

Please refer to FIG. 34, FIG. 36 and FIG. 38. In an embodiment of the disclosure, the system further includes the first mounting base 1801 and the second mounting base 1802. The first mounting base 1801 is used to mount the first switching structure 151 and is fixed in the lower housing 116 or on the first circuit board 160. The second mounting base 1802 is used to mount the second switching structure 152 and is fixed in the lower housing 116 or on the first circuit board 160.

Please refer to FIG. 36 through FIG. 38. In an embodiment of the disclosure, the first switching structure 151 further includes a first reset component 1551. The first reset component 1551 is arranged on the first sliding bar 1541. The second switching structure 152 further includes a second reset component 1552. The second reset component 1552 is arranged on the second sliding bar 1542. The first reset component 1551 and/or the second reset component 1552 may be the spring. The spring is sleeved on an outer periphery of the corresponding sliding bar and is located on a side of the corresponding supporting body away from the output end.

**An** initial state of the first switching structure 151 is the first state. When in use, the first sliding bar 1541 is pushed, and the first sliding bar 1541 drives the first supporting body 1531 and the first wiring terminal 1510 to move, until the first switching structure 151 is in the second state, and the first wiring terminal 1510 contacts the first input end 131, so that the first output end 1404 outputs the first voltage. When a pulling force on the first sliding bar 1541 disappears, the spring relies on the reset elastic force to reset the first switching structure 151 to the first state.

An initial state of the second switching structure 152 is the first state. When in use, the second sliding bar 1542 is pushed, and the second sliding bar 1542 drives the second supporting body 1532 and the second wiring terminal 1520 to move, until the second switching structure 151 is in the second state, and the second wiring terminal 1520 contacts the second input end 132, so that the second output end 1405 outputs the second voltage. When a pulling force on the second sliding bar 1542 disappears, the spring relies on the reset elastic force to reset the second switching structure 152 to the first state.

Please refer to FIG. 4, FIG. 31 through FIG. 34. The disclosure further provides the power supply system. The power supply system includes the system 100 in any one of the above embodiments and the battery pack 200 mounted in the system. For example, the power supply system includes the housing 110, the first battery pack cavity 111, the second battery pack cavity 112, the third battery pack cavity 113, the battery pack 200, the input end 130, the first output end 1404, the second output end 1405, the first switching structure 151 and the second switching structure 152. Wherein, the first battery pack cavity 111 is arranged in the housing 110, and the first terminal block 1210 is arranged on the first battery pack cavity 111. The second battery pack cavity 112 is arranged in the housing 110, and the second terminal block 1220 is arranged on the second battery pack cavity 112. The third battery pack cavity 113 is arranged in the housing 110, and the third terminal block 1230 is arranged on the third battery pack cavity 113. The battery pack 200 is correspondingly mounted in the battery pack cavity, and is electrically connected with the corresponding terminal block. The input end 130 is electrically connected with the first terminal block 1210, the second terminal block 1220 and the third terminal block 1230 respectively. The first output end 1404 is used to output power to the outside. The second output end 1405 is used to output power to the outside. The first switching structure 151 is arranged in the housing 110, switchable between the first state and the second state, and is electrically connected with the first output end 1404. The second switching structure 152 is arranged in the housing 110, may be switched between the first state and the second state, and is electrically connected with the second output end 1405. In an initial state, the first switching structure 151 and the second switching structure 152 are both in the first state. When the first switching structure 151 is in the second state, the second switching structure 152 is in the first state, and the first output end 1404 outputs the first voltage. When the second switching structure 152 is in the second state, the first switching structure 151 is in the first state, and the second output end 1405 outputs the second voltage. The first voltage is different from the second voltage.

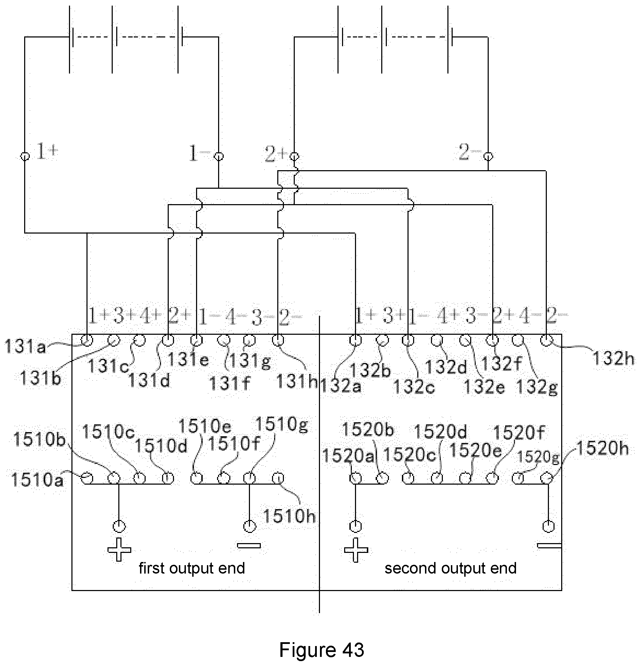

Please refer to FIG. 4, FIG. 43 through FIG. 45. In an embodiment of the disclosure, the battery pack 200 includes two single-voltage battery packs 210. The two single-voltage battery packs 210 are correspondingly mounted in the first battery pack cavity 111 and the second battery pack cavity 112. Wherein, FIG. 43 is the circuit principle view after the two single-voltage battery packs are inserted.

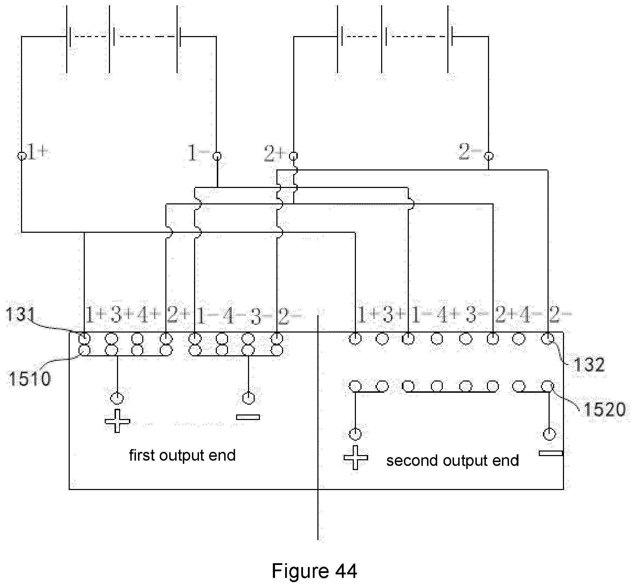

Please refer to FIG. 34 and FIG. 44. When the first switching structure 151 is in the second position, the second switching structure 152 is in the first state, and the first wiring terminal 1510 is electrically connected with the first input end 131. At this time, the terminal 1510a is electrically connected with the terminal 1+ through the terminal 131a, and the terminal 1510d is electrically connected with the terminal 2+ through the terminal 131d. The terminal 1510e is electrically connected with the terminal 1- through the terminal 131e, and the terminal 1510h is electrically connected with the terminal 2-through the terminal 131h. At the same time, the terminal 1510a and the terminal 1510d are electrically connected with the positive terminal of the first output end 1404 respectively, and the terminal 1510e and the terminal 1510h are electrically connected with the negative terminal of the first output end 1404 respectively. Therefore, the two single-voltage battery packs are connected in parallel, and the first output end 1404 outputs the first voltage, which means the parallel voltage.

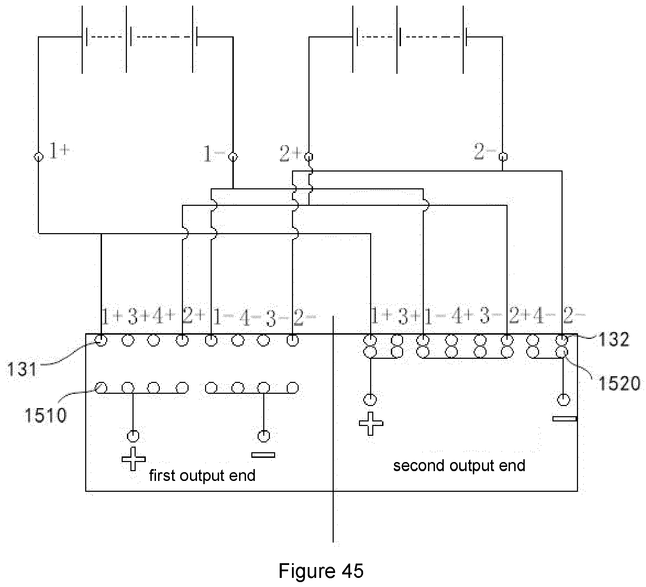

Please refer to FIG. 34 and FIG. 45. When the second switching structure 152 is in the second position, the first switching structure 151 is in the first state, and the second wiring terminal 1520 is electrically connected with the second input end 132. At this time, the terminal 1520a is electrically connected with the terminal 1+ through the terminal 132a, and the terminal 1520c is electrically connected with the terminal 1-through the terminal 132c. The terminal 1520f is electrically connected with the terminal 2+ through the terminal 132f, and the terminal 1520h is electrically connected with the terminal 2- through the terminal 132h. At the same time, the terminal 1520c is electrically connected with 1520f. The terminal 1520a is electrically connected with the positive terminal of the second output end 1405, and the terminal 1520h is electrically connected with the negative terminal of the second output end 1405. Therefore, the two single-voltage battery packs are connected in series, and the second output end 1405 outputs the second voltage, which means the series voltage.

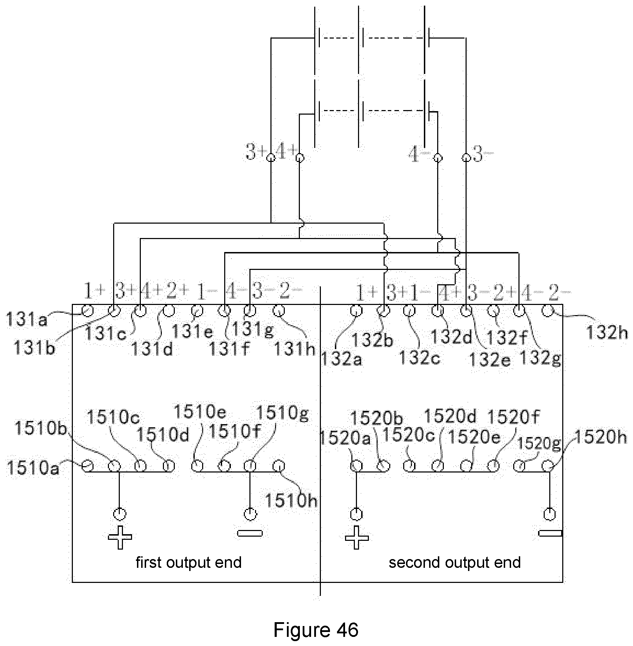

Please refer to FIG. 4, FIG. 46 through FIG. 48. In an embodiment of the disclosure, the battery pack 200 includes one double-voltage battery pack 220. The double-voltage battery pack 220 is correspondingly mounted in the third battery pack cavity 113, and there are two battery units in the double-voltage battery pack 220. Wherein, FIG. 46 is the circuit principle view after the double-voltage battery pack is inserted.

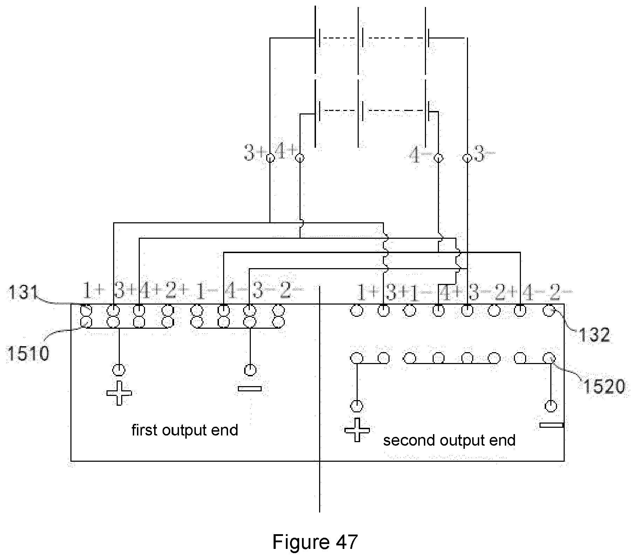

Please refer to FIG. 34 and FIG. 47. When the first switching structure 151 is in the second position, the second switching structure 152 is in the first state, and the first wiring terminal 1510 is electrically connected with the first input end 131. At this time, the terminal 1510b is electrically connected with the terminal 3+ through the terminal 131b, and the terminal 1510c is electrically connected with the terminal 4+ through the terminal 131c. The terminal 1510g is electrically connected with the terminal 3- through the terminal 131g, and the terminal 1510f is electrically connected with the terminal 4-through the terminal 131f. At the same time, the terminal 1510b and the terminal 1510c are electrically connected with the positive terminal of the first output end 1404 respectively, and the terminal 1510g and the terminal 1510f are electrically connected with the negative terminal of the first output end 1404 respectively. Therefore, the two battery units in the double-voltage battery packs are connected in parallel, and the first output end 1404 outputs the first voltage, which means the parallel voltage.

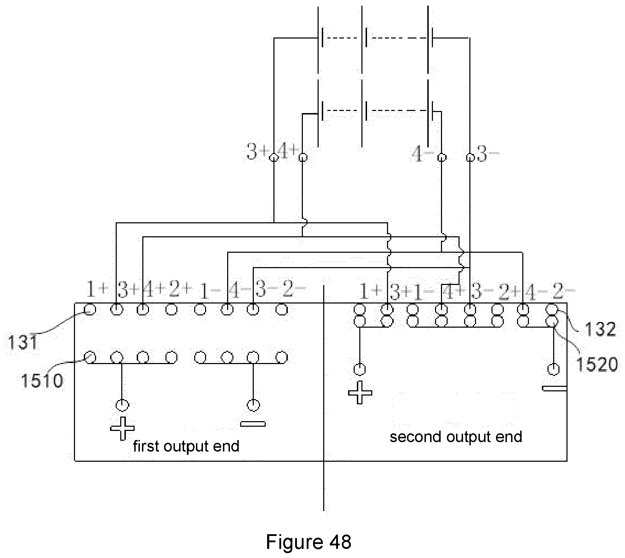

Please refer to FIG. 34 and FIG. 48. When the second switching structure 152 is in the second state, the first switching structure 151 is in the first state, and the second wiring terminal 1520 is electrically connected with the second input end 132. At this time, the terminal 1520b is electrically connected with the terminal 3+ through the terminal 132b, and the terminal 1520e is electrically connected with the terminal 3- through the terminal 132e. The terminal 1520d is electrically connected with the terminal 4+ through the terminal 132d, and the terminal 1520g is electrically connected with the terminal 4-through the terminal 132g. At the same time, the terminal 1520b is electrically connected with the positive terminal of the second output end 1405, and the terminal 1520e and the terminal 1520d are electrically connected with each other. The terminal 1520g is electrically connected with the negative terminal of the second output end 1405. Therefore, the two battery units in the double-voltage battery pack are connected in series, and the second output end 1405 outputs the second voltage, which means the series voltage.

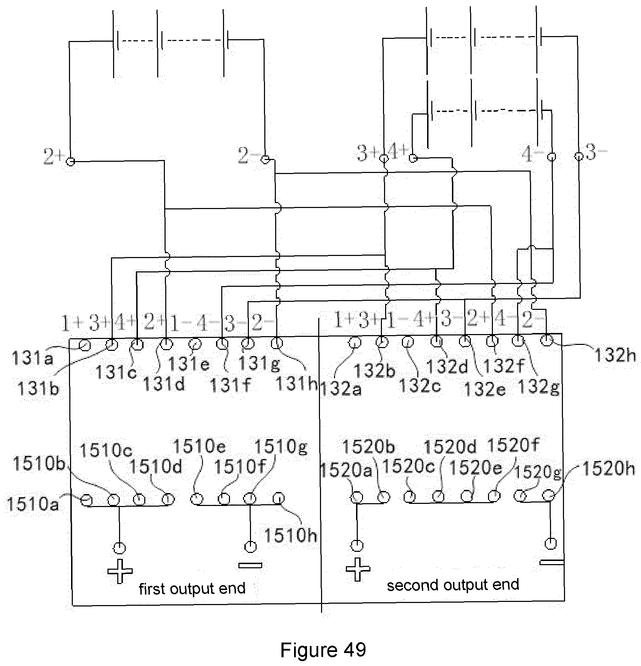

Please refer to FIG. 4, FIG. 49 through FIG. 51. In an embodiment of the disclosure, the battery pack 200 includes one single-voltage battery packs 210 and one double-voltage battery pack 220. Wherein, the single-voltage battery pack 210 is mounted in the first battery pack cavity 111 and the second battery pack cavity 112. The double-voltage battery pack 220 is mounted in the third battery pack cavity 113. FIG. 49 is the circuit principle view after one single-voltage battery pack and one double-voltage battery pack are inserted.

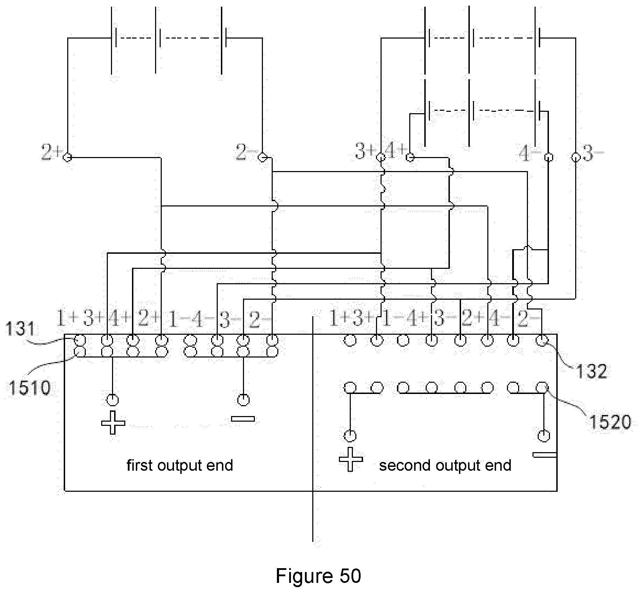

Please refer to FIG. 34 and FIG. 50. When the first switching structure 151 is in the second state, the second switching structure 152 is in the first state, and the first wiring terminal 1510 is electrically connected with the first input end 131. At this time, the terminal 1510b is electrically connected with the terminal 3+ through the terminal 131b, and the terminal 1510c is electrically connected with the terminal 4+ through the terminal 131c. The terminal 1510d is electrically connected with the terminal 2+ through the terminal 131d. The terminal 1510g is electrically connected with the terminal 3- through the terminal 131g, and the terminal 1510f is electrically connected with the terminal 4-through the terminal 131f. The terminal 1510h is electrically connected with the terminal 2- through the terminal 131h. At the same time, the terminal 1510b, the terminal 1510c and the terminal 1510d are electrically connected with the positive terminal of the first output end 1404 respectively, and the terminal 1510f, 1510g and the terminal 1510h are electrically connected with the negative terminal of the first output end 1404 respectively. Therefore, the single-voltage battery pack and the two battery units in the double-voltage battery packs are connected in parallel, and the first output end 1404 outputs the first voltage, which means the parallel voltage.

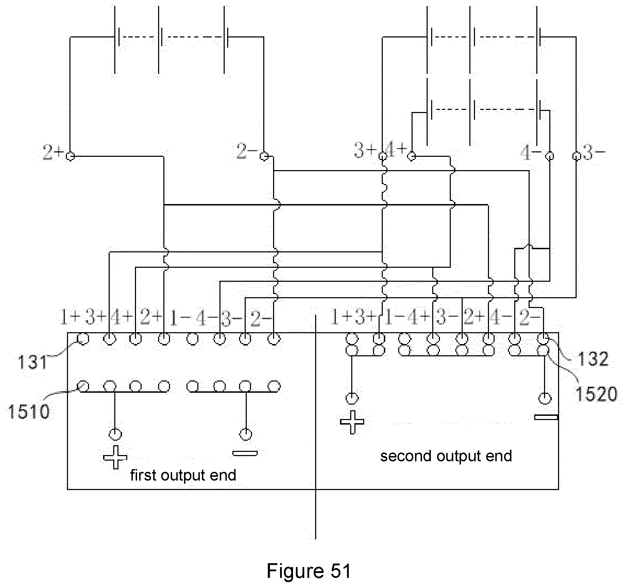

Please refer to FIG. 34 and FIG. 51. When the second switching structure 152 is in the second state, the first switching structure 151 is in the first state, and the second wiring terminal 1520 is electrically connected with the second input end 132. At this time, the terminal 1520b is electrically connected with the terminal 3+ through the terminal 132b, and the terminal 1520e is electrically connected with the terminal 3- through the terminal 132e. The terminal 1520d is electrically connected with the terminal 4+ through the terminal 132d, and the terminal 1520g is electrically connected with the terminal 4-through the terminal 132g. The terminal 1520f is electrically connected with the terminal 2+ through the terminal 132f, and the terminal 1520h is electrically connected with the terminal 2- through the terminal 132h. At the same time, the terminal 1520b is electrically connected with the positive terminal of the second output end 1405, and the terminal 1520e, terminal 1520d and the terminal 1520f are electrically connected with each other. The terminal 1520g and the terminal 1520h are electrically connected with the negative terminal of the second output end 1405 respectively. Therefore, one of the two battery units (the battery unit electrically connected with the terminal 4+ and terminal 4-) in the double-voltage battery pack is connected in parallel with the single-voltage battery pack and then connected in series with the other battery unit, and the second output end 1405 outputs the second voltage, which means the series voltage.

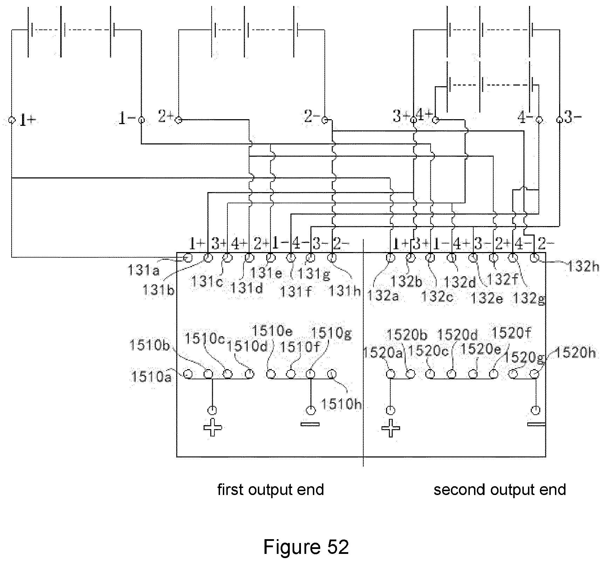

Please refer to FIG. 4, FIG. 52 through FIG. 54. In an embodiment of the disclosure, the battery pack 200 includes two single-voltage battery packs 210 and one double-voltage battery pack 220. The two single-voltage battery packs are mounted in the first battery pack cavity 111 and the second battery pack cavity 112. The double-voltage battery pack is mounted in the third battery pack cavity 113. Wherein, FIG. 52 is the circuit principle view after the two single-voltage battery packs and one double-voltage battery pack are inserted. The two single-voltage battery packs 210 are the first single-voltage battery pack and the second single-voltage battery pack respectively. The positive terminal and the negative terminal of the single-voltage battery pack terminal of the first single-voltage battery pack are electrically connected with the terminal 1+ and the terminal 1- one by one. The positive terminal and the negative terminal of the single-voltage battery pack terminal of the second single-voltage battery pack are electrically connected with the terminal 2+ and the terminal 2- one by one. The two battery units in the double-voltage battery pack 220 are the first battery unit and the second battery unit respectively. The positive terminals and negative terminals of the double-voltage battery pack terminal are electrically connected with the terminal 3+, the terminal 4+, the terminal 3- and the terminal 4- one by one. For example, the positive terminal and negative terminal of the first battery unit are correspondingly connected with the terminal 3+ and the terminal 3-. The positive terminal and the negative terminal of the second battery unit are correspondingly connected with the terminal 4+ and the terminal 4-.

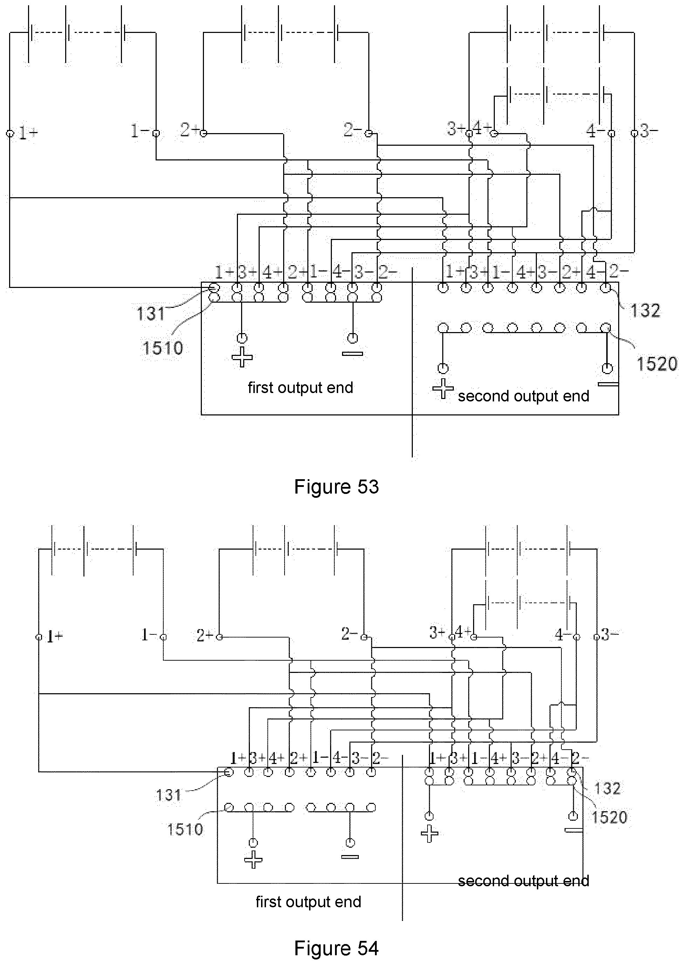

Please refer to FIG. 34 and FIG. 53. When the first switching structure 151 is in the second state, the second switching structure 152 is in the first state, and the first wiring terminal 1510 is electrically connected with the first input end 131. At this time, the terminal 1510a is electrically connected with the terminal 1+ through the terminal 131a, and the terminal 1510b is electrically connected with the terminal 3+ through the terminal 131b. The terminal 1510c is electrically connected with the terminal 4+ through the terminal 131c, and the terminal 1510d is electrically connected with the terminal 2+ through the terminal 131d. The terminal 1510e is electrically connected with the terminal 1- through the terminal 131e, and the terminal 1510f is electrically connected with the terminal 4- through the terminal 131f. The terminal 1510g is electrically connected with the terminal 3- through the terminal 131g, and the terminal 1510h is electrically connected with the terminal 2- through the terminal 131h. At the same time, the terminal 1510a, the terminal 1510b, the terminal 1510c and the terminal 1510d are electrically connected with the positive terminal of the first output end 1404 respectively, and the terminal 1510e, the terminal 1510f, the terminal 1510g and the terminal 1510h are electrically connected with the negative terminal of the first output end 1404 respectively. Therefore, the first single-voltage battery pack, the second single-voltage battery pack, the first battery unit and the second battery unit are connected in parallel, and the first output end 1404 outputs the first voltage, which means the parallel voltage.

Please refer to FIG. 34 and FIG. 54. When the second switching structure 152 is in the second state, the first switching structure 151 is in the first state, and the second wiring terminal 1520 is electrically connected with the second input end 132. At this time, the terminal 1520a is electrically connected with the terminal 1+ through the terminal 132a, and the terminal 1520c is electrically connected with the terminal 1- through the terminal 132c. The terminal 1520f is electrically connected with the terminal 2+ through the terminal 132f, and the terminal 1520h is electrically connected with the terminal 2-through the terminal 132h. The terminal 1520b is electrically connected with the terminal 3+ through the terminal 132b, and the terminal 1520e is electrically connected with the terminal 3- through the terminal 132e. The terminal 1520d is electrically connected with the terminal 4+ through the terminal 132d, and the terminal 1520g is electrically connected with the terminal 4- through the terminal 132g. At the same time, the terminal 1520a and the terminal 1520b are electrically connected with the positive terminal of the second output end 1405 respectively, and the terminal 1520c, the terminal 1520d, the terminal 1520e and the terminal 1520f are electrically connected with each other. The terminal 1520g and the terminal 1520h are electrically connected with the negative terminal of the second output end 1405 respectively. Therefore, the first single-voltage battery pack is connected in parallel with the first battery unit and is named as the first parallel circuit. The second single-voltage battery pack is connected in parallel with the second battery unit and is named as the second parallel circuit. The first parallel circuit is connected in series with the second parallel circuit, and the second output end 1405 outputs the second voltage, which means the series voltage.

Please refer to FIG. 4, FIG. 31 through FIG. 34. The disclosure further provides the power supply system, which is obtained by mounting the adapter on the basis of the power supply system in any of the above embodiments. For example, the power supply system includes the housing 110, the first battery pack cavity 111, the second battery pack cavity 112, the third battery pack cavity 113, the battery pack 200, the input end 130, the first output end 1404, the second output end 1405, the first switching structure 151, the second switching structure 152 and the adapter 400. Wherein, the first battery pack cavity 111 is arranged in the housing 110, and the first terminal block 1210 is arranged on the first battery pack cavity 111. The second battery pack cavity 112 is arranged in the housing 110, and the second terminal block 1220 is arranged on the second battery pack cavity 112. The third battery pack cavity 113 is arranged in the housing 110, and the third terminal block 1230 is arranged on the third battery pack cavity 113. The battery pack 200 is correspondingly mounted in the battery pack cavity, and is electrically connected with the corresponding terminal block. The input end 130 is electrically connected with the first terminal block 1210, the second terminal block 1220 and the third terminal block 1230 respectively. The first output end 1404 is used to output energy to the outside, and the second output end 1405 is used to output energy to the outside. The first switching structure 151 is arranged in the housing 110, switchable between the first state and the second state, and electrically connected with the first output end 1404. The second switching structure 152 is arranged in the housing 110, switchable between the first state and the second state, and electrically connected with the second output end 1405. In an initial state, the first switching structure 151 and the second switching structure 152 are both in the first state, and the power supply system does not discharge externally at this time. When the first switching structure 151 is in the second state, the second switching structure 152 is in the first state, and the first output end 1404 outputs the first voltage. When the second switching structure 152 is in the second state, the first switching structure 151 is in the first state, and the second output end 1405 outputs the second voltage. The first voltage is different from the second voltage. The adapter 400 is configured to be electrically connected with the first output end 1404 or the second output end 1405, the adapter 400 is provided with the adaptation interface, and the adaptation interface is configured to be electrically connected with the power tool.

In an embodiment of the disclosure, the power supply system further includes the power cable 300. The power cable 300 is configured to electrically connect the adapter 400 with the output end. The output end is the first output end 1404 or the second output end 1405. The power cable 300 may be the wire independent of the adapter 400 or the wire arranged on the adapter 400.

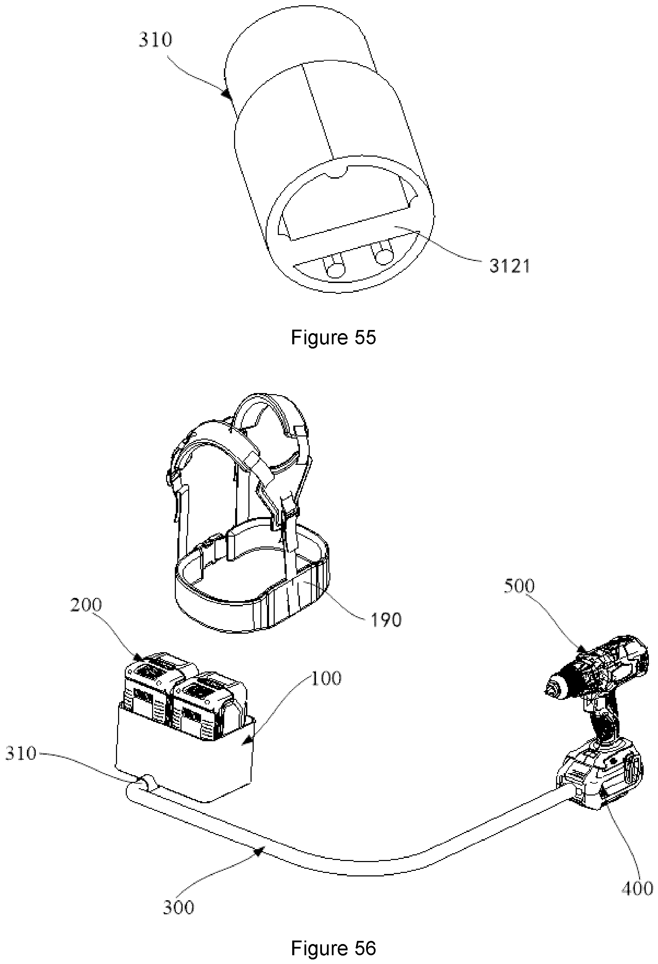

Please refer to FIG. 55. In an embodiment of the disclosure, the power supply system further includes the plugging wire base 310. The plugging wire base 310 is configured to be electrically connected with the first output end 1404 or the second output end 1405. The pushing block 3121 and a third wiring terminal are arranged in the plugging wire base 310. The third wiring terminal is matched with the wiring terminal of the first output end 1404 or the wiring terminal of the second output end 1405. The third wiring terminal is configured to electrically connect the output end with the conducting wire in the power cable. The output end 140 is the first output end 1404 or the second output end 1405. In an embodiment of the disclosure, the plugging wire base 310 is arranged at the end part of the power cable 300. The plugging wire base 310 and the end part of the power cable 300 may be in the integrally formed structure.

The initial state of the first switching structure 151 is the first state. When the first voltage is required, the plugging wire base 310 is inserted into the first output end 1404, and the plugging wire base 310 is pushed inward so that the pushing block 3121 contacts with the first sliding bar 1541. A pushing force is continuously applied, the pushing block 3121 pushes the first sliding bar 1541 to move, and the first sliding bar 1541 drives the first supporting body 1531 and the first wiring terminal 1510 to move until the first switching structure 151 is in the second state. At this time, the third wiring terminal in the plugging wire base 310 is electrically connected with the wiring terminal in the first output end 1404, so that the first voltage is obtained.

The initial state of the second switching state 140 is the first state. When the second voltage is required, the plugging wire base 310 is inserted into the second output end 1405, and the plugging wire base 310 is pushed inward so that the pushing block 3121 contacts with the second sliding bar 1542. The pushing force is continuously applied, the pushing block 3121 pushes the second sliding bar 1542 to move, and the second sliding bar 1542 drives the second supporting body 1532 and the second wiring terminal 1520 to move until the second switching structure 152 is in the second state. At this time, the third wiring terminal in the plugging wire base 310 is electrically connected with the wiring terminal in the second output end 1405, so that the second voltage is obtained.

Please refer to FIG. 4, FIG. 29 through FIG. 34 and FIG. 55. The disclosure further provides the power tool system, which is obtained by arranging the first power tool 500 and the second power tool 600 to the power supply system in any of the above embodiments. For example, the power tool system includes the housing 110, the first battery pack cavity 111, the second battery pack cavity 112, the third battery pack cavity 113, the battery pack 200, the input end 130, the first output end 1404, the second output end 1405, the first switching structure 151, the second switching structure 152, the adapter 400, the first power tool 500 and the second power tool 600. Wherein, the first battery pack cavity 111 is arranged in the housing 110, and the first terminal block 1210 is arranged on the first battery pack cavity 111. The second battery pack cavity 112 is arranged in the housing 110, and the second terminal block 1220 is arranged on the second battery pack cavity 112. The third battery pack cavity 113 is arranged in the housing 110, and the third terminal block 1230 is arranged on the third battery pack cavity 113. The battery pack 200 is correspondingly mounted in the battery pack cavity, and is electrically connected with the corresponding terminal block. The input end 130 is electrically connected with the first terminal block 1210, the second terminal block 1220 and the third terminal block 1230 respectively. The first output end 1404 is used to output energy to the outside, and the second output end 1405 is used to output energy to the outside. The first switching structure 151 is arranged in the housing 110, switchable between the first state and the second state, and electrically connected with the first output end 1404. The second switching structure 152 is arranged in the housing 110, switchable between the first state and the second state, and electrically connected with the second output end 1405. In an initial state, the first switching structure 151 and the second switching structure 152 are both in the first state, and the power supply system does not discharge externally at this time. When the first switching structure 151 is in the second state, the second switching structure 152 is in the first state, and the first output end 1404 outputs the first voltage. When the second switching structure 152 is in the second state, the first switching structure 151 is in the first state, and the second output end 1405 outputs the second voltage. The first voltage is different from the second voltage. The adapter is provided with the adaptation interface and configured to be electrically connected with the first output end 1404 or the second output end 1405. The first power tool 500 is provided with the first tool interface, and the adapter 400 is electrically connected with the first power tool 500 when the first tool interface is coupled with the adaptation interface. The second power tool 600 is provided with the second tool interface, and when the second tool interface is coupled with the adaptation interface, the adapter 400 is electrically connected with the second power tool 600. The working voltage of the first power tool 500 is different from the working voltage of the second power tool 600.

In an embodiment of the disclosure, the working voltage of the first electric tool 500 is the first voltage, and the working voltage of the second electric tool 600 is the second voltage.

In an embodiment of the disclosure, the working voltage of the first power tool 500 is the second voltage, and the working voltage of the second power tool 600 is the first voltage.

In the system of the disclosure, the first switching structure 151 and the second switching structure 152 are arranged in the housing 110. When the first switching structure 151 or the second switching structure 152 is in the second state respectively, the first voltage or the second voltage is output respectively, so that a problem that the conventional power supply can only output one voltage is solved. At the same time, the system is simple in structure, easy to implement, and has high safety and a wide range of applications. Therefore, the disclosure effectively overcomes some practical problems in the prior art, thereby having high utilization value and use significance.

Please refer to FIG. 6, FIG. 7, FIG. 56 through FIG. 60. The disclosure provides the system. The system includes the housing 110, the first battery pack cavity 111, the second battery pack cavity 112, the input end 130, the switching device 150 and the input end 140. The first battery pack cavity 111 is arranged in the housing 110, a fourth terminal block 1250 is arranged on the first battery pack cavity 111, and the first battery pack cavity 111 is suitable for the single-voltage battery pack 210 or the double-voltage battery pack 220. The single-voltage battery pack 210 provides one voltage externally, and is provided with the single-voltage battery pack terminal 211, and the single-voltage battery pack terminal 211 includes one positive terminal and one negative terminal. The double-voltage battery pack 220 provides two voltages externally, and is provided with the double-voltage battery pack terminal 221, and the double-voltage battery pack terminal 221 includes two positive terminals and two negative terminals. The fourth terminal block 1250 is matched with the single-voltage battery pack terminal 211 or the double-voltage battery pack terminal 221. The fourth terminal block 1250 is configured to be electrically connected with the single-voltage battery pack terminal 211 or the double-voltage battery pack terminal 221. The second battery pack cavity 112 is arranged in the housing 110, and a fifth terminal block 1260 is arranged on the second battery pack cavity 112. The second battery pack cavity 112 is suitable for the single-voltage battery pack or the double-voltage battery pack. The fifth terminal block 1260 is configured to be electrically connected with the single-voltage battery pack terminal 211 or the double-voltage battery pack terminal 221. The input end 130 is electrically connected with the fourth terminal block 1250 and the fifth terminal block 1260 respectively. The switching device 150 is arranged in the housing 110, and the first switching structure 151 and the second switching structure 152 are arranged on the switching device 150. The output end 140 is electrically connected with the first switching structure 151 and the second switching structure 152 respectively, so as to output energy to the outside. The switching device 150 may be located in the first position or the second position. When the switching device 150 is in the first position, the output end 140 may be configured to output the first voltage, which means that when the battery pack is mounted in the housing, the output end 140 outputs the first voltage. When the switching device 150 is in the second position, the output end 140 may be configured to output the second voltage, which means that when the battery pack is mounted in the housing 110, the output end outputs the second voltage. The first voltage is different from the second voltage. The system mentioned above further includes the strap 190, and the housing 110 is mounted on the strap 190, and an operator may carry the system through the strap 190. Wherein, in order to facilitate storage or use, in an embodiment of the disclosure, the housing 110 is detachably mounted on the strap 190.

Please refer to FIG. 9. In an embodiment of the disclosure, the fourth terminal block 1250 may be arbitrarily matched with the single-voltage battery pack terminal or the double-voltage battery pack terminal. The fifth terminal block 1260 may be arbitrarily matched with the single-voltage battery pack terminal or the double-voltage battery pack terminal.

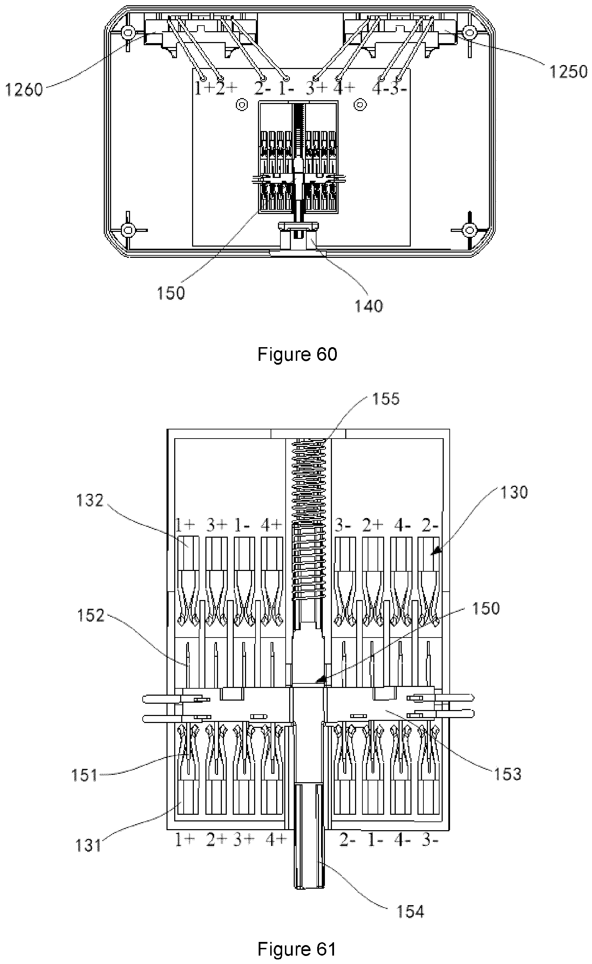

Please refer to FIG. 60 and FIG. 10. In an embodiment of the disclosure, the input end 130 includes the first input end 131 and the second input end 132. The first input end 131 is electrically connected with the fourth terminal block 1250 and the fifth terminal block 1260 respectively. The second input end 132 is electrically connected with the fourth terminal block 1250 and the fifth terminal block 1260 respectively.

Please refer to FIG. 9. The structure of the fourth terminal block 1250 is consistent with the structure of the fifth terminal block 1260. For example, four third terminals 1231 are arranged on a first side of the fourth terminal block 1250, and four fourth terminals 1232 are arranged on a second side of the fourth terminal block 1250. Wherein, the third terminal 1231 is matched with the single-voltage battery pack terminal, and the fourth terminal 1232 is electrically connected with the input end 130. The third terminal 1231 is electrically connected with the corresponding fourth terminal 1232.

The single-voltage battery pack is correspondingly provided with through holes. When the single-voltage battery pack is mounted on the fourth terminal block 1250, two of the third terminals 1231 are inserted into the corresponding through holes and are in an idle state, and the remaining two third terminals 1231 are electrically connected with the single-voltage battery pack terminals.

The first switching structure 151 includes a plurality of wiring terminals, and a number of the wiring terminals is consistent with the number of the wiring terminals of the first input end 131. The second switching structure 152 includes a plurality of wiring terminals, and a number of the wiring terminals is consistent with the number of the wiring terminals of the second input end 132.

The number of wiring terminals of the first end terminal 131 is a sum of a number of the fourth terminals 1232. The number of wiring terminals of the second end terminal 132 is the sum of the number of the fourth terminals 1232. For example, the first terminal block 1250 is provided with four fourth terminals 1232, and the fifth terminal block 1250 is provided with four fourth terminals 1232. The number of wiring terminals of the first input end 131 is eight, and the number of wiring terminals of the second input end 131 is eight. Therefore, the first switching structure 151 includes eight wiring terminals, and the second switching structure 151 includes eight switching terminals.

In an embodiment of the disclosure, the four fourth terminals 1232 of the fourth terminal block 1250 are respectively marked as: 1+, 2+, 2-, 1-, and the four fourth terminals 1232 of the fifth terminal block 1260 are marked as: 3+, 4+, 4-, 3-.

The eight wiring terminals of the first input end 131 are respectively marked as: 131a, 131b, 131c, 131d, 131e, 131f, 131g, 131h. Wherein, the terminal 131a, the terminal 131b, the terminal 131c, the terminal 131d are correspondingly electrically connected with the terminal 1+, the terminal 2+, the terminal 3+, and the terminal 4+ one by one. The specific corresponding relationship in this one-to-one correspondence is not limited. For example, in an embodiment of the disclosure, the terminal 131a is electrically connected with the terminal 1+, the terminal 131b is electrically connected with the terminal 2+, the terminal 131c is electrically connected with the terminal 3+, and the terminal 131d is electrically connected with the terminal 4+. The terminal 131e, the terminal 131f, the terminal 131g, the terminal 131h are correspondingly electrically connected with the terminal 1-, the terminal 2-, the terminal 3-, and the terminal 4- one by one. The specific corresponding relationship in this one-to-one correspondence is not limited. For example, in an embodiment of the disclosure, the terminal 131e is electrically connected with the terminal 2-, the terminal 131f is electrically connected with the terminal 1-, the terminal 131g is electrically connected with the terminal 4-, and the terminal 131h is electrically connected with the terminal 3-.

The eight wiring terminals of the second input end 132 are respectively marked as: 132a, 132b, 132c, 132d, 132e, 132f, 132g, 132h. The terminal 132a, the terminal 132b, the terminal 132c, the terminal 132d, the terminal 132e, the terminal 132f, the terminal 132g, the terminal 132h are correspondingly electrically connected with the terminal 1+, the terminal 3+, the terminal 1-, the terminal 4+, terminal 3-, the terminal 2+, the terminal 4- and the terminal 2- one by one. A corresponding relationship in this one-to-one correspondence may be any implementable solution that can achieve technical effects of the disclosure and realize the disclosure. In an embodiment of the disclosure, the terminal 132a is electrically connected with the terminal 1+, the terminal 132b is electrically connected with the terminal 3+, the terminal 132c is electrically connected with the terminal 1-, the terminal 132d is electrically connected with the terminal 4+, the terminal 132e is electrically connected with the terminal 3-, the terminal 132f is electrically connected with the terminal 2+, the terminal 132g is electrically connected with the terminal 4-, and the terminal 132h is electrically connected with the terminal 2-.

The eight first wiring terminals 1510 of the first switching structure 151 are respectively marked as the terminals 1510a, 1510b, 1510c, 1510d, 1510e, 1510f, 1510g, 1510h. Wherein, the terminal 1510a is electrically connected with the terminal 131a, the terminal 1510b is electrically connected with the terminal 131b, the terminal 1510c is electrically connected with the terminal 131c, the terminal 1510d is electrically connected with the terminal 131d, the terminal 1510e is electrically connected with the terminal 131e, the terminal 1510f is electrically connected with the terminal 131f, the terminal 1510g is electrically connected with the terminal 131g, and the terminal 1510h is electrically connected with the terminal 131h. The eight first wiring terminals of the first switching structure 151 may be electrically connected as needed. The electrical connection mode of the eight first wiring terminals may be any kind of embodiment that can realize the disclosure and achieve the effect of the disclosure. In an embodiment of the disclosure, the terminal 1510a, the terminal 1510b, the terminal 1510c and the terminal 1510d are electrically connected with each other, and are electrically connected with the positive terminal of the output end 140. The terminal 1510e, the terminal 1510f, the terminal 1510g and the terminal 1510h are electrically connected with each other, and are electrically connected with the negative terminal of the output end 140.

The eight second wiring terminals 1520 of the second switching structure 152 are respectively marked as the terminals 1520a, 1520b, 1520c, 1520d, 1520e, 1520f, 1520g, 1520h. Wherein, the terminal 1520a is configured to be electrically connected with the terminal 132a, the terminal 1520b is configured to be electrically connected with the terminal 132b, the terminal 1520c is configured to be electrically connected with the terminal 132c, the terminal 1520d is configured to be electrically connected with the terminal 132d, the terminal 1520e is configured to be electrically connected with the terminal 132e, the terminal 1520f is configured to be electrically connected with the terminal 132f, the terminal 1520g is configured to be electrically connected with the terminal 132g, and the terminal 1520h is configured to be electrically connected with the terminal 132h. The eight first wiring terminals of the second switching structure 152 may be electrically connected as needed. The electrical connection mode of the eight first wiring terminals may be any kind of embodiment that can realize the disclosure and achieve the effect of the disclosure. The terminal 1520a is electrically connected with the terminal 1520b, and is electrically connected with the positive terminal of the output end 140. The terminal 1520c, the terminal 1520d, the terminal 1520e and the terminal 1520f are electrically connected with each other, the terminal 1520g is electrically connected with the terminal 1520h, and is electrically connected with the negative terminal of the output end 140.

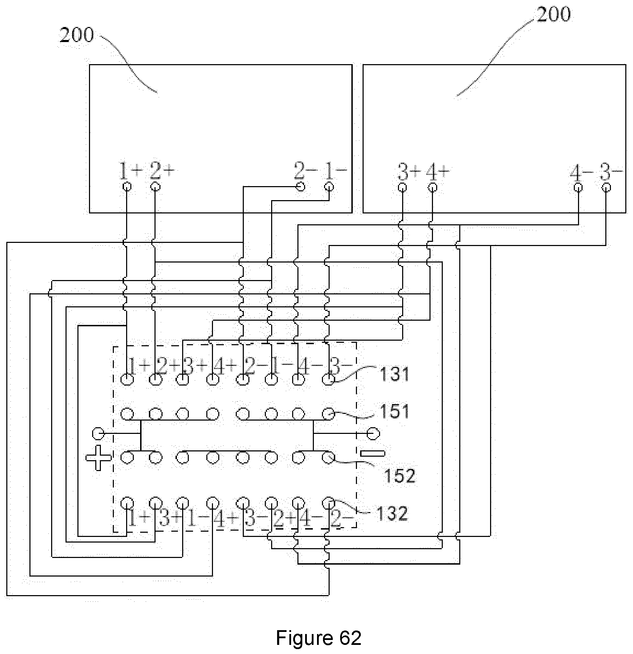

Please refer to FIG. 62. In an embodiment of the disclosure, when the switching device 150 is in the first position, the first switching structure 151 is electrically connected with the first input end 131, and the second switching structure 152 is disconnected from the second input end 132. When the switching device 150 is in the second position, the second switching structure 152 is electrically connected with the second input end 132, and the first switching structure 151 is disconnected from the first input end 131.

Please refer to FIG. 62. In an embodiment of the disclosure, the input end 130 is respectively connected with the fourth terminal block 1250 and the fifth terminal block 1260 through the conducting wire.

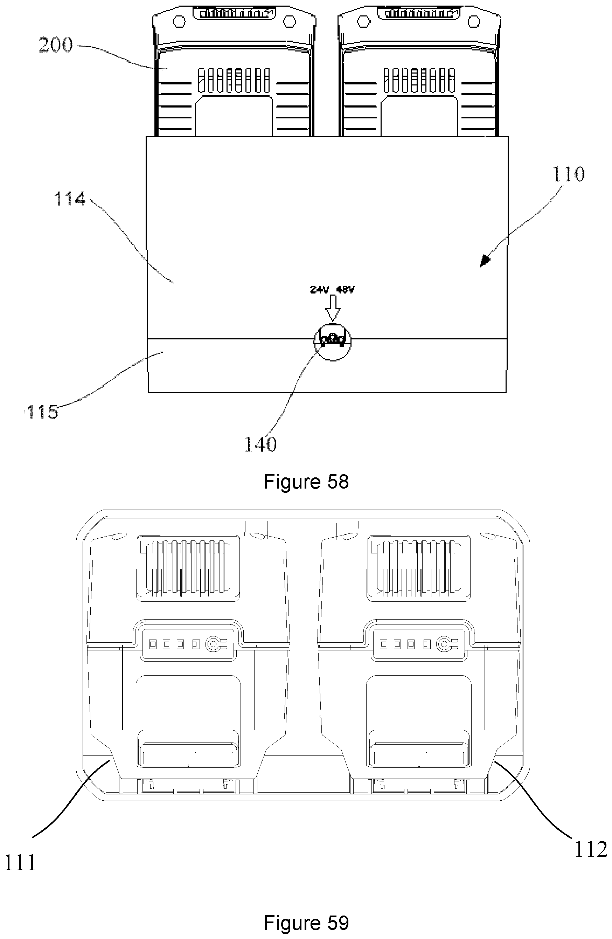

Please refer to FIG. 58. The housing 110 includes the upper housing 114 and the lower housing 115. The lower housing 115 is mounted at the bottom of the upper housing 114, and the first battery pack cavity 111 and the second battery pack cavity 112 are arranged inside the upper housing 114. The conducting wire may be integrated on the first circuit board (Printed Circuit Board) 160, and the first circuit board 160 is fixed inside the lower housing 115 and is located outside the upper housing 114. The input end 130 may be arranged on the first circuit board 160.

In an embodiment of the disclosure, the wiring terminal of the first switching structure 151 matches the wiring terminal of the first input terminal 131, and the wiring terminal of the second switching structure 152 matches the wiring terminal of the second input end 132.

The above wiring terminals may be terminals or contact points. Types of the wiring terminals of the first input end 131 and the second input end 132 are not limited, and they may be consistent or inconsistent. The types of the wiring terminals of the first switching structure 151 and the second switching structure 152 are also not limited, and the two may be consistent or inconsistent.

To simplify a production process, in an embodiment of the disclosure, the types of the wiring terminals of the first input end 131 and the second input end 132 are the same. For example, the wiring terminals of the first input end 131 and the second input end 132 are female terminals, and the first switching structure 151 and the second switching structure 152 are male terminals. Or the wiring terminals of the first input end 131 and the second input end 132 are male terminals, and the first switching structure 151 and the second switching structure 152 are female terminals. Or the wiring terminals of the first input end 131 and the second input end 132 are the first contact points, and the first switching structure 151 and the second switching structure 152 are the second contact points. The first contact point is matched with the second contact point, and contacts with each other when the switching device 150 moves into place to achieve an electrical connection.

Please refer to FIG. 10 and FIG. 12. In an embodiment of the disclosure, the system 100 further includes the mounting base 180, and the mounting base 180 is used to mount the switching device 150. The switching device 150 includes the supporting body 153 and the sliding bar 154. The supporting body 153 is fixedly connected with the sliding bar 154. The sliding groove 181 is arranged on the mounting base 180. The sliding bar 154 is arranged in the sliding groove 181, and the sliding bar 154 can slide in the sliding groove 181. The first switching structure 151 is arranged at the first side of the supporting body 153, and the second switching structure 152 is arranged at the second side of the supporting body 153.

Please refer to FIG. 12. In an embodiment of the disclosure, the switching device 150 further includes the reset component 155. The reset component 155 is arranged on the sliding bar 154 and is located in the sliding groove 181. The reset component 155 may be the spring, and the spring is sleeved on the periphery of the sliding bar 154, and is located on the side of the supporting body 153 away from the output end.

The initial position of the switching device 150 is the first position. When in use, the sliding bar 154 is pushed, so that the supporting body 153 drives the first switching structure 151 and the second switching structure 152 to move, the second switching structure 152 contacts the second input end 132, and the output end outputs the second voltage. When the pulling force on the sliding bar 154 disappears, the spring relies on the reset elastic force to reset the switching device 150 to the first position, and the first switching structure 151 contacts the first input end 131, so that the output end outputs the first voltage.

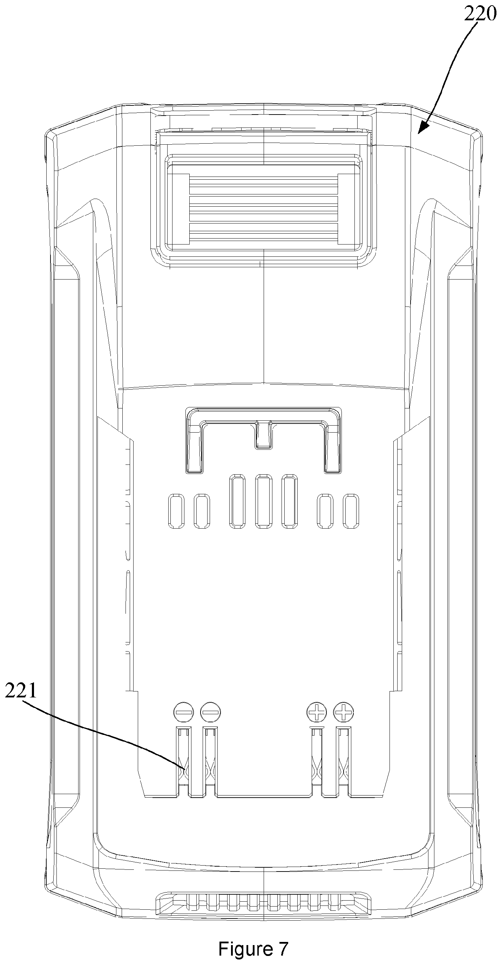

Please refer to FIG. 6, FIG. 7 FIG. 9 and FIG. 56 through FIG. 60. The disclosure further provides the power supply system. The power supply system includes the system 100 in any one of the above embodiments and the battery pack 200 mounted in the system. For example, the power supply system includes the housing 110, the first battery pack cavity 111, the second battery pack cavity 112, the battery pack 200, the input end 130, the switching device 150 and the output end 140. Wherein, the battery pack 200 includes at least one single-voltage battery pack 210 or at least one double-voltage battery pack 220. The single-voltage battery pack 210 can provide one voltage to the outside. The single-voltage battery pack 210 is provided with the single-voltage battery pack terminal 211, and the single-voltage battery pack terminal includes one positive terminal and one negative terminal. The double-voltage battery pack 220 can provide two voltages to the outside. The double-voltage battery pack 220 is provided with the double-voltage battery pack terminal 221, and the double-voltage battery pack terminal includes two positive terminals and two negative terminals. The first battery pack cavity 111 is arranged in the housing 110. The first battery pack cavity 111 is provided with the fourth terminal block 1250. The first battery pack cavity 111 is used to accommodate the single-voltage battery pack 210 or the double-voltage battery pack 220. The fourth terminal block 1250 is matched with the single-voltage battery pack 211 or the double-voltage battery pack 221. The fourth terminal block 1250 is configured to be electrically connected with the single-voltage battery pack 211 or the double-voltage battery pack 221. The second battery pack cavity 112 is arranged in the housing 110. The second battery pack cavity 112 is provided with the fifth terminal block 1260. The second battery pack cavity 112 is used to accommodate the single-voltage battery pack 210 or the double-voltage battery pack 220. The fifth terminal block 1260 is matched with the single-voltage battery pack 211 or the double-voltage battery pack 221. The fifth terminal block 1260 is configured to be electrically connected with the single-voltage battery pack 211 or the double-voltage battery pack 221. The battery packs are arranged in the first battery pack cavity 111 and/or the second battery pack cavity 112, and are electrically connected with the corresponding terminal blocks. The input end 130 is electrically connected with the fourth terminal block 1250 and the fifth terminal block 1260 respectively. The switching device 150 is arranged in the housing 110, and the first switching structure 151 and the second switching structure 152 are arranged on the switching device 150. The output end 140 is electrically connected with the first switching structure 151 and the second switching structure 152 respectively to output energy to the outside. When the switching device 150 is located in the first position, the output end 140 outputs the first voltage. When the switching device 150 is located in the second position, the output end 140 outputs the second voltage.

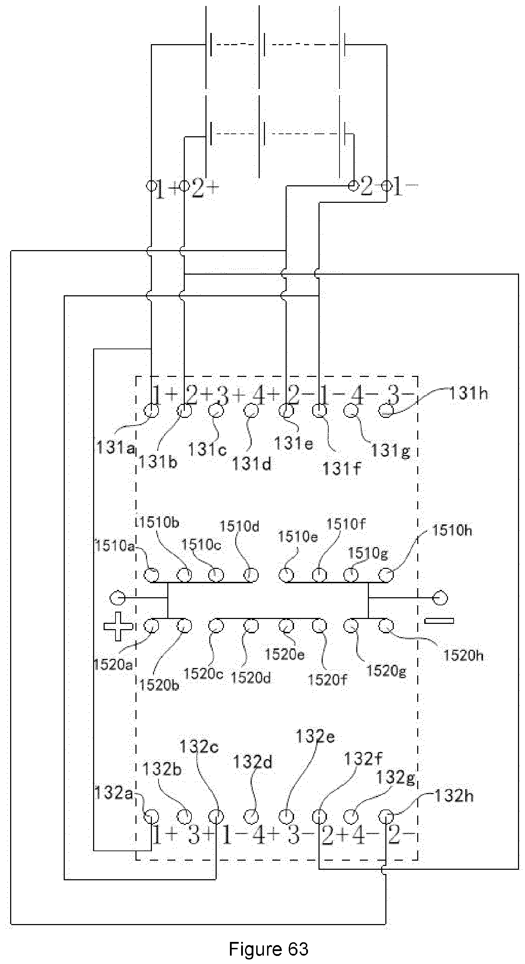

Please refer to FIG. 63 through FIG. 65. In an embodiment of the disclosure, the battery pack 200 includes one double-voltage battery pack, and there are two battery units arranged in the double-voltage battery pack. Wherein, FIG. 63 is the circuit principle view after the double-voltage battery pack is inserted.

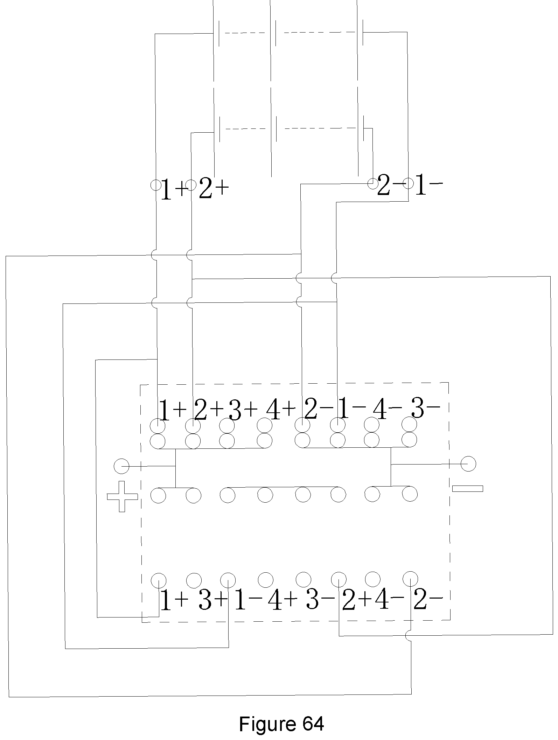

Please refer to FIG. 60 and FIG. 64. When the switching device 150 is in the first position, the first switching structure 151 is electrically connected with the first input end 131. At this time, the terminal 1510a is electrically connected with the terminal 1+ through the terminal 131a, and the terminal 1510b is electrically connected with the terminal 2+ through the terminal 131b. The terminal 1510e is electrically connected with the terminal 2- through the terminal 131e, and the terminal 1510f is electrically connected with the terminal 1- through the terminal 131f. The terminal 1510a and the terminal 1510b are electrically connected with the positive terminal of the output end respectively, and the terminal 1510e and the terminal 1510f are electrically connected with the negative terminal of the output end respectively. Therefore, the two battery units in the double-voltage battery packs are connected in parallel, and the output end 140 outputs the first voltage, which means the parallel voltage.

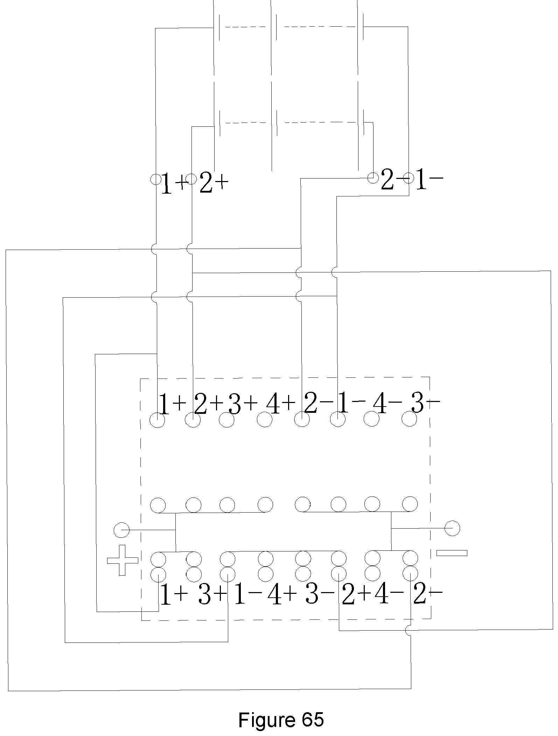

Please refer to FIG. 60 and FIG. 65. When the switching device 150 is in the second position, the second switching structure 152 is electrically connected with the second input end 132. At this time, the terminal 1520a is electrically connected with the terminal 1+ through the terminal 132a, and the terminal 1520c is electrically connected with the terminal 1- through the terminal 132c. The terminal 1510f is electrically connected with the terminal 2+ through the terminal 132f, and the terminal 1520h is electrically connected with the terminal 2- through the terminal 132h. The terminal 1520a is electrically connected with the positive terminal of the output end, the terminal 1520c is electrically connected with the terminal 1520f, and the terminal 1510h is electrically connected with the negative terminal of the output end. Therefore, the two battery units in the double-voltage battery packs are connected in series, and the output end 140 outputs the second voltage, which means the series voltage.

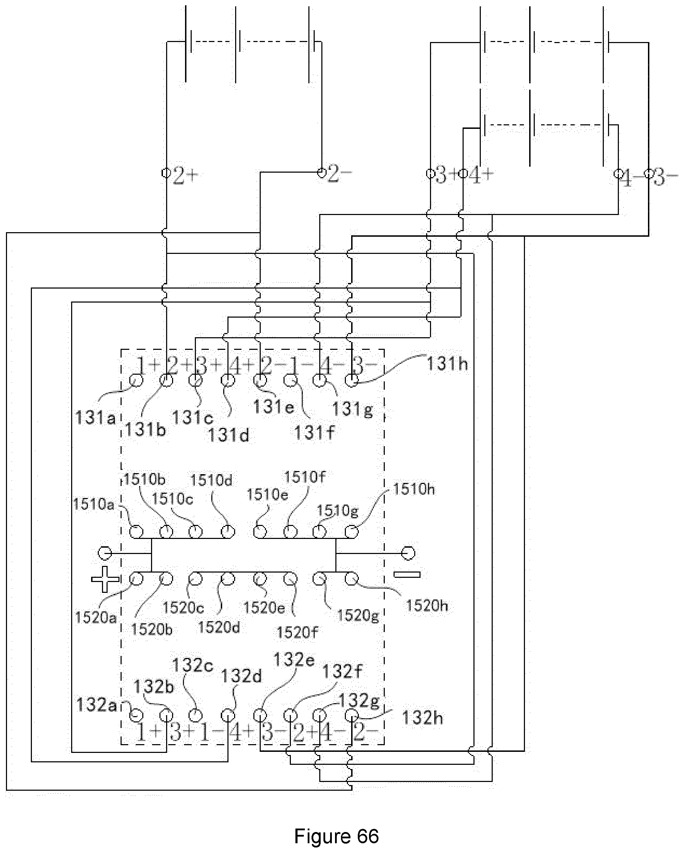

Please refer to FIG. 66 through FIG. 68. In an embodiment of the disclosure, the battery pack 200 includes one single-voltage battery pack and one double-voltage battery pack. Wherein FIG. 66 is the circuit principle view after one single-voltage battery pack and one double-voltage battery pack are inserted.

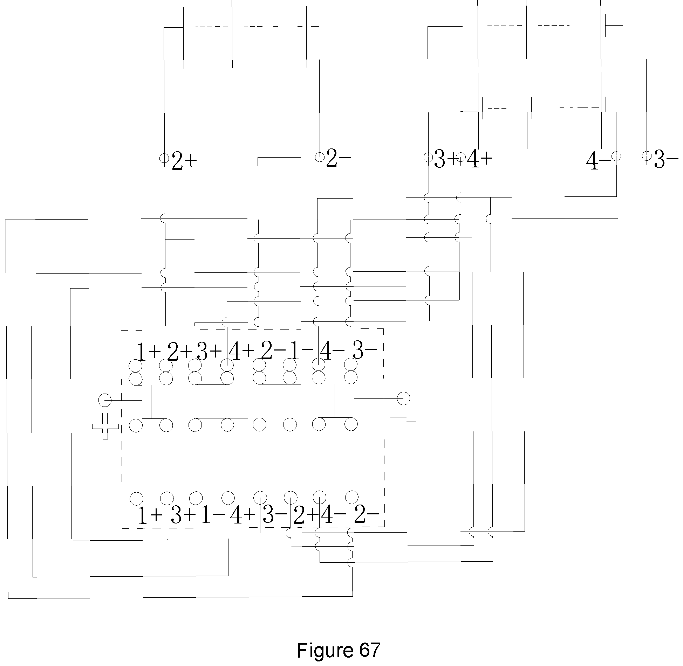

Please refer to FIG. 60 and FIG. 67. When the switching device 150 is in the first position, the first switching structure 151 is electrically connected with the first input end 131. At this time, the terminal 1510b is electrically connected with the terminal 2+ through the terminal 131b, and the terminal 1510c is electrically connected with the terminal 3+ through the terminal 131c. The terminal 1510d is electrically connected with the terminal 4+ through the terminal 131d, and the terminal 1510e is electrically connected with the terminal 2- through the terminal 131e. The terminal 1510g is electrically connected with the terminal 4- through the terminal 131g, and the terminal 1510h is electrically connected with the terminal 3- through the terminal 131h. The terminal 1510b, the terminal 1510c and the terminal 1510d are electrically connected with each other, and are electrically connected with the positive terminal of the output end. The terminal 1510e, the terminal 1510g and the terminal 1510h are electrically connected with each other, and electrically connected with the negative terminal of the output end 140. Therefore, the single-voltage battery pack and the two battery units in the double-voltage battery packs are connected in parallel, and the output end 140 outputs the first voltage, which means the parallel voltage.

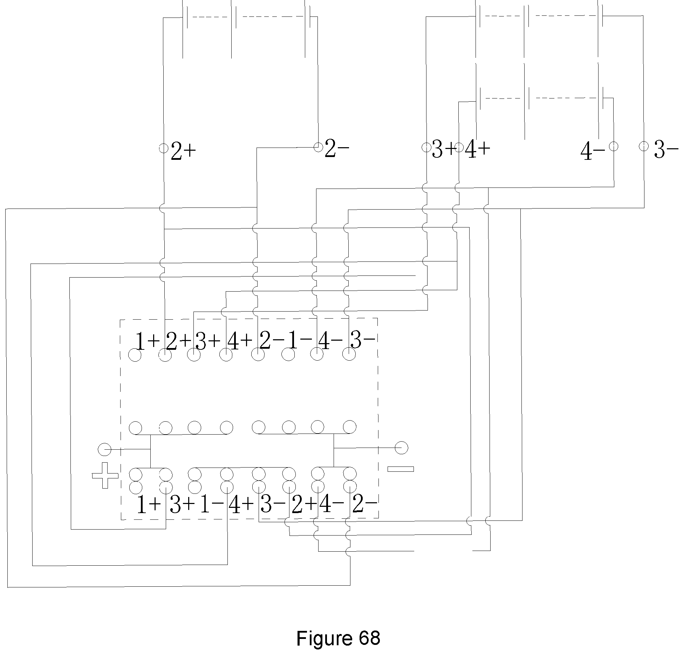

Please refer to FIG. 60 and FIG. 68. When the switching device 150 is in the second position, the second switching structure 152 is electrically connected with the second input end 132. At this time, the terminal 1520b is electrically connected with the terminal 3+ through the terminal 132b, and the terminal 1520e is electrically connected with the terminal 3- through the terminal 132e. The terminal 1520d is electrically connected with the terminal 4+ through the terminal 132d, and the terminal 1520g is electrically connected with the terminal 4- through the terminal 132g. The terminal 1520f is electrically connected with the terminal 2+ through the terminal 132f, and the terminal 1520h is electrically connected with the terminal 2- through the terminal 132h. The terminal 1520b is electrically connected with the positive terminal of the output end 140, and the terminal 1520d, the terminal 1510e and the terminal 1510f are electrically connected with each other. The terminal 1520g and the terminal 1520h are electrically connected with each other, and electrically connected with the negative terminal of the output end 140. Therefore, one of the battery units (the battery unit electrically connected with the terminal 4+ and the terminal 4-) in the double-voltage battery packs and the single-voltage battery pack are connected in parallel first, and then connected with the other battery unit of the double-voltage battery pack in series. The output end 140 outputs the second voltage, which means the series voltage.

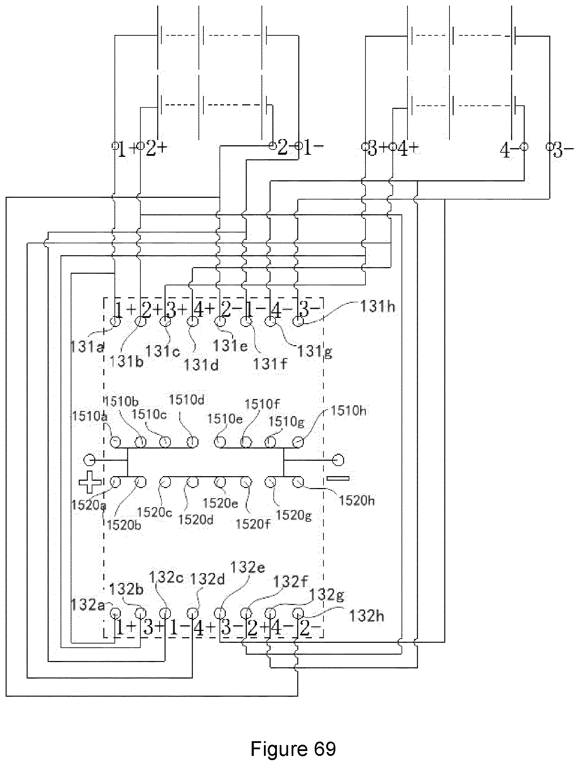

Please refer to FIG. 69 through FIG. 71. In an embodiment of the disclosure, the battery pack 200 includes two double-voltage battery packs. Wherein, FIG. 69 is a circuit principle view after inserting the two double-voltage battery packs. Wherein, one double-voltage battery pack includes a first battery unit and a second battery unit, and the other double-voltage battery pack includes a third battery unit and a fourth battery unit. The first battery unit corresponds to the electrical connection with the terminal 1+ and the terminal 1-, the second battery unit corresponds to the electrical connection with the terminal 2+ and the terminal 2-, the third battery unit corresponds to the electrical connection with the terminal 3+ and the terminal 3-, and the fourth battery unit corresponds to the electrical connection with the terminal 4+ and the terminal 4-.

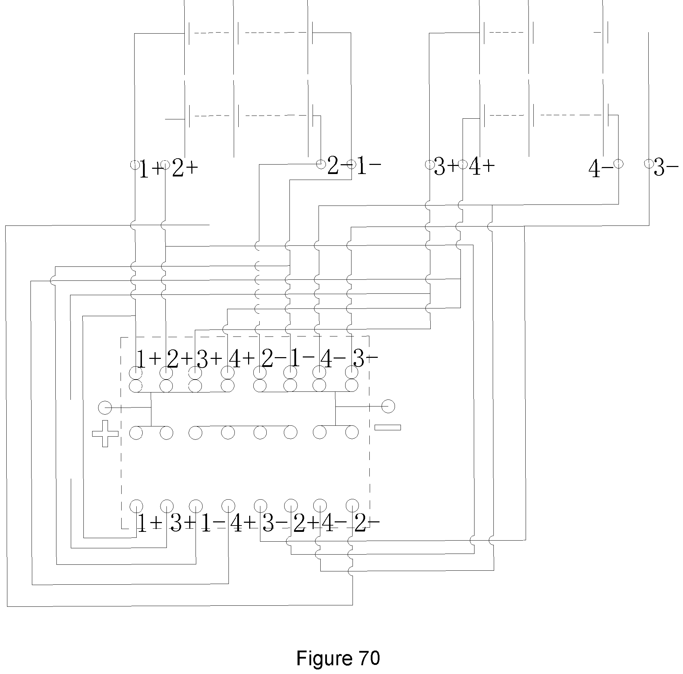

Please refer to FIG. 60 and FIG. 70. When the switching device 150 is in the first position, the first switching structure 151 is electrically connected with the first input end 131. At this time, the terminal 1510a is electrically connected with the terminal 1+ through the terminal 131a, and the terminal 1510b is electrically connected with the terminal 2+ through the terminal 131b. The terminal 1510c is electrically connected with the terminal 3+ through the terminal 131c, and the terminal 1510d is electrically connected with the terminal 4+ through the terminal 131d. The terminal 1510e is electrically connected with the terminal 2- through the terminal 131e, and the terminal 1510f is electrically connected with the terminal 1- through the terminal 131f. The terminal 1510g is electrically connected with the terminal 4- through the terminal 131g, and the terminal 1510h is electrically connected with the terminal 3- through the terminal 131h. The terminal 1510a, the terminal 1510b, the terminal 1510c and the terminal 1510d are electrically connected with the positive terminal of the output end 140 respectively. The terminal 1510e, the terminal 1510f, the terminal 1510g and the terminal 1510h are electrically connected with the negative terminal of the output end 140 respectively. At this time, the first battery unit, the second battery unit, the third battery unit, and the fourth battery unit are connected in parallel with each other, and the output end 140 outputs the first voltage externally, which means the parallel voltage.

Please refer to FIG. 60 and FIG. 70. When the switching device 150 is in the second position, the second switching structure 152 is electrically connected with the second input end 132. At this time, the terminal 1520a is electrically connected with the terminal 1+ through the terminal 132a, and the terminal 1520b is electrically connected with the terminal 3+ through the terminal 132b. The terminal 1520c is electrically connected with the terminal 1- through the terminal 132c, and the terminal 1520e is electrically connected with the terminal 3- through the terminal 132e. The terminal 1520f is electrically connected with the terminal 2+ through the terminal 132f, and the terminal 1520d is electrically connected with the terminal 4+ through the terminal 132d. The terminal 1520h is electrically connected with the terminal 2- through the terminal 132h, and the terminal 1520g is electrically connected with the terminal 4- through the terminal 132g. At the same time, the terminal 1520a and the terminal 1520b are electrically connected with the positive terminal of the output end 140 respectively, the terminal 1520c, the terminal 1520e, the terminal 1520f and the terminal 1520d are electrically connected with each other, and the terminal 1520g and the terminal 1520h are electrically connected with the negative terminal of the output end 140 respectively. Therefore, the first battery unit is connected in parallel with the third battery unit to form the first parallel circuit, the second battery unit is connected in parallel with the fourth battery unit to form the second parallel circuit, and the two parallel circuits are connected in series. Therefore, the output end 140 outputs the second voltage, which means the series voltage.

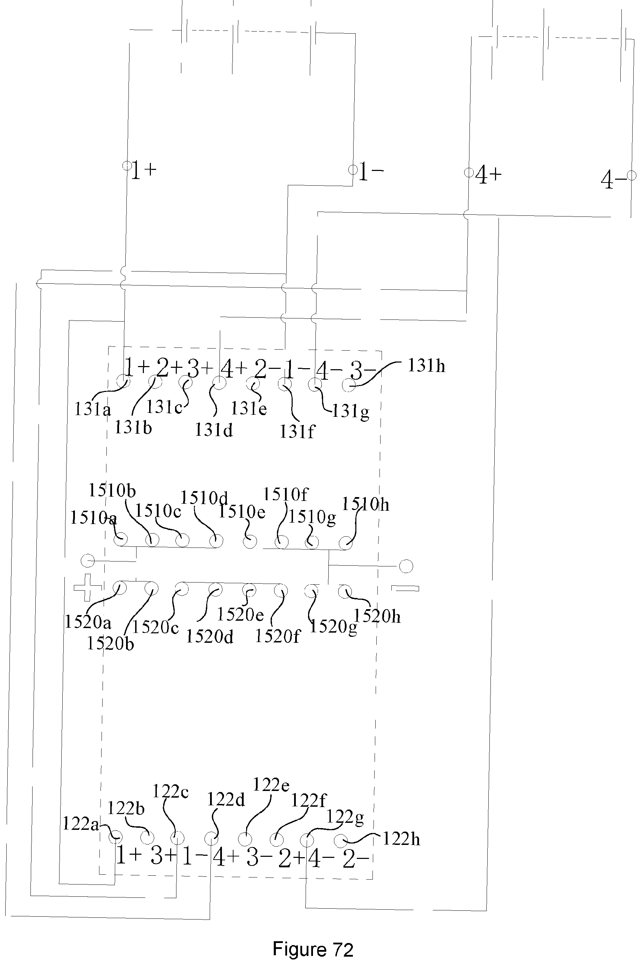

Please refer to FIG. 72 through FIG. 74. In an embodiment of the disclosure, the battery pack 200 includes two single-voltage battery packs. Wherein, FIG. 72 is the circuit principle view after the two single-voltage battery packs are inserted.

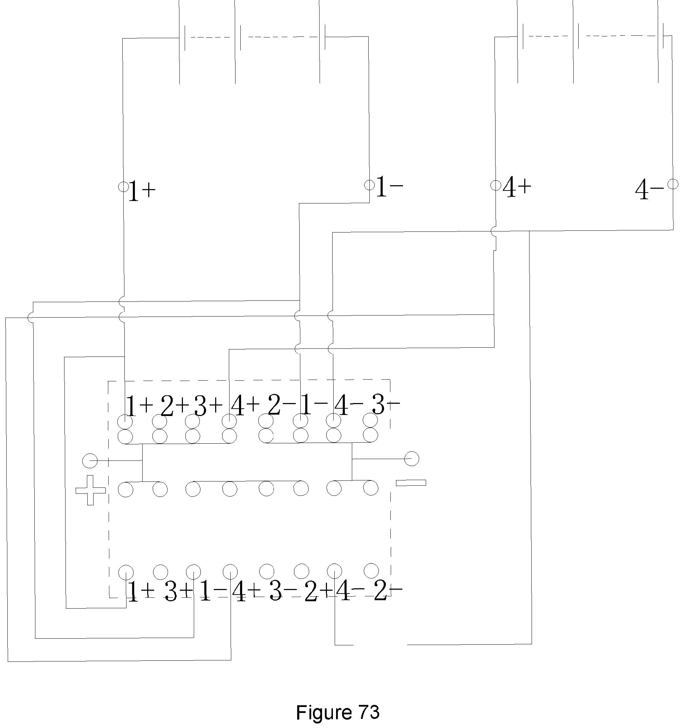

Please refer to FIG. 60 and FIG. 73. When the switching device 150 is in the first position, the first switching structure 151 is electrically connected with the first input end 131. At this time, the terminal 1510a is electrically connected with the terminal 1+ through the terminal 131a, and the terminal 1510d is electrically connected with the terminal 4+ through the terminal 131d. The terminal 1510f is electrically connected with the terminal 1- through the terminal 131f, and the terminal 1510g is connected with the terminal 4- through the terminal 131g. At the same time, the terminal 1510a and the terminal 1510d are electrically connected with the positive terminal of the output end respectively, and the terminal 1510f and the terminal 1510h are electrically connected with the negative terminal of the output end respectively. Therefore, the two single-voltage battery packs are connected in parallel, and the output end outputs the first voltage, which means the parallel voltage.

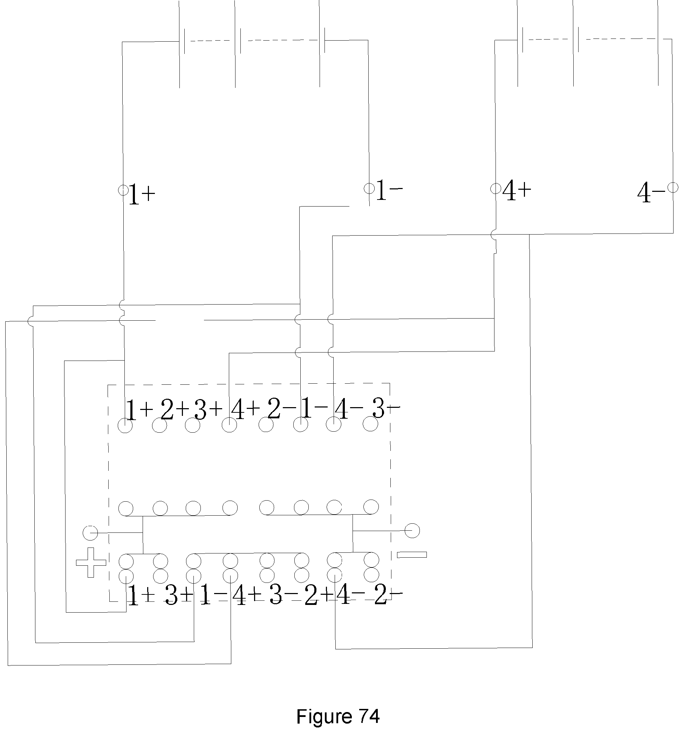

Please refer to FIG. 74. When the switching device 150 is in the second position, the second switching structure 152 is electrically connected with the second input end 132. At this time, the terminal 1520a is electrically connected with the terminal 1 + through the terminal 132a, and the terminal 1520c is electrically connected with the terminal 1- through the terminal 132c. The terminal 1520d is electrically connected with the terminal 4+ through the terminal 132d, and the terminal 1520g is connected with the terminal 4- through the terminal 132g. At the same time, the terminal 1520a is electrically connected with the positive terminal of the output end, the terminal 1520c is electrically connected with the terminal 1520d, and the terminal 1520g is electrically connected with the negative terminal of the output end. Therefore, the two single-voltage battery packs are connected in series, and the output end outputs the second voltage, which means the series voltage.

Please refer to FIG. 6, FIG. 7 FIG. 9 and FIG. 56 through FIG. 60. The disclosure further provides the power supply system. The power supply system is obtained in any one of the above embodiments mounted with the adapter. For example, the power supply system includes the housing 110, the first battery pack cavity 111, the second battery pack cavity 112, the battery pack 200, the input end 130, the switching device 150, the output end 140 and the adapter 400. Wherein, the battery pack 200 includes at least one single-voltage battery pack 210 or at least one double-voltage battery pack 220. The single-voltage battery pack 210 can provide one voltage to the outside. The single-voltage battery pack 210 is provided with the single-voltage battery pack terminal 211, and the single-voltage battery pack terminal includes one positive terminal and one negative terminal. The double-voltage battery pack 220 can provide two voltages to the outside. The double-voltage battery pack 220 is provided with the double-voltage battery pack terminal 221, and the double-voltage battery pack terminal includes two positive terminals and two negative terminals. The first battery pack cavity 111 is arranged in the housing 110. The first battery pack cavity 111 is provided with the fourth terminal block 1250. The first battery pack cavity 111 is used to accommodate the single-voltage battery pack 210 or the double-voltage battery pack 220. The fourth terminal block 1250 is matched with the single-voltage battery pack 211 or the double-voltage battery pack 221. The fourth terminal block 1250 is configured to be electrically connected with the single-voltage battery pack 211 or the double-voltage battery pack 221. The second battery pack cavity 112 is arranged in the housing 110. The second battery pack cavity 112 is provided with the fifth terminal block 1260. The second battery pack cavity 112 is used to accommodate the single-voltage battery pack 210 or the double-voltage battery pack 220. The fifth terminal block 1260 is matched with the single-voltage battery pack 211 or the double-voltage battery pack 221. The fifth terminal block 1260 is configured to be electrically connected with the single-voltage battery pack 211 or the double-voltage battery pack 221. The battery packs are arranged in the first battery pack cavity 111 and/or the second battery pack cavity 112, and are electrically connected with the corresponding terminal blocks. The input end 130 is electrically connected with the fourth terminal block 1250 and the fifth terminal block 1260 respectively. The switching device 150 is arranged in the housing 110, and the first switching structure 151 and the second switching structure 152 are arranged on the switching device 150. The output end 140 is electrically connected with the first switching structure 151 and the second switching structure 152 respectively to output energy to the outside. When the switching device 150 is located in the first position, the output end 140 outputs the first voltage. When the switching device 150 is located in the second position, the output end 140 outputs the second voltage. The power cable 300 is configured to be connected with the output end 140, the adapter 400 is provided with the adaptation interface, and the adapter is configured to be electrically connected with the output end 140.

In an embodiment of the disclosure, the power supply system further includes a power cable 300. The power cable 300 is configured to electrically connect the adapter with the output end.

Please refer to FIG. 27. In an embodiment of the disclosure, the power supply system further includes the plugging wire base 310. The plugging wire base 310 is configured to be electrically connected with the output end 140. The plugging wire base 310 is provided with the plug-in part 3110 and the pulling part 3120. The plug-in part 3110 is configured to electrically connect the output end 140 with the adapter 400. The wiring terminal matched with the output end 140 is arranged in the plug-in part 3110, the pulling part 3120 is sleeved on the plug-in part 3110. The pulling part 3120 is provided with the pushing block 3121 that changes the position of the switching device 150. The pulling part 3120 is provided with the pressing component 3122 and the limiting component 3123, and the limiting component 3123 is arranged on the pressing component 3122.

In an embodiment of the disclosure, the pulling part 3120 may slide on the plug-in part 3110, and the limiting part 3123 includes the first limiting component and the second limiting component, and the first limiting component and the second limiting component are arranged on the surface of the pressing component 3122 in parallel.

Please refer to FIG. 28. The initial position of the switching device 150 is the first position. The pressing component 3122 is pressed, the wiring terminal in the plug-in part 3110 is aligned with the wiring terminal of the output end 140 according to positive and negative electrode positions, and then the plug-in part 3110 and the pulling part 3120 are pushed, so that the wiring terminal in the plug-in part 3110 is electrically connected with the wiring terminal of the output end 140, the first limiting component passes through the third limiting component 116 to loosen the pressing component 3122, and the first limiting component 3123 is clamped with the third limiting component 116 arranged on the housing 110. In this way, the switching device 150 is firmly fixed in the first position, and the output end 140 can stably output the first voltage.

When the second voltage needs to be connected, the pressing component 3122 is pressed. Further, the pulling part 3120 is pushed, so that the pushing block 3121 pushes the sliding bar 154 to slide. When the switching device 150 moves to the second position, the pressing component 3122 is released, so that the second limiting component is clamped with the third limiting component 116, thereby firmly fixing the switching device 150 in the second position, and the output end 140 can stably output the second voltage.

When the output voltage of the output end 140 needs to be replaced from the second voltage to the first voltage, the pressing component 3122 is pressed, the pulling part 3120 is moved outward, and the sliding bar 154 moves outward under the restoring force of the spring, so that the switching device 150 moves from the second position to the first position, and the output terminal outputs the first voltage.

When the plugging wire base 310 needs to be unplugged, the pressing component 3123 is pressed to enable the first limiting component or the second limiting component to detach from the third limiting component 116, so that the plugging wire base 310 may be pulled out smoothly.

Please refer to FIG. 27. In an embodiment of the disclosure, the pressing component 3123 is further provided with the first identification area 3124 and the second identification area 3125. And when the first identification area 3124 is adjacent to the output end 140, the output end 140 outputs the first voltage, and when the second identification area 3125 is adjacent to the output end 140, the output end 140 outputs the second voltage. The first identification area 3124 is used for identifying the first voltage. For example, the voltage value of the first voltage is identified in the first identification area 3124, and the second identification area 3125 is used for identifying the second voltage. For example, the voltage value of the second voltage is identified in the second identification area 3125.

In an embodiment of the disclosure, the initial position of the switching device 150 is the first position. The pressing component 3122 is pressed to insert the plugging wire base 310 to the output end 140. When the second identification area 3124 is adjacent to the output end, the output end outputs the first voltage. The plugging wire base continues to be pushed to an inside of the output end. When the second identification area 3125 is adjacent to the output end 140, in this process, the pushing block pushes the sliding bar 154, thereby pushing the supporting body 153 to move to the second position, a second circuit is connected, and the output end 140 outputs the second voltage.

Please refer to FIG. 27. In an embodiment of the disclosure, the pressing component 3122 is the elastic piece. The limiting component includes two limiting protrusions, and the limiting protrusion is matched with the limiting block on the housing.

Please refer to FIG. 56. In an embodiment of the disclosure, the plugging wire base 310 is arranged at the end part of the power cable 300. The conducting wire inside the power cable 300 is electrically connected with the wiring terminal in the plug-in part 3110, and the plugging wire base may be integrated with the end of the power cable 300.

Please refer to FIG. 6, FIG. 7, FIG. 56 through FIG. 60 and FIG. 29 through FIG. 30. The disclosure further provides the power tool system, which is obtained by arranging the first power tool 500 and the second power tool 600 to the power supply system in any of the above embodiments. For example, the power supply system includes the housing 110, the first battery pack cavity 111, the second battery pack cavity 112, the battery pack 200, the input end 130, the switching device 150, the output end 140, the adapter 400, the first power tool 500 and the second power tool 600. Wherein, the battery pack 200 includes at least one single-voltage battery pack 210 or at least one double-voltage battery pack 220. The single-voltage battery pack 210 can provide one voltage to the outside. The single-voltage battery pack 210 is provided with the single-voltage battery pack terminal 211, and the single-voltage battery pack terminal 211 includes one positive terminal and one negative terminal. The double-voltage battery pack 220 can provide two voltages to the outside. The double-voltage battery pack 220 is provided with the double-voltage battery pack terminal 221, and the double-voltage battery pack terminal 221 includes two positive terminals and two negative terminals. The first battery pack cavity 111 is arranged in the housing 110, the first battery pack cavity 111 is provided with the fourth terminal block 1250, and the first battery pack cavity 111 is used to accommodate the single-voltage battery pack 210 or the double-voltage battery pack 220. The fourth terminal block 1250 is matched with the single-voltage battery pack terminal 211 or the double-voltage battery pack terminal 221. The fourth terminal block 1250 is configured to be electrically connected with the single-voltage battery pack terminal 211 or the double-voltage battery pack terminal 221. The second battery pack cavity 112 is arranged in the housing 110, and the fifth terminal block 1260 is arranged on the second battery pack cavity 112. The second battery pack cavity 112 is used to accommodate the single-voltage battery pack 210 or the double-voltage battery pack 220. The fifth terminal block 1260 is matched with the single-voltage battery pack terminal 211 or the double-voltage battery pack terminal 221. The fifth terminal block 1260 is configured to be electrically connected with the single-voltage battery pack terminal 211 or the double-voltage battery pack terminal 221. The battery pack 200 is mounted in the first battery pack cavity and/or the second battery pack cavity, and electrically connected with the corresponding terminal block. The input end 130 is electrically connected with the fourth terminal block 1250 and the fifth terminal block 1260 respectively. The switching device 150 is arranged in the housing 110, and the first switching structure 151 and the second switching structure 152 are arranged on the switching device 150. The output end 140 is electrically connected with the first switching structure 151 and the second switching structure 152 respectively. When the switching device 150 is in the first position, the output end 140 outputs the first voltage, and when the switching device 150 is in the second position, the output end 140 outputs the second voltage. The adaptation interface is arranged on the output end 140, and the adapter is configured to be electrically connected with the output end. The first power tool is provided with the first tool interface. When the first tool interface is coupled with the adaptation interface, the adapter is electrically connected with the first power tool. The second power tool is provided with the second tool interface. When the second power tool is coupled with the adaptation interface, the adapter is electrically connected with the second power tool. The adapter 400 is provided with the adaptation interface, and the adapter 400 is configured to be electrically connected with the output end140. The first power tool 500 is provided with the first tool interface, and the adapter 400 is electrically connected with the first power tool 500 when the first tool interface is coupled with the adaptation interface. The second power tool 600 is provided with the second tool interface, and when the second tool interface is coupled with the adaptation interface, the adapter 400 is electrically connected with the second power tool 600. The working voltage of the first power tool 500 is different from the working voltage of the second power tool 600.

In an embodiment of the disclosure, the working voltage of the first power tool 500 is the first voltage, and the working voltage of the second power tool 600 is the second voltage.

In an embodiment of the disclosure, the working voltage of the first power tool 500 is the second voltage, and the working voltage of the second power tool 600 is the first voltage.

**The** battery pack cavity of the system of the disclosure is used for mounting the battery pack 200, and terminal block is used for the electrical connection with the battery pack 200. When positions of the switching device 150 are different, the output voltage that can be configured at the output end 140 is also different, so that the output end 140 can be configured with two kinds of output voltages. The system has the advantages of simple structure, easy implementation, easy operation, and small space occupation. At the same time, the system can provide two different output voltages to the outside after being put into the battery pack 200, and meet the tools of two different working voltages, which increases the applicable scope of the power supply system and effectively solves the problem that the conventional power supply can only output one voltage. Therefore, the disclosure effectively overcomes some practical problems in the prior art, thereby having high utilization value and use significance.

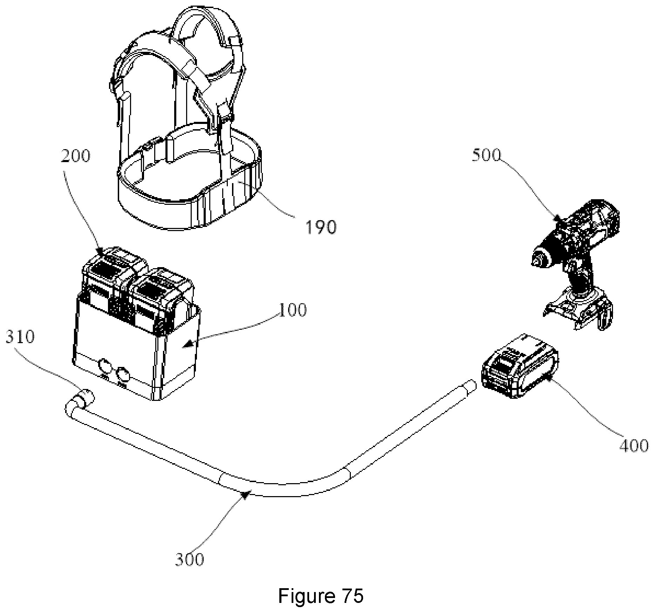

Please refer to FIG. 75 through FIG. 77. The disclosure provides the system. The system includes the housing 110, the terminal part 120, the input end 130, the first output end 1404, the second output end 1405, the first switching structure 151 and the second switching structure 152. Wherein, the terminal part 120 is arranged on the housing 110 and matched with the battery pack. The input end 130 is electrically connected with the terminal part 120. The first output end 1404 is used to output energy to the outside. The second output end 1405 is used to output energy to the outside. The first switching structure 151 is arranged in the housing 110. The first switching structure 151 may be switchable between the first state and the second state, and electrically connected with the first output end 1404. The second switching structure 152 is arranged in the housing 110. The second switching structure 152 may be switchable between the first state and the second state, and electrically connected with the second output end 1405. In an initial state, the first switching structure 151 and the second switching structure 152 are both in the first state. When the first switching structure 151 is in the second state, the second switching structure 162 is in the first state, and the first output end 1404 is configured to output the first voltage. When the second switching structure 152 is in the second state, the first switching structure 151 is in the first state, and the second output end 1405 is configured to output the second voltage. The first voltage is different from the second voltage. The system mentioned above further includes the strap 190, and the housing 110 is mounted on the strap 190, and the operator may carry the system through the strap 190. Wherein, in order to facilitate the storage or the se, in an embodiment of the disclosure, the housing 110 is detachably mounted on the strap 190.

Please refer to FIG. 6, FIG. 7 and FIG. 59. In an embodiment of the disclosure, the first battery pack cavity 111 and the second battery pack cavity 112 are arranged in the housing 110. The first battery pack cavity 111 is suitable for the single-voltage battery pack or the double-voltage battery pack. The second battery pack cavity 112 is suitable for the single-voltage battery pack 210 or the double-voltage battery pack 220. The single-voltage battery pack 210 can provide one voltage to the outside. The single-voltage battery pack 210 is provided with the single-voltage battery pack terminal 211, and the single-voltage battery pack terminal 211 includes one positive terminal and one negative terminal. The double-voltage battery pack 220 can provide two voltages to the outside. The double-voltage battery pack 220 is provided with the double-voltage battery pack terminal 221, and the double-voltage battery pack terminal includes two positive terminals and two negative terminals. The first battery pack cavity 111 is suitable for both of the single-voltage battery pack and the double-voltage battery pack. The second battery pack cavity 112 is suitable for both of the single-voltage battery pack and the double-voltage battery pack.

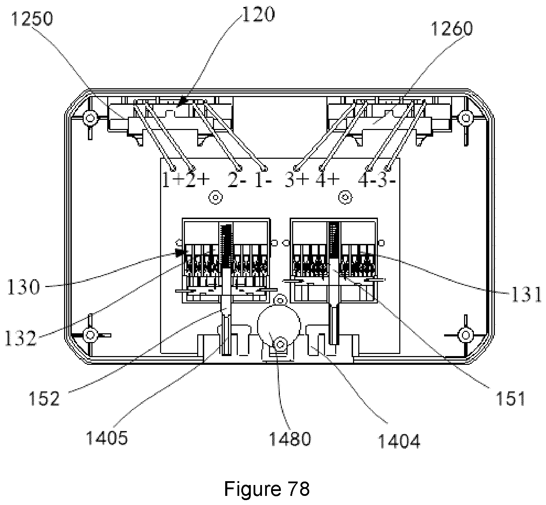

Please refer to FIG. 78 and FIG. 35. In an embodiment of the disclosure, the system further includes the blocking component 1480. The blocking component 1480 is movably mounted between the first output end 1404 and the second output end 1405. When using the first output end 1404, the blocking component 1480 blocks the second output end 1405. When using the second output end 1405, the blocking component 1480 blocks the first output end 1404.

Please refer to FIG. 35. In an embodiment of the disclosure, the blocking component 1480 is a camshaft. The camshaft includes a shaft body, a cam is arranged on the shaft body, and the cam and the shaft body are eccentrically fixed. In an embodiment of the disclosure, the shaft body is rotatably mounted between the first output end 1404 and the second output end 1405. When a line is inserted into the first output end 1404, the cam is pushed to deflect towards the second output end 1405, thereby blocking the second output end 1405. Similarly, when a line is inserted into the second output end 1405, the cam is pushed to deflect towards the first output end 1404, thereby blocking the first output end 1404.

Please refer to FIG. 78. In an embodiment of the disclosure, the terminal part 120 includes the fourth terminal block 1250 and the fifth terminal block 1260. The fourth terminal block 1250 is arranged on the first battery pack cavity 111. The fifth terminal block 1260 is arranged on the second battery pack cavity 112. The input end 130 is electrically connected with the fourth terminal block 1250 and the fifth terminal block 1260 respectively.

Please refer to FIG. 9. In an embodiment of the disclosure, the fourth terminal block 1250 may be arbitrarily matched with the single-voltage battery pack terminal or the double-voltage battery pack terminal. The fifth terminal block 1260 may be arbitrarily matched with the single-voltage battery pack terminal or the double-voltage battery pack terminal.

Please refer to FIG. 78 and FIG. 37. In an embodiment of the disclosure, the input end 130 includes the first input end 131 and the second input end 132. The first input end 131 is electrically connected with the fourth terminal block 1250 and the fifth terminal block 1260 respectively. The second input end 132 is electrically connected with the fourth terminal block 1250 and the fifth terminal block 1260 respectively.

Please refer to FIG. 9. The structure of the fourth terminal block 1250 is consistent with the structure of the fifth terminal block 1260. Four third terminals 1231 and four fourth terminals 1232 are arranged on the fourth terminal block 1250. Wherein, the third terminal 1231 is configured to be electrically connected with the single-voltage battery pack terminal and the double-voltage battery pack terminal. The fourth terminal 1232 is electrically connected with the input end. The third terminal 1231 is electrically connected with the fourth terminal 1232.

The number of the third terminals 1231 is four, which are two positive terminals and two negative terminals, and they are matched with the corresponding battery pack terminals. The number of the fourth terminals 1232 is four, which are two positive terminals or two negative terminals. The fourth terminal 1232 is electrically connected with the third terminal 1231. The single-voltage battery pack is correspondingly provided with through holes. When the single-voltage battery pack is mounted on the fourth terminal block 1250, two of the third terminals 1231 are electrically connected with the single-voltage battery pack terminal, and the remaining two third terminals 1231 are inserted into the corresponding through holes and are in the idle state.

Please refer to FIG. 36 through FIG. 41. In an embodiment of the disclosure, the system further includes the first mounting base 1801 and the second mounting base 1802. The first switching structure 151 includes the first supporting body 1531 and the first sliding bar 1541. The first mounting base 1801 is provided with the first sliding groove 1811. The first sliding bar 1541 is arranged in the first sliding groove 1811. The first supporting body 1531 is fixedly connected with the first sliding bar 1541. The first supporting body 1531 is provided with the first wiring terminal 1510. The second switching structure 152 includes the second supporting body 1532 and a second sliding bar 1542. The second mounting base 1802 is provided with the second sliding groove 181. The second sliding bar 1542 is arranged in the second sliding groove 1812. The second supporting body 1532 is fixedly connected with the second sliding bar 1542. The second supporting body 1532 is provided with the second wiring terminal 1520.

In an embodiment of the disclosure, the fourth terminals 1232 of the fourth terminal block 1250 are respectively marked as: 1+, 2+, 2-, 1-, and the fourth terminals 1232 of the fifth terminal block 1260 are marked as: 3+, 4+, 4-, 3-.

The eight wiring terminals of the first input end 131 are respectively marked as: 131a, 131b, 131c, 131d, 131e, 131f, 131g, 131h. Wherein, the terminal 131a, the terminal 131b, the terminal 131c, the terminal 131d are correspondingly electrically connected with the terminal 1+, the terminal 2+, the terminal 3+, and the terminal 4+ one by one. The specific corresponding relationship in this one-to-one correspondence is not limited. For example, in an embodiment of the disclosure, the terminal 131a is electrically connected with the terminal 1+, the terminal 131b is electrically connected with the terminal 2+, the terminal 131c is electrically connected with the terminal 3+, and the terminal 131d is electrically connected with the terminal 4+. The terminal 131e, the terminal 131f, the terminal 131g, the terminal 131h are correspondingly electrically connected with the terminal 1-, the terminal 2-, the terminal 3-, and the terminal 4- one by one. The specific corresponding relationship in this one-to-one correspondence is not limited. For example, in an embodiment of the disclosure, the terminal 131e is electrically connected with the terminal 2-, the terminal 131f is electrically connected with the terminal 1-, the terminal 131g is electrically connected with the terminal 4-, and the terminal 131h is electrically connected with the terminal 3-.

The eight wiring terminals of the second input end 132 are respectively marked as: 132a, 132b, 132c, 132d, 132e, 132f, 132g, 132h. The terminal 132a, the terminal 132b, the terminal 132c, the terminal 132d, the terminal 132e, the terminal 132f, the terminal 132g, the terminal 132h are correspondingly electrically connected with the terminal 1+, the terminal 3+, the terminal 1-, the terminal 4+, terminal 3-, the terminal 2+, the terminal 4- and the terminal 2- one by one. A corresponding relationship in this one-to-one correspondence may be any implementable solution that can achieve technical effects of the disclosure and realize the disclosure. In an embodiment of the disclosure, the terminal 132a is electrically connected with the terminal 1+, the terminal 132b is electrically connected with the terminal 3+, the terminal 132c is electrically connected with the terminal 1-, the terminal 132d is electrically connected with the terminal 4+, the terminal 132e is electrically connected with the terminal 3-, the terminal 132f is electrically connected with the terminal 2+, the terminal 132g is electrically connected with the terminal 4-, and the terminal 132h is electrically connected with the terminal 2-.

The eight first wiring terminals 1510 are respectively marked as the terminals 1510a, 1510b, 1510c, 1510d, 1510e, 1510f, 1510g, 1510h. Wherein, the terminal 1510a is configured to be electrically connected with the terminal 131a, the terminal 1510b is configured to be electrically connected with the terminal 131b, the terminal 1510c is configured to be electrically connected with the terminal 131c, the terminal 1510d is configured to be electrically connected with the terminal 131d, the terminal 1510e is configured to be electrically connected with the terminal 131e, the terminal 1510f is configured to be electrically connected with the terminal 131f, the terminal 1510g is configured to be electrically connected with the terminal 131g, and the terminal 1510h is configured to be electrically connected with the terminal 131h. The eight first wiring terminals of the first switching structure 1510 may be electrically connected as needed. The electrical connection mode of the eight wiring terminals may be any kind of embodiment that can realize the disclosure and achieve the effect of the disclosure. In an embodiment of the disclosure, the terminal 1510a, the terminal 1510b, the terminal 1510c and the terminal 1510d are electrically connected with each other, and are electrically connected with the positive terminal of the first output end 1404. The terminal 1510e, the terminal 1510f, the terminal 1510g and the terminal 1510h are electrically connected with each other, and are electrically connected with the negative terminal of the first output end 1404.

The eight second wiring terminals 1520 are respectively marked as the terminals 1520a, 1520b, 1520c, 1520d, 1520e, 1520f, 1520g, 1520h. Wherein, the terminal 1520a is configured to be electrically connected with the terminal 132a, the terminal 1520b is configured to be electrically connected with the terminal 132b, the terminal 1520c is configured to be electrically connected with the terminal 132c, the terminal 1520d is configured to be electrically connected with the terminal 132d, the terminal 1520e is configured to be electrically connected with the terminal 132e, the terminal 1520f is configured to be electrically connected with the terminal 132f, the terminal 1520g is configured to be electrically connected with the terminal 132g, and the terminal 1520h is configured to be electrically connected with the terminal 132h. The eight second wiring terminals may be electrically connected as needed. The electrical connection mode of the eight wiring terminals may be any kind of embodiment that can realize the disclosure and achieve the effect of the disclosure. The terminal 1520a is electrically connected with terminal 1520b and is electrically connected with the positive terminal of the second output end 1405. The terminals 1520c, 1520d, 1520e and 1520f are electrically connected with each other. The terminal 1520g is electrically connected with terminal 1520h and is electrically connected with the negative terminal of the second output end 1405.

Please refer to FIG. 36 and FIG. 38. In an embodiment of the disclosure, when the first switching structure 151 is in the second state, the first switching structure 151 is electrically connected with the first input end 131, and the second switching structure 152 is disconnected from the second input end 132. When the second switching structure 152 is in the second state, the second switching structure 152 is electrically connected with the second input end 132, and the first switching structure 151 is disconnected from the first input end 131.

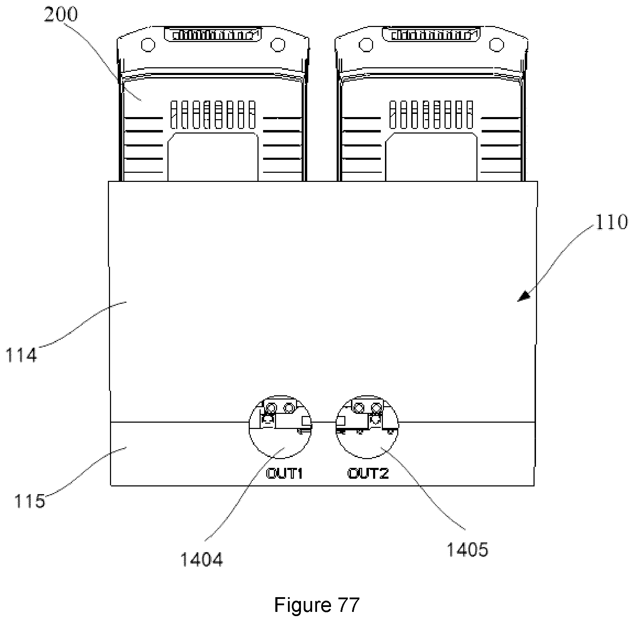

Please refer to FIG. 38. In an embodiment of the disclosure, the input end 130 is respectively connected with the fourth terminal block 1250 and the fifth terminal block 1260 through the conducting wire. Please refer to FIG. 77. The housing 110 includes the upper housing 114 and the lower housing 115. The lower housing 115 is mounted at the bottom of the upper housing 114, and the first battery pack cavity 111 and the second battery pack cavity 112 are arranged inside the upper housing 114. The conducting wire is arranged inside the lower housing 115. For a neat wiring, the conducting wire may be integrated on the first circuit board (Printed Circuit Board) 160, and the first circuit board 160 is fixed inside the lower housing 115 and is located outside the upper housing 114. The input end 130 may be arranged on the first circuit board 160.

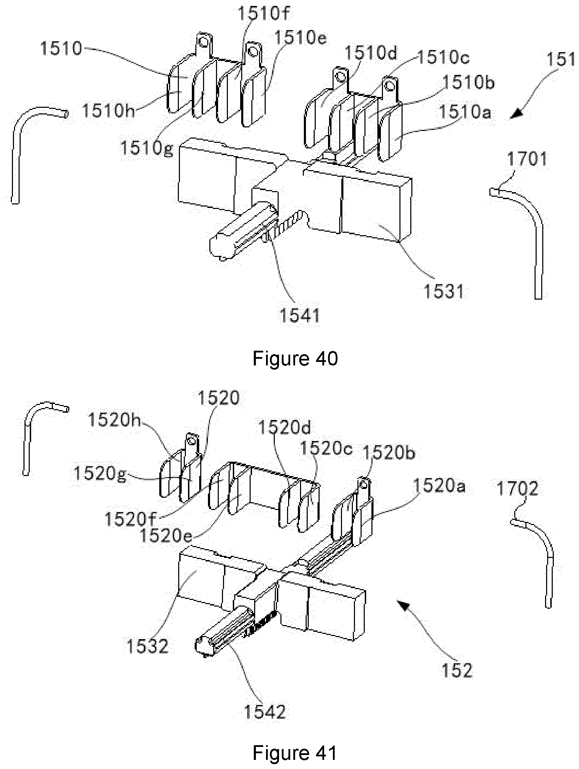

Please refer to FIG. 40 and FIG. 41. In an embodiment of the disclosure, the first switching structure 151 further includes the first reset component 1551. The first reset component 1551 is arranged on the first sliding bar 1541. The second switching structure 152 further includes the second reset component 1552. The second reset component 1552 is arranged on the second sliding bar 1542. The first reset component 1551 and/or the second reset component 1552 may be the springs.

The initial state of the first switching structure 151 is the first state. When in use, the first sliding bar 1541 is pushed, and the first supporting body 1531 drives the wiring terminal to move and enable the first switching structure 151 to be in the second state, so that the first wiring terminal 1510 contacts the first input end 131, conducts a related circuit, and enables the first output end 1404 to output the first voltage, which means that the first output end 1404 outputs the first voltage after the corresponding battery pack is inserted. When the pulling force on the first sliding bar 1541 disappears, the spring relies on the reset elastic force to reset the first switching structure 151 to the first state.

The initial state of the second switching structure 152 is the first state. When in use, the second sliding bar 1542 is pushed, and the second supporting body 1532 drives the wiring terminal to move and enable the second switching structure 152 to be in the second state, so that the second wiring terminal 1520 contacts the second input end 132, conducts the related circuit, and enables the second output end 1405 to output the second voltage, which means that the second output end 1405 outputs the second voltage after the corresponding battery pack is inserted. When the pulling force on the second sliding bar 1542 disappears, the spring relies on the reset elastic force to reset the second switching structure 152 to the first state.

Please refer to FIG. 75 through FIG. 77. The disclosure further provides the power supply system. The power supply system includes the system 100 in any one of the above embodiments and the battery pack 200 mounted in the system. For example, the power supply system includes the housing 110, the terminal part 120, the battery pack 200, the input end 130, the first output end 1404, the second output end 1405, the first switching structure 151 and the second switching structure 152. Wherein, the terminal part 120 is arranged on the housing 110 and matched with the battery pack. The battery pack 200 is arranged in the housing 110, at least includes two groups of output voltages, and is electrically connected with the terminal part 120. The input end 130 is electrically connected with the terminal part 120. The first output end 1404 is used to output energy to the outside. The second output end 1405 is used to output energy to the outside. The first switching structure 151 is arranged in the housing 110. The first switching structure 151 may be switchable between the first state and the second state, and electrically connected with the first output end 1404. The second switching structure 152 is arranged in the housing 110. The second switching structure 152 may be switchable between the first state and the second state, and electrically connected with the second output end 1405. When in the initial state, the first switching structure 151 and the second switching structure 152 are both in the first state. When the first switching structure 151 is in the second state, the second switching structure 162 is in the first state, and the first output end 1404 outputs the first voltage. When the second switching structure 152 is in the second state, the first switching structure 151 is in the first state, and the second output end 1405 outputs the second voltage. The first voltage is different from the second voltage.

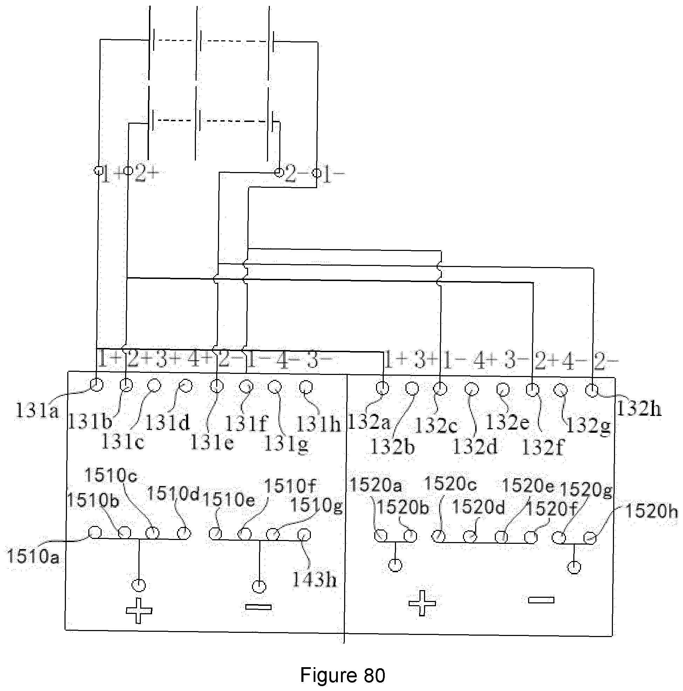

Please refer to FIG. 80 through FIG. 82. In an embodiment of the disclosure, the battery pack 200 includes one double-voltage battery pack, and there are two battery units arranged in the double-voltage battery pack. Wherein, FIG. 80 is the circuit principle view after one double-voltage battery pack is inserted.

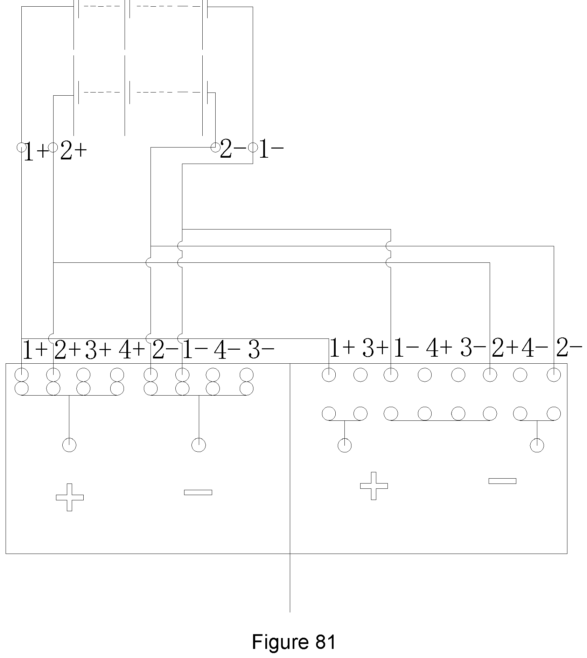

Please refer to FIG. 78 and FIG. 81. When the first switching structure 151 is in the second state, the first wiring terminal 1510 is electrically connected with the first input end 131. At this time, the terminal 1510a is electrically connected with the terminal 1 + through the terminal 131a, and the terminal 1510b is electrically connected with the terminal 2+ through the terminal 131b. The terminal 1510e is electrically connected with the terminal 2- through the terminal 131e, and the terminal 1510f is electrically connected with the terminal 1- through the terminal 131f. The terminal 1510a and the terminal 1510b are electrically connected with the positive terminal of the first output end 1404 respectively, and the terminal 1510e and the terminal 1510f are electrically connected with the negative terminal of the first output end 1404 respectively. Therefore, the two battery units in the double-voltage battery packs are connected in parallel, and the first output end 1404 outputs the first voltage, which means the parallel voltage.

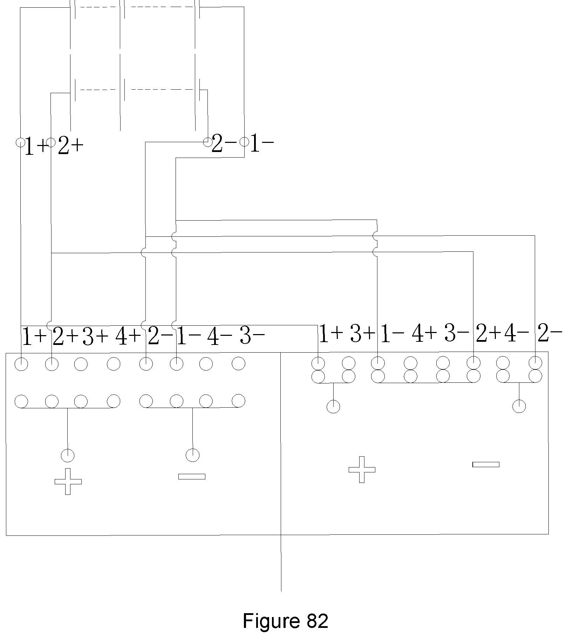

Please refer to FIG. 78 and FIG. 82. When the second switching structure 152 is in the second position, the second wiring terminal 1520 is electrically connected with the second input end 132. At this time, the terminal 1520a is electrically connected with the terminal 1+ through the terminal 132a, and the terminal 1520c is electrically connected with the terminal 1- through the terminal 132c. The terminal 1520f is electrically connected with the terminal 2+ through the terminal 132f, and the terminal 1520h is electrically connected with the terminal 2- through the terminal 132h. The terminal 1520a is electrically connected with the positive terminal of the second output end 1405, the terminal 1520c is electrically connected with the terminal 1520f, and the terminal 1520h is electrically connected with the negative terminal of the second output end 1405. Therefore, the two battery units in the double-voltage battery packs are connected in series, and the second output end 1405 outputs the second voltage, which means the series voltage.

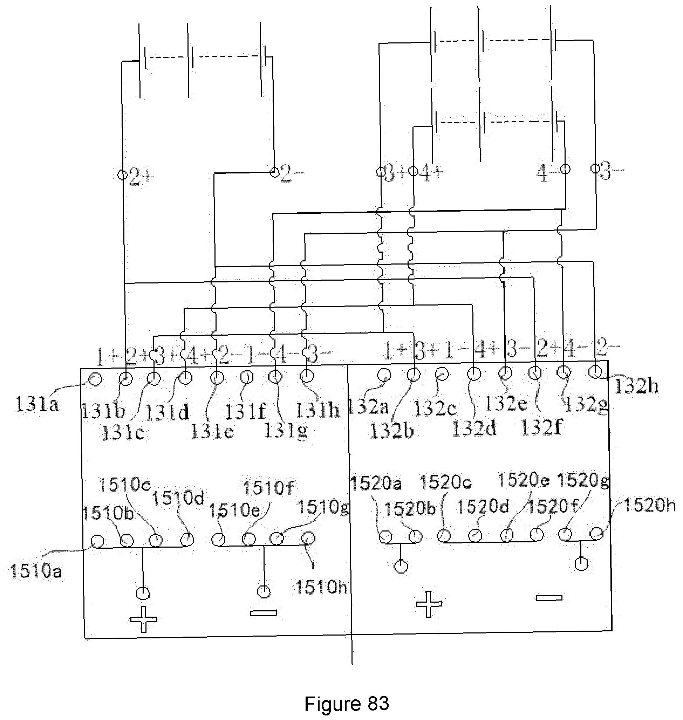

Please refer to FIG. 83 through FIG. 85. In an embodiment of the disclosure, the battery pack 200 includes one single-voltage battery pack and one double-voltage battery pack. Wherein FIG. 83 is the circuit principle view after one single-voltage battery pack and one double-voltage battery pack are inserted.

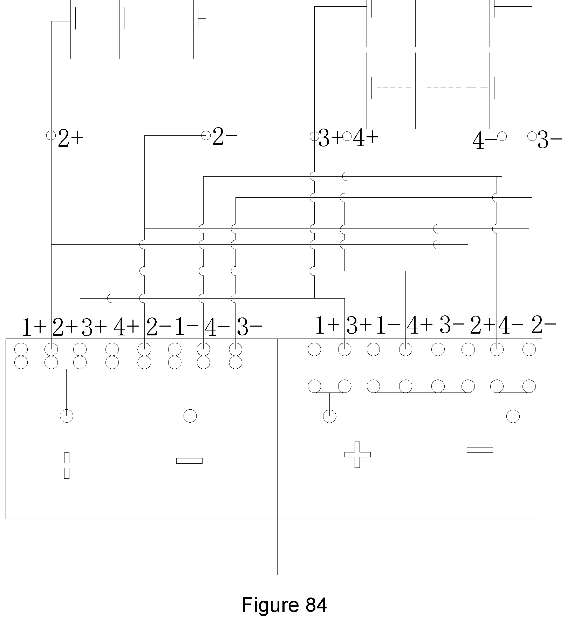

Please refer to FIG. 78 and FIG. 84. When the first switching structure 151 is in the second state, the first wiring terminal 1510 is electrically connected with the first input end 131. At this time, the terminal 1510b is electrically connected with the terminal 2+ through the terminal 131b, and the terminal 1510c is electrically connected with the terminal 3+ through the terminal 131c. The terminal 1510d is electrically connected with the terminal 4+ through the terminal 131d, and the terminal 1510e is electrically connected with the terminal 2- through the terminal 131e. The terminal 1510g is electrically connected with the terminal 4- through the terminal 131g, and the terminal 1510h is electrically connected with the terminal 3- through the terminal 131h. The terminal 1510b, the terminal 1510c and the terminal 1510d are electrically connected with each other, and are electrically connected with the positive terminal of the first output end 1404. The terminal 1510e, the terminal 1510g and the terminal 1510h are electrically connected with each other, and electrically connected with the negative terminal of the first output end 1404. Therefore, the single-voltage battery pack and the two battery units in the double-voltage battery packs are connected in parallel, and the first output end 1404 outputs the first voltage, which means the parallel voltage.

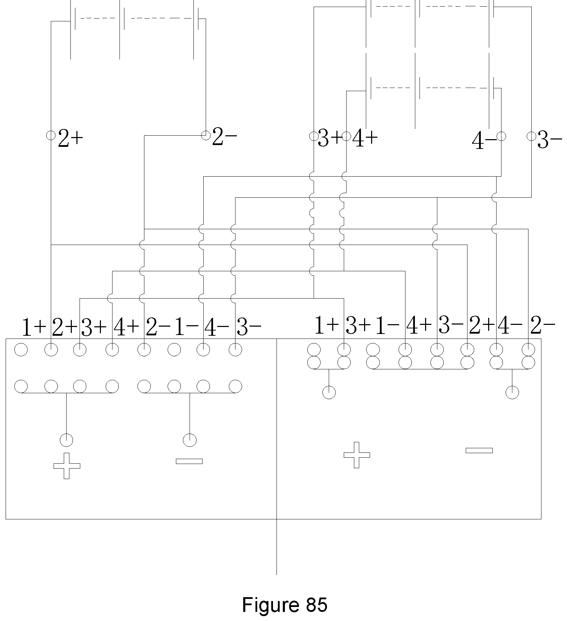

Please refer to FIG. 78 and FIG. 85. When the second switching structure 152 is in the second state, the second wiring terminal 1520 is electrically connected with the second input end 132. At this time, the terminal 1520b is electrically connected with the terminal 3+ through the terminal 132b, and the terminal 1520e is electrically connected with the terminal 3- through the terminal 132e. The terminal 1520d is electrically connected with the terminal 4+ through the terminal 132d, and the terminal 1520g is electrically connected with the terminal 4- through the terminal 132g. The terminal 1520f is electrically connected with the terminal 2+ through the terminal 132f, and the terminal 1520h is electrically connected with the terminal 2- through the terminal 132h. The terminal 1520b is electrically connected with the positive terminal of the second output end 1405, and the terminal 1520d, the terminal 1520e and the terminal 1520f are electrically connected with each other. The terminal 1520g and the terminal 1520h are electrically connected with each other, and electrically connected with the negative terminal of the second output end 1405. Therefore, one of the battery units (the battery unit electrically connected with the terminal 4+ and the terminal 4-) in the double-voltage battery packs and the single-voltage battery pack are connected in parallel first, and then connected with the other battery unit of the double-voltage battery pack in series. The second output end 1405 outputs the second voltage, which means the series voltage.

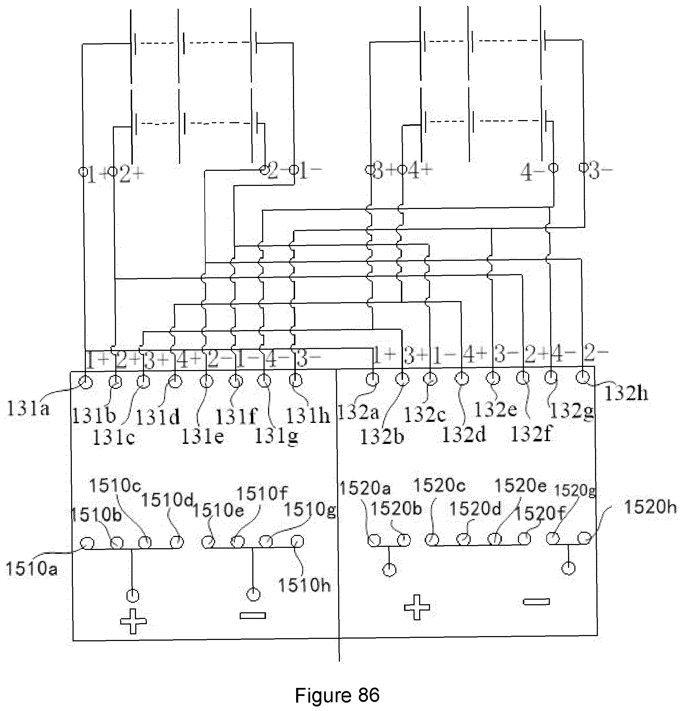

Please refer to FIG. 86 through FIG. 88. In an embodiment of the disclosure, the battery pack 200 includes two double-voltage battery packs. Wherein, FIG. 86 is the circuit principle view after inserting the two double-voltage battery packs. Wherein, one double-voltage battery pack includes the first battery unit and the second battery unit, and the other double-voltage battery pack includes the third battery unit and the fourth battery unit. The first battery unit corresponds to the electrical connection with the terminal 1+ and the terminal 1-, the second battery unit corresponds to the electrical connection with the terminal 2+ and the terminal 2-, the third battery unit corresponds to the electrical connection with the terminal 3+ and the terminal 3-, and the fourth battery unit corresponds to the electrical connection with the terminal 4+ and the terminal 4-.

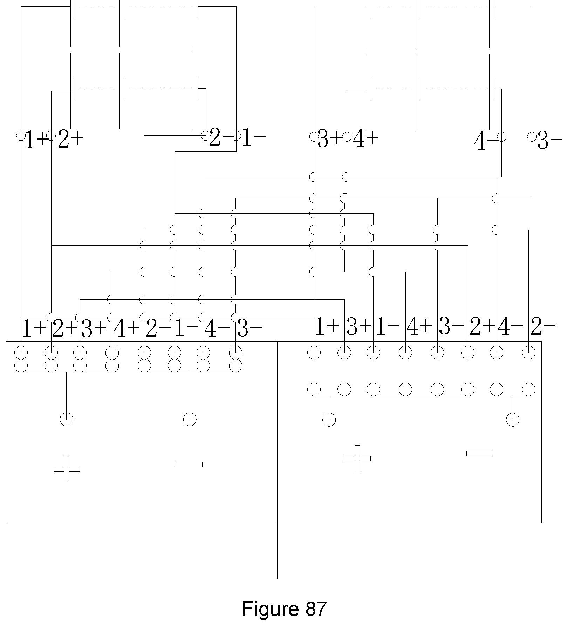

Please refer to FIG. 78 and FIG. 87. When the first switching structure 151 is in the second state, the first wiring terminal 1510 is electrically connected with the first input end 131. At this time, the terminal 1510a is electrically connected with the terminal 1+ through the terminal 131a, and the terminal 1510b is electrically connected with the terminal 2+ through the terminal 131b. The terminal 1510c is electrically connected with the terminal 3+ through the terminal 131c, and the terminal 1510d is electrically connected with the terminal 4+ through the terminal 131d. The terminal 1510e is electrically connected with the terminal 2- through the terminal 131e, and the terminal 1510f is electrically connected with the terminal 1- through the terminal 131f. The terminal 1510g is electrically connected with the terminal 4- through the terminal 131g, and the terminal 1510h is electrically connected with the terminal 3- through the terminal 131h. In an embodiment of the disclosure, the terminal 1510a, the terminal 1510b, the terminal 1510c and the terminal 1510d are electrically connected with the positive terminal of the first output end 1404. The terminal 1510e, the terminal 1510f, the terminal 1510g and the terminal 1510h are electrically connected with the negative terminal of the first output end 1404. At this time, the first battery unit, the second battery unit, the third battery unit, and the fourth battery unit are connected in parallel with each other, and the first output end 1404 outputs the first voltage externally, which means the parallel voltage.

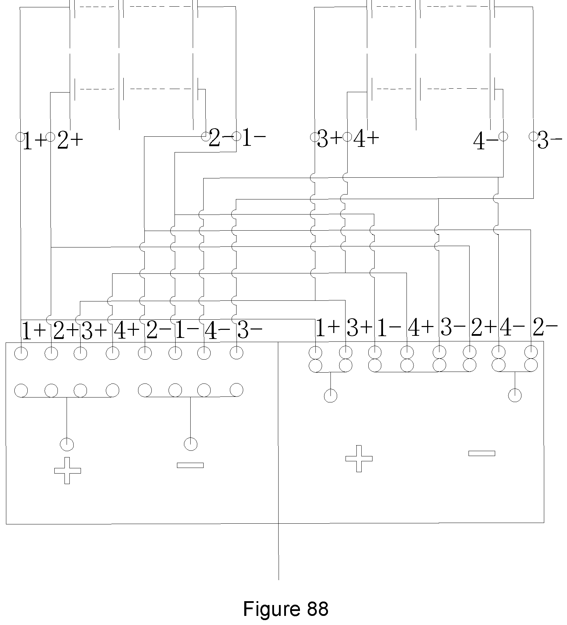

Please refer to FIG. 78 and FIG. 88. When the second switching structure 152 is in the second state, the second wiring terminal 1520 is electrically connected with the second input end 132. At this time, the terminal 1520a is electrically connected with the terminal 1+ through the terminal 132a, and the terminal 1520b is electrically connected with the terminal 3+ through the terminal 132b. The terminal 1520c is electrically connected with the terminal 1- through the terminal 132c, and the terminal 1520e is electrically connected with the terminal 3- through the terminal 132e. The terminal 1520f is electrically connected with the terminal 2+ through the terminal 132f, and the terminal 1520d is electrically connected with the terminal 4+ through the terminal 132d. The terminal 1520h is electrically connected with the terminal 2- through the terminal 132h, and the terminal 1520g is electrically connected with the terminal 4- through the terminal 132g. At the same time, the terminal 1520a and the terminal 1520b are electrically connected with the positive terminal of the second output end 1405 respectively, the terminal 1520c, the terminal 1520e, the terminal 1520f and the terminal 1520d are electrically connected with each other, and the terminal 1520g and the terminal 1520h are electrically connected with the negative terminal of the second output end 1405 respectively. Therefore, the first battery unit is connected in parallel with the third battery unit to form the first parallel circuit, the second battery unit is connected in parallel with the fourth battery unit to form the second parallel circuit, and the two parallel circuits are connected in series. Therefore, the second output end 1405 outputs the second voltage, which means the series voltage.

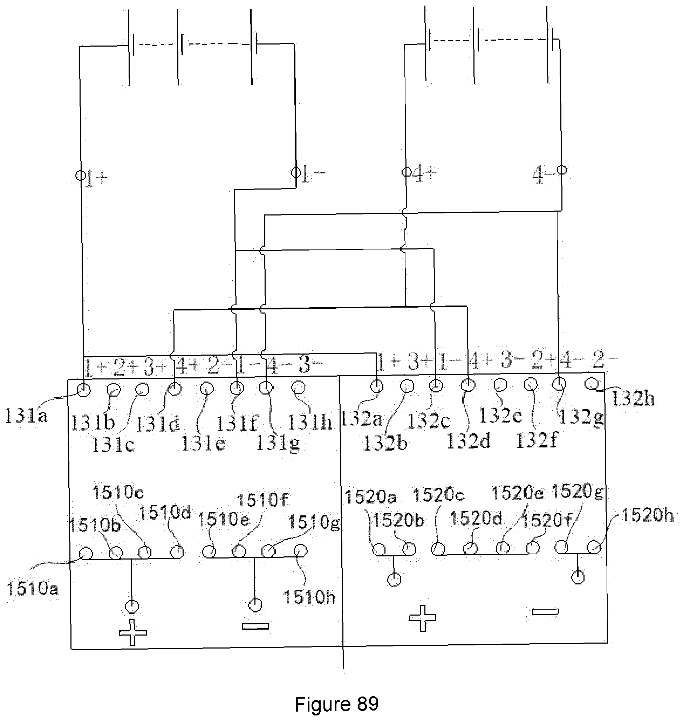

Please refer to FIG. 89 through FIG. 91. In an embodiment of the disclosure, the battery pack 200 includes two single-voltage battery packs. Wherein, FIG. 89 is the circuit principle view after the two single-voltage battery packs are inserted.

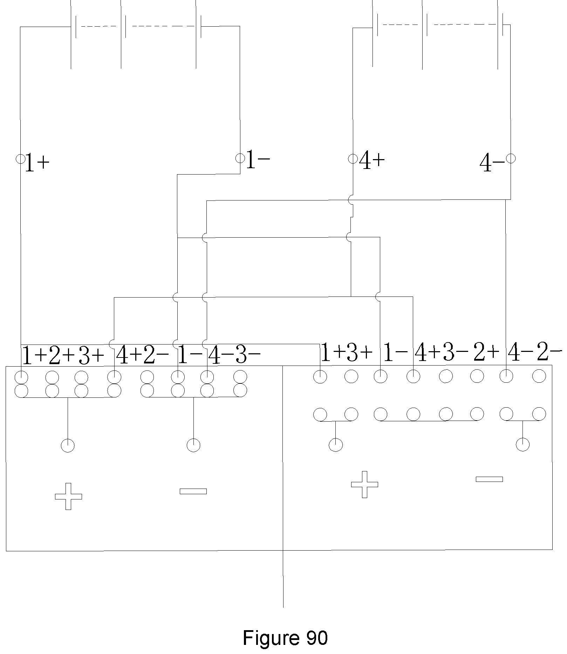

Please refer to FIG. 78 and FIG. 90. When the first switching structure 151 is in the second state, the first wiring terminal 1510 is electrically connected with the first input end 131. At this time, the terminal 1510a is electrically connected with the terminal 1+ through the terminal 131a, and the terminal 1510d is electrically connected with the terminal 4+ through the terminal 131d. The terminal 1510f is electrically connected with the terminal 1- through the terminal 131f, and the terminal 1510g is connected with the terminal 4- through the terminal 131g. At the same time, the terminal 1510a and the terminal 1510d are electrically connected with the positive terminal of the first output end 1404 respectively, and the terminal 1510f and the terminal 1510h are electrically connected with the negative terminal of the first output end 1404 respectively. Therefore, the two single-voltage battery packs are connected in parallel, and the first output end 1404 outputs the first voltage, which means the parallel voltage.

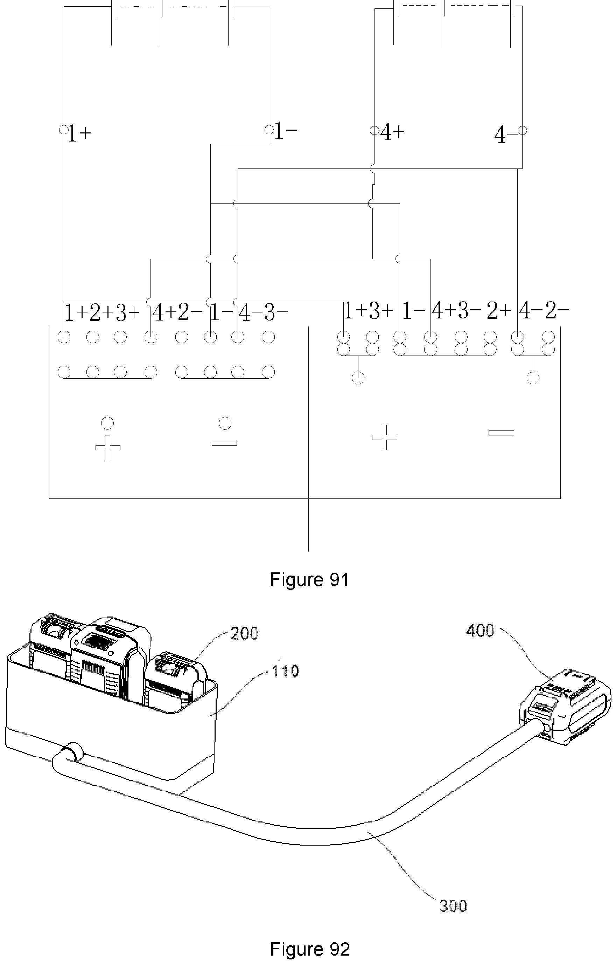

Please refer to FIG. 78 and FIG. 91. When the second switching structure 152 is in the second state, the second wiring terminal 1520 is electrically connected with the second input end 132. At this time, the terminal 1520a is electrically connected with the terminal 1+ through the terminal 132a, and the terminal 1520c is electrically connected with the terminal 1- through the terminal 132c. The terminal 1520d is electrically connected with the terminal 4+ through the terminal 132d, and the terminal 1520g is connected with the terminal 4- through the terminal 132g. At the same time, the terminal 1520a is electrically connected with the positive terminal of the second output end 1405, the terminal 1520c is electrically connected with the terminal 1520d, and the terminal 1520g is electrically connected with the negative terminal of the second output end 1405. Therefore, the two single-voltage battery packs are connected in series, and the second output end 1405 outputs the second voltage, which means the series voltage.

Please refer to FIG. 75 through FIG. 77. The disclosure further provides the power supply system, which is obtained by mounting the adapter on the basis of the power supply system in any of the above embodiments. For example, the power supply system includes the housing 110, the terminal part 120, the battery pack 200, the input end 130, the first output end 1404, the second output end 1405, the first switching structure 151, the second switching structure 152 and the adapter 400. Wherein, the terminal part 120 is arranged on the housing 110 and matched with the battery pack. The battery pack 200 is arranged in the housing 110, at least includes two groups of output voltages, and is electrically connected with the terminal part 120. The input end 130 is electrically connected with the terminal part 120. The first output end 1404 is used to output energy to the outside. The second output end 1405 is used to output energy to the outside. The first switching structure 151 is arranged in the housing 110. The first switching structure 151 may be switchable between the first state and the second state, and electrically connected with the first output end 1404. The second switching structure 152 is arranged in the housing 110. The second switching structure 152 may be switchable between the first state and the second state, and electrically connected with the second output end 1405. In an initial state, the first switching structure 151 and the second switching structure 152 are both in the first state. When the first switching structure 151 is in the second state, the second switching structure 162 is in the first state, and the first output end 1404 outputs the first voltage. When the second switching structure 152 is in the second state, the first switching structure 151 is in the first state, and the second output end 1405 outputs the second voltage. The adapter 400 is provided with the adaptation interface and configured to be electrically connected with the first output end 1404 or the second output end 1405.

Please refer to FIG. 55. In an embodiment of the disclosure, the power supply system further includes the plugging wire base 310. The plugging wire base 310 is configured to be electrically connected with the first output end 1404 or the second output end 1405. The pushing block 3121 and the third wiring terminal are arranged in the plugging wire base 310. The third wiring terminal is matched with the wiring terminal of the first output end 1404 or the wiring terminal of the second output end 1405. The third wiring terminal is configured to be electrically connected with the conducting wire in the power cable.

Please refer to FIG. 55. In an embodiment of the disclosure, the plugging wire base 310 is arranged at the end part of the power cable 300. The plugging wire base 310 and the end part of the power cable 300 may be in the integrally formed structure.

The initial state of the first switching structure 151 is the first state. When the first voltage is required, the plugging wire base 310 is inserted into the first output end 1404, and the plugging wire base 310 is pushed inward so that the pushing block 3121 contacts with the first sliding bar 1541. The pushing force is continuously applied, the pushing block 3121 pushes the first sliding bar 1541 to move, and the first sliding bar 1541 drives the first supporting body 1531 and the first wiring terminal 1510 to move until the first switching structure 151 is in the second state. At this time, the third wiring terminal in the plugging wire base 310 is electrically connected with the wiring terminal in the first output end 1404, so that the first voltage is obtained.

**The** initial state of the second switching structure 152 is the first state. When the second voltage is required, the plugging wire base 310 is inserted into the second output end 1405, and the plugging wire base 310 is pushed inward so that the pushing block 3121 contacts with the second sliding bar 1542. The pushing force is continuously applied, the pushing block 3121 pushes the second sliding bar 1542 to move, and the second sliding bar 1542 drives the second supporting body 1532 and the second wiring terminal 1520 to move until the second switching structure 152 is in the second state. At this time, the third wiring terminal in the plugging wire base 310 is electrically connected with the wiring terminal in the second output end 1405, so that the second voltage is obtained.

Please refer to FIG. 75 through FIG. 77, FIG. 29 and FIG. 30. The disclosure provides the power tool system, which is obtained by arranging the first power tool 500 and the second power tool 600 to the power supply system in any of the above embodiments. For example, the power tool system includes the housing 110, the terminal part 120, the battery pack 200, the input end 130, the first output end 1404, the second output end 1405, the first switching structure 151, the second switching structure 152, the adapter 400, the first power tool 500 and the second power tool 600. Wherein, the terminal part 120 is arranged on the housing 110 and matched with the battery pack. The battery pack 200 is arranged in the housing 110, and is electrically connected with the terminal part 120. The input end 130 is electrically connected with the terminal part 120. The first output end 1404 is used to output energy to the outside. The second output end 1405 is used to output energy to the outside. The first switching structure 151 is arranged in the housing 110. The first switching structure 151 may be switchable between the first state and the second state, and electrically connected with the first output end 1404. The second switching structure 152 is arranged in the housing 110. The second switching structure 152 may be switchable between the first state and the second state, and electrically connected with the second output end 1405. In an initial state, the first switching structure 151 and the second switching structure 152 are both in the first state. When the first switching structure 151 is in the second state, the second switching structure 162 is in the first state, and the first output end 1404 outputs the first voltage. When the second switching structure 152 is in the second state, the first switching structure 151 is in the first state, and the second output end 1405 outputs the second voltage. The adapter 400 is provided with the adaptation interface and configured to be electrically connected with the first output end 1404 or the second output end 1405. The first power tool 500 is provided with the first tool interface, and electrically connected with the adapter 400 when the first tool interface is coupled with the adaptation interface. The second power tool 600 is provided with the second tool interface, and electrically connected with the adapter 400 when the second tool interface is coupled with the adaptation interface. The working voltage of the first power tool 500 is different from the working voltage of the second power tool 600.

In an embodiment of the disclosure, the working voltage of the first power tool 500 is the first voltage, and the working voltage of the second power tool 600 is the second voltage.

In an embodiment of the disclosure, the working voltage of the first power tool 500 is the second voltage, and the working voltage of the second power tool 600 is the first voltage.

In the system of the disclosure, the first switching structure 151 and the second switching structure 152 are arranged in the housing 110. When the first switching structure 151 or the second switching structure 152 is in the second state respectively, the first voltage or the second voltage is output respectively, so that the problem that the conventional power supply can only output one voltage is solved. At the same time, the system is simple in structure, easy to implement, and has high safety, the wide range of applications and small size. Therefore, the disclosure effectively overcomes some practical problems in the prior art, thereby having high utilization value and use significance.

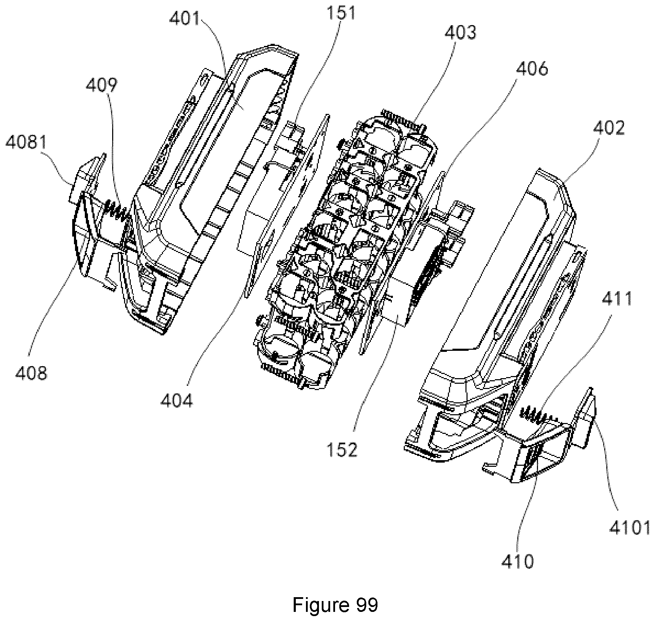

Please refer to FIG. 92 and FIG. 99. The disclosure provides the power supply system, the power supply system includes the battery pack 200 and the adapter 400. The adapter 400 includes an adapter input end, a first adaptation interface, a second adaptation interface, the first switching structure 151 and the second switching structure 152. The adapter input end is electrically connected with the battery pack 200 through the power cable 300. The first adaptation interface is configured to be cooperated with the first tool interface of the first power tool 500. The second adaptation interface is configured to be cooperated with the second tool interface of the second power tool 600. The first switching structure 151 is electrically connected with the adapter input end, and is switchable between the first state and the second state. The second switching structure 152 is electrically connected with the adapter input end, and is switchable between the first state and the second state. When the first power tool 500 is connected with the adapter 400, the first tool interface is cooperated with the first adaptation interface. The first switching structure 151 is in the second state, and the adapter 400 outputs the first voltage to the first power tool 500. When the second power tool 600 is connected with the adapter 400, the second tool interface is cooperated with the second adaptation interface, the second switching structure 152 is in the second state, and the adapter 400 outputs the second voltage to the second power tool 600.

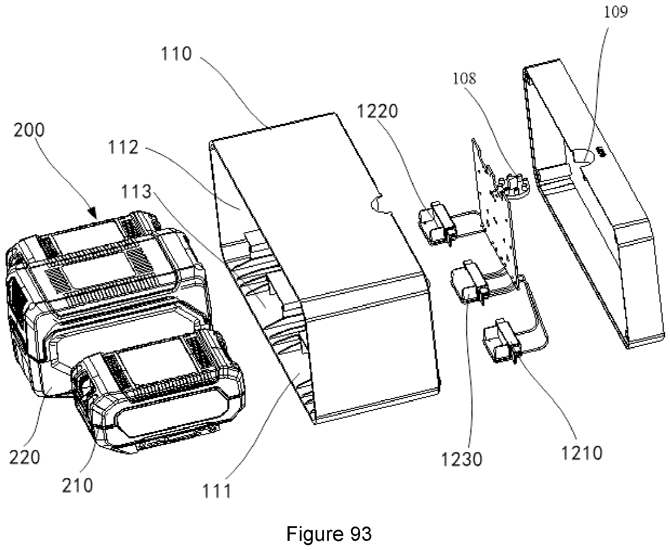

Please refer to FIG. 93. The battery pack 200 includes the single-voltage battery pack 210 and/or the double-voltage battery pack 22. Wherein, the single-voltage battery pack 210 includes one group of battery cell and the single-voltage battery pack terminal electrically connected with the battery cell. The single-voltage battery pack terminal includes one positive terminal and one negative terminal respectively electrically connected with a positive electrode and a negative electrode of the battery cell. The single-voltage battery pack 210 may output one voltage to the outside. The double-voltage battery pack 220 includes two groups of battery cells and the double-voltage battery pack terminals electrically connected with the two groups of battery cells. The double-voltage battery pack terminal includes two positive terminals and the two negative terminals respectively electrically connected with the positive electrodes and the negative electrodes of the two groups of battery cells. The double-voltage battery pack 220 may output two voltages to the outside.

Please refer to FIG. 93 through FIG. 94, and FIG. 8 through FIG. 9. In an embodiment of the disclosure, the power supply system further includes the housing 110. The housing 110 may be an integral structure, or it may be a separated cavity structures surrounded by a bottom wall and a side wall. The first battery pack cavity 111, the second battery pack cavity 112 and the third battery pack cavity 113 are arranged in the housing 110. The first terminal block 1210 and the second terminal block 1220 matched with the single-voltage battery pack terminal are arranged in the first battery pack cavity 111 and the second battery pack cavity 112. The third terminal block 1230 matched with the double-voltage battery pack terminal is arranged in the third battery pack cavity 113. The structure of the first terminal block 1210 is consistent with the structure of the second terminal block 1220. Two first terminals 1211 and two second terminals 1212 are arranged on the first terminal block 1210. The first terminal 1211 is electrically connected with the second terminal 1212, wherein, the first terminal 1211 is matched with the single-voltage battery pack terminal, and the second terminal 1212 is electrically connected with the adapter input end of the adapter 400. The third terminal block 1230 is provided with four third terminals 1231 and four fourth terminals 1232. The third terminal 1231 is electrically connected with the fourth terminal 1232, the third terminal 1231 is matched with the double-voltage battery pack terminal, and the fourth terminal 1232 is electrically connected with the adapter input end of the adapter 400. When the battery pack 200 is mounted, it corresponds to the terminal block in the battery pack cavity.

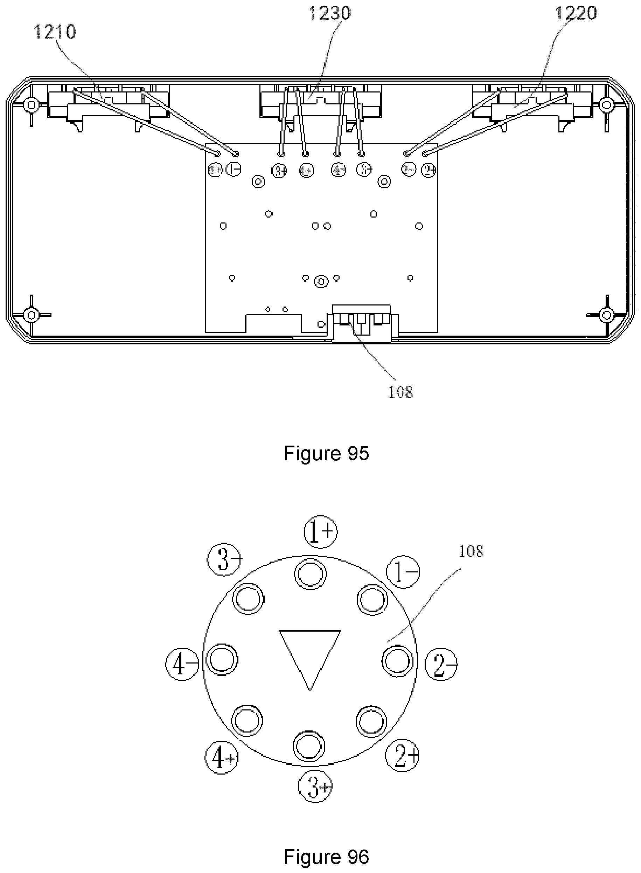

Please refer to FIG. 93 and FIG. 8 through FIG. 96. The housing 110 is provided with a connecting wiring terminal 108. The second terminal 1212 and the fourth terminal 1232 are electrically connected with the connecting wiring terminal 108 respectively. For example, the first circuit board is arranged in the housing 110. The first terminal block 1210, the second terminal block 1220 and the third terminal block 1230 are electrically connected with the first circuit board respectively. The connecting wiring terminal 108 is electrically connected with the first circuit board. The first circuit board is provided with a circuit that conducts the first terminal block 1210, the second terminal block 1220, the third terminal block 1230 and the connecting wiring terminal 108. One side of the housing 110 corresponding to the connecting wiring terminal 108 is provided with a mounting hole 109, and the connecting wiring terminal 108 is fixed on an inner side of the mounting hole 109. In an embodiment, the connecting wiring terminal 108 is provided with a foolproof structure, which may prevent wiring errors. For example, in a connecting wiring terminal structure in FIG. 96, the connecting wiring terminal 108 is a circular structure, eight electrode terminals corresponding to the first terminal 1211 and the third terminal 1231 are arranged along a circumferential direction on this structure, and a center of the eight electrode terminals is provided with a central boss for mounting in conjunction with the conducting wire.

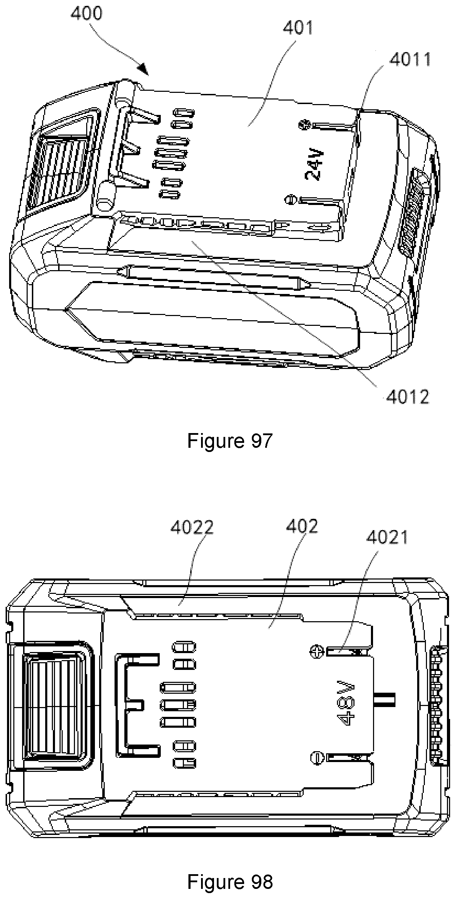

Please refer to FIG. 97 through FIG. 99. The adapter 400 includes a first cover body 401, a second cover body 402 and a fixing bracket 403. The first cover body 401 and the second cover body 402 are buckled together to form a cavity, and the fixing bracket 403 is mounted in the cavity formed by the first cover body 401 and the second cover body 402. The first adaptation interface is arranged on the first cover body 401. The first adaptation interface includes a third output end 405. The third output end 405 is electrically connected with the adapter input end of the adapter 400. The second adaptation interface is arranged on the second cover body 402. The second adaptation interface includes a fourth output end 407. The fourth output end 407 is electrically connected with the adapter input end of the adapter 400. The first switching structure 151 is mounted at a side of the fixing bracket 403 facing the first cover body 401, and the second switching structure 152 is mounted at a side of the fixing bracket 403 facing the second cover body 402.

Please refer to FIG. 36, FIG. 37, FIG. 40 and FIG. 100. The power supply system further includes the first mounting base 1801 matched with the first switching structure 151. The first switching structure 151 includes the first supporting body 1531, the first sliding bar 1541, the first reset component 1551 and the first wiring terminal 1510. Wherein, the first supporting body 1531 may slide in the first mounting base 1801, and the first sliding bar 1541 is fixedly connected with the first supporting body 1531. A first end of the first sliding bar 1541 is located in the first mounting base 1801, and a second end of the first sliding bar 1541 extends to an outside of the adapter 400. In this embodiment, the first reset component 1551 is the spring. The first reset component 1551 is sleeved on the first sliding bar 1541. A first end of the first reset component 1551 abuts on a boss of the first sliding bar 1541, and a second end of the first reset component 1551 abuts on an inner wall of the first mounting base 1801. The first wiring terminal 1510 is mounted on the first supporting body 1531, and the first input end 131 matched with the first wiring terminal 1510 is arranged inside the first mounting base 1801.

Please refer to FIG. 38, FIG. 39, FIG. 41 and FIG. 101. The power supply system further includes the second mounting base 1802 matched with the second switching structure 152. The second switching structure 152 includes the second supporting body 1532, the second sliding bar 1542, the second reset component 1552 and the second wiring terminal 1520. Wherein, the second supporting body 1532 may slide in the second mounting base 1802, and the second sliding bar 1542 is fixedly connected with the second supporting body 1532. A first end of the second sliding bar 1542 is located in the second mounting base 1802, and a second end of the second sliding bar 1542 extends to the outside of the adapter 400. In this embodiment, the second reset component 1552 is the spring. The second reset component 1552 is sleeved on the second sliding bar 1542. A first end of the second reset component 1552 abuts on a boss of the second sliding bar 1542, and a second end of the second reset component 1552 abuts on an inner wall of the second mounting base 1802. The second wiring terminal 1520 is mounted on the second supporting body 1532, and the second input end 132 matched with the second wiring terminal 1520 is arranged inside the second mounting base 1802.

Please refer to FIG. 99, FIG. 37, FIG. 39, FIG. 102 and FIG. 103. In an embodiment, the first switching structure 151 is mounted on the fixing bracket 403 through a second circuit board 404. The second circuit board 404 is mounted on a side of the fixing bracket 403 facing the first cover body 401. The third output end 405 is arranged on an end of the second circuit board 404, and the adapter input end of the adapter 400 is electrically connected with the first input end 131 through the second circuit board 404. The first wiring terminal 1510 is electrically connected with a positive terminal and a negative terminal of the third output end 405 through a first conducting wire 1701 respectively. The second switching structure 152 is mounted on the fixing bracket 403 through a third circuit board 406. The third circuit board 406 is mounted on a side of the fixing bracket 403 facing the second cover body 402. The fourth output end 407 is arranged on a side of the third circuit board 406, and the adapter input end of the adapter 400 is electrically connected with the second input end 132 through the third circuit board 406. The second wiring terminal 1520 is electrically connected with a positive terminal and a negative terminal of the fourth output end 407 through a second conducting wire 1702 respectively.

Please refer to Fig. 8, FIG. 9 and FIG. 95. In an embodiment of the, the two second terminals 1212 of the first terminal block 1210 are respectively marked as: 1+,1-, the two second terminals 1212 of the second terminal block 1220 are respectively marked: 2+, 2-, and the four fourth terminals 1232 of the third terminal block 1230 are marked as: 3+, 3-, 4+, 4-.

Please refer to FIG. 37, FIG. 40 and FIG. 102. The eight first input ends 131 are respectively marked as 131a, 131b, 131c, 131d, 131e, 131f, 131g, 131h. Wherein, the terminal 131a, the terminal 131b, the terminal 131c, the terminal 131d are correspondingly electrically connected with the terminal 1+, the terminal 2+, the terminal 3+, and the terminal 4+ one by one. The specific corresponding relationship in this one-to-one correspondence is not limited. For example, the terminal 131a is electrically connected with the terminal 1+, the terminal 131b is electrically connected with the terminal 3+, the terminal 131c is electrically connected with the terminal 4+, and the terminal 131d is electrically connected with the terminal 2+. The terminal 131e, the terminal 131f, the terminal 131g, the terminal 131h are correspondingly electrically connected with the terminal 1-, the terminal 2-, the terminal 3-, and the terminal 4- one by one. The specific corresponding relationship in this one-to-one correspondence is not limited. For example, the terminal 131e is electrically connected with the terminal 1-, the terminal 131f is electrically connected with the terminal 4-, the terminal 131g is electrically connected with the terminal 3-, and the terminal 131h is electrically connected with the terminal 2-.

Please refer to FIG. 37, FIG. 40 and FIG. 102. The eight first wiring terminals 1510 are respectively marked as the terminals 1510a, 1510b, 1510c, 1510d, 1510e, 1510f, 1510g, 1510h. Wherein, the terminal 1510a is configured to be electrically connected with the terminal 131a, the terminal 1510b is configured to be electrically connected with the terminal 131b, the terminal 1510c is configured to be electrically connected with the terminal 131c, the terminal 1510d is configured to be electrically connected with the terminal 131d, the terminal 1510e is configured to be electrically connected with the terminal 131e, the terminal 1510f is configured to be electrically connected with the terminal 131f, the terminal 1510g is configured to be electrically connected with the terminal 131g, and the terminal 1510h is configured to be electrically connected with the terminal 131h. The eight first wiring terminals 1510 may be electrically connected as needed. The electrical connection mode of the eight terminals may be any kind of embodiment that can realize the disclosure and achieve the effect of the disclosure. For example, the terminal 1510a, the terminal 1510b, the terminal 1510c and the terminal 1510d are electrically connected with each other, and are electrically connected with the positive terminal of the third output end 405. The terminal 1510e, the terminal 1510f, the terminal 1510g and the terminal 1510h are electrically connected with each other, and are electrically connected with the negative terminal of the third output end 405. In order to facilitate processing, the terminals 1510a, 1510b, 1510c, and 1510d in the first wiring terminal 1510 may be integrally formed structure and made of the conductor. The terminals 1510e, 1510f, 1510g, and 1510h in the first wiring terminal 1510 may be integrally formed structure and made of the conductor.

Please refer to FIG. 39, FIG. 41 and FIG. 103. The eight second input ends 132 are marked as 132a, 132b, 132c, 132d, 132e, 132f, 132g, 132h. The terminal 132a, the terminal 132b, the terminal 132c, the terminal 132d, the terminal 132e, the terminal 132f, the terminal 132g, the terminal 132h are correspondingly electrically connected with the terminal 1+, the terminal 3+, the terminal 1-, the terminal 4+, terminal 3-, the terminal 2+, the terminal 4- and the terminal 2- one by one. The corresponding relationship in this one-to-one correspondence may be any implementable solution that can achieve technical effects of the disclosure and realize the disclosure. For example, the terminal 132a is electrically connected with the terminal 1+, the terminal 132b is electrically connected with the terminal 3+, the terminal 132c is electrically connected with the terminal 1-, the terminal 132d is electrically connected with the terminal 4+, the terminal 132e is electrically connected with the terminal 3-, the terminal 132f is electrically connected with the terminal 2+, the terminal 132g is electrically connected with the terminal 4-, and the terminal 132h is electrically connected with the terminal 2-.

Please refer to FIG. 39, FIG. 41 and FIG. 103. The eight second wiring terminals 1520 are respectively marked as the terminals 1520a, 1520b, 1520c, 1520d, 1520e, 1520f, 1520g, 1520h. Wherein, the terminal 1520a is configured to be electrically connected with the terminal 132a, the terminal 1520b is configured to be electrically connected with the terminal 132b, the terminal 1520c is configured to be electrically connected with the terminal 132c, the terminal 1520d is configured to be electrically connected with the terminal 132d, the terminal 1520e is configured to be electrically connected with the terminal 132e, the terminal 1520f is configured to be electrically connected with the terminal 132f, the terminal 1520g is configured to be electrically connected with the terminal 132g, and the terminal 1520h is configured to be electrically connected with the terminal 132h. The eight second wiring terminals 1520 may be electrically connected as needed. The electrical connection mode of the eight terminals may be any kind of embodiment that can realize the disclosure and achieve the effect of the disclosure. For example, the terminal 1520a are electrically connected with the terminal 1520b, and is electrically connected with the positive terminal of the fourth output end 407. The terminal 1520c, the terminal 1520d, the terminal 1520e and the terminal 1510f are electrically connected with each other, the terminal 1520g is electrically connected with the terminal 1520h, and is electrically connected with the negative terminal of the fourth output end 407. The terminal 1520a and the terminal 1520b may be in the integrally formed structure. The terminal 1520c, the terminal1520d, the terminal1520e, and the terminal1520f are in the integrally formed structure, and the terminal1520g and the terminal 1520h may be in the integrally formed structure. The above-mentioned integrated structures are all made of the conductors.

It should be noted that, the markings of the terminals in the above embodiment are only for the convenience of description, and is not used for limitation.

Please refer to FIG. 37, FIG. 39, FIG. 102 and FIG. 103. Under an effect of an external force, the first sliding bar 1541 drives the first supporting body 1531 to slide along the first mounting base 1801. The first reset component 1551 is compressed to the inner wall of the first mounting base 1801. The first wiring terminal 1510 is correspondingly inserted into the first input end 131 at this moment, the line is turned on, the first voltage is output by the third output end 405, and the first switching structure 151 is in the second state. After the external force disappears, under an elastic action of the first reset component 1551, the first sliding bar 1541 drives the first supporting body 1531 to run in reverse, the first wiring terminal 1510 is separated from the first input end 131, the third output end 405 has no voltage output, and the first switching structure 151 is in the first state.

Similarly, under the effect of an external force, the second sliding bar 1542 drives the second supporting body 1532 to slide along the second mounting base 1802. The second reset component 1552 is compressed to the inner wall of the second mounting base 1802. The second wiring terminal 1520 is correspondingly inserted into the second input end 132 at this moment, the line is turned on, the second voltage is output by the fourth output end 407, and the second switching structure 152 is in the second state. After the external force disappears, under an elastic action of the second reset component 1552, the second sliding bar 1542 drives the second supporting body 1532 to run in reverse, the second wiring terminal 1520 is separated from the second input end 132, the fourth output end 407 has no voltage output, and the second switching structure 152 is in the first state.

Please refer to FIG. 97 through FIG. 99. The first cover body 401 is provided with a first groove 4011 at a position corresponding to the third output end 405. A first sliding rail 4012 is arranged on two sides of the first cover body 401 for mounting the power tool. One end of the first cover body 401 that deviates from the first groove 4011 is provided with a first button 408 and a first button spring 409 connected with the first button 408. A first buckle 4081 is connected with the first button 408, and one end of the first button spring 409 that deviates from the first button 408 abuts against the fixing bracket 403. The first button 408 is pressed and the first button spring 409 is compressed downward. The power tool slides along the first sliding rail 4012 until a tool plug of the power tool slides into the first groove 4011 and is coupled with the third output end 405. Simultaneously, the tool plug of the power tool pushes the first sliding bar 1541 to drive the first supporting body 1531 to slide in the first mounting base 1801, and the first wiring terminal 1510 is connected with the first input end 131. After the first button 408 is released, under an elastic action of the first button spring 409, the first button 408 is reset, the first buckle 4081 connected with the first button 408 protrudes from the first cover body 401 and clamps the power tool, which prevents the first wiring terminal 1510 from separating from the first input terminal 131 under the elastic action of the first reset component 1551, and plays a role of limiting. Similarly, the second cover body 402 is provided with a second groove 4021 at a position corresponding to the fourth output end 407. A second sliding rail 4022 is arranged on two sides of the second cover body 402. One end of the second cover body 402 that deviates from the second groove 4021 is provided with a second button 410 and a second button spring 411 connected with the second button 410. A second buckle 4101 is connected with the second button 410, and one end of the second button spring 411 that deviates from the second button 410 abuts against the fixing bracket 403. The second button 410 is pressed and the second button spring 411 is compressed downward. The power tool slides along the second sliding rail 4022 until the tool plug of the power tool is coupled with the fourth output end 407 through the second groove 4021. Simultaneously, the tool plug of the power tool pushes the second sliding bar 1542 to drive the second supporting body 1532 to slide in the second mounting base 1802, and the second wiring terminal 1520 is connected with the second input end 132. After the second button 410 is released, under an elastic action of the second button spring 411, the second button 410 is reset, the second buckle 4101 connected with the second button 410 protrudes from the second cover body 402 and clamps the power tool, which prevents the second wiring terminal 1520 from separating from the second input end 132 under the elastic action of the second reset component 1552, and plays the role of limiting.

Please refer to FIG. 92, FIG. 94, FIG. 99 and FIG. 104. In an embodiment, the battery pack 200 is electrically connected with the adapter 400 through the power cable 300. The power cable 300 includes a first connecting port 301 connected with the battery pack 200 and a second connecting port 302 connected with the adapter input end of the adapter 400. The first connecting port 301 matches a structure of the connecting wiring terminal 108, the second connecting port 302 is inserted into the adapter input end of the adapter 400, and the second connecting port 302 includes two terminals that are electrically connected with the second circuit board 404 and the third circuit board 406 respectively.

Please refer to FIG. 42 for an overall circuit diagram of the disclosure. This circuit is applicable to the following five situations: one single-voltage battery pack 210, two single-voltage battery packs 210, two single-voltage battery packs 210 and one double-voltage battery pack 220, one single-voltage battery pack 210 and one double-voltage battery pack 220, and one double-voltage battery pack 220. The following is a detailed description with reference to the accompanying drawings. Since the single-voltage battery pack 210 only includes one group of battery cell, no matter how the first switching structure 151 and the second switching structure 152 are switched, the battery pack 200 can only output one voltage nV, for example, 24V. Therefore, a case where the battery pack 200 includes one single-voltage battery pack 210 is not described in detail here.

Please refer to FIG. 93, FIG. 37, FIG. 39 and FIG. 43 through FIG. 45. In an embodiment, two single-voltage battery packs 210 are shown, and the two single-voltage battery packs 210 are respectively mounted in the first battery pack cavity 111 and the second battery pack cavity 112. Two different voltages nV and 2nV, such as 24V and 48V, may be output by adjusting a connection mode of the two battery packs. When the first switching structure 151 slides along the first mounting base 1801 under the action of external force until the first wiring terminal 1510 is connected with the first input end 131, at this time, the first switching structure 151 is in the second state, and the second switching structure 152 is in the first state. The terminal 1510a is electrically connected with the terminal 1+ through the terminal 131a, and the terminal 1510d is electrically connected with the terminal 2+ through the terminal 131d. The terminal 1510e is electrically connected with the terminal 1- through the terminal 131e, and the terminal 1510h is connected with the terminal 2- through the terminal 131h. At the same time, the terminal 1510a and the terminal 1510d are electrically connected with the positive terminal of the third output end 405 respectively, and the terminal 1510e and the terminal 1510h are electrically connected with the negative terminal of the third output end 405 respectively. Therefore, the two single-voltage battery packs 210 are connected in parallel, and the third output end 405 outputs the first voltage nV, which means the parallel voltage. When the second switching structure 152 slides along the second mounting base 1802 under the action of external force until the second wiring terminal 1520 is connected with the second input end 132, at this time, the second switching structure 152 is in the second state, and the first switching structure 151 is in the first state. The terminal 1520a is electrically connected with the terminal 1+ through the terminal 132a, and the terminal 1520c is electrically connected with the terminal 1-through the terminal 132c. The terminal 1520f is electrically connected with the terminal 2+ through the terminal 132f, and the terminal 1520h is electrically connected with the terminal 2- through the terminal 132h. At the same time, the terminal 1520c is electrically connected with 1520f. The terminal 1520a is electrically connected with the positive terminal of the fourth output end 407, and the terminal 1520h is electrically connected with the negative terminal of the fourth output end 407. Therefore, the two single-voltage battery packs 210 are connected in series, and the fourth output end 407 outputs the second voltage 2nV, which means the series voltage.

Please refer to FIG. 93, FIG. 37, FIG. 39 and FIG. 46 through FIG. 48. In an embodiment, one double-voltage battery pack 220 is shown, and the double-voltage battery pack 220 is mounted in the third battery pack cavity 113. Two different voltages nV and 2nV, such as 24V and 48V, may be output by adjusting a connection mode of the two groups of the battery cells in the double-voltage battery pack 220. When the first switching structure 151 slides along the first mounting base 1801 under the action of external force until the first wiring terminal 1510 is connected with the first input end 131, at this time, the first switching structure 151 is in the second state, and the second switching structure 152 is in the first state. The terminal 1510b is electrically connected with the terminal 3+ through the terminal 131b, the terminal 1510c is electrically connected with the terminal 4+ through the terminal 131c, the terminal 1510g is electrically connected with the terminal 3- through the terminal 131g, and the terminal 1510f is electrically connected with the terminal 4- through the terminal 131f. At the same time, the terminal 1510b and the terminal 1510c are electrically connected with the positive terminal of the third output end 405 respectively, the terminal 1510g and the terminal 1510f are electrically connected with the negative terminal of the third output end 405 respectively. At this time, the two groups of battery cells are connected in parallel, and the third output end 405 outputs the first voltage nV, such as 24V. When the second switching structure 152 slides along the second mounting base 1802 under the action of external force until the second wiring terminal 1520 is connected with the second input end 132, at this moment, the second switching structure 152 is in the second state, the first switching structure 151 is in the first state. The terminal 1520b is electrically connected with the terminal 3+ through the terminal 132b, the terminal 1520e is electrically connected with the terminal 3- through the terminal 132e, the terminal 1520d is electrically connected with the terminal 4+ through the terminal 132d, and the terminal 1520g is electrically connected to the terminal 4- through the terminal 132g. At the same time, the terminal 1520b is electrically connected with the positive terminal of the fourth output end 407, the terminal 1520e is electrically connected with the terminal 1520d, and the terminal 1520g is electrically connected with the negative terminal of the fourth output end 407. Therefore, the two groups of the battery cells s are connected in series, and the fourth output end 407 outputs the second voltage 2nV, for example 48V.

Please refer to FIG. 93, FIG. 37, FIG. 39 and FIG. 49 through FIG. 51. In an embodiment, one single-voltage battery pack 210 and one double-voltage battery pack 220 are shown. The single-voltage battery pack 210 is mounted in the first battery pack cavity 111 or the second battery pack cavity 112. The double-voltage battery pack 220 is mounted in the third battery pack cavity 113. Two different voltages nV and 2nV, such as 24V and 48V, may be output by adjusting the connection mode of the battery packs. When the first switching structure 151 slides along the first mounting base 1801 under the action of external force until the first wiring terminal 1510 is connected with the first input end 131, at this time, the first switching structure 151 is in the second state, and the second switching structure 152 is in the first state. The terminal 1510b is electrically connected with the terminal 3+ through the terminal 131b, and the terminal 1510c is electrically connected with the terminal 4+ through the terminal 131c. The terminal 1510d is electrically connected with the terminal 2+ through the terminal 131d, and the terminal 1510g is electrically connected with the terminal 3- through the terminal 131g. The terminal 1510f is electrically connected with the terminal 4- through the terminal 131f, and the terminal 1510h is electrically connected with the terminal 2- through the terminal 131h. At the same time, the terminal 1510b, the terminal 1510c and the terminal 1510d are electrically connected with the positive terminal of the third output end 405 respectively. The terminal 1510f, the terminal 1510g and the terminal 1510h are electrically connected with the negative terminal of the third output end 405 respectively. The third output end 405 outputs the first voltage nV, such as 24V. When the second switching structure 152 slides along the second mounting base 1802 under the action of external force until the second wiring terminal 1520 is connected with the second input end 132, at this moment, the second switching structure 152 is in the second state, the first switching structure 151 is in the first state. The terminal 1520b is electrically connected with the terminal 3+ through the terminal 132b, and the terminal 1520e is electrically connected with the terminal 3- through the terminal 132e. The terminal 1520d is electrically connected with the terminal 4+ through the terminal 132d, and the terminal 1520g is electrically connected to the terminal 4- through the terminal 132g. The terminal 1520f is electrically connected with the terminal 2+ through the terminal 132f, and the terminal 1520h is electrically connected to the terminal 2- through the terminal 132h. At the same time, the terminal 1520b is electrically connected with the positive terminal of the fourth output end 407, and the terminal 1520e, terminal 1520d and the terminal 1520f are electrically connected with each other. The terminal 1520g and the terminal 1520h are electrically connected with the negative terminal of the fourth output end 407 respectively. Therefore, one of the two battery cells (the battery cell electrically connected with the terminal 4+ and terminal 4-) in the double-voltage battery pack 220 is connected in parallel with the single-voltage battery pack 210 and then connected in series with the other battery cell, and the fourth output end 407 outputs the second voltage 2nV, for example 48V. In another embodiment, two groups of battery cells in the double-voltage battery pack 220 may also be connected in parallel first, and then connected in series with the single-voltage battery pack 210, and the second voltage is also output by the fourth output end 407.

Please refer to FIG. 93, FIG. 37, FIG. 39 and FIG. 52 through FIG. 54. In an embodiment, two single-voltage battery packs 210 and one double-voltage battery pack 220 are shown. The two single-voltage battery packs 210 are respectively mounted in the first battery pack cavity 111 and the second battery pack cavity 112. The double-voltage battery pack 220 is mounted in the third battery pack cavity 113. The two single-voltage battery packs 210 are the first single-voltage battery pack and the second single-voltage battery pack respectively. The positive terminal and the negative terminal of the single-voltage battery pack terminal of the first single-voltage battery pack are electrically connected with the terminal 1+ and the terminal 1- one by one. The positive terminal and the negative terminal of the single-voltage battery pack terminal of the second single-voltage battery pack are electrically connected with the terminal 2+ and the terminal 2- one by one. Positive terminals and negative terminals of the two groups of the battery cells of the double-voltage battery pack 220 are electrically connected with the terminal 3+, the terminal 4+, the terminal 3- and the terminal 4- one by one. Two different voltages nV and 2nV, such as 24V and 48V, may be output by adjusting the connection mode of the three battery packs. When the first switching structure 151 slides along the first mounting base 1801 under the action of external force until the first wiring terminal 1510 is connected with the first input end 131, at this time, the first switching structure 151 is in the second state, and the second switching structure 152 is in the first state. The terminal 1510a is electrically connected with the terminal 1+ through the terminal 131a, and the terminal 1510b is electrically connected with the terminal 3+ through the terminal 131b. The terminal 1510c is electrically connected with the terminal 4+ through the terminal 131c, and the terminal 1510d is electrically connected with the terminal 2+ through the terminal 131d. The terminal 1510e is electrically connected with the terminal 1- through the terminal 131e, and the terminal 1510f is connected with the terminal 4- through the terminal 131f. The terminal 1510g is electrically connected with the terminal 3- through the terminal 131g, and the terminal 1510h is connected with the terminal 2- through the terminal 131h. At the same time, the terminal 1510a, the terminal 1510b, the terminal 1510c and the terminal 1510d are electrically connected with the positive terminal of the third output end 405 respectively, the terminal 1510e, the terminal 1510f, the terminal 1510g and the terminal 1510h are electrically connected with the negative terminal of the third output end 405 respectively. At this time, the two single-voltage battery packs 210 and the two groups of battery cells in the double-voltage battery pack 220 are connected in parallel, and the third output end 405 outputs the first voltage nV, such as 24V. When the second switching structure 152 slides along the second mounting base 1802 under the action of external force until the second wiring terminal 1520 is connected with the second input end 132, at this moment, the second switching structure 152 is in the second state, the first switching structure 151 is in the first state. The terminal 1520a is electrically connected with the terminal 1+ through the terminal 132a, and the terminal 1520c is electrically connected with the terminal 1- through the terminal 132c. The terminal 1520f is electrically connected with the terminal 2+ through the terminal 132f, and the terminal 1520h is electrically connected with the terminal 2- through the terminal 132h. The terminal 1520b is electrically connected with the terminal 3+ through the terminal 132b, and the terminal 1520e is electrically connected to the terminal 3- through the terminal 132e. The terminal 1520d is electrically connected with the terminal 4+ through the terminal 132d, and the terminal 1520g is electrically connected to the terminal 4- through the terminal 132g. At the same time, the terminal 1520a and the terminal 1520b are electrically connected with the positive terminal of the fourth output end 407 respectively, and the terminal 1520c, the terminal 1520d, the terminal 1520e and the terminal 1520f are electrically connected with each other. The terminal 1520g and the terminal 1520h are electrically connected with the negative terminal of the fourth output end 407 respectively. Therefore, the first single-voltage battery pack is connected in parallel with a first battery cell and is named as the first parallel circuit. The second single-voltage battery pack is connected in parallel with a second battery cell and is named as the second parallel circuit. The first parallel circuit is connected in series with the second parallel circuit, and the fourth output end 407 outputs the second voltage 2nV, for example 48V.

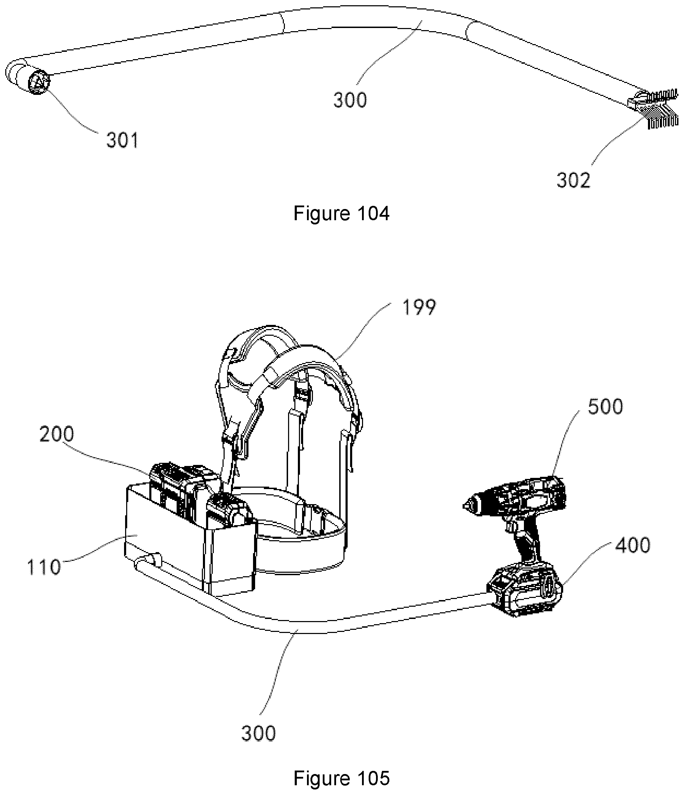

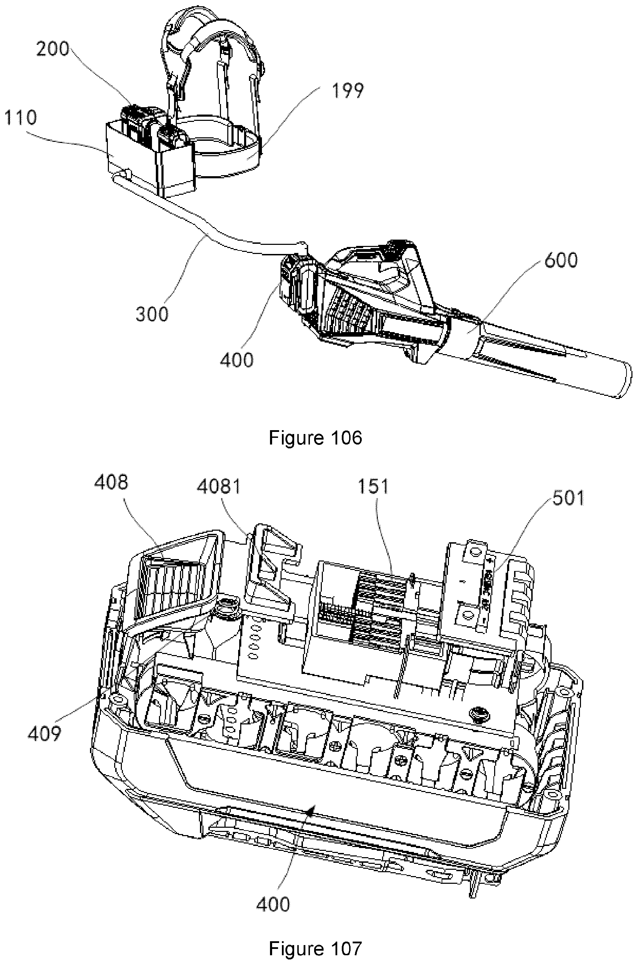

Please refer to FIG. 105 and FIG. 106. The disclosure further provides the power tool system. The system includes the power supply system of the disclosure, the first power tool 500 and the second power tool 600. The working voltages of the first power tool 500 and the second power tool 600 are different, the working voltage of the first power tool 500 is nV, for example, 24V, and the working voltage of the second power tool 600 is 2nV, for example, 48V. Therefore, when the first power tool 500 is used, it is electrically connected with the third output end 405 of the adapter 400, and when the second power tool 600 is used, it is electrically connected with the fourth output end 407 of the adapter 400.

Please refer to FIG. 97, FIG. 98, FIG. 99, FIG. 37, FIG. 39 and FIG. 105 through FIG.108. In an embodiment, the first power tool 500 is provided with the first tool interface, and the first tool interface includes a first tool plug 501 matched with the third output end 405. The second power tool 600 is provided with the second tool interface, and the second tool interface includes a second tool plug 601 matched with the fourth output end 407. When the first power tool 500 is mounted, the first button 408 is pressed, and the first power tool 500 slides along the first sliding rail 4012 simultaneously until a connecting terminal of the first tool plug 501 is communicated with a connecting terminal of the third output end 405. In a sliding process of the first power tool 500, after the first tool plug 501 contacts with the first sliding bar 1541, the first sliding bar 1541 will be pushed to drive the first supporting body 1531 to slide along the first mounting base 1801 until the first wiring terminal 1510 is connected with the first input end 131. At this moment, the third output end 405 outputs the first voltage. After the first button 408 is released, the first button 408 resets, the first buckle 4081 fastened with the first button 408 protrudes from the first cover body 401 and is embedded into the first power tool 500. Similarly, when the second power tool 600 is mounted, the second button 410 is pressed, and the second power tool 600 slides along the second sliding rail 4022 simultaneously until a connecting terminal of the second tool plug 601 is communicated with a connecting terminal of the fourth output end 407. In a sliding process of the second power tool 600, after the second tool plug 601 contacts with the second sliding bar 1542, the second sliding bar 1542 will be pushed to drive the second supporting body 1532 to slide along the second mounting base 1802 until the second wiring terminal 1520 is connected with the second input end 132. At this moment, the fourth output end 407 outputs the second voltage. After the second button 410 is released, and the second button 410 resets, the second buckle 4101 fastened with the second button 410 protrudes from the second cover body 402 and is embedded into the second power tool 600.

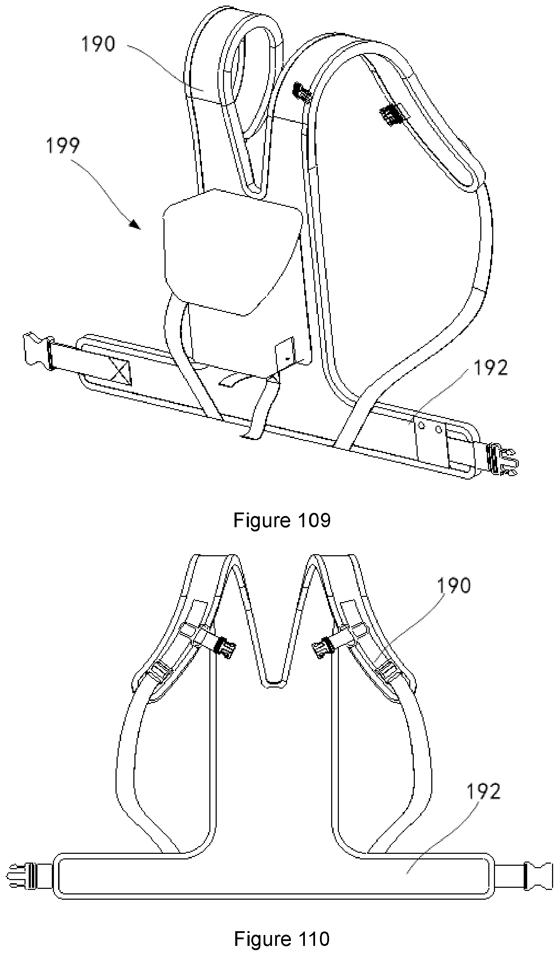

Please refer to FIG. 109, FIG. 110, FIG. 29 and FIG. 30. In an embodiment, the power tool system further includes a backpack assembly 199 for carrying. The backpack assembly 199 includes the strap 190 and the hip belt 190. The strap 190 is connected with the housing 110 and is used to carry the battery pack 200. The hip belt 192 is fixed at a bottom of the strap 190 and used for removable securing around a waist. When in use, the battery pack 200 is carried on a person by utilizing the backpack assembly 199, and the power tool may be handed. For example, when the first power tool 500 is used, the first power tool 500 is mounted on the first cover body 401 of the adapter 400, and the battery pack 200 is carried on a worker, and the first power tool 500 may start to work by holding the first power tool 500. Similarly, when the second power tool 600 is used, the second power tool 600 is mounted on the second cover body 402 of the adapter 400, and the battery pack 200 is carried on the worker, and the second power tool 600 may start to work by holding the second power tool 500.

Please refer to FIG. 92, FIG. 93 and FIG. 113. The disclosure provides the power supply system. The power supply system includes the housing 110, the battery pack 200 and the adapter 400. The first battery pack cavity 111, the second battery pack cavity 112 and the third battery pack cavity 113 are arranged in the housing 110 for mounting the battery packs 200. The battery packs 200 are amounted in the corresponding battery pack cavities. The adapter 400 includes the adapter input end, the adaptation interface and the switching device 150. The adapter input end is electrically connected with the battery pack 200 through the power cable 300. The adaptation interface is configured to be cooperated with a tool interface of the power tool. The power supply system further includes the mounting base 180 matched with the switching device 150. The switching device 150 may move between the first position and the second position in the mounting base 180. When the first power tool 500 is connected with the adapter 400, the adaptation interface is cooperated with the first tool interface of the first power tool 500. The switching device 150 is in the first position, and the adapter 400 outputs the first voltage to the first power tool 500. When the second power tool 600 is connected with the adapter 400, the adapting interface is cooperated with the second tool interface of the second power tool 600, the switching device 150 is in the second position, and the adapter 400 outputs the second voltage to the second power tool 600.

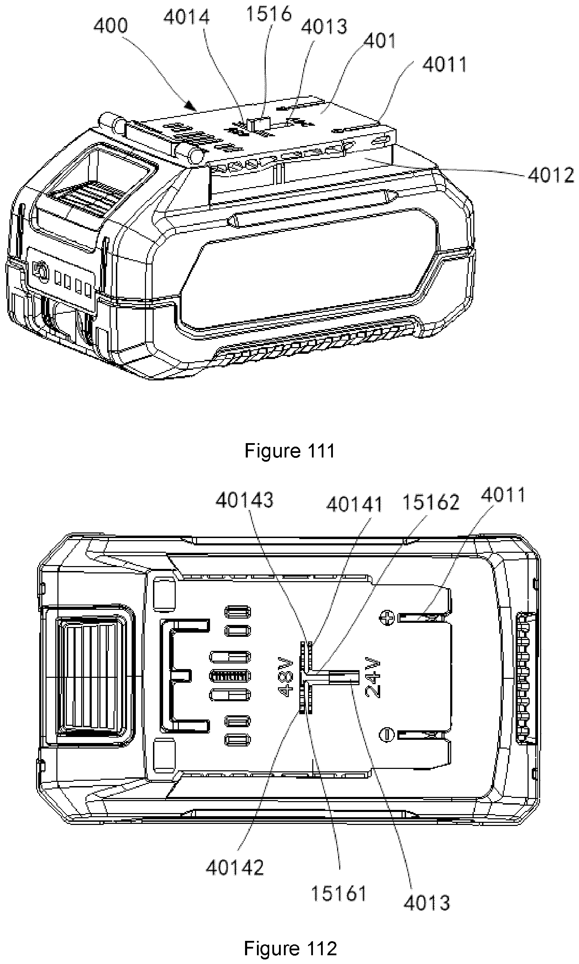

Please refer to FIG. 111 through FIG. 113. In an embodiment, the adapter 400 includes the first cover body 401, the second cover body 402 and the fixing bracket 403. The first cover body 401 and the second cover body 402 are buckled together to form the cavity, and the fixing bracket 403 is mounted in the cavity formed by the first cover body 401 and the second cover body 402. The adaptation interface is arranged on the first cover body 401. The adaptation interface includes the third output end 405, the switching device 150 is arranged on one side of the fixing bracket 403 towards the first cover body 401, and the switching device 150 is electrically connected with the third output end 405.

Please refer to FIG. 10, FIG. 12, FIG. 13 and FIG. 114. The switching device 150 includes the supporting body 153, the sliding bar 154, the reset component 155, the first switching structure 151 and the second switching structure 152. Wherein, the supporting body 153 may be slide in the mounting base 180. The sliding bar 154 is fixedly connected with the supporting body 153. A first end of the sliding bar 154 is located inside the mounting base 180, and a second end of the sliding bar 154 extends to the outside of the adapter 400. The reset component 155 is sleeved on the sliding bar 154. A first end of the reset component 155 abuts on a boss of the sliding bar 154, and a second end of the reset component 155 abuts on the inner wall of the mounting base 180. The first switching structure 151 and the second switching structure 152 are relatively mounted on two sides of the supporting body 153, and an inside of the mounting base 180 is provided with the first input end 131 matched with the first switching structure 151 and the second input end 132 matched with the second switching structure 152. The first input end 131 and the second input end 132 are respectively arranged at two ends of the mounting bass 180, the first input end 131 is arranged relative to the first switching structure 151, and the second input end 132 is arranged relative to the second switching structure 152. Under the effect of external force, the sliding bar 154 is pushed, and the supporting body 153, the first switching structure 151 and the second switching structure 152 may be driven to move between the first position and the second position of the mounting base 180.

Please refer to FIG. 111 through FIG. 113, FIG. 12, FIG. 13, FIG. 115 and FIG. 116. In an embodiment, the sliding bar 154 may also be provided with a conversion structure 1516. The conversion structure 1516 is fixedly connected with the sliding bar 154, and the sliding bar 154 may be driven to move through the conversion structure 1516. The conversion structure 1516 includes a first toggling part 15161 and a second toggling part 15162 connected therewith, and a width of the first toggling part 15161 is greater than a width of the second toggling part 15162. A sliding movement groove 4013 matched with the conversion structure 1516 and a limiting structure 4014 are arranged on the first cover body 401, and the conversion structure 1516 may slide freely in the sliding movement groove 4013. The limiting structure 4014 includes a first limiting groove 40141, a second limiting groove 40142 and a limiting blocking plate 40143 arranged between the first limiting groove 40141 and the second limiting groove 40142. The limiting blocking plate 40143 is provided with a limiting hole that is connected with the sliding movement groove 4013, and a size of the limiting hole is less than the width of the first toggling part 15161. In the initial state, the switching device 150 is located in the first position, the first switching structure 151 is connected with the first input end 131, and the adapter 400 outputs the first voltage externally. When the second voltage needs to be output, the sliding bar 154 or the conversion structure 1516 is pushed on the outside of the adapter 400. The first toggling part 15161 is squeezed into the second limiting groove 40143 by utilizing a plasticity of a material. At this time, the second switching structure 152 is connected with the second input end 132, the first switching structure 151 is separated from the first input end 131, and the third output end 405 outputs the second voltage externally.

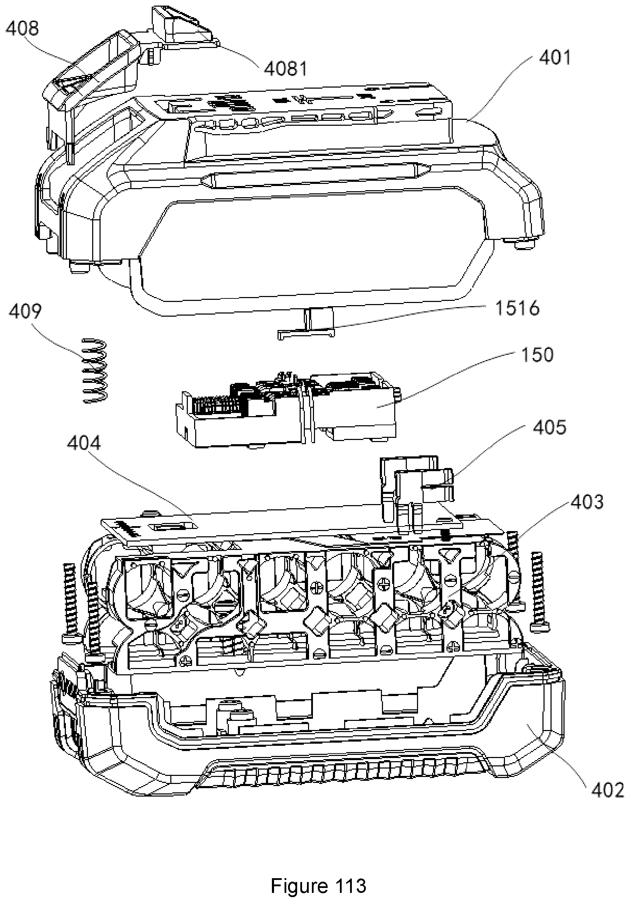

Please refer to FIG. 113, FIG. 12 and FIG. 13. In an embodiment, the switching device 150 is mounted on the fixing bracket 403 through the second circuit board 404. The adapter input end of the adapter 400 is electrically connected with the first input end 131 and the second input end 132 through the second circuit board 404. The third output end 405 is arranged at an end of the second circuit board 404, and the switching device 150 is electrically connected with the positive terminal and the negative terminal of the third output end 405 through conducting wire. For example, the first switching structure 151 is electrically connected with the positive terminal and negative terminal of the third output end 405 through the conducting wire respectively, and the second switching structure 152 is electrically connected with the positive terminal and the negative terminal of the third output end 405 respectively through the conducting wire.

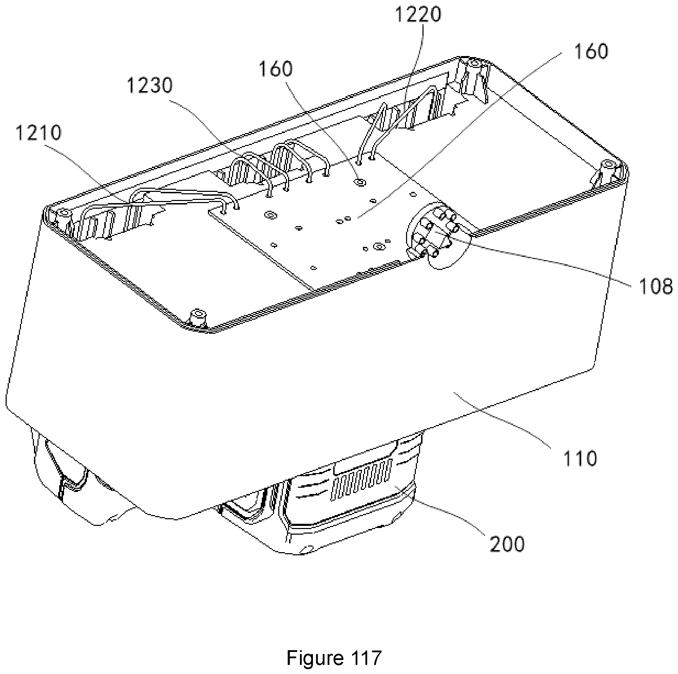

Please refer to FIG. 93 and FIG. 117. The battery pack 200 includes the single-voltage battery pack 210 and/or the double-voltage battery pack 220. Wherein, the single-voltage battery pack 210 includes one group of battery cells or multiple groups of battery cells connected in parallel and the single-voltage battery pack terminal electrically connected with the battery cells. The single-voltage battery pack terminal includes one group of the positive terminal and the negative terminal respectively electrically connected with the positive electrode and the negative electrode of the battery cell. The single-voltage battery pack 210 may output one voltage to the outside. The double-voltage battery pack 220 includes two groups of battery cells and the double-voltage battery pack terminals electrically connected with the two groups of battery cells. The double-voltage battery pack terminal includes two positive terminals and the two negative terminals respectively electrically connected with the positive electrodes and the negative electrodes of the two groups of battery cells. The double-voltage battery pack 220 may output two voltages to the outside.

Please refer to FIG. 93, FIG. 117, FIG. 8 and FIG. 9. The housing 110 may be the integrated structure, or it may be the separated cavity structures surrounded by the bottom wall and the side wall. The first battery pack cavity 111, the second battery pack cavity 112 and the third battery pack cavity 113 are arranged in parallel in the housing 110. The first terminal block 1210 and the second terminal block 1220 matched with the single-voltage battery pack terminal are arranged in the first battery pack cavity 111 and the second battery pack cavity 112. The third terminal block 1230 matched with the double-voltage battery pack terminal is arranged in the third battery pack cavity 113. The structure of the first terminal block 1210 is consistent with the structure of the second terminal block 1220. The first terminal block 1210 includes two first terminals 1211 and two second terminals 1212. The first terminal 1211 is electrically connected with the second terminal 1212, wherein, the first terminal 1211 is matched with the single-voltage battery pack terminal, and the second terminal 1212 is electrically connected with the adapter input end of the adapter 400. The third terminal block 1230 includes the third terminals 1231 and the fourth terminals 1232. The third terminal 1231 is electrically connected with the fourth terminal 1232, the third terminal 1231 is matched with the double-voltage battery pack terminal, and the fourth terminal 1232 is electrically connected with the adapter input end of the adapter 400. When the battery pack is mounted, it corresponds to the terminal block in the battery pack cavity.

Please refer to FIG. 93, FIG. 117 and FIG. 118 and FIG. 96. The housing 110 is further provided with the connecting wiring terminal 108. The second terminal 1212 and the fourth terminal 1232 are electrically connected with the connecting wiring terminal 108 respectively. For example, one circuit board is arranged in the housing 110, which is marked as the first circuit board 160. The first terminal block 1210, the second terminal block 1220 and the third terminal block 1230 are electrically connected with the first circuit board 160 respectively. The connecting wiring terminal 108 is electrically connected with the first circuit board 160. The first terminal block 1210, the second terminal block 1220 and the third terminal block 1230 are electrically connected with the connecting wiring terminal 108 through the first circuit board 160. One side of the housing 110 corresponding to the connecting wiring terminal 108 is provided with the mounting hole 109, and the connecting wiring terminal 108 is fixed on the inner side of the mounting hole 109. The connecting wiring terminal 108 is provided with the foolproof structure, which may prevent wiring errors. For example, in the connecting wiring terminal structure in FIG. 96, the connecting wiring terminal 108 is the circular structure, eight electrode terminals corresponding to the battery pack terminal are arranged along the circumferential direction on this structure, and the center of the eight electrode terminals is provided with the central boss for mounting in conjunction with the power cable.

Please refer to Fig. FIG. 8 and FIG. 9. In an embodiment of the, the two second terminals 1212 of the first terminal block 1210 are respectively marked as: 1+,1-, the two second terminals 1212 of the second terminal block 1220 are respectively marked: 2+, 2-, and the four fourth terminals 1232 of the third terminal block 1230 are marked as: 3+, 3-, 4+, 4-.

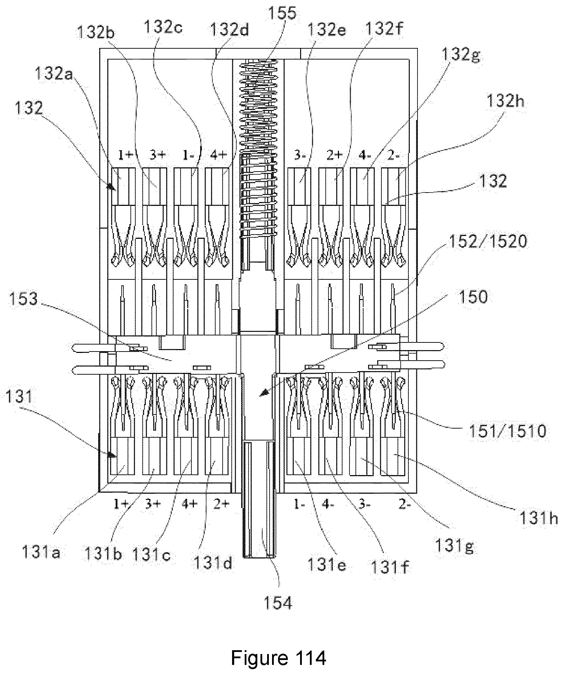

Please refer to FIG. 114, FIG. 12 through FIG. 13. The eight first wiring terminals 1510 are respectively marked as the terminals 1510a, 1510b, 1510c, 1510d, 1510e, 1510f, 1510g, 1510h. The eight terminals of the first input end 131 are respectively marked as 131a, 131b, 131c, 131d, 131e, 131f, 131g, 131h. The terminal 131a, the terminal 131b, the terminal 131c, the terminal 131d are correspondingly electrically connected with the terminal 1+, the terminal 2+, the terminal 3+, and the terminal 4+ one by one. The specific corresponding relationship in this one-to-one correspondence is not limited. For example, the terminal 131a is electrically connected with the terminal 1+, the terminal 131b is electrically connected with the terminal 3+, the terminal 131c is electrically connected with the terminal 4+, and the terminal 131d is electrically connected with the terminal 2+. The terminal 131e, the terminal 131f, the terminal 131g, the terminal 131h are correspondingly electrically connected with the terminal 1-, the terminal 2-, the terminal 3-, and the terminal 4- one by one. The specific corresponding relationship in this one-to-one correspondence is not limited. For example, the terminal 131e is electrically connected with the terminal 1-, the terminal 131f is electrically connected with the terminal 4-, the terminal 131g is electrically connected with the terminal 3-, and the terminal 131h is electrically connected with the terminal 2-. The terminal 1510a is configured to be electrically connected with the terminal 131a, the terminal 1510b is configured to be electrically connected with the terminal 131b, the terminal 1510c is configured to be electrically connected with the terminal 131c, the terminal 1510d is configured to be electrically connected with the terminal 131d, the terminal 1510e is configured to be electrically connected with the terminal 131e, the terminal 1510f is configured to be electrically connected with the terminal 131f, the terminal 1510g is configured to be electrically connected with the terminal 131g, and the terminal 1510h is configured to be electrically connected with the terminal 131h. The eight first wiring terminals 1510 may be electrically connected as needed. The electrical connection mode of the eight terminals may be any kind of embodiment that can realize the disclosure and achieve the effect of the disclosure. In an embodiment of the disclosure, the terminal 1510a, the terminal 1510b, the terminal 1510c and the terminal 1510d are electrically connected with each other, and are electrically connected with the positive terminal of the third output end 405. The terminal 1510e, the terminal 1510f, the terminal 1510g and the terminal 1510h are electrically connected with each other, and are electrically connected with the negative terminal of the third output end 405.

Please refer to FIG. 114, FIG. 12 through FIG. 13. The eight second wiring terminals 1520 are respectively marked as the terminals 1520a, 1520b, 1520c, 1520d, 1520e, 1520f, 1520g, 1520h. The eight terminals of the second input end 132 are respectively marked as 132a, 132b, 132c, 132d, 132e, 132f, 132g, 132h. The terminal 132a, the terminal 132b, the terminal 132c, the terminal 132d, the terminal 132e, the terminal 132f, the terminal 132g, the terminal 132h are correspondingly electrically connected with the terminal 1+, the terminal 3+, the terminal 1-, the terminal 4+, terminal 3-, the terminal 2+, the terminal 4- and the terminal 2- one by one. The corresponding relationship in this one-to-one correspondence may be any implementable solution that can achieve technical effects of the disclosure and realize the disclosure. For example, the terminal 132a is electrically connected with the terminal 1+, the terminal 132b is electrically connected with the terminal 3+, the terminal 132c is electrically connected with the terminal 1-, the terminal 132d is electrically connected with the terminal 4+, the terminal 132e is electrically connected with the terminal 3-, the terminal 132f is electrically connected with the terminal 2+, the terminal 132g is electrically connected with the terminal 4-, and the terminal 132h is electrically connected with the terminal 2-. The terminal 1520a is configured to be electrically connected with the terminal 132a, the terminal 1520b is configured to be electrically connected with the terminal 132b, the terminal 1520c is configured to be electrically connected with the terminal 132c, the terminal 1520d is configured to be electrically connected with the terminal 132d, the terminal 1520e is configured to be electrically connected with the terminal 132e, the terminal 1520f is configured to be electrically connected with the terminal 132f, the terminal 1520g is configured to be electrically connected with the terminal 132g, and the terminal 1520h is configured to be electrically connected with the terminal 132h. The eight second wiring terminals 1520 may be electrically connected as needed. The electrical connection mode of the eight terminals may be any kind of embodiment that can realize the disclosure and achieve the effect of the disclosure. For example, the terminal 1520a are electrically connected with the terminal 1520b, and is electrically connected with the positive terminal of the third output end 405. The terminal 1520c, the terminal 1520d, the terminal 1520e and the terminal 1520f are electrically connected with each other, the terminal 1520g is electrically connected with the terminal 1520h, and is electrically connected with the negative terminal of the third output end 405.

It should be noted that, the markings of the terminals in the above embodiment are only for the convenience of description, and is not used for limitation.

Please refer to FIG. 111 through FIG. 113. The first cover body 401 is provided with a groove 4011 at the position corresponding to the third output end 405. The sliding rail 4012 is arranged on two sides of the first cover body 401 for mounting the power tool. One end of the first cover body 401 that deviates from the groove 4011 is provided with the first button 408 and the first button spring 409 connected with the first button 408. The first buckle 4081 is connected with the first button 408, and one end of the first button spring 409 that deviates from the first button 408 abuts against the fixing bracket 403. The first button 408 is pressed and the first button spring 409 is compressed downward. The power tool slides along the sliding rail 4012 until the tool plug of the power tool slides into the groove 4011 and is coupled with the third output end 405. After the first button 408 is released, under the elastic action of the first button spring 409, the first button 408 is reset, the first buckle 4081 connected with the first button 408 protrudes from the first cover body 401 and is embedded into the power tool.

Please refer to FIG. 92, FIG. 113, FIG. 117, FIG. 96 and FIG. 119. In an embodiment, the power cable 300 includes the first connecting port 301 electrically connected with the battery pack 200 and the second connecting port 302 electrically connected with the adapter 400. A structure of the first connecting port 301 matches the structure of the connecting wiring terminal 108. The second connecting port 302 includes a connecting terminal that are electrically connected with the second circuit board 404, and the second connecting port 302 is inserted into the adapter input end of the adapter 400 and communicated with the second circuit board 404.

Please refer to FIG. 14 for an overall circuit diagram of the disclosure. This circuit is applicable to the following five situations: one single-voltage battery pack, two single-voltage battery packs, two single-voltage battery packs and one double-voltage battery pack, one single-voltage battery pack and one double-voltage battery pack, and one double-voltage battery pack. The following is a detailed description with reference to the accompanying drawings. Since the single-voltage battery pack only includes one group of battery cell or a plurality of groups of battery cells connected in parallel, no matter how the switching device is switched, the battery pack can only output one voltage nV, for example, 24V. Therefore, the case where the battery pack includes one single-voltage battery pack is not described in detail here.

Please refer to FIG. 93, FIG. 111, FIG. 112, FIG. 114, FIG. 12 and FIG. 14 through FIG. 17. In an embodiment of the disclosure, two single-voltage battery packs 210 are shown. The two single-voltage battery packs 210 are mounted in the first battery pack cavity 111 and the second battery pack cavity 112 respectively. The positive terminals and negative terminals of the single-voltage battery pack terminals of two single-voltage battery packs 210 are connected with terminals 1+, 2+, 1-, and 2- one by one. In the initial state, the switching device 150 is in the first position. The first switching structure 151 is connected with the first input end 131, and the second switching structure 152 is separated from the second input end 132. The terminal 1510a is electrically connected with the terminal 1+ through the terminal 131a, and the terminal 1510d is electrically connected with the terminal 2+ through the terminal 131d. The terminal 1510e is electrically connected with the terminal 1- through the terminal 131e, and the terminal 1510h is electrically connected with the terminal 2- through the terminal 131h. At the same time, the terminal 1510a and the terminal 1510d are electrically connected with the positive terminal of the third output end 405 respectively, and the terminal 1510e and the terminal 1510h are electrically connected with the negative terminal of the third output end 405 respectively. Therefore, the two single-voltage battery packs 210 are connected in parallel, and the third output end 405 outputs the first voltage nV, which means the parallel voltage. Under the effect of external force, the sliding bar 154 or the conversion structure 1516 is pushed, the first toggling part 15161 is enabled to enter the second limiting groove 40142. The switching device 150 is in the second position at this moment, the second switching structure 152 is connected with the second input end 132, and the first switching structure 151 is separated from the first input end 131. The terminal 1520a is electrically connected with the terminal 1+ through the terminal 132a, and the terminal 1520c is electrically connected with the terminal 1-through the terminal 132c. The terminal 1520f is electrically connected with the terminal 2+ through the terminal 132f, and the terminal 1520h is electrically connected with the terminal 2- through the terminal 132h. At the same time, the terminal 1520c is electrically connected with 1520f. The terminal 1520a is electrically connected with the positive terminal of the third output end 405, and the terminal 1520h is electrically connected with the negative terminal of the third output end 405. Therefore, the two single-voltage battery packs 210 are connected in series, and the third output end 405 outputs the second voltage 2nV, which means the series voltage.

Please refer to FIG. 93, FIG. 111, FIG. 112, FIG. 114, FIG. 12 and FIG. 18 through FIG. 20. In an embodiment of the disclosure, one single-voltage battery pack 220 is shown. The double-voltage battery pack 220 is mounted in the third battery pack cavity 113. The two positive terminals and the two negative terminals of the double-voltage battery pack terminal are connected with terminals 3+, 4+, 3-, and 4- one by one. In the initial state, the switching device 150 is in the first position. The first switching structure 151 is connected with the first input end 131, and the second switching structure 152 is separated from the second input end 132. At this time, the terminal 1510b is electrically connected with the terminal 3+ through the terminal 131b, and the terminal 1510c is electrically connected with the terminal 4+ through the terminal 131c. The terminal 1510g is electrically connected with the terminal 3- through the terminal 131g, and the terminal 1510f is electrically connected with the terminal 4-through the terminal 131f. At the same time, the terminal 1510b and the terminal 1510c are electrically connected with the positive terminal of the third output end 405 respectively, and the terminal 1510g and the terminal 1510f are electrically connected with the negative terminal of the third output end 405 respectively. Therefore, the two battery cells in the double-voltage battery packs are connected in parallel, and the third output end 405 outputs the first voltage nV, for example 24V. Under the effect of external force, the sliding bar 154 or the conversion structure 1516 is pushed, the first toggling part 15161 is enabled to enter the second limiting groove 40142. The switching device 150 is in the second position, the second switching structure 152 is connected with the second input end 132, and the first switching structure 151 is separated from the first input end 131. The terminal 1520b is electrically connected with the terminal 3+ through the terminal 132b, and the terminal 1520e is electrically connected with the terminal 3-through the terminal 132e. The terminal 1520d is electrically connected with the terminal 4+ through the terminal 132d, and the terminal 1520g is electrically connected with the terminal 4- through the terminal 132g. At the same time, the terminal 1520b is electrically connected with the positive terminal of the third output end 405, and the terminal 1520e and the terminal 1520d are electrically connected with each other. The terminal 1520g is electrically connected with the negative terminal of the third output end 405. Therefore, the two battery cells in the double-voltage battery pack are connected in series, and the third output end 405 outputs the second voltage 2nV, for example 48V.

Please refer to FIG. 93, FIG. 111, FIG. 112, FIG. 114 and FIG. 12 and FIG. 21 through FIG. 23. In an embodiment of the disclosure, one single-voltage battery pack 210 and one double-voltage battery pack 220 are shown. The single-voltage battery pack 210 is mounted in the first battery pack cavity 111 or the second battery pack cavity 112. The double-voltage battery pack 220 is mounted in the third battery pack cavity 113. Take the single-voltage battery pack 210 mounted in the second battery pack cavity 112 as an example, the positive terminal of the single-voltage battery pack terminal is connected with the terminal 2+. The negative terminal of the single-voltage battery pack terminal is connected with the terminal 2-. The two positive terminals and the two negative terminals of the double-voltage battery pack terminals are connected with the terminal 3+, the terminal 4+, the terminal 3-, and the terminal 4- one by one. In the initial state, the switching device 150 is in the first position. The first switching structure 151 is connected with the first input end 131, and the second switching structure 152 is separated from the second input end 132. The terminal 1510b is electrically connected with the terminal 3+ through the terminal 131b, and the terminal 1510c is electrically connected with the terminal 4+ through the terminal 131c. The terminal 1510d is electrically connected with the terminal 2+ through the terminal 131d, and the terminal 1510g is electrically connected with the terminal 3- through the terminal 131g. The terminal 1510f is electrically connected with the terminal 4- through the terminal 131f, and the terminal 1510h is electrically connected with the terminal 2- through the terminal 131h. At the same time, the terminal 1510b, the terminal 1510c and the terminal 1510d are electrically connected with the positive terminal of the third output end 405 respectively, and the terminal 1510f, the terminal 1510g and the terminal 1510h are electrically connected with the negative terminal of the third output end 405 respectively. Therefore, the single-voltage battery pack is connected with the two battery cells in the double-voltage battery packs in parallel, and the third output end 405 outputs the first voltage nV, for example 24V. Under the effect of external force, the sliding bar 154 or the conversion structure 1516 is pushed, the first toggling part 15161 is enabled to enter the second limiting groove 40142. The switching device 150 is in the second position, the second switching structure 152 is connected with the second input end 132, and the first switching structure 151 is separated from the first input end 131. The terminal 1520b is electrically connected with the terminal 3+ through the terminal 132b, and the terminal 1520e is electrically connected with the terminal 3- through the terminal 132e. The terminal 1520d is electrically connected with the terminal 4+ through the terminal 132d, and the terminal 1520g is electrically connected with the terminal 4- through the terminal 132g. The terminal 1520f is electrically connected with the terminal 2+ through the terminal 132f, and the terminal 1520h is electrically connected with the terminal 2-through the terminal 132h. At the same time, the terminal 1520b is electrically connected with the positive terminal of the third output end 405, and the terminal 1520e, terminal 1520d and the terminal 1520f are electrically connected with each other. The terminal 1520g and the terminal 1520h are electrically connected with the negative terminal of the third output end 405 respectively. Therefore, one of the two groups of the battery cells (the battery cell electrically connected with the terminal 4+ and terminal 4-) in the double-voltage battery pack is connected in parallel with the single-voltage battery pack and then connected in series with the other battery cell, and the third output end 405 outputs the second voltage 2nV, for example 48V. In another embodiment, two groups of battery cells in the double-voltage battery pack 220 may also be connected in parallel first, and then connected in series with the single-voltage battery pack, which may also output the second voltage.

Please refer to FIG. 93, FIG. 111, FIG. 112, FIG. 114 and FIG. 12 and FIG. 24 through FIG. 26. In an embodiment of the disclosure, two single-voltage battery packs 210 and one double-voltage battery pack 220 are shown. The two single-voltage battery packs 210 are mounted in the first battery pack cavity 111 and the second battery pack cavity 112 respectively. The double-voltage battery pack 220 is mounted in the third battery pack cavity 113. The single-voltage battery pack mounted in the first battery pack cavity 111 is recorded as the first single-voltage battery pack, the positive terminal and the negative terminal of the first single-voltage battery pack are correspondingly electrically connected with the terminal 1+ and the terminal 1- one by one. The single-voltage battery pack mounted in the second battery pack cavity 112 is recorded as the second single-voltage battery pack, the positive terminal and the negative terminal of the second single-voltage battery pack are correspondingly electrically connected with the terminal 2+ and the terminal 2- one by one. The two groups of the battery cells in the double-voltage battery pack are marked as a first battery cell and a second battery cell respectively. Positive terminals and negative terminals of the first battery cell and second battery cell are correspondingly electrically connected with the terminal 3+, the terminal 4+, the terminal 3- and the terminal 4- one by one.

In the initial state, the switching device 150 is in the first position. The first switching structure 151 is connected with the first input end 131, and the second switching structure 152 is separated from the second input end 132. The terminal 1510a is electrically connected with the terminal 1+ through the terminal 131a, and the terminal 1510b is electrically connected with the terminal 3+ through the terminal 131b. The terminal 1510c is electrically connected with the terminal 4+ through the terminal 131c, and the terminal 1510d is electrically connected with the terminal 2+ through the terminal 131d. The terminal 1510e is electrically connected with the terminal 1- through the terminal 131e, and the terminal 1510f is electrically connected with the terminal 4-through the terminal 131f. The terminal 1510g is electrically connected with the terminal 3- through the terminal 131g, and the terminal 1510h is electrically connected with the terminal 2- through the terminal 131h. At the same time, the terminal 1510a, the terminal 1510b, the terminal 1510c and the terminal 1510d are electrically connected with the positive terminal of the third output end 405 respectively, and the terminal 1510e, the terminal 1510f, the terminal 1510g and the terminal 1510h are electrically connected with the negative terminal of the third output end 405 respectively. Therefore, the first single-voltage battery pack, the second single-voltage battery pack and the battery cells in the double-voltage battery pack are connected in parallel, and the third output end 405 outputs the first voltage nV, for example 24V. Under the effect of external force, the sliding bar 154 or the conversion structure 1516 is pushed, the first toggling part 15161 is enabled to enter the second limiting groove 40142. At this time, the switching device 150 is in the second position, the second switching structure 152 is connected with the second input end 132, and the first switching structure 151 is separated from the first input end 131. The terminal 1520a is electrically connected with the terminal 1+ through the terminal 132a, and the terminal 1520c is electrically connected with the terminal 1-through the terminal 132c. The terminal 1520f is electrically connected with the terminal 2+ through the terminal 132f, and the terminal 1520h is electrically connected with the terminal 2- through the terminal 132h. The terminal 1520b is electrically connected with the terminal 3+ through the terminal 132b, and the terminal 1520e is electrically connected with the terminal 3- through the terminal 132e. The terminal 1520d is electrically connected with the terminal 4+ through the terminal 132d, and the terminal 1520g is electrically connected with the terminal 4- through the terminal 132g. At the same time, the terminal 1520a and the terminal 1520b are electrically connected with the positive terminal of the third output end 405. The terminal 1520c, the terminal 1520d, the terminal 1520e and the terminal 1520f are electrically connected with each other, the terminal 1520g and the terminal 1520h are electrically connected with the negative terminal of the third output end 405. Therefore, the first single-voltage battery pack is connected in parallel with the first battery cell and is named as the first parallel circuit. The second single-voltage battery pack is connected in parallel with the second battery cell and is named as the second parallel circuit. The first parallel circuit is connected in series with the second parallel circuit, and the third output end 405 outputs the second voltage 2nV, for example 48V. In another embodiment, the first single-voltage battery pack and the second single-voltage battery pack are connected in parallel, the two groups of battery cells in the double-voltage battery pack are connected in parallel, and then these two parallel circuits are connected in series, which may also output the second voltage.

Please refer to FIG. 105 and FIG. 106. The disclosure further provides the power tool system. The system includes the power supply system of the disclosure, the first power tool 500 and the second power tool 600. The working voltages of the first power tool 500 and the second power tool 600 are different, the working voltage of the first power tool 500 is nV, for example, 24V, and the working voltage of the second power tool 600 is 2nV, for example, 48V. Therefore, when the first power tool 500 is used, it is electrically connected with the adapter 400, and when the second power tool 600 is used, the second power tool 600 is utilized to push the sliding bar 154 to push the switching device 150 to the second position, or the conversion structure 1516 is directly toggled to enable the first toggling part 15161 to enter the second limiting groove 40142, so that the second power tool 600 is electrically connected with the adapter 400.

Please refer to FIG. 111, FIG. 112, FIG. 114, FIG. 120 and FIG. 121. The first power tool 500 is provided with the first tool interface. The first tool interface includes the first tool plug 501 matched with the third output end 405. When the first power tool 500 is used, the first button 408 is pressed, the first power tool 500 slides along the sliding rail 4012 until the connecting terminal of the first tool plug 501 is communicated with the connecting terminal of the third output end 405. After the first button 408 is released, the first button 408 is reset, and the first buckle 4081 connected with it is embedded in the first power tool 500, and at this moment, the first switching structure 151 is connected with the first input end 131, and the third output end 405 outputs the first voltage to the first power tool 500. The second power tool 600 is provided with the second tool interface, and the second tool interface includes the second tool plug 601 matched with the third output end 405. The second tool interface is provided with a clamping groove matched with the conversion structure 1516, and the second tool plug 601 is provided with a triggering structure of the sliding bar 154. When the second power tool 600 is used, the first button 408 is pressed, and the second power tool 600 slides along the sliding rail 4012 simultaneously until the connecting terminal of the second tool plug 601 is communicated with the connecting terminal of the third output end 405. In a sliding process of the second power tool 600, the conversion structure 1516 is clamped into the clamping groove of the second tool interface, and the second power tool 600 drives the conversion structure 1516 to slide along the sliding groove 4013 until the first toggling part 15161 enters the second limiting groove 40142, and/or the triggering structure in the second tool plug 601 pushes the sliding bar 154 to push the switching device 150 to the second position, so that the second switching structure 152 is connected with the second input end 132, and the third output end 405 outputs the second voltage to the second power tool 600. After that, the first button 408 is released, and under the elastic action of the first button spring 409, the first button 408 is reset, and the first buckle 4081 connected with it protrudes from the first cover body 401 and is embedded into the second power tool 600.

Please refer to FIG. 109, FIG. 110, FIG. 29 and FIG. 30. In an embodiment, the power tool system further includes a backpack assembly 199. The backpack assembly 199 includes the strap 190 and the hip belt 192. The strap 190 is connected with the housing 110 and is used to carry the battery pack 200. The hip belt 192 is fixed at the bottom of the strap 190 and used for removable securing around the waist. When in use, the battery pack 200 is carried on the person by utilizing the backpack assembly 199, and the power tool may be handed. For example, when the first power tool 500 is used, the first power tool 500 is mounted on the first cover body 401 of the adapter 400 and is communicated with the third output end 405, the battery pack 200 is carried on the worker through the backpack assembly 199, and the first power tool 500 may start to work by holding the first power tool 500. Similarly, when the second power tool 600 is used, the second power tool 600 is mounted on the first cover body 401 of the adapter 400 and is communicated with the third output end 405, the battery pack 200 is carried on the worker through the backpack assembly 199, and the second power tool 600 may start to work by holding the second power tool 500.

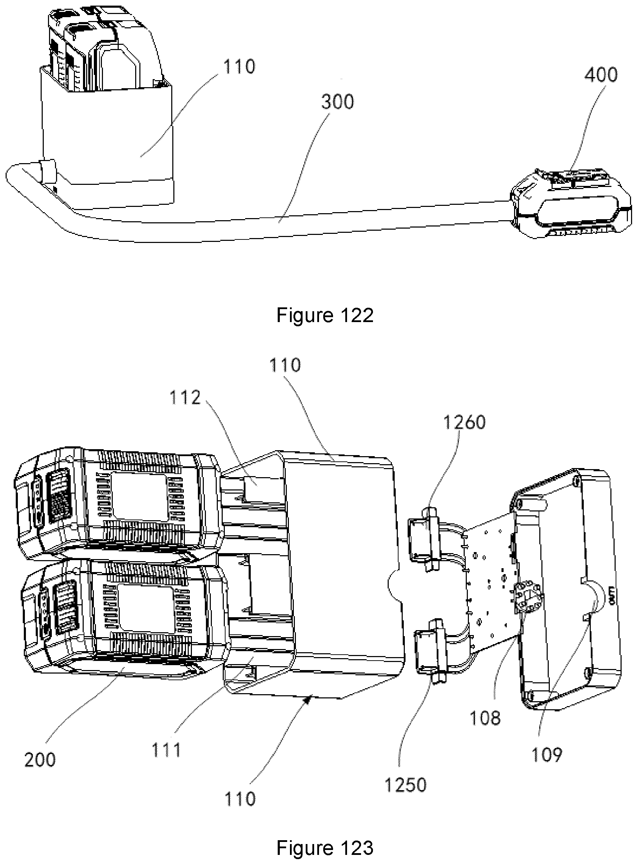

Please refer to FIG. 122, FIG. 123, FIG. 113 and FIG. 10. The disclosure provides the power supply system. The power supply system includes the battery pack 200 and the adapter 400. The battery pack 200 includes at least one single-voltage battery pack 210 or at least one double-voltage battery pack 220. The single-voltage battery pack 210 is provided with the single-voltage battery pack terminal 211 and output one voltage to the outside. The double-voltage battery pack 220 is provided with the double-voltage battery pack terminal 221 and output two voltages to the outside. The adapter 400 is electrically connected with the battery pack 200. The adapter 400 includes the adapter input end, the adaptation interface and the switching device. The adapter input end is electrically connected with the battery pack 200 through the power cable. The adaptation interface is configured to be cooperated with the tool interface of the power tool. The switching device 150 is electrically connected with the adapter input end. The power supply system further includes the mounting base 180 matched with the switching structure 150. The switching structure 150 may move between the first position and the second position in the mounting base 180. When the first power tool 500 is connected with the adapter 400, the adaptation interface is cooperated with the first tool interface of the first power tool 500. When the switching structure 150 is in the first position, and the adapter 400 outputs the first voltage to the first power tool 500. When the second power tool 600 is connected with the adapter 400, the adapting interface is cooperated with the second tool interface of the second power tool 600. When the switching structure 150 is in the second position, and the adapter 400 outputs the second voltage to the second power tool 600.

Please refer to FIG. 123, FIG. 6, FIG. 7 and FIG. 9. The power supply system further includes the housing 110 for mounting the battery pack 200. The housing 110 may be the one-piece structure, or it may be the separated cavity structures surrounded by the bottom wall and the side wall. The first battery pack cavity 111, the second battery pack cavity 112 and the third battery pack cavity 113 are arranged in parallel in the housing 110. The first battery pack cavity 111 is used to accommodate the single-voltage battery pack 210 or the double-voltage battery pack 220. The second battery pack cavity 112 is used to accommodate the single-voltage battery pack 210 or the double-voltage battery pack 220. The single-voltage battery pack 210 includes one group of battery cell or a plurality of battery cells connected in parallel. The single-voltage battery pack terminal 211 includes one positive terminal and one negative terminal. The positive terminal and the negative terminal of the single-voltage battery pack terminal 211 are electrically connected with the positive terminal and the negative terminal of the battery cell group. The double-voltage battery pack 220 includes two groups of battery cells. The double-voltage battery pack terminal 221 includes two positive terminals and two negative terminals. The positive terminals and the negative terminals of the double-voltage battery pack terminal 221 are electrically connected with the positive terminal and the negative terminal of the battery cell group. The double-voltage battery pack 220 may output two voltages to the outside. In an embodiment, the fourth terminal block 1250 is arranged in the first battery pack cavity 111, and the fifth terminal block 1260 is arranged in the second battery pack cavity 112. The fourth terminal block 1250 is configured to be electrically connected with the single-voltage battery pack terminal 211 or the double-voltage battery pack terminal 221. The fifth terminal block 1260 is configured to be electrically connected with the single-voltage battery pack terminal 211 or the double-voltage battery pack terminal 221. The structure of the fourth terminal block 1250 is consistent with the structure of the fifth terminal block 1260. For example, four third terminals 1231 are arranged on a first side of the fourth terminal block 1250, and four fourth terminals 1232 are arranged on a second side of the fourth terminal block 12501. Wherein, the third terminal 1231 is matched with the double-voltage battery pack terminal 221, and the fourth terminal 1232 is electrically connected with adapter input end of the input end 400. The third terminal 1231 is electrically connected with the corresponding fourth terminal 1232. The single-voltage battery pack 210 is correspondingly provided with through holes. When the single-voltage battery pack is mounted on the fourth terminal block 1250 or the fifth terminal block 2160, two of the third terminals 1231 are inserted into the corresponding through holes and are in the idle state, and the remaining two third terminals 1231 are electrically connected with the single-voltage battery pack terminals 211. Therefore, both the single-voltage battery pack 210 and the double-voltage battery pack 220 may be mounted in the first battery pack cavity 111 and in the second battery pack cavity 112.

Please refer to FIG. 123, FIG. 124, FIG. 125 and FIG. 96. The housing 110 is further provided with the connecting wiring terminal 108. The fourth terminal block 1250 and the fifth terminal block 1260 are electrically connected with the connecting wiring terminal 108 respectively. For example, the first circuit board 160 is arranged in the housing 110. The fourth terminal block 1250 and the fifth terminal block 1260 are electrically connected with the first circuit board 160 respectively. The connecting wiring terminal 108 is electrically connected with the first circuit board 160. The fourth terminal block 1250 and the fifth terminal block 1260 are electrically connected with the connecting wiring terminal 108 through the first circuit board 160. One side of the housing 110 corresponding to the connecting wiring terminal 108 is provided with the mounting hole 109, and the connecting wiring terminal 108 is fixed on the inner side of the mounting hole 109. In an embodiment, the connecting wiring terminal 108 is provided with the foolproof structure, which may prevent the wiring errors. For example, in the structure of the connecting wiring terminal 108 in FIG. 96, the connecting wiring terminal 108 is the circular structure, the eight electrode terminals corresponding to the battery pack terminal are arranged along the circumferential direction on this structure, and the center of the eight electrode terminals is provided with the central boss for mounting in conjunction with the conducting wire.

Please refer to FIG. 111 through FIG. 113. In an embodiment, the adapter 400 includes the first cover body 401, the second cover body 402 and the fixing bracket 403. The first cover body 401 and the second cover body 402 are buckled together to form the cavity, and the fixing bracket 403 is mounted in the cavity formed by the first cover body 401 and the second cover body 402. The adaptation interface is arranged on the first cover body 401. The adaptation interface includes the third output end 405. The switching structure 150 is electrically connected with the third output end 405, and the switching device 150 is mounted on a side of the fixing bracket 403 facing the first cover body 401.

Please refer to FIG. 10, FIG. 12, FIG. 13 and FIG. 114. The switching structure 150 includes the supporting body 153, the sliding bar 154, the reset component 155, the first switching structure 151 and the second switching structure 152. Wherein, the supporting body 153 may be slide in the mounting base 180. The sliding bar 154 is fixedly connected with the supporting body 153. The first end of the sliding bar 154 extends to an inside of the mounting base 180, and the second end of the sliding bar 154 extends to the outside of the adapter 400. The reset component 155 is sleeved on the sliding bar 154. The first end of the reset component 155 abuts on the boss of the sliding bar 154, and the second end of the reset component 155 abuts on the inner wall of the mounting base 180. The first switching structure 151 and the second switching structure 152 are relatively mounted on the supporting body 153, and the inside of the mounting base 180 is provided with the first input end 131 matched with the first switching structure 151 and the second input end 132 matched with the second switching structure 152.

Please refer to FIG. 9, FIG. 12 and FIG. 13. In an embodiment, the four fourth terminals 1232 of the fourth terminal block 1250 are respectively marked as: 1+, 2+, 2-, 1-, and the four fourth terminals 1232 of the fifth terminal block 1260 are marked as: 3+, 4+, 4-, 3-. The eight terminals of the first input end 131 are respectively marked as: 131a, 131b, 131c, 131d, 131e, 131f, 131g, 131h. Wherein, the terminal 131a, the terminal 131b, the terminal 131c, the terminal 131d are correspondingly electrically connected with the terminal 1+, the terminal 2+, the terminal 3+, and the terminal 4+ one by one. The specific corresponding relationship in this one-to-one correspondence is not limited. For example, the terminal 131a is electrically connected with the terminal 1+, the terminal 131b is electrically connected with the terminal 2+, the terminal 131c is electrically connected with the terminal 3+, and the terminal 131d is electrically connected with the terminal 4+. The terminal 131e, the terminal 131f, the terminal 131g, the terminal 131h are correspondingly electrically connected with the terminal 1-, the terminal 2-, the terminal 3-, and the terminal 4- one by one. The specific corresponding relationship in this one-to-one correspondence is not limited. For example, in an embodiment of the disclosure, the terminal 131e is electrically connected with the terminal 2-, the terminal 131f is electrically connected with the terminal 1-, the terminal 131g is electrically connected with the terminal 4-, and the terminal 131h is electrically connected with the terminal 3-.

The eight first wiring terminals 1510 are respectively marked as the terminals 1510a, 1510b, 1510c, 1510d, 1510e, 1510f, 1510g, 1510h. Wherein, the terminal 1510a is configured to be electrically connected with the terminal 131a, the terminal 1510b is configured to be electrically connected with the terminal 131b, the terminal 1510c is configured to be electrically connected with the terminal 131c, the terminal 1510d is configured to be electrically connected with the terminal 131d, the terminal 1510e is configured to be electrically connected with the terminal 131e, the terminal 1510f is configured to be electrically connected with the terminal 131f, the terminal 1510g is configured to be electrically connected with the terminal 131g, and the terminal 1510h is configured to be electrically connected with the terminal 131h. The eight first wiring terminals 01510 may be electrically connected as needed. The electrical connection mode of the eight terminals may be any kind of embodiment that can realize the disclosure and achieve the effect of the disclosure. For example, the terminal 1510a, the terminal 1510b, the terminal 1510c and the terminal 1510d are electrically connected with each other, and are electrically connected with the positive terminal of the third output end 405. The terminal 1510e, the terminal 1510f, the terminal 1510g and the terminal 1510h are electrically connected with each other, and are electrically connected with the negative terminal of the third output end 405.

The eight terminals of the second input end 132 are respectively marked as: 132a, 132b, 132c, 132d, 132e, 132f, 132g, 132h. The terminal 132a, the terminal 132b, the terminal 132c, the terminal 132d, the terminal 132e, the terminal 132f, the terminal 132g, the terminal 132h are correspondingly electrically connected with the terminal 1+, the terminal 3+, the terminal 1-, the terminal 4+, terminal 3-, the terminal 2+, the terminal 4- and the terminal 2- one by one. The corresponding relationship in this one-to-one correspondence may be any implementable solution that can achieve technical effects of the disclosure and realize the disclosure. In an embodiment of the disclosure, the terminal 132a is electrically connected with the terminal 1+, the terminal 132b is electrically connected with the terminal 3+, the terminal 132c is electrically connected with the terminal 1-, the terminal 132d is electrically connected with the terminal 4+, the terminal 132e is electrically connected with the terminal 3-, the terminal 132f is electrically connected with the terminal 2+, the terminal 132g is electrically connected with the terminal 4-, and the terminal 132h is electrically connected with the terminal 2-.

The eight second wiring terminals 1520 are respectively marked as the terminals 1520a, 1520b, 1520c, 1520d, 1520e, 1520f, 1520g, 1520h. Wherein, the terminal 1520a is configured to be electrically connected with the terminal 132a, the terminal 1520b is configured to be electrically connected with the terminal 132b, the terminal 1520c is configured to be electrically connected with the terminal 132c, the terminal 1520d is configured to be electrically connected with the terminal 132d, the terminal 1520e is configured to be electrically connected with the terminal 132e, the terminal 1520f is configured to be electrically connected with the terminal 132f, the terminal 1520g is configured to be electrically connected with the terminal 132g, and the terminal 1520h is configured to be electrically connected with the terminal 132h. The eight second wiring terminals 1520 may be electrically connected as needed. The electrical connection mode of the eight terminals may be any kind of embodiment that can realize the disclosure and achieve the effect of the disclosure. For example, the terminal 1520a is electrically connected with the terminal 1520b, and is electrically connected with the positive terminal of the third output end 405. The terminal 1520c, the terminal 1520d, the terminal 1520e and the terminal 1520f are electrically connected with each other, the terminal 1520g is electrically connected with the terminal 1520h, and is electrically connected with the negative terminal of the third output end 405.

Please refer to FIG. 111 through FIG. 113, FIG. 12, FIG. 115 and FIG. 116. The switching structure 150 includes the first switching structure 151 and the second switching structure 152. The sliding bar 154 is pushed, so that the switching structure 150 may be switched between the first position and the second position of the mounting base 180. In an embodiment, the conversion structure 1516 is arranged on the sliding bar 154. The conversion structure 1516 includes the first toggling part 15161 and the second toggling part 15162 connected therewith, and the width of the first toggling part 15161 is greater than the width of the second toggling part 15162. The sliding movement groove 4013 matched with the conversion structure 1516 and the limiting structure 4014 are arranged on the first cover body 401 of the adapter 400, and the conversion structure 1516 protrudes from the first cover body 401 and may slide freely in the sliding movement groove 4013. The limiting structure 4014 includes the first limiting groove 40141, the second limiting groove 40142 and the limiting blocking plate 40143 arranged between the first limiting groove 40141 and the second limiting groove 40142. The limiting blocking plate 40143 is provided with the limiting hole that is connected with the sliding movement groove 4013, and the size of the limiting hole is less than the width of the first toggling part 15161. Pushing the conversion structure 1516 on the outside of the adapter 400 may drive the switching structure 150 to move between the first position and the second position of the mounting base 180. In the initial state, the first switching structure 151 is connected with the first input end 131, the switching structure 150 is located in the first position, and the adapter 400 may output the first voltage externally. When the second voltage is required, the conversion structure 1516 may be toggled on the outside of the adapter 400 to enable it to slide along the sliding movement groove 4013 until the first toggling part 15161 enters the second limiting groove 40142. At this time, the second switching structure 152 is connected with the second input end 132, and the adapter 400 outputs the second voltage externally.

Please refer to FIG. 113, FIG. 114, FIG. 10, FIG. 12 and FIG. 13. In an embodiment, the switching device 150 is mounted on the fixing bracket 403 through the second circuit board 404. The adapter input end of the adapter 400 is electrically connected with the first input end 131 and the second input end 132 through the second circuit board 404. The third output end 405 is arranged at an end of the second circuit board 404, and the switching structure 150 is electrically connected with the positive terminal and the negative terminal of the third output end 405 through conducting wire. For example, the first switching structure 151 is electrically connected with the positive terminal and negative terminal of the third output end 405 through the conducting wire respectively, and the second switching structure 152 is electrically connected with the positive terminal and the negative terminal of the third output end 405 respectively through the conducting wire.

Please refer to FIG. 111 through FIG. 113. The first cover body 401 is provided with a groove 4011 at the position corresponding to the third output end 405. The sliding rail 4012 is arranged on two sides of the first cover body 401 for mounting the power tool. One end of the first cover body 401 that deviates from the groove 4011 is provided with the first button 408 and the button spring 409 connected with the first button 408. The first buckle 4081 is connected with the first button 408, and one end of the button spring 409 that deviates from the first button 408 abuts against the fixing bracket 403. The first button 408 is pressed and the button spring 409 is compressed downward. The power tool slides along the sliding rail 4012 until a connecting terminal of the tool plug of the power tool slides into the groove 4011 and is coupled with the third output end 405. At this time, the first button 408 is released, under the elastic action of the button spring 409, the first button 408 is reset, the first buckle 4081 connected with the first button 408 protrudes from the first cover body 401 and is embedded into the power tool.

Please refer to FIG. 122, FIG. 96, FIG. 113 and FIG. 119. In an embodiment, the battery pack 200 is electrically connected with the adapter 400 through the power cable 300. The power cable 300 includes the first connecting port 301 connected with the battery pack 200 and the second connecting port 302 connected with the adapter 400. The structure of the first connecting port 301 matches the structure of the connecting wiring terminal 108 of the battery pack 200. The second connecting port 302 includes the connecting terminals that are electrically connected with the second circuit board 404, and the second connecting port 302 is inserted into the adapter input end of the adapter 400 and electrically connected with the second circuit board 404.

Please refer to FIG. 62 for an overall circuit diagram of the disclosure. This circuit is applicable to the following five situations: one double-voltage battery pack, two double-voltage battery packs, two single-voltage battery packs, one single-voltage battery pack and one double-voltage battery pack, one single-voltage battery pack. The following is a detailed description with reference to the accompanying drawings. Since the single-voltage battery pack only includes one group of battery cell or the plurality of groups of battery cells connected in parallel, no matter how the switching structure is switched, the battery pack can only output one voltage nV. Therefore, the case where the battery pack includes one single-voltage battery pack is not detailed here.

Please refer to FIG.123, FIG. 111, FIG. 112, FIG. 12 and FIG. 63 through FIG. 65. In an embodiment of the disclosure, one double-voltage battery pack 220 is shown. The double-voltage battery pack 220 may be mounted in the first battery pack cavity 111 or the second battery pack cavity 112. For example, the double-voltage battery pack 220 is mounted in the first battery pack cavity 111. Two different voltages nV and 2nV, such as 24V and 48V, may be output by adjusting the connection mode of the battery cells in the double-voltage battery pack 220. In the initial state, the switching structure 150 is in the first position. The first switching structure 151 is connected with the first input end 131. At this time, the terminal 1510a is electrically connected with the terminal 1+ through the terminal 131a, and the terminal 1510b is electrically connected with the terminal 2+ through the terminal 131b. The terminal 1510e is electrically connected with the terminal 2- through the terminal 131e, and the terminal 1510f is electrically connected with the terminal 1- through the terminal 131f. The terminal 1510a and the terminal 1510b are electrically connected with the positive terminal of the output end respectively, and the terminal 1510e and the terminal 1510f are electrically connected with the negative terminal of the output end respectively. Therefore, the two groups of the battery cells in the double-voltage battery packs 220 are connected in parallel, and the third output end 405 outputs the first voltage nV, for example 24V. Under the effect of external force, the sliding bar 154 or the conversion structure 1516 is pushed, the first toggling part 15161 is enabled to enter the second limiting groove 40142. At this time, the second switching structure 152 is connected with the second input end 132, and the first switching structure 151 is separated from the first input end 131. The switching structure 150 is in the second position. The terminal 1520a is electrically connected with the terminal 1+ through the terminal 132a, and the terminal 1520c is electrically connected with the terminal 1- through the terminal 132c. The terminal 1520f is electrically connected with the terminal 2+ through the terminal 132f, and the terminal 1520h is electrically connected with the terminal 2- through the terminal 132h. The terminal 1520a is electrically connected with the positive terminal of the output end, and the terminal 1520c and the terminal 1520f are electrically connected with each other. The terminal 1520h is electrically connected with the negative terminal of the output end. Therefore, the two groups of the battery cells in the double-voltage battery pack 220 are connected in series, and the third output end 405 outputs the second voltage 2nV, for example 48V.

Please refer to FIG. 123, FIG. 111, FIG. 112, FIG. 12 and FIG. 69 through FIG. 71. In an embodiment of the disclosure, two double-voltage battery packs 220 are shown. The two double-voltage battery packs 220 are mounted in the first battery pack cavity 111 and the second battery pack cavity 112 respectively. The two groups of the battery cells of the double-voltage battery pack 220 mounted in the first battery pack cavity 111 are recorded as the first battery cell and the second battery cell, and the two groups of the battery cells of the double-voltage battery pack 220 mounted in the second battery pack cavity 112 are recorded as a third battery cell and a fourth battery cell. The positive terminal and the negative terminal of the first battery cell are correspondingly electrically connected with the terminal 1+ and the terminal 1-. The positive terminal and the negative terminal of the second battery cell are correspondingly electrically connected with the terminal 2+ and the terminal 2-. A positive terminal and a negative terminal of the third battery cell are correspondingly electrically connected with the terminal 3+ and the terminal 3-. A positive terminal and a negative terminal of the fourth battery cell are correspondingly electrically connected with the terminal 4+ and the terminal 4-. Two different voltages nV and 2nV, such as 24V and 48V, may be output to the outside by adjusting the connection mode of the battery cells in the double-voltage battery packs 220.

In the initial state, the switching structure 150 is in the first position, and the first switching structure 151 is electrically connected with the first input end 131. The terminal 1510a is electrically connected with the terminal 1+ through the terminal 131a, and the terminal 1510b is electrically connected with the terminal 2+ through the terminal 131b. The terminal 1510c is electrically connected with the terminal 3+ through the terminal 131c, and the terminal 1510d is electrically connected with the terminal 4+ through the terminal 131d. The terminal 1510e is electrically connected with the terminal 2- through the terminal 131e, and the terminal 1510f is electrically connected with the terminal 1-through the terminal 131f. The terminal 1510g is electrically connected with the terminal 4- through the terminal 131g, and the terminal 1510h is electrically connected with the terminal 3- through the terminal 131h. The terminal 1510a, the terminal 1510b, the terminal 1510c and the terminal 1510d are electrically connected with the positive terminal of the third output end 405 respectively. The terminal 1510e, the terminal 1510f, the terminal 1510g and the terminal 1510h are electrically connected with the negative terminal of the third output end 405 respectively. At this time, four groups of battery cells in the two double-voltage battery packs 220 are connected in parallel with each other, and the third output end 405 outputs the first voltage nV, such as 24V.

Under the effect of external force, the sliding bar 154 or the conversion structure 1516 is pushed, the first toggling part 15161 is enabled to enter the second limiting groove 40142. At this moment, the second switching structure 152 is connected with the second input end 132, the first switching structure 151 is separated from the first input end 131, and the switching structure 150 is in the second position. The terminal 1520a is electrically connected with the terminal 1+ through the terminal 132a, and the terminal 1520b is electrically connected with the terminal 3+ through the terminal 132b. The terminal 1520c is electrically connected with the terminal 1- through the terminal 132c, and the terminal 1520e is electrically connected with the terminal 3- through the terminal 132e. The terminal 1520f is electrically connected with the terminal 2+ through the terminal 132f, and the terminal 1520d is electrically connected with the terminal 4+ through the terminal 132d. The terminal 1520h is electrically connected with the terminal 2- through the terminal 132h, and the terminal 1520g is electrically connected with the terminal 4- through the terminal 132g. At the same time, the terminal 1520a and the terminal 1520b are electrically connected with the positive terminal of the third output end 405 respectively, the terminal 1520c, the terminal 1520e, the terminal 1520f and the terminal 1520d are electrically connected with each other, and the terminal 1520g and the terminal 1520h are electrically connected with the negative terminal of the third output end 405 respectively. Therefore, the first battery cell is connected in parallel with the third battery cell to form the first parallel circuit, the second battery cell is connected in parallel with the fourth battery cell to form the second parallel circuit, and the two parallel circuits are connected in series. Therefore, the third output end 405 outputs the second voltage 2nV, for example 48V. In another embodiment, two groups of battery cells in the double-voltage battery pack 220 may also be connected in parallel first, then the two parallel circuits are connected in series, and the third output end 405 outputs the second voltage.

Please refer to FIG. 123, FIG. 111, FIG. 112, FIG. 12, FIG. 72 through FIG. 74. In an embodiment of the disclosure, two single-voltage battery packs 210 are shown, and the two single-voltage battery packs 210 are respectively mounted in the first battery pack cavity 111 and the second battery pack cavity 112. Two different voltages nV and 2nV, such as 24V and 48V, may be output by adjusting the connection mode of the battery cells in the two single-voltage battery packs 210.

In the initial state, the switching structure 150 is in the first position, and the first switching structure 151 is electrically connected with the first input end 131. The terminal 1510a is electrically connected with the terminal 1+ through the terminal 131a, and the terminal 1510d is electrically connected with the terminal 4+ through the terminal 131d. The terminal 1510f is electrically connected with the terminal 1-through the terminal 131f, and the terminal 1510g is connected with the terminal 4- through the terminal 131g. At the same time, the terminal 1510a and the terminal 1510d are electrically connected with the positive terminal of the output end respectively, and the terminal 1510f and the terminal 1510h are electrically connected with the negative terminal of the output end respectively. Therefore, the two single-voltage battery packs 210 are connected in parallel with each other, and the third output end 405 outputs the first voltage nV, such as 24V. Under the effect of external force, the sliding bar 154 is pushed or the conversion structure 1516 is toggled, the first toggling part 15161 is enabled to enter the second limiting groove 40142. At this moment, the second switching structure 152 is connected with the second input end 132, the first switching structure 151 is separated from the first input end 131, and the switching structure 150 is in the second position. The terminal 1520a is electrically connected with the terminal 1+ through the terminal 132a, and the terminal 1520c is electrically connected with the terminal 1- through the terminal 132c. The terminal 1520d is electrically connected with the terminal 4+ through the terminal 132d, and the terminal 1520g is electrically connected with the terminal 4-through the terminal 132g. At the same time, the terminal 1520a is electrically connected with the positive terminal of the output end, the terminal 1520c is electrically connected with the terminal 1520d, and the terminal 1520g is electrically connected with the negative terminal of the output end. Therefore, the two single-voltage battery packs 210 are connected in series, and the third output end 405 outputs the second voltage 2nV, for example 48V.

Please refer to FIG. 123, FIG. 111, FIG. 112, FIG. 12 and FIG. 66 through FIG. 68. In an embodiment of the disclosure, one single-voltage battery pack 210 and one double-voltage battery packs 220 are shown. The single-voltage battery packs 210 is mounted in the first battery pack cavity 111 or the second battery pack cavity 112 respectively. The double-voltage battery pack 220 is mounted in the second battery pack cavity 112 or the first battery pack cavity 111. For example, the single-voltage battery pack 210 is mounted in the first battery pack cavity 111, and the double-voltage battery pack 220 is mounted in the second battery pack cavity 112. Two different voltages nV and 2nV, such as 24V and 48V, may be output to the outside by adjusting the connection mode of the battery cells in the battery pack.

In the initial state, the switching structure 150 is in the first position, and the first switching structure 151 is electrically connected with the first input end 131. The terminal 1510b is electrically connected with the terminal 2+ through the terminal 131b, and the terminal 1510c is electrically connected with the terminal 3+ through the terminal 131c. The terminal 1510d is electrically connected with the terminal 4+ through the terminal 131d, and the terminal 1510e is electrically connected with the terminal 2- through the terminal 131e. The terminal 1510g is electrically connected with the terminal 4- through the terminal 131g, and the terminal 1510h is electrically connected with the terminal 3-through the terminal 131h. The terminal 1510b, the terminal 1510c and the terminal 1510d are electrically connected with each other, and are electrically connected with the positive terminal of the third output end 405. The terminal 1510e, the terminal 1510g and the terminal 1510h are electrically connected with each other, and electrically connected with the negative terminal of the third output end 405. Therefore, the single-voltage battery pack 210 and the two battery cells in the double-voltage battery packs 220 are connected in parallel, and the third output end 405 outputs the first voltage nV, for example 24V. Under the effect of external force, the sliding bar 154 is pushed or the conversion structure 1516 is toggled, the first toggling part 15161 is enabled to enter the second limiting groove 40142. At this moment, the second switching structure 152 is connected with the second input end 132, the first switching structure 151 is separated from the first input end 131, and the switching structure 150 is in the second position. The terminal 1520b is electrically connected with the terminal 3+ through the terminal 132b, and the terminal 1520e is electrically connected with the terminal 3- through the terminal 132e. The terminal 1520d is electrically connected with the terminal 4+ through the terminal 132d, and the terminal 1520g is electrically connected with the terminal 4-through the terminal 132g. The terminal 1520f is electrically connected with the terminal 2+ through the terminal 132f, and the terminal 1520h is electrically connected with the terminal 2- through the terminal 132h. The terminal 1520b is electrically connected with the positive terminal of the third output end 405, and the terminal 1520d, the terminal 1510e and the terminal 1510f are electrically connected with each other. The terminal 1520g and terminal 1520h are electrically connected with each other and electrically connected with the negative terminal of the third output end 405. Therefore, one of the groups of the battery cells (the battery cell electrically connected with the terminal 4+ and the terminal 4-) in the double-voltage battery packs 220 is connected with the single-voltage battery pack 210 in parallel first, and then connected with the other group of the battery cell of the double-voltage battery pack 220 in series. The third output end 405 outputs the second voltage 2nV, for example 48V. In another embodiment, two groups of battery cells in the double-voltage battery pack 220 may also be connected in parallel first, and then connected in series with the single-voltage battery pack 210, which may also output the second voltage.

Please refer to FIG. 105 and FIG. 106. The disclosure further provides the power tool system. The system includes the power supply system of the disclosure, the first power tool 500 and the second power tool 600. The working voltages of the first power tool 600 and the second power tool 600 are different, the working voltage of the first power tool 500 is nV, for example, 24V, and the working voltage of the second power tool 600 is 2nV, for example, 48V. Therefore, when the first power tool 500 is used, it is electrically connected with the adapter 400, and when the second power tool 600 is used, the second power tool 600 is utilized to push the sliding bar 154 to push the switching structure 150 to the second position, or the conversion structure 1516 is directly toggled to enable the first toggling part 15161 to enter the second limiting groove 40142, so that the second power tool 600 is electrically connected with the adapter 400.

Please refer to FIG. 105, FIG. 106, FIG. 120 and FIG. 121. The first power tool 500 is provided with the first tool interface. The first tool interface includes the first tool plug 501 matched with the third output end 405. When the first power tool 500 is used, the first button 408 is pressed, at the same time, the first power tool 500 slides along the sliding rail 4012 until the connecting terminal of the first tool plug 501 is communicated with the third output end 405. After the first button 408 is released, under the elastic effect of the button spring 409, the first button 408 is reset, and the first buckle 4081 connected with it protrudes from the first cover body 410 and is embedded in the first power tool 500. Similarly, the second power tool 600 is provided with the second tool interface, and the second tool interface includes the second tool plug 601 matched with the third output end 405. The second tool interface is provided with the clamping groove matched with the conversion structure 1516, and the second tool plug 601 is provided with the triggering structure of the sliding bar 154. When the second power tool 600 is used, the first button 408 is pressed, and the second power tool 600 slides along the sliding rail 4012 simultaneously until the connecting terminal of the second tool plug 601 is communicated with the connecting terminal of the third output end 405. In the sliding process of the second power tool 600, the conversion structure 1516 is clamped into the clamping groove of the second tool interface, and the second power tool 600 drives the conversion structure 1516 to slide along the sliding groove 4013 until the first toggling part 15161 enters the second limiting groove 40142, and/or the triggering structure in the second tool plug 601 pushes the sliding bar 154 to push the switching structure 150 to the second position, so that the second switching structure 152 is connected with the second input end 132, and the third output end 405 outputs the second voltage to the second power tool 600. After that, the first button 408 is released, and under the elastic action of the button spring 409, the first button 408 is reset, and the first buckle 4081 connected with it protrudes from the first cover body 401 and is embedded into the second power tool 600.

Please refer to FIG. 109, FIG. 110, FIG. 29 and FIG. 30. In an embodiment, the power tool system further includes a backpack assembly 199. The backpack assembly 199 includes the strap 190 and the hip belt 192. The strap 190 is mounted on the housing 110 and is used to carry the battery pack 200. The hip belt 192 is fixed at the bottom of the strap 190 and used for removable securing around the waist. When in use, the battery pack 200 is carried on a person by utilizing the backpack assembly 199, and the power tool may be handed. For example, when the first power tool 500 is used, the first power tool 500 is mounted on the first cover body 401 of the adapter 400, so that the first tool interface is cooperated with the adaptation interface. The battery pack 200 is carried on the worker through the backpack assembly 199, and the first power tool 500 may start to work by holding the first power tool 500. Similarly, when the second power tool 600 is used, the second power tool 600 is mounted on the first cover body 401 of the adapter 400, so that the second tool interface is cooperated with the adaptation interface. The battery pack 200 is carried on the worker through the backpack assembly 199, and the second power tool 600 may start to work by holding the second power tool 500.

Please refer to FIG. 122, FIG. 123, FIG. 6, FIG. 7, FIG. 9 and FIG. 99. The disclosure provides the power supply system. The power supply system includes the housing 110, the battery pack 200 and the adapter 400. The first battery pack cavity 111 and the second battery pack cavity 112 are arranged in the housing 110. The battery pack 200 includes at least one single-voltage battery pack 210 or at least one double-voltage battery pack 220. The single-voltage battery pack 210 is provided with the single-voltage battery pack terminal 211 and outputs one voltage to the outside. The double-voltage battery pack 220 is provided with the double-voltage battery pack terminal 221 and outputs two voltages to the outside. The first battery pack cavity 111 is provided with the fourth terminal block 1250, and the first battery pack cavity 111 is used to accommodate the single-voltage battery pack or the double-voltage battery pack. The fourth terminal block 1250 is matched with the single-voltage battery pack terminal 211 or the double-voltage battery pack terminal 221. The second battery pack cavity 112 is used to accommodate the single-voltage battery pack or the double-voltage battery pack. The fifth terminal block 1260 is matched with the single-voltage battery pack terminal 211 or the double-voltage battery pack terminal 221. The adapter 400 includes the adapter input end, the first adaptation interface, the second adaptation interface, the first switching structure 151 and the second switching structure 152. The adapter input end is electrically connected with the battery pack 200 through the power cable 300. The first adaptation interface is configured to be cooperated with the first tool interface of the first power tool. The second adaptation interface is configured to be cooperated with the second tool interface of the second power tool. The first switching structure 151 is electrically connected with the adapter input end, and is switchable between the first state and the second state. The second switching structure 152 is electrically connected with the adapter input end, and is switchable between the first state and the second state. When the first power tool is connected with the adapter, the first tool interface is cooperated with the first adaptation interface. The first switching structure 151 is in the second state, and the adapter 400 outputs the first voltage to the first power tool. When the second power tool is connected with the adapter, the second tool interface is cooperated with the second adaptation interface, the second switching structure 152 is in the second state, and the adapter 400 outputs the second voltage to the second power tool.

Please refer to FIG. 123. The housing 110 may be the integrated structure, or it may be the separated cavity structures surrounded by the bottom wall and the side wall. The first battery pack cavity 111 and the second battery pack cavity 112 are arranged in parallel in the housing 110. The single-voltage battery pack 210 includes one group of battery cell or the plurality of battery cells connected in parallel. The single-voltage battery pack terminal 211 includes one positive terminal and one negative terminal. The double-voltage battery pack 220 includes two groups of battery cells. The double-voltage battery pack terminal 221 includes two positive terminals and two negative terminals.

Please refer to FIG. 123, FIG. 6, FIG. 7 and FIG. 9. In an embodiment, the structure of the fourth terminal block 1250 is consistent with the structure of the fifth terminal block 1260. Four third terminals 1231 and four fourth terminals 1232 are arranged on the fourth terminal block 1250. Wherein, the third terminal 1231 is configured to be electrically connected with the single-voltage battery pack terminal 211 or the double-voltage battery pack terminal 221. The fourth terminal 1232 is electrically connected with the adapter input end of the adapter. The third terminal 1231 is electrically connected with the fourth terminal 1232. The third terminal 1231 includes two positive terminals and two negative terminals, which are respectively matched with the battery pack terminals. The fourth terminal 1232 includes two positive terminals and two negative terminals, and the fourth terminal 1232 is electrically connected with the third terminal 1231 correspondingly. A corresponding position of the single-voltage battery pack is provided with through holes. When the single-voltage battery pack 210 is mounted on the fourth terminal block 1250 or the fifth terminal block 1260, two of the third terminals 1231 are electrically connected with the single-voltage battery pack terminal 211, and the remaining two third terminals 1231 are inserted into the corresponding through holes and are in the idle state. Therefore, both the single-voltage battery pack 210 and the double-voltage battery pack 220 may be mounted in the first battery pack cavity 111 and in the second battery pack cavity 112.

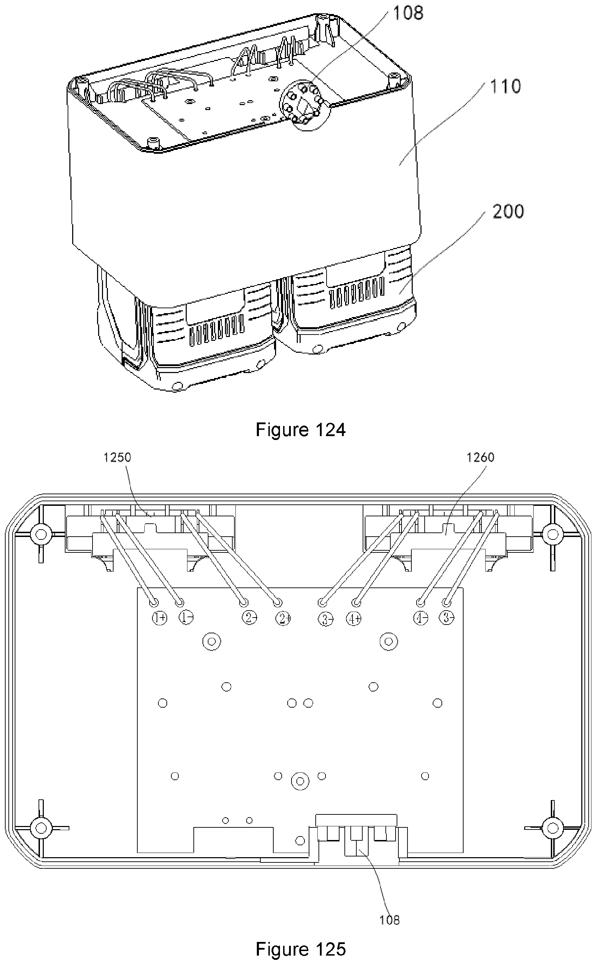

Please refer to FIG. 123, FIG. 124 through FIG. 96. In an embodiment, the housing 110 is further provided with the connecting wiring terminal 108. The fourth terminal block 1250 and the fifth terminal block 1260 are electrically connected with the connecting wiring terminal 108 respectively. For example, the first circuit board 160 is arranged in the housing 110. The fourth terminal block 1250 and the fifth terminal block 1260 are electrically connected with the first circuit board 160 respectively. The connecting wiring terminal 108 is electrically connected with the first circuit board 160. The fourth terminal block 1250 and the fifth terminal block 1260 are electrically connected with the connecting wiring terminal 108 through the first circuit board 160. One side of the housing 110 corresponding to the connecting wiring terminal 108 is provided with the mounting hole 109, and the connecting wiring terminal 108 is fixed on the inner side of the mounting hole 109. The connecting wiring terminal 108 is provided with the foolproof structure, which may prevent the wiring errors. For example, in the structure of the connecting wiring terminal 108 in FIG. 96, the connecting wiring terminal 108 is the circular structure, eight electrode terminals corresponding to the battery pack terminal are respectively arranged along the circumferential direction on this structure, and the center of the eight electrode terminals is provided with the central boss for mounting in conjunction with the power cable.

Please refer to FIG. 97 through FIG. 99. In an embodiment, the adapter 400 includes the first cover body 401, the second cover body 402 and the fixing bracket 403. The first cover body 401 and the second cover body 402 are buckled together to form the cavity. The first adaptation interface is arranged on the first cover body 401, and the first adaptation interface includes the third output end 405. The second adaptation interface is arranged on the second cover body 402, and the second adaptation interface includes the fourth output end 407. The first switching structure 151 is mounted at the side of the fixing bracket 403 facing the first cover body 401, and the second switching structure 152 is mounted at the side of the fixing bracket 403 facing the second cover body 402.

Please refer to FIG. 36, FIG. 100, FIG. 37 and FIG. 40. The power supply system further includes the first mounting base 1801 matched with the first switching structure 151. The first switching structure 151 includes the first supporting body 1531, the first sliding bar 1541, the first reset component 1551 and the first wiring terminal 1510. Wherein, the first supporting body 1531 may slide in the first mounting base 1801, and the first sliding bar 1541 is fixedly connected with the first supporting body 1531. The first end of the first sliding bar 1541 is located in the first mounting base 1801, and the second end of the first sliding bar 1541 extends to the outside of the adapter 400. The first reset component 1551 is sleeved on the first sliding bar 1541. The first end of the first reset component 1551 abuts on the boss of the first sliding bar 1541, and the second end of the first reset component 1551 abuts on the inner wall of the first mounting base 1801. The first wiring terminal 1510 is mounted on the first supporting body 1531, and the first input end 131 matched with the first wiring terminal 1510 is arranged inside the first mounting base 1801.

Please refer to FIG. 38, FIG. 101, FIG. 39 and FIG. 41. The power supply system further includes the second mounting base 1802 matched with the second switching structure 152. The second switching structure 152 includes the second supporting body 1532, the second sliding bar 1542, the second reset component 1552 and the second wiring terminal 1520. Wherein, the second supporting body 1532 may slide in the second mounting base 1802, and the second sliding bar 1542 is fixedly connected with the second supporting body 1532. The first end of the second sliding bar 1542 is located in the second mounting base 1802, and the second end of the second sliding bar 1542 extends to the outside of the adapter 400. The second reset component 1552 is sleeved on the second sliding bar 1542. The first end of the second reset component 1552 abuts on the boss of the second sliding bar 1542, and the second end of the second reset component 1552 abuts on the inner wall of the second mounting base 1802. The second wiring terminal 1520 is mounted on the second supporting body 1532, and the second input end 132 matched with the second wiring terminal 1520 is arranged inside the second mounting base 1802.

Please refer to FIG. 9, FIG. 125 and FIG. 37. In an embodiment, the second terminals of the fourth terminal block 1250 are respectively marked as: 1+, 2+, 2-, 1-, and the second terminals of the fifth terminal block 1260 are marked as: 3+, 4+, 4-, 3-. The eight terminals of the first input end 131 are respectively marked as 131a, 131b, 131c, 131d, 131e, 131f, 131g, 131h. Wherein, the terminal 131a, the terminal 131b, the terminal 131c, the terminal 131d are correspondingly electrically connected with the terminal 1+, the terminal 2+, the terminal 3+, and the terminal 4+ one by one. The specific corresponding relationship in this one-to-one correspondence is not limited. For example, the terminal 131a is electrically connected with the terminal 1+, the terminal 131b is electrically connected with the terminal 2+, the terminal 131c is electrically connected with the terminal 3+, and the terminal 131d is electrically connected with the terminal 4+. The terminal 131e, the terminal 131f, the terminal 131g, the terminal 131h are correspondingly electrically connected with the terminal 1-, the terminal 2-, the terminal 3-, and the terminal 4- one by one. The specific corresponding relationship in this one-to-one correspondence is not limited. For example, the terminal 131e is electrically connected with the terminal 2-, the terminal 131f is electrically connected with the terminal 1-, the terminal 131g is electrically connected with the terminal 4-, and the terminal 131h is electrically connected with the terminal 3-.

Please refer to FIG. 37. The eight first wiring terminals 1510 are respectively marked as the terminals: 1510a, 1510b, 1510c, 1510d, 1510e, 1510f, 1510g, 1510h. Wherein, the terminal 1510a is configured to be electrically connected with the terminal 131a, the terminal 1510b is configured to be electrically connected with the terminal 131b, the terminal 1510c is configured to be electrically connected with the terminal 131c, the terminal 1510d is configured to be electrically connected with the terminal 131d, the terminal 1510e is configured to be electrically connected with the terminal 131e, the terminal 1510f is configured to be electrically connected with the terminal 131f, the terminal 1510g is configured to be electrically connected with the terminal 131g, and the terminal 1510h is configured to be electrically connected with the terminal 131h. The eight first wiring terminals 1510 may be electrically connected as needed. The electrical connection mode of the eight terminals may be any kind of embodiment that can realize the disclosure and achieve the effect of the disclosure. In an embodiment, the terminal 1510a, the terminal 1510b, the terminal 1510c and the terminal 1510d are electrically connected with each other, and are electrically connected with the positive terminal of the third output end 405. The terminal 1510e, the terminal 1510f, the terminal 1510g and the terminal 1510h are electrically connected with each other, and are electrically connected with the negative terminal of the third output end 405.

Please refer to FIG. 9, FIG. 125 and FIG. 39. The eight terminals of the second input end 132 are respectively marked as: 132a, 132b, 132c, 132d, 132e, 132f, 132g, 132h. The terminal 132a, the terminal 132b, the terminal 132c, the terminal 132d, the terminal 132e, the terminal 132f, the terminal 132g, the terminal 132h are correspondingly electrically connected with the terminal 1+, the terminal 3+, the terminal 1-, the terminal 4+, terminal 3-, the terminal 2+, the terminal 4- and the terminal 2- one by one. The corresponding relationship in this one-to-one correspondence may be any implementable solution that can achieve technical effects of the disclosure and realize the disclosure. In an embodiment, the terminal 132a is electrically connected with the terminal 1+, the terminal 132b is electrically connected with the terminal 3+, the terminal 132c is electrically connected with the terminal 1-, the terminal 132d is electrically connected with the terminal 4+, the terminal 132e is electrically connected with the terminal 3-, the terminal 132f is electrically connected with the terminal 2+, the terminal 132g is electrically connected with the terminal 4-, and the terminal 132h is electrically connected with the terminal 2-.

Please refer to FIG. 39. The eight second wiring terminals 1520 are respectively marked as the terminals 1520a, 1520b, 1520c, 1520d, 1520e, 1520f, 1520g, 1520h. Wherein, the terminal 1520a is configured to be electrically connected with the terminal 132a, the terminal 1520b is configured to be electrically connected with the terminal 132b, the terminal 1520c is configured to be electrically connected with the terminal 132c, the terminal 1520d is configured to be electrically connected with the terminal 132d, the terminal 1520e is configured to be electrically connected with the terminal 132e, the terminal 1520f is configured to be electrically connected with the terminal 132f, the terminal 1520g is configured to be electrically connected with the terminal 132g, and the terminal 1520h is configured to be electrically connected with the terminal 132h. The eight second wiring terminals 1520 may be electrically connected as needed. The electrical connection mode may be any kind of embodiment that can realize the disclosure and achieve the effect of the disclosure. The terminal 1520a are electrically connected with the terminal 1510b, and is electrically connected with the positive terminal of the fourth output end 407. The terminal 1520c, the terminal 1520d, the terminal 1520e and the terminal 1520f are electrically connected with each other, the terminal 1520g is electrically connected with the terminal 1520h, and is electrically connected with the negative terminal of the fourth output end 407.

Please refer to FIG. 37 and FIG. 39. Under the effect of the external force, the first sliding bar 1541 drives the first supporting body 1531 to slide along the first mounting base 1801. The first reset component 1551 is compressed to the inner wall of the first mounting base 1801. The first wiring terminal 1510 is connected with the first input end 131 at this moment, the first voltage is output by the third output end 405, and the first switching structure 151 is in the second state. After the external force disappears, under the elastic action of the first reset component 1551, the first sliding bar 1541 drives the first supporting body 1531 to run in reverse, the first wiring terminal 1510 is separated from the first input end 131, the third output end 405 has no voltage output, and the first switching structure 151 is in the first state. Similarly, under the effect of the external force, the second sliding bar 1542 drives the second supporting body 1532 to slide along the second mounting base 1802. The second reset component 1552 is compressed to the inner wall of the second mounting base 1802. The second wiring terminal 1520 is connected with the second input end 132 at this moment, the second voltage is output by the fourth output end 407, and the second switching structure 152 is in the second state. After the external force disappears, under the elastic action of the second reset component 1552, the second sliding bar 1542 drives the second supporting body 1532 to run in reverse, the second wiring terminal 1520 is separated from the second input end 132, the fourth output end 407 has no voltage output, and the second switching structure 152 is in the first state.

Please refer to FIG. 99, FIG. 37, FIG. 39, FIG. 102 and FIG. 103. In an embodiment, the first switching structure 151 is mounted on the fixing bracket 403 through the second circuit board 404. The third output end 405 is arranged on the second circuit board 404, and the first mounting base 1801 is fixed on the second circuit board 404. The first input end 131 is electrically connected with the adapter input end through the second circuit board 404. The first wiring terminal 1510 is electrically connected with the positive terminal and the negative terminal of the third output end 405 through the conducting wire respectively. The second switching structure 152 is mounted on the fixing bracket 403 through the third circuit board 406. The fourth output end 407 is arranged on the third circuit board 406, and the second mounting base 1802 is fixed on the third circuit board 406. The second input end 132 is electrically connected with the adapter input end of the adapter through the third circuit board 406, and the second wiring terminal 1520 is electrically connected with the positive terminal and the negative terminal of the fourth output end 407 through the conducting wire respectively.

Please refer to FIG. 97 through FIG. 99. The first cover body 401 is provided with the first groove 4011 at the position corresponding to the third output end 405. The first sliding rail 4012 is arranged on two sides of the first cover body 401 for mounting the power tool. The end of the first cover body 401 that deviates from the first groove 4011 is provided with the first button 408 and the first button spring 409 connected with the first button 408. The first buckle 4081 is connected with the first button 408, and the end of the first button spring 409 that deviates from the first button 408 abuts against the fixing bracket 403. The first button 408 is pressed and the first button spring 409 is compressed downward. The power tool slides along the first sliding rail 4012 until the tool plug of the power tool slides into the first groove 4011 and is coupled with the third output end 405. Simultaneously, the tool plug of the power tool pushes the first sliding bar 1541 to drive the first supporting body 1531 to slide in the first mounting base 1801, and the first wiring terminal 1510 is connected with the first input end 131. After the first button 408 is released, under the elastic action of the first button spring 409, the first button 408 is reset, the first buckle 4081 connected with the first button 408 protrudes from the first cover body 401 and clamps the power tool, which prevents the first wiring terminal 1510 from separating from the first terminal 131 under the elastic action of the first reset component 1551, and plays the role of limiting. Similarly, the second cover body 402 is provided with the second groove 4021 at the position corresponding to the fourth output end 407. The second sliding rail 4022 is arranged on two sides of the second cover body 402. The end of the second cover body 402 that deviates from the second groove 4021 is provided with the second button 410 and the second button spring 411 connected with the second button 410. The second buckle 4101 is connected with the second button 410, and the end of the second button spring 411 that deviates from the second button 410 abuts against the fixing bracket 403. The second button 410 is pressed and the second button spring 411 is compressed downward. The power tool slides along the second sliding rail 4022 until the connecting terminal of the power tool is coupled with the fourth output end 407 through the second groove 4021. Simultaneously, the tool plug of the power tool pushes the second sliding bar 1542 to drive the second supporting body 1532 to slide in the second mounting base 1802, and the second wiring terminal 1520 is connected with the second input end 132. After the second button 410 is released, under an elastic action of the second button spring 411, the second button 410 is reset, the second buckle 4101 connected with the second button 410 protrudes from the second cover body 402 and clamps the power tool, which prevents the second wiring terminal 1520 from separating from the second input end 132 under the elastic action of the second reset component 1552, and plays the role of limiting.

Please refer to FIG. 122, FIG. 124, FIG. 96, FIG. 99 and FIG. 104. In an embodiment, the power cable 300 includes the first connecting port 301 electrically connected with the battery pack 200 and the second connecting port 302 electrically connected with the adapter 400. The first connecting port 301 matches a structure of the connecting wiring terminal 108, the second connecting port 302 is inserted into the adapter input end of the adapter 400, and the second connecting port 302 includes two terminals that are electrically connected with the second circuit board 404 and the third circuit board 406 respectively.

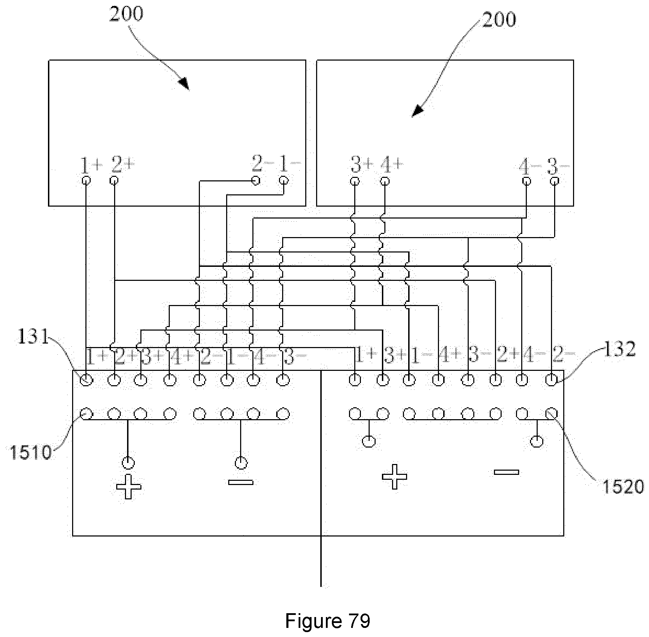

Please refer to FIG. 79 for an overall circuit diagram of the disclosure. This circuit is applicable to the following five situations: one double-voltage battery pack, two double-voltage battery packs, two single-voltage battery packs, one single-voltage battery pack and one double-voltage battery pack, one single-voltage battery pack. The following is a detailed description with reference to the accompanying drawings. However, since the single-voltage battery pack only includes one group of battery cell or the plurality of groups of battery cells connected in parallel, no matter how the first switching structure and the second switching structure are switched, the single-voltage battery pack can only output one voltage nV, for example, 24V. Therefore, the case where the battery pack includes one single-voltage battery pack is not described in detail here.

Please refer to FIG. 123, FIG. 37, FIG. 80 and FIG. 81. In an embodiment, one double-voltage battery pack 220 is shown. The double-voltage battery pack 220 may be mounted in the first battery pack cavity 111 or the second battery pack cavity 112. The double-voltage battery pack 220 mounted in the first battery pack cavity 111 is taken as an example. Under the action of external force, the first switching structure 151 slides along the first mounting base 1801 until the first wiring terminal 1510 is connected with the first input end 131, at this time, the first switching structure 151 is in the second state. The terminal 1510a is electrically connected with the terminal 1+ through the terminal 131a, and the terminal 1510b is electrically connected with the terminal 2+ through the terminal 131b. The terminal 1510e is electrically connected with the terminal 2- through the terminal 131e, and the terminal 1510f is electrically connected with the terminal 1-through the terminal 131f. The terminal 1510a and the terminal 1510b are electrically connected with the positive terminal of the third output end 405 respectively, and the terminal 1510e and the terminal 1510f are electrically connected with the negative terminal of the third output end 405 respectively. Therefore, the two battery cells in the double-voltage battery packs 220 are connected in parallel, and the third output end 405 outputs the first voltage, which means the parallel voltage, for example 24V.

Please refer to FIG. 39, FIG. 80 and FIG. 82. Under the action of external force, the second switching structure 152 slides along the second mounting base 1802 until the second wiring terminal 1520 is connected with the second input end 132, at this time, the second switching structure 152 is in the second state, and the first switching structure 151 is in the first state. The terminal 1520a is electrically connected with the terminal 1+ through the terminal 132a, and the terminal 1520c is electrically connected with the terminal 1- through the terminal 132c. The terminal 1520f is electrically connected with the terminal 2+ through the terminal 132f, and the terminal 1520h is electrically connected with the terminal 2- through the terminal 132h. The terminal 1520a is electrically connected with the positive terminal of the fourth output end 407. The terminal 1520c is electrically connected with 1520f. The terminal 1520h is electrically connected with the negative terminal of the fourth output end 407. Therefore, the battery cells of the double-voltage battery pack 220 are connected in series, and the fourth output end 407 outputs the second voltage 2nV, which means the series voltage, for example 48V.

Please refer to FIG. 123, FIG. 37, FIG. 86 and FIG. 87. In an embodiment, the two double-voltage battery packs 220 are shown. The two double-voltage battery packs 220 are mounted in the first battery pack cavity 111 and the second battery pack cavity 112 respectively. The two groups of the battery cells of the double-voltage battery pack 220 mounted in the first battery pack cavity 111 are recorded as the first battery cell and the second battery cell, and the two groups of the battery cells of the double-voltage battery pack 220 mounted in the second battery pack cavity 112 are recorded as the third battery cell and the fourth battery cell. Electrodes of the first battery cell are correspondingly electrically connected with the terminal 1+ and the terminal 1-. Electrodes of the second battery cell are correspondingly electrically connected with the terminal 2+ and the terminal 2-. Electrodes of the third battery cell are correspondingly electrically connected with the terminal 3+ and the terminal 3-. Electrodes of the fourth battery cell are correspondingly electrically connected with the terminal 4+ and the terminal 4-. Two different voltages nV and 2nV, such as 24V and 48V, may be output to the outside by adjusting the connection mode of the four groups of the battery cells in the double-voltage battery packs 220.

Please refer to FIG. 37, FIG. 86 and FIG. 87. When the first switching structure 151 slides along the first mounting base 1801 under the action of external force until the first wiring terminal 1510 is connected with the first input end 131, at this time, the first switching structure 151 is in the second state. The terminal 1510a is electrically connected with the terminal 1+ through the terminal 131a, and the terminal 1510b is electrically connected with the terminal 2+ through the terminal 131b. The terminal 1510c is electrically connected with the terminal 3+ through the terminal 131c, and the terminal 1510d is electrically connected with the terminal 4+ through the terminal 131d. The terminal 1510e is electrically connected with the terminal 2- through the terminal 131e, and the terminal 1510f is connected with the terminal 1- through the terminal 131f. The terminal 1510g is electrically connected with the terminal 4- through the terminal 131g, and the terminal 1510h is connected with the terminal 3- through the terminal 131h. The terminal 1510a, the terminal 1510b, the terminal 1510c and the terminal 1510d are electrically connected with the positive terminal of the third output end 405. The terminal 1510e, the terminal 1510f, the terminal 1510g and the terminal 1510h are electrically connected with the negative terminal of the third output end 405. At this time, the first battery cell, the second battery cell, the third battery cell, and the fourth battery cell are connected in parallel with each other, and the third output end 405 outputs the first voltage externally, which means the parallel voltage.

Please refer to FIG. 39, FIG. 86 and FIG. 88. When the second switching structure 152 slides along the second mounting base 1802 under the action of external force until the second wiring terminal 1520 is connected with the second input end 132, and at this time, the second switching structure 152 is in the second state. The terminal 1520a is electrically connected with the terminal 1+ through the terminal 132a, and the terminal 1520b is electrically connected with the terminal 3+ through the terminal 132b. The terminal 1520c is electrically connected with the terminal 1- through the terminal 132c, and the terminal 1520e is electrically connected with the terminal 3- through the terminal 132e. The terminal 1520f is electrically connected with the terminal 2+ through the terminal 132f, and the terminal 1520d is connected with the terminal 4+ through the terminal 132d. The terminal 1520h is electrically connected with the terminal 2- through the terminal 132h, and the terminal 1520g is connected with the terminal 4- through the terminal 132g. At the same time, the terminal 1520a and the terminal 1520b are electrically connected with the positive terminal of the fourth output end 407 respectively, the terminal 1520c, the terminal 1520e, the terminal 1520f and the terminal 1520d are electrically connected with each other, and the terminal 1520g and the terminal 1520h are electrically connected with the negative terminal of the fourth output end 407 respectively. Therefore, the first battery cell is connected in parallel with the third battery cell to form the first parallel circuit, the second battery cell is connected in parallel with the fourth battery cell to form the second parallel circuit, and the two parallel circuits are connected in series. Therefore, the fourth output end 407 outputs the second voltage, which means the series voltage. In other embodiments, two groups of battery cells in each double-voltage battery pack 220 may be connected in parallel first, then the two parallel circuits are connected with each other in series or the first battery cell is first connected with the fourth battery cell in parallel, then the second battery cell is connected with the third battery cell in parallel, and then the two parallel circuits are connected with each other in series.

Please refer to FIG. 123, FIG. 37, FIG. 89 and FIG. 90. In an embodiment, the two single-voltage battery packs 210 are shown, and the two single-voltage battery packs 210 are respectively mounted in the first battery pack cavity 111 and the second battery pack cavity 112. Two different voltages nV and 2nV, such as 24V and 48V, may be output to the outside by adjusting the connection mode of the two single-voltage battery packs 210. When the first switching structure 151 slides along the first mounting base 1801 under the action of external force until the first wiring terminal 1510 is connected with the first input end 131, at this time, the first switching structure 151 is in the second state. The terminal 1510a is electrically connected with the terminal 1+ through the terminal 131a, and the terminal 1510d is electrically connected with the terminal 4+ through the terminal 131d. The terminal 1510f is electrically connected with the terminal 1- through the terminal 131f, and the terminal 1510g is connected with the terminal 4- through the terminal 131g. At the same time, the terminal 1510a and the terminal 1510d are electrically connected with the positive terminal of the third output end 405 respectively, and the terminal 1510f and the terminal 1510h are electrically connected with the negative terminal of the third output end 405 respectively. Therefore, the two single-voltage battery packs 210 are connected in parallel, and the third output end 405 outputs the first voltage, which means the parallel voltage.

Please refer to FIG. 39, FIG. 89 and FIG. 91. When the second switching structure 152 slides along the second mounting base 1802 under the action of external force until the second wiring terminal 1520 is connected with the second input end 132, at this time, the second switching structure 152 is in the second state. The terminal 1520a is electrically connected with the terminal 1+ through the terminal 132a, and the terminal 1520c is electrically connected with the terminal 1- through the terminal 132c. The terminal 1520d is electrically connected with the terminal 4+ through the terminal 132d, and the terminal 1520g is connected with the terminal 4- through the terminal 132g. At the same time, the terminal 1520a is electrically connected with the positive terminal of the fourth output end 407, the terminal 1520c is electrically connected with the terminal 1520d, and the terminal 1520g is electrically connected with the negative terminal of the fourth output end 407. Therefore, the two single-voltage battery packs 210 are connected in series, and the fourth output end 407 outputs the second voltage, which means the series voltage.

Please refer to FIG. 123, FIG. 37, FIG. 83 and FIG. 84. In an embodiment, one single-voltage battery pack 210 and one double-voltage battery packs 220 are shown. The single-voltage battery packs 210 is mounted in the first battery pack cavity 111 or the second battery pack cavity 112 respectively. The double-voltage battery pack 220 is mounted in the second battery pack cavity 112 or the first battery pack cavity 111. The single-voltage battery pack 210 mounted in the first battery pack cavity 111 and the double-voltage battery pack 220 mounted in the second battery pack cavity 112 are taken as an example. Two different voltages nV and 2nV, such as 24V and 48V, may be output by adjusting the connection mode of the battery cells in the battery pack. When the first switching structure 151 slides along the first mounting base 1801 under the action of external force until the first wiring terminal 1510 is connected with the first input end 131, and at this time, the first switching structure 151 is in the second state. The terminal 1510b is electrically connected with the terminal 2+ through the terminal 131b, and the terminal 1510c is electrically connected with the terminal 3+ through the terminal 131c. The terminal 1510d is electrically connected with the terminal 4+ through the terminal 131d, and the terminal 1510e is electrically connected with the terminal 2-through the terminal 131e. The terminal 1510g is electrically connected with the terminal 4- through the terminal 131g, and the terminal 1510h is electrically connected with the terminal 3- through the terminal 131h. The terminal 1510b, the terminal 1510c and the terminal 1510d are electrically connected with the positive terminal of the third output end 405. The terminal 1510e, the terminal 1510g and the terminal 1510h are electrically connected with the negative terminal of the third output end 405. Therefore, the single-voltage battery pack 210 and the two battery cells in the double-voltage battery packs 220 are connected in parallel, and the third output end 405 outputs the first voltage, which means the parallel voltage.

Please refer to FIG. 39, FIG. 83 and FIG. 85. When the second switching structure 152 slides along the second mounting base 1802 under the action of external force until the second wiring terminal 1520 is connected with the second input end 132 in the second mounting base 1802, and at this time, the second switching structure 152 is in the second state. The terminal 1520b is electrically connected with the terminal 3+ through the terminal 132b, and the terminal 1520e is electrically connected with the terminal 3- through the terminal 132e. The terminal 1520d is electrically connected with the terminal 4+ through the terminal 132d, and the terminal 1520g is electrically connected with the terminal 4- through the terminal 132g. The terminal 1520f is electrically connected with the terminal 2+ through the terminal 132f, and the terminal 1520h is electrically connected with the terminal 2- through the terminal 132h. The terminal 1520b is electrically connected with the positive terminal of the fourth output end 407, and the terminal 1520d, the terminal 1520e and the terminal 1520f are electrically connected with each other. The terminal 1520g and the terminal 1520h are electrically connected with each other, and electrically connected with the negative terminal of the fourth output end 407. Therefore, one of the battery cells (the battery cell electrically connected with the terminal 4+ and the terminal 4-) in the double-voltage battery packs 220 and the single-voltage battery pack 210 are connected in parallel first, and then connected with the other battery cell of the double-voltage battery pack 220 in series. The fourth output end 407 outputs the second voltage, which means the series voltage. In other embodiments, two groups of battery cells in the double-voltage battery pack 220 may also be connected in parallel first, and then connected in series with the single-voltage battery pack 210.

Please refer to FIG. 105 and FIG. 106. The disclosure further provides the power tool system. The system includes the power supply system of the disclosure, the first power tool 500 and the second power tool 600. The working voltages of the first power tool 500 and the second power tool 600 are different, the working voltage of the first power tool 500 is nV, for example, 24V, and the working voltage of the second power tool 600 is 2nV, for example, 48V. Therefore, when the first power tool 500 is used, it is electrically connected with the first adaptation interface of the adapter 400, and when the second power tool 600 is used, it is electrically connected with the second adaptation interface of the adapter 400.

Please refer to FIG. 97 through FIG. 101 and FIG. 105 through FIG. 108. The first power tool 500 is provided with the first tool interface, and the first tool interface includes the first tool plug 501 matched with the third output end 405. The second power tool 600 is provided with the second tool interface, and the second tool interface includes the second tool plug 601 matched with the fourth output end 407. When the first power tool 500 is mounted, the first button 408 is pressed, and the first power tool 500 slides along the first sliding rail 4012 simultaneously until the connecting terminal of the first tool plug 501 is communicated with the connecting terminal of the third output end 405. In the sliding process of the first power tool 500, after the first tool plug 501 contacts with the first sliding bar 1541, the first sliding bar 1541 will be pushed to drive the first supporting body 1531 to slide along the first mounting base 1801 until the first wiring terminal 1510 is connected with the first input end 131. At this moment, the third output end 405 outputs the first voltage, the first button 408 is released, and the first button 408 resets, The first buckle 4081 fastened with the first button 408 protrudes from the first cover body 401 and is embedded into the first power tool 500. Similarly, when the second power tool 600 is mounted, the second button 410 is pressed, and the second power tool 600 slides along the second sliding rail 4022 simultaneously until the connecting terminal of the second tool plug 601 is communicated with the connecting terminal of the fourth output end 407. In the sliding process of the second power tool 600, after the second tool plug 601 contacts with the second sliding bar 1542, the second sliding bar 1542 will be pushed to drive the second supporting body 1532 to slide along the second mounting base 1802 until the second wiring terminal 1520 is connected with the second input end 132. At this moment, the fourth output end 407 outputs the second voltage, the second button 410 is released, and the second button 410 resets, The second buckle 4101 fastened with the second button 410 protrudes from the second cover body 402 and is embedded into the second power tool 600.

Please refer to FIG. 109, FIG. 110, FIG. 29 and FIG. 30. In an embodiment, the power tool system further includes the backpack assembly 199. The backpack assembly 199 includes the strap 190 and the hip belt 192. The strap 190 is connected with the housing 110 and is used to carry the battery pack 200. The hip belt 192 is fixed at the bottom of the strap 190 and used for removable securing around the waist. When in use, the battery pack 200 is carried on the person by utilizing the backpack assembly 199, and the power tool may be handed. For example, when the first power tool 500 is used, the first power tool 500 is mounted on the first cover body 401 of the adapter 400, and the battery pack 200 is carried on the worker, and the first power tool 500 may start to work by holding the first power tool 500. Similarly, when the second power tool 600 is used, the second power tool 600 is mounted on the second cover body 402 of the adapter 400, and the battery pack 200 is carried on the worker, and the second power tool 600 may start to work by holding the second power tool 500.

The above embodiments only illustrate principles and effects of the disclosure, but are not intended to limit the disclosure. Anyone familiar with this technology may modify or change the above embodiments without departing from a scope of the disclosure. Therefore, all equivalent modifications or changes made by those with ordinary knowledge in the technical field without departing from the technical ideas disclosed in the disclosure shall still be covered by the claims of the disclosure.

## Claims

1. A system, comprising:
a housing;
a terminal part, arranged on the housing and matched with a battery pack;
an input end, electrically connected with the terminal part;
an output end, configured to output energy to an outside; and
a switching device, comprising:
a first switching structure, arranged in the housing, switchable between a first state and a second state, and electrically connected with the output end, and
a second switching structure, arranged in the housing, switchable between the first state and the second state, and electrically connected with the output end, wherein
when the first switching structure is in the second state and the second switching structure is in the first state, the output end is configured to output a first voltage;
when the second switching structure is in the second state and the first switching structure is in the first state, the output end is configured to output a second voltage.

2. The system according to claim 1, wherein, the input end comprises a first input end and a second input end;
when the first switching structure is in the second state and the second switching structure is in the first state, the first switching structure is electrically connected with the first input end, and the second switching structure is disconnected from the second input end;
when the second switching structure is in the second state and the first switching structure is in the first state, the second switching structure is electrically connected with the second input end, and the first switching structure is disconnected from the first input end.

3. The system according to claim 1, further comprising at least two battery pack cavities arranged in the housing, wherein, each battery pack cavity is provided with a terminal block, and each terminal block is connected with the input end.

4. The system according to claim 3, wherein, each battery pack cavity is suitable for a single-voltage battery pack or a double-voltage battery pack, the single-voltage battery pack provides one voltage externally and is provided with a single-voltage battery pack terminal having a positive terminal and a negative terminal, the double-voltage battery pack provides two voltages externally and is provided with a double-voltage battery pack terminal having two positive terminals and two negative terminals, and the terminal block in each battery pack cavity is suitable for the single-voltage battery pack terminal or the double-voltage battery pack terminal.

5. The system according to claim 1, wherein, the switching device comprises: at least one supporting body and at least one sliding bar, and the supporting body is fixedly connected with the sliding bar.

6. The system according to claim 1, wherein, the first switching structure and the second switching structure are an integrated switching structure, the system comprises one mounting base, the switching device comprises one supporting body and one sliding bar, the first switching structure is arranged on a first side of the supporting body, the second switching structure is arranged on a second side of the supporting body, and correspondingly, there is one output end to output the first voltage or the second voltage.

7. The system according to claim 1, wherein, the first switching structure and the second switching structure are separated switching structures, the system comprises two mounting bases configured to mount the first switching structure and the second switching structure respectively, the switching device comprises two supporting bodies and two sliding bars, the first switching structure and the second switching structure are respectively arranged to be matched with their respective supporting bodies and sliding bars, and correspondingly, there are two output ends to respectively output the first voltage and the second voltage.

8. The system according to claim 7, wherein, the output end comprises a first output end and a second output end, the system further comprises a blocking component, the blocking component is movably mounted between the first output end and the second output end, when the first output end outputs the first voltage, the blocking component blocks the second output end, and when the second output end outputs the second voltage, the blocking component blocks the first output end.

9. The system according to claim 5, wherein, the switching device comprises: a reset component, and the reset component is arranged on the sliding bar.

10. The system according to claim 2, wherein, a wiring terminal of the first switching structure matches a wiring terminal of the first input end, and a wiring terminal of the second switching structure matches a wiring terminal of the second input end.

11. A power supply system, comprising:
a housing, provided with a terminal part;
a battery pack, mounted in the housing and electrically connected with the terminal part;
an input end, electrically connected with the terminal part;
an output end, configured to output energy to an outside; and
a switching device, comprising:
a first switching structure, arranged in the housing, switchable between a first state and a second state, and electrically connected with the output end, and
a second switching structure, arranged in the housing, switchable between the first state and the second state, and electrically connected with the output end, wherein
when the first switching structure is in the second state, the second switching structure is in the first state, and the output end is configured to output a first voltage;
When the second switching structure is in the second state, the first switching structure is in the first state, and the output end is configured to output a second voltage.

12. The power supply system according to claim 11, wherein, the battery pack comprises one double-voltage battery pack, or the battery pack comprises two single-voltage battery packs, or the battery pack comprises one double-voltage battery pack and two single-voltage battery packs, or the battery pack comprises one single-voltage battery pack and one double-voltage battery pack.

13. A power tool system, comprising:
a housing, provided with a terminal part;
a battery pack, mounted in the housing and electrically connected with the terminal part;
an input end, electrically connected with the terminal part;
an output end, configured to output energy to an outside;
a switching device, comprising:
a first switching structure, arranged in the housing, switchable between a first state and a second state, and electrically connected with the output end, and
a second switching structure, arranged in the housing, switchable between the first state and the second state, and electrically connected with the output end, wherein
when the first switching structure is in the second state and the second switching structure is in the first state, the output end is configured to output a first voltage,
when the second switching structure is in the second state and the first switching structure is in the first state, the output end is configured to output a second voltage;
an adapter, provided with an adaptation interface and electrically connected with the output end;
a first power tool, provided with a first tool interface, and electrically connected with the adapter when the first tool interface is coupled with the adaptation interface; and
a second power tool, provided with a second tool interface, and electrically connected with the adapter when the second tool interface is coupled with the adaptation interface; wherein
a working voltage of the first power tool is different from a working voltage of the second power tool.

14. A power supply system, comprising:
a housing, provided with a plurality of battery pack cavities;
a battery pack, mounted in the battery pack cavity; and
an adapter, comprising:
an adapter input end, electrically connected with the battery pack through a power cable,
an adaptation interface, configured to cooperate with a tool interface of a power tool, and
a switching device, comprising a first switching structure and a second switching structure, the first switching structure being switchable between a first state and a second state and electrically connected with the adapter input end, and the second switching structure being switchable between the first state and the second state and electrically connected with the adapter input end; wherein
the adapter is configured to be connected with a first power tool, the adaptation interface cooperates with a first tool interface of the first power tool, when the first switching structure is in the second state, the second switching structure is in the first state, and the adapter outputs a first voltage to the first power tool;
the adapter is configured to be connected with a second power tool, the adaptation interface cooperates with a second tool interface of the second power tool, when the second switching structure is in the second state, the first switching structure is in the first state, and the adapter outputs a second voltage to the second power tool.

15. A power tool system, comprising:
a housing, provided with a plurality of battery pack cavities;
a battery pack, mounted in the battery pack cavity;
an adapter, electrically connected with the battery pack,
a first power tool, provided with a first tool interface; and
a second power tool, provided with a second tool interface; wherein
the adapter comprises:
an adapter input end, electrically connected with the battery pack through a power cable,
an adaptation interface, configured to cooperate with a tool interface of the power tool, and
a switching device, comprising a first switching structure and a second switching structure, the first switching structure being switchable between the first state and the second state and electrically connected with the adapter input end, and the second switching structure being switchable between the first state and the second state and electrically connected with the adapter input end; wherein
when the first power tool is connected with the adapter, the adaptation interface cooperates with the first tool interface of the first power tool, when the first switching structure is in the second state, the second switching structure is in the first state, and the adapter outputs a first voltage to the first power tool;
when the second power tool is connected with the adapter, the adaptation interface cooperates with the second tool interface of the second power tool, when the second switching structure is in the second state, the first switching structure is in the first state, and the adapter outputs a second voltage to the second power tool.
